# EUROPEAN PATENT SPECIFICATION

(11) **EP 3 926 023 B1**
(45) Date of publication and mention of the grant of the patent: **22.03.2023**
(21) Application number: 21177892.3
(22) Date of filing: 07.06.2021
(51) Int. Cl.: C09K 19/04, C09K 19/34, C09K 19/30, C09K 19/12

(54) **LIQUID CRYSTAL MEDIA COMPRISING POLYMERIZABLE COMPOUNDS**
FLÜSSIGKRISTALLINE MEDIEN MIT POLYMERISIERBAREN VERBINDUNGEN
MILIEUX À CRISTAUX LIQUIDES COMPRENANT DES COMPOSÉS POLYMÉRISABLES

(30) Priority: 10.06.2020 EP 20179298
(43) Date of publication of application: 22.12.2021
(73) Proprietor: Merck Patent GmbH, 64293 Darmstadt (DE)
(72) Inventor: Chuang, Susan (Min Tzu), TAIPEI 114 (TW); Chen, Zoe (I-Wen), TAIPEI 114 (TW); Chen, Fred (Jer-Lin), TAIPEI 114 (TW); Chou, Ray (Kuang-Ting), TAIPEI 114 (TW)

(56) References cited:
- WO-A1-2018/221236
- WO-A1-2020/115089

## Description

The present invention relates to liquid crystal (LC) media comprising several polymerizable compounds and an additive for vertical alignment as further specified in the description or claims. The media are adapted for use in LC displays, especially in LC displays of the polymer-sustained alignment type while omitting one or both of the conventional alignment layers.

### Background of the Invention

One of the liquid crystal display (LCD) modes used at present is the TN ("twisted nematic") mode. However, TN LCDs have the disadvantage of a strong viewing-angle dependence of the contrast.

In addition, so-called VA ("vertically aligned") displays are known which have a broader viewing angle. The LC cell of a VA display contains a layer of an LC medium between two transparent electrodes, where the LC medium usually has a negative dielectric anisotropy. In the switched-off state, the molecules of the LC layer are aligned perpendicular to the electrode surfaces (homeotropically) or have a tilted homeotropic alignment. On application of an electrical voltage to the two electrodes, a realignment of the LC molecules parallel to the electrode surfaces takes place.

Also known are so-called IPS ("in-plane switching") displays, which contain an LC layer between two substrates, where the two electrodes are arranged on only one of the two substrates and preferably have intermeshed, comb-shaped structures. On application of a voltage to the electrodes, an electric field which has a significant component parallel to the LC layer is thereby generated between them. This causes realignment of the LC molecules in the layer plane.

Furthermore, so-called FFS ("fringe-field switching") displays have been reported (see, inter alia, S.H. Jung et al., Jpn. J. Appl. Phys., Volume 43, No. 3, 2004, 1028), which contain two electrodes on the same substrate, one of which structured in a comb-shaped manner and the other is unstructured. A strong, so-called "fringe field" is thereby generated, i.e. a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

FFS displays can be operated as active-matrix or passive-matrix displays. In the case of active-matrix displays, individual pixels are usually addressed by integrated, non-linear active elements, such as, for example, transistors (for example thin-film transistors ("TFTs")), while in the case of passive-matrix displays, individual pixels are usually addressed by the multiplex method, as known from the prior art.

Furthermore, FFS displays have been disclosed (see S.H. Lee et al., Appl. Phys. Lett. 73(20), 1998, 2882-2883 and S.H. Lee et al., Liquid Crystals 39(9), 2012, 1141-1148), which have similar electrode design and layer thickness as FFS displays, but comprise a layer of an LC medium with negative dielectric anisotropy instead of an LC medium with positive dielectric anisotropy. The LC medium with negative dielectric anisotropy shows a more favourable director orientation that has less tilt and more twist orientation compared to the LC medium with positive dielectric anisotropy, as a result of which these displays have a higher transmission. The displays further comprise an alignment layer, usually of polyimide provided on at least one of the substrates that is in contact with the LC medium and induces planar alignment of the LC molecules of the LC medium. These displays are also known as "Ultra Brightness FFS (UB-FFS)" mode displays. These displays require an LC medium with high reliability.

The term "reliability" as used hereinafter means the quality of the performance of the display during time and with different stress loads, such as light load, temperature, humidity, voltage, and comprises display effects such as image sticking (area and line image sticking), mura, yogore etc. which are known to the skilled person in the field of LC displays. As a standard parameter for categorising the reliability usually the voltage holding ratio (VHR) value is used, which is a measure for maintaining a constant electrical voltage in a test display. Among other factors, a high VHR is a prerequisite for a high reliability of the LC medium.

In VA displays of the more recent type, uniform alignment of the LC molecules is restricted to a plurality of relatively small domains within the LC cell. Disclinations may exist between these domains, also known as tilt domains. VA displays having tilt domains have, compared with conventional VA displays, a greater viewing-angle independence of the contrast and the grey shades. In addition, displays of this type are simpler to produce since additional treatment of the electrode surface for uniform alignment of the molecules in the switched-on state, such as, for example, by rubbing, is no longer necessary. Instead, the preferential direction of the tilt or pretilt angle is controlled by a special design of the electrodes.

In so-called MVA ("multidomain vertical alignment") displays, this is usually achieved by the electrodes having protrusions which cause a local pretilt. As a consequence, the LC molecules are aligned parallel to the electrode surfaces in different directions in different, defined regions of the cell on application of a voltage. "Controlled" switching is thereby achieved, and the formation of interfering disclination lines is prevented. Although this arrangement improves the viewing angle of the display, it results, however, in a reduction in its transparency to light. A further development of MVA uses protrusions on only one electrode side, while the opposite electrode has slits, which improves the transparency to light. The slitted electrodes generate an inhomogeneous electric field in the LC cell on application of a voltage, meaning that controlled switching is still achieved. For further improvement of the transparency to light, the separations between the slits and protrusions can be increased, but this in turn results in a lengthening of the response times. In so-called PVA ("patterned VA") displays, protrusions are rendered completely superfluous in that both electrodes are structured by means of slits on the opposite sides, which results in increased contrast and improved transparency to light, but is technologically difficult and makes the display more sensitive to mechanical influences ("tapping", etc.). For many applications, such as, for example, monitors and especially TV screens, however, a shortening of the response times and an improvement in the contrast and luminance (transmission) of the display are demanded.

A further development are displays of the so-called PS ("polymer sustained") or PSA ("polymer sustained alignment") type, for which the term "polymer stabilised" is also occasionally used. In these, a small amount (for example 0.3% by weight, typically < 1% by weight) of one or more polymerizable, compound(s), preferably polymerizable monomeric compound(s), is added to the LC medium and, after filling the LC medium into the display, is polymerised or crosslinked in situ, usually by UV photopolymerization, optionally while a voltage is applied to the electrodes of the display. The polymerization is carried out at a temperature where the LC medium exhibits a liquid crystal phase, usually at room temperature. The addition of polymerizable mesogenic or liquid-crystalline compounds, also known as reactive mesogens or "RMs", to the LC mixture has proven particularly suitable.

Unless indicated otherwise, the term "PSA" is used hereinafter when referring to displays of the polymer sustained alignment type in general, and the term "PS" is used when referring to specific display modes, like PS-VA, PS-TN and the like.

Also, unless indicated otherwise, the term "RM" is used hereinafter when referring to a polymerizable mesogenic or liquid-crystalline compound.

In the meantime, the PS(A) principle is being used in various conventional LC display modes. Thus, for example, PS-VA, PS-OCB, PS-IPS, PS-FFS, PS-UB-FFS and PS-TN displays are known. The polymerization of the RMs preferably takes place with an applied voltage in the case of PS-VA and PS-OCB displays, and with or without, preferably without, an applied voltage in the case of PS-IPS displays. As can be demonstrated in test cells, the PS(A) method results in a pretilt in the cell. In the case of PS-OCB displays, for example, it is possible for the bend structure to be stabilised so that an offset voltage is unnecessary or can be reduced. In the case of PS-VA displays, the pretilt has a positive effect on response times. For PS-VA displays, a standard MVA or PVA pixel and electrode layout can be used. In addition, however, it is also possible, for example, to manage with only one structured electrode side and no protrusions, which significantly simplifies production and at the same time results in very good contrast and in very good transparency to light.

PS-VA displays are described, for example, in EP 1 170 626 A2, US 6,861,107, US 7,169,449, US 2004/0191428 A1, US 2006/0066793 A1 and US 2006/0103804 A1. PS-OCB displays are described, for example, in T.-J-Chen et al., Jpn. J. Appl. Phys. 45, 2006, 2702-2704 and S. H. Kim, L.-C. Chien, Jpn. J. Appl. Phys. 43, 2004, 7643-7647.

Below the layer formed by the phase-separated and polymerised RMs which induce the above mentioned pretilt angle, the conventional PSA display typically contains an alignment layer, for example of polyimide, that provides the initial alignment of the LC molecules before the polymer stabilisation step.

Rubbed polyimide layers have been used for a long time as alignment layers. However, the rubbing process causes a number of problems, like mura, contamination, problems with static discharge, debris, etc. Generally the effort and costs for production of such a polyimide layer are relatively great. Therefore instead of rubbed polyimide layers it was proposed to use polyimide layers prepared by photoalignment, or self-alignment by addition of suitable additives to the LC medium.

In addition, it was observed that unfavourable interaction of the polyimide alignment layer with certain compounds of the LC medium often leads to a reduction of the electrical resistance of the display. The number of suitable and available LC compounds is thus significantly reduced, at the expense of display parameters like viewing-angle dependence, contrast, and response times which are aimed to be improved by the use of such LC compounds. It was therefore desired to omit the polyimide alignment layers.

For some display modes this was achieved by adding a self-alignment agent or additive to the LC medium that induces the desired homeotropic (vertical) alignment *in situ* by a self-assembling mechanism. Thereby the alignment layer can be omitted on one or both of the substrates. These display modes are also known as "self-aligned" or "self-alignment" (SA) modes.

In SA mode displays a small amount, typically 0.1 to 2.5 %, of a self-alignment additive is added to the LC medium. Suitable self-alignment additives are for example compounds having an organic core group (MES) and attached thereto one or more polar anchor groups (R^{a}), which are capable of interacting with the substrate surface, causing the additives on the substrate surface to align and induce the desired alignment also in the LC molecules. The organic core group preferably comprises two rings or ring systems, which are usually substituted. Preferred self-alignment additives comprise for example a mesogenic group (MES) and a straight-chain or branched side chain that is terminated with one or more polar groups, for example selected from hydroxy, carboxy, amino or thiol groups. The self-alignment additives may also contain one or more polymerizable groups that can be polymerised under similar conditions as the RMs used in the PSA process.

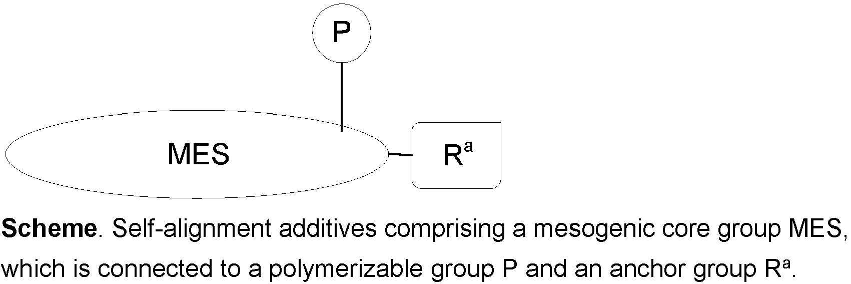

Several P groups can be employed. As a variation, one or more of them can be connected to the anchor group instead to the mesogenic core group. Hitherto SA-VA displays have been disclosed. Suitable self-alignment additives to induce homeotropic alignment, especially for use in SA-VA mode displays, are disclosed for example in US 2013/0182202 A1, US 2014/0838581 A1, US 2015/0166890 A1 and US 2015/0252265 A1.

The self-alignment mode can be used in combination with the PSA mode. An LC medium for use in a display of such a combined mode thus contains both one or more RMs and one or more self-alignment additives, see for instance WO 2018/221236 A1.

Like the conventional LC displays described above, PSA displays can be operated as active-matrix or passive-matrix displays. In the case of active-matrix displays, individual pixels are usually addressed by integrated, non-linear active elements, such as, for example, transistors (for example thin-film transistors ("TFTs")), while in the case of passive-matrix displays, individual pixels are usually addressed by the multiplex method, as known from the prior art.

In particular for monitor and especially TV applications, optimisation of the response times, but also of the contrast and luminance (thus also transmission) of the LC display continues to be demanded. The PSA method can provide significant advantages here. In particular in the case of PS-VA, PS-IPS, PS-FFS and PS-posi-VA displays, a shortening of the response times, which correlate with a measurable pretilt in test cells, can be achieved without significant adverse effects on other parameters.

Prior art has suggested biphenyl diacrylates or dimethacrylates, which are optionally fluorinated as RMs for use in PSA displays

However, the problem arises that not all combinations consisting of an LC mixture and one or more RMs are suitable for use in PSA displays because, for example, an inadequate tilt or none at all becomes established or since, for example, the VHR is inadequate for TFT display applications. In addition, it has been found that, on use in PSA displays, the LC mixtures and RMs known from the prior art do still have some disadvantages. Thus, not every known RM which is soluble in LC mixtures is suitable for use in PSA displays. In addition, it is often difficult to find a suitable selection criterion for the RM besides direct measurement of the pretilt in the PSA display. The choice of suitable RMs becomes even smaller if polymerization by means of UV light without the addition of photoinitiators is desired, which may be advantageous for certain applications.

The self-alignment additive for vertical alignment often has additional polymerizable groups. The combination of polymerizable RM and polymerizable self-alignment additive revealed to have some effect of its own, since behaviour of the RM can be different in the presence of the self-alignment additive.

In addition, the selected combination of LC host mixture/RM should have the lowest possible rotational viscosity and the best possible electrical properties. In particular, it should have the highest possible VHR. In PSA displays, a high VHR after irradiation with UV light is particularly necessary since UV exposure is a requisite part of the display production process, but also occurs as normal exposure during operation of the finished display.

In particular, it would be desirable to have available novel materials for PSA displays which produce a suitably small tilt angle. Preferred materials here are those which produce a lower tilt angle during polymerization for the same exposure time than the materials known to date, and/or through the use of which the desired result can already be achieved after a shorter exposure time. The production time ("tact time") of the display could thus be shortened and the costs of the production process reduced. However, in combination with other polymerizable components, like the self-alignment additives for vertical alignment, the tilt angle can also become too low. In this case even more tuning of the tilt generating behaviour if the LC medium is required.

A further problem in the production of PSA displays is the presence or removal of residual amounts of unpolymerised RMs, in particular after the polymerization step for production of the pretilt angle in the display. For example, unreacted RMs of this type may adversely affect the properties of the display by, for example, polymerising in an uncontrolled manner during operation after finishing of the display.

Thus, the PSA displays known from the prior art often exhibit the undesired effect of so-called "image sticking" or "image burn", i.e. the image produced in the LC display by temporary addressing of individual pixels still remains visible even after the electric field in these pixels has been switched off or after other pixels have been addressed.

This "image sticking" can occur on the one hand if LC host mixtures having a low VHR are used. The UV component of daylight or the backlighting can cause undesired decomposition reactions of the LC molecules therein and thus initiate the production of ionic or free-radical impurities. These may accumulate, in particular, at the electrodes or the alignment layers, where they may reduce the effective applied voltage. This effect can also be observed in conventional LC displays without a polymer component.

In addition, an additional "image sticking" effect caused by the presence of unpolymerized RMs is often observed in PSA displays. Uncontrolled polymerization of the residual RMs is initiated here by UV light from the environment or by the backlighting. In the switched display areas, this changes the tilt angle after a number of addressing cycles. As a result, a change in transmission in the switched areas may occur, while it remains unchanged in the unswitched areas.

It is therefore desirable for the polymerization of the RMs to proceed as completely as possible during production of the PSA display and for the presence of unpolymerized RMs in the display to be excluded as far as possible or reduced to a minimum. Thus, RMs and LC mixtures are required which enable or support highly effective and complete polymerization of the RMs. In addition, controlled reaction of the residual RM amounts would be desirable. This would be simpler if the RM polymerised more rapidly and effectively than the compounds known to date.

The self-alignment mode using self-alignment additives for vertical alignment allows to leave away one or both conventional alignment layers. However, the passivating properties and the optical properties of the conventional alignment layers are also changed. For simplicity it would be desirable to have a self-alignment PSA system with similar behaviour on the electrodes, e.g. strongly passivating properties and a similar refractive index (n). However, current RMs at 0.3 % do usually not show the same properties as polyimide.

However, fast polymerization is often related to high sensitivity to UV radiation. Since UV radiation is also used for hardening the panel sealant material at the panel edges, care must be taken to prevent the phenomenon of premature polymerization, especially close to the panel sealant. In such case bad alignment or small bright spots in the dark state may occur. It is desirable to have a process robust LC medium which can absorb a reasonable level of UV light from the panel sealing operation. Further, the LC medium must not be sensitive to traces of sealant material which is present as impurity close to the edges of the panel.

A further problem that has been observed in the operation of PSA displays is the stability of the pretilt angle. Thus, it was observed that the pretilt angle, which was generated during display manufacture by polymerising the RM as described above, does not remain constant but can deteriorate after the display was subjected to voltage stress during its operation. This can negatively affect the display performance, e.g. by increasing the black state transmission and hence lowering the contrast.

Another problem to be solved is that the RMs of prior art do often have high melting points, and do only show limited solubility in many currently common LC mixtures, and therefore frequently tend to spontaneously crystallise out of the mixture. In addition, the risk of spontaneous polymerization prevents the LC host mixture being warmed in order to dissolve the polymerizable component, meaning that the best possible solubility even at room temperature is necessary. In addition, there is a risk of separation, for example on introduction of the LC medium into the LC display (chromatography effect), which may greatly impair the homogeneity of the display. This is further increased by the fact that the LC media are usually introduced at low temperatures in order to reduce the risk of spontaneous polymerization (see above), which in turn has an adverse effect on the solubility.

Another problem observed in prior art is that the use of conventional LC media in LC displays, including but not limited to displays of the PSA type, often leads to the occurrence of mura in the display, especially when the LC medium is filled in the display cell manufactured using the one drop filling (ODF) method. This phenomenon is also known as "ODF mura". It is therefore desirable to provide LC media which lead to little ODF mura.

Another problem observed in prior art is that LC media for use in PSA displays, including but not limited to displays of the PSA type, do often exhibit high viscosities and, as a consequence, long switching times. In order to reduce the viscosity and switching time of the LC medium, it has been suggested in prior art to add LC compounds with an alkenyl group. However, it was observed that LC media containing alkenyl compounds often show a decrease of the reliability and stability, and a decrease of the VHR especially after exposure to UV radiation. Especially for use in PSA displays this is a considerable disadvantage, because the photo-polymerization of the RMs in the PSA display is usually carried out by exposure to UV radiation, which may cause a VHR drop in the LC medium.

There is thus still a great demand for PSA displays and LC media and polymerizable compounds for use in such displays, which do not show the drawbacks as described above, or only do so to a small extent, and have improved properties.

In particular, there is a great demand for PSA displays, and LC media and polymerizable compounds for use in such PSA displays, which enable a high specific resistance at the same time as a large working-temperature range, short response times, even at low temperatures, and a low threshold voltage, a low pretilt angle, a multiplicity of grey shades, high contrast and a broad viewing angle, have high reliability and high values for the VHR after UV exposure, and, in case of the polymerizable compounds, have low melting points and a high solubility in the LC host mixtures. In PSA displays for mobile applications, it is especially desired to have available LC media that show low threshold voltage and high birefringence.

In prior art several types of RMs have been reported for use in PSA displays, for example RMs having a biphenyl or terphenyl mesogenic core and attached thereto two or three polymerizable acrylate or methacrylate groups. Biphenyl RMs were shown to exhibit limited polymerization speed but good reliability parameters, like high VHR or tilt stability, while terphenyl RMs were shown to exhibit fast polymerization speed but limited reliability parameters. It is therefore desirable to have available RMs that exhibit both fast polymerization speed and good reliability parameters.

The invention is based on the object of providing novel suitable materials, in particular RMs and LC media comprising the same, for use in PSA displays, which do not have the disadvantages indicated above or do so to a reduced extent.

In particular, the invention is based on the object of providing RMs, and LC media comprising them, for use in PSA displays, preferably of the self-alignment mode, which enable very high specific resistance values, high VHR values, high reliability, low threshold voltages, short response times, high birefringence, show good UV absorption especially at longer wavelengths, enable quick and complete polymerization of the RMs, allow the generation of a suitable tilt angle, preferably as quickly as possible, enable a high stability of the pretilt even after longer time and/or after UV exposure, reduce or prevent the occurrence of "bright spots", "image sticking" and "ODF mura" in the display, and in case of the RMs polymerise as rapidly and completely as possible and show a high solubility in the LC media which are typically used as host mixtures in PSA displays.

A further object of the invention is to provide RMs for use in PSA displays of the self-alignment mode which exhibit both fast polymerization speed and good reliability parameters, like high VHR or tilt stability.

A further object of the invention is the provision of novel RMs, in particular for optical, electro-optical and electronic applications, and of suitable processes and intermediates for the preparation thereof.

These objects have been achieved in accordance with the present invention by materials and processes as described in the present application. In particular, it has been found, surprisingly, that the use of RMs of formula I and II as described hereinafter in combination with self-alignment additives of formula III allows achieving the advantageous effects as mentioned above.

It was surprisingly found that the use of these RMs in combination, and of LC media comprising them, in PSA displays facilitates a quick and complete UV-photopolymerization reaction in particular at longer UV wavelengths in the range from 300-380nm and especially above 320nm, even without the addition of photoinitiator, leads to a fast generation of a suitable and stable pretilt angle, avoids the occurrence of bright spots, reduces image sticking and ODF mura in the display, leads to a high reliability and a high VHR value after UV photopolymerization and enables to achieve fast response times, a low threshold voltage and a high birefringence.

PSA displays are usually cured in a first and second curing step. While the first step cures the most of the polymerizable component in about 10² s, the second longer step achieves a complete consumption of residual polymerizable substance (about 10³ s). Surprisingly the LC media according to the invention enable the use of light in the range of UV B-type (365 nm) rather than using conventional shorter UV (313 nm), especially for the second curing step. By the use of different lamps, significant investment and energy can be saved.

In addition, the RMs according to the invention have low melting points, good solubility in a wide range of LC media, especially in commercially available LC host mixtures for PSA use, and a low tendency to crystallisation. Besides, they show good absorption at longer UV wavelengths, in particular in the range from 300-380nm, and enable a quick and complete polymerization with small amounts of residual, unreacted RMs in the cell.

Also, it was surprisingly found that the RMs combined according to the present invention combine a fast polymerization speed, which is similar to that of terphenyl RMs, with good reliability parameters similar to biphenyl RMs. This results in a superior overall performance compared to RMs of the state of the art.

WO 2009/030322 A1 discloses polymerizable compounds based on a biphenyl structure with two or three acrylate or methacrylate groups. It does not mention self-alignment additives for vertical alignment nor does it relate to the problem of bright spots solved by the current invention.

### Summary of the Invention

The invention relates to an LC medium comprising
- a polymerizable component A) comprising, preferably consisting of, one or more polymerizable compounds,
   at least one of which is a compound of formula I,
   at least a second one of which is a compound of formula II, and
   at least a third one is a polymerizable self-alignment additive for vertical alignment of formula III,
   and
- a liquid-crystalline component B), hereinafter also referred to as "LC host mixture", comprising, preferably consisting of, one or more mesogenic or liquid-crystalline compounds.
wherein the formulae are defined as: 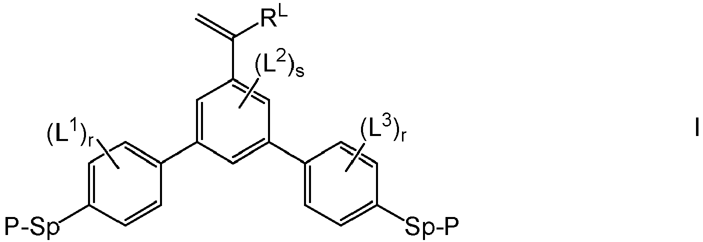 wherein the individual radicals, independently of each other and on each occurrence identically or differently, have the following meanings
- P: a polymerizable group,
- Sp: a spacer group or a single bond,
- R^{L}: -CH₃, -C₂H₅ or -CH₂CH₂CH₃,
- r: independently is 0, 1 or 2,
- s: is 0 or 1, and
- L¹, L², L³: independently are F, Cl or linear, branched or cyclic alkyl having 1 to 5 C atoms, wherein one or more non-adjacent CH₂-groups are optionally replaced by -O-, -S-, -CO-, -CO-O-, -O-CO- or -O-CO-O- in such a manner that O- and/or S-atoms are not directly connected with each other, and wherein one or more H atoms are each optionally replaced by F or Cl, 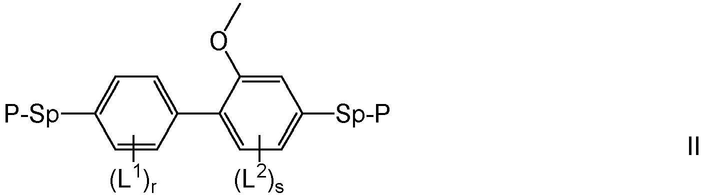
wherein the individual radicals, independently of each other and on each occurrence identically or differently, have the following meanings
- P: a polymerizable group,
- Sp: a spacer group or a single bond,
- r: independently is 0, 1 or 2,
- s: is 0 or 1, and
- L¹, L²: independently are F, Cl or linear, branched or cyclic alkyl having 1 to 5 C atoms, wherein one or more non-adjacent CH₂-groups are optionally replaced by -O-, -S-, -CO-, -CO-O-, -O-CO- or -O-CO-O- in such a manner that O- and/or S-atoms are not directly connected with each other, and wherein one or more H atoms are each optionally replaced by F or Cl,
- MES-R^{a}: III
in which
- MES: is a calamitic mesogenic group comprising two or more rings, which are connected directly or indirectly to each other or which are condensed to each other, which rings are optionally substituted and which is optionally substituted additionally by one or more polymerizable groups, which are connected to MES directly or via a spacer, and
- R^{a}: is a polar anchor group, residing in a terminal position of the calamitic mesogenic group MES, which group R^{a} comprises at least one carbon atom and at least one group selected from -OH, -SH,-COOH, -CHO or primary or secondary amine function and which is optionally substituted by one or two polymerizable groups, which are connected to R^{a} directly or via a spacer,
where at least one of MES or R^{a} is substituted by at least one polymerizable group directly or via a spacer.

The liquid-crystalline component B) of an LC medium according to the present invention is hereinafter also referred to as "LC host mixture", and preferably comprises one or more, preferably at least two mesogenic or LC compounds selected from low-molecular-weight compounds (i.e non-polymeric compounds) which are unpolymerizable.

The invention furthermore relates to an LC medium or LC display as described above, wherein the compounds of formula I, II and III, or the polymerizable compounds of component A), are polymerised.

The invention furthermore relates to a process for preparing an LC medium as described above and below, comprising the steps of mixing one or more mesogenic or LC compounds, or an LC host mixture or LC component B) as described above and below, with one or more compounds each of formula I, II and III, and optionally with further LC compounds and/or additives.

The invention furthermore relates to the use of LC media according to the invention in PSA displays, in particular the use in PSA displays containing an LC medium, for the production of a tilt angle in the LC medium by in-situ polymerization of the compound(s) of the formula I to III in the PSA display, preferably in an electric or magnetic field.

The invention furthermore relates to an LC display comprising an LC medium according to the invention, in particular a PSA display having vertical alignment, particularly preferably a PS-VA, PS-UB-FFS or PS-posi-VA display. Preferably the invention relates to an LC display comprising one or more compounds each of formula I, II and III.

The invention furthermore relates to the use of LC media according to the invention in polymer stabilised SA-VA displays, and to a polymer stabilised SA-VA display comprising an LC medium according to the invention.

The invention furthermore relates to an LC display comprising a polymer obtainable by polymerization of an LC medium according to the invention, which is preferably a PSA display, very preferably a PS-VA, PS-UB-FFS, PS-posi-VA, or polymer stabilised SA-VA display.

The invention furthermore relates to an LC display of the PSA type comprising two substrates, at least one which is transparent to light, an electrode provided on each substrate or two electrodes provided on only one of the substrates, and located between the substrates a layer of an LC medium that comprises an LC medium as described above and below, wherein the polymerizable compounds are polymerised between the substrates of the display.

The invention furthermore relates to a process for manufacturing an LC display as described above and below, comprising the steps of filling or otherwise providing an LC medium according to the invention as described above and below, between the substrates of the display, and polymerising the polymerizable compounds.

The PSA displays according to the invention have two electrodes, preferably in the form of transparent layers, which are applied to one or both of the substrates. In some displays, for example in PS-VA, PS-OCB, or polymer stabilised SA-VA displays, one electrode is applied to each of the two substrates. In other displays, for example in PS-posi-VA or PS-IPS both electrodes are applied to only one of the two substrates.

In a preferred embodiment the polymerizable component is polymerised in the LC display while a voltage is applied to the electrodes of the display.

The polymerizable compounds of the polymerizable component are preferably polymerised by photopolymerization, very preferably by UV photopolymerization.

### Detailed Description of the Invention

The LC media according to the invention show the following advantageous properties when used in vertically self-aligned PSA displays:
- a suitable tilt generation which is inside a certain process window,
- fast polymerization leading to minimal residues of RM after the UV-process,
- reduced occurrence of bright spots, - suitable for UV processing without initiator,
- a high voltage-holding-ratio after the UV-process,
- good tilt stability,
- sufficient stability against heat,
- sufficient low temperature stability against crystallization.

As used herein, the terms "active layer" and "switchable layer" mean a layer in an electrooptical display, for example an LC display, that comprises one or more molecules having structural and optical anisotropy, like for example LC molecules, which change their orientation upon an external stimulus like an electric or magnetic field, resulting in a change of the transmission of the layer for polarized or unpolarized light.

As used herein, the terms "tilt" and "tilt angle" will be understood to mean a tilted alignment of the LC molecules of an LC medium relative to the surfaces of the cell in an LC display (here preferably a PSA display). The tilt angle here denotes the average angle (< 90°) between the longitudinal molecular axes of the LC molecules (LC director) and the surface of the plane-parallel outer plates which form the LC cell. A low value for the tilt angle (i.e. a large deviation from the 90° angle) corresponds to a large tilt here. A suitable method for measurement of the tilt angle is given in the examples. Unless indicated otherwise, tilt angle values disclosed above and below relate to this measurement method.

As used herein, the terms "reactive mesogen" and "RM" will be understood to mean a compound containing a mesogenic or liquid-crystalline skeleton, and one or more functional groups attached thereto which are suitable for polymerization and are also referred to as "polymerizable group" or "P".

Unless stated otherwise, the term "polymerizable compound" as used herein will be understood to mean a polymerizable monomeric compound.

As used herein, the term "low-molecular-weight compound" will be understood to mean to a compound that is monomeric and/or is not prepared by a polymerization reaction, as opposed to a "polymeric compound" or a "polymer".

As used herein, the term "unpolymerizable compound" will be understood to mean a compound that does not contain a functional group that is suitable for polymerization under the conditions usually applied for the polymerization of the RMs.

The term "mesogenic group" as used herein is known to the person skilled in the art and described in the literature, and means a group which, due to the anisotropy of its attracting and repelling interactions, essentially contributes to causing a liquid crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerization. Typical mesogenic groups are, for example, rigid rod- or disc-shaped units. Rod-shaped mesogens are also termed calamitic mesogens, since they often form calamitic phases (e.g. a nematic or smectic phase). In this disclosure mesogenic preferably stands for calamitic mesogens. An overview of the terms and definitions used in connection with mesogenic or LC compounds is given in Pure Appl. Chem. 2001, 73(5), 888 and C. Tschierske, G. Pelzl, S. Diele, Angew. Chem. 2004, 116, 6340-6368.

The term "spacer group", hereinafter also referred to as "Sp", as used herein is known to the person skilled in the art and is described in the literature, see, for example, Pure Appl. Chem. 2001, 73(5), 888 and C. Tschierske, G. Pelzl, S. Diele, Angew. Chem. 2004, 116, 6340-6368. As used herein, the terms "spacer group" or "spacer" mean a flexible group, for example an alkylene group, which connects the mesogenic group and the polymerizable group(s) in a polymerizable mesogenic compound.

Above and below, 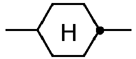 denotes a trans-1,4-cyclohexylene ring, and 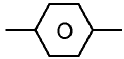 denotes a 1,4-phenylene ring.

In a group 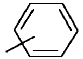 the single bond shown between the two ring atoms can be attached to any free position of the benzene ring.

Above and below "organic group" denotes a carbon or hydrocarbon group.

"Carbon group" denotes a mono- or polyvalent organic group containing at least one carbon atom, where this either contains no further atoms (such as, for example, -C=C-) or optionally contains one or more further atoms, such as, for example, N, O, S, B, P, Si, Se, As, Te or Ge (for example carbonyl, etc.). The term "hydrocarbon group" denotes a carbon group which additionally contains one or more H atoms and optionally one or more heteroatoms, such as, for example, N, O, S, B, P, Si, Se, As, Te or Ge.

"Halogen" denotes F, Cl, Br or I, preferably F or Cl. -CO-, -C(=O)- and -C(O)- denote a carbonyl group, i.e.

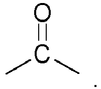

A carbon or hydrocarbon group can be a saturated or unsaturated group. Unsaturated groups are, for example, aryl, alkenyl or alkynyl groups. A carbon or hydrocarbon radical having more than 3 C atoms can be straight-chain, branched and/or cyclic and may also contain spiro links or condensed rings.

The terms "alkyl", "aryl", "heteroaryl", etc., also encompass polyvalent groups, for example alkylene, arylene, heteroarylene, etc.

The term "aryl" denotes an aromatic carbon group or a group derived therefrom. The term "heteroaryl" denotes "aryl" as defined above, containing one or more heteroatoms, preferably selected from N, O, S, Se, Te, Si and Ge.

Preferred carbon and hydrocarbon groups are optionally substituted, straight-chain, branched or cyclic, alkyl, alkenyl, alkynyl, alkoxy, alkylcarbonyl, alkoxycarbonyl, alkylcarbonyloxy and alkoxycarbonyloxy having 1 to 40, preferably 1 to 20, very preferably 1 to 12, C atoms, optionally substituted aryl or aryloxy having 5 to 30, preferably 6 to 25, C atoms, or optionally substituted alkylaryl, arylalkyl, alkylaryloxy, arylalkyloxy, arylcarbonyl, aryloxycarbonyl, arylcarbonyloxy and aryloxycarbonyloxy having 5 to 30, preferably 6 to 25, C atoms, wherein one or more C atoms may also be replaced by hetero atoms, preferably selected from N, O, S, Se, Te, Si and Ge.

Further preferred carbon and hydrocarbon groups are C₁-C₂₀ alkyl, C₂-C₂₀ alkenyl, C₂-C₂₀ alkynyl, C₃-C₂₀ allyl, C₄-C₂₀ alkyldienyl, C₄-C₂₀ polyenyl, C₆-C₂₀ cycloalkyl, C₄-C₁₅ cycloalkenyl, C₆-C₃₀ aryl, C₆-C₃₀ alkylaryl, C₆-C₃₀ arylalkyl, C₆-C₃₀ alkylaryloxy, C₆-C₃₀ arylalkyloxy, C₂-C₃₀ heteroaryl, C₂-C₃₀ heteroaryloxy.

Particular preference is given to C₁-C₁₂ alkyl, C₂-C₁₂ alkenyl, C₂-C₁₂ alkynyl, C₆-C₂₅ aryl and C₂-C₂₅ heteroaryl.

Further preferred carbon and hydrocarbon groups are straight-chain, branched or cyclic alkyl having 1 to 20, preferably 1 to 12, C atoms, which are unsubstituted or mono- or polysubstituted by F, C!, Br, I or CN and in which one or more non-adjacent CH₂ groups may each be replaced, independently of one another, by -C(R^{x})=C(R^{x})-, -C≡C-, -N(R^{x})-, -O-, -S-, - CO-, -CO-O-, -O-CO-, -O-CO-O- in such a way that O and/or S atoms are not linked directly to one another.

R^{x} preferably denotes H, F, Cl, CN, a straight-chain, branched or cyclic alkyl chain having 1 to 25 C atoms, in which, in addition, one or more non-adjacent C atoms may be replaced by -O-, -S-, -CO-, -CO-O-, -O-CO-, -O-CO-O- and in which one or more H atoms may be replaced by F or Cl, or denotes an optionally substituted aryl or aryloxy group with 6 to 30 C atoms, or an optionally substituted heteroaryl or heteroaryloxy group with 2 to 30 C atoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, dodecanyl, trifluoromethyl, perfluoro-n-butyl, 2,2,2-trifluoroethyl, perfluorooctyl, perfluorohexyl, etc.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl, etc.

Preferred alkynyl groups are, for example, ethynyl, propynyl, butynyl, pentynyl, hexynyl, octynyl, etc.

Preferred alkoxy groups are, for example, methoxy, ethoxy, 2-methoxy-ethoxy, n-propoxy, i-propoxy, n-butoxy, i-butoxy, s-butoxy, t-butoxy, 2-methylbutoxy, n-pentoxy, n-hexoxy, n-heptoxy, n-octoxy, n-nonoxy, n-decoxy, n-undecoxy, n-dodecoxy, etc.

Preferred amino groups are, for example, dimethylamino, methylamino, methylphenylamino, phenylamino, etc.

Aryl and heteroaryl groups can be monocyclic or polycyclic, i.e. they can contain one ring (such as, for example, phenyl) or two or more rings, which may also be fused (such as, for example, naphthyl) or covalently bonded (such as, for example, biphenyl), or contain a combination of fused and linked rings. Heteroaryl groups contain one or more heteroatoms, preferably selected from O, N, S and Se.

Particular preference is given to mono-, bi- or tricyclic aryl groups having 6 to 25 C atoms and mono-, bi- or tricyclic heteroaryl groups having 5 to 25 ring atoms, which optionally contain fused rings and are optionally substituted. Preference is furthermore given to 5-, 6- or 7-membered aryl and heteroaryl groups, in which, in addition, one or more CH groups may be replaced by N, S or O in such a way that O atoms and/or S atoms are not linked directly to one another.

Preferred aryl groups are, for example, phenyl, biphenyl, terphenyl, [1,1':3',1"]terphenyl-2'-yl, naphthyl, anthracene, binaphthyl, phenanthrene, 9,10-dihydro-phenanthrene, pyrene, dihydropyrene, chrysene, perylene, tetracene, pentacene, benzopyrene, fluorene, indene, indenofluorene, spirobifluorene, etc.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquin-oline, acridine, phenothiazine, phenoxazine, benzopyridazine, benzopyrimi-dine, quinoxaline, phenazine, naphthyridine, azacarbazole, benzocarboline, phenanthridine, phenanthroline, thieno[2,3b]thiophene, thieno[3,2b]thiophene, dithienothiophene, isobenzothiophene, dibenzothiophene, benzothiophene, benzothiadiazothiophene, or combinations of these groups.

The aryl and heteroaryl groups mentioned above and below may also be substituted by alkyl, alkoxy, thioalkyl, fluorine, fluoroalkyl or further aryl or heteroaryl groups.

The (non-aromatic) alicyclic and heterocyclic groups encompass both saturated rings, i.e. those containing exclusively single bonds, and also partially unsaturated rings, i.e. those which may also contain multiple bonds. Heterocyclic rings contain one or more heteroatoms, preferably selected from Si, O, N, S and Se.

The (non-aromatic) alicyclic and heterocyclic groups can be monocyclic, i.e. contain only one ring (such as, for example, cyclohexane), or polycyclic, i.e. contain a plurality of rings (such as, for example, decahydronaphthalene or bicyclooctane). Particular preference is given to saturated groups. Preference is furthermore given to mono-, bi- or tricyclic groups having 5 to 25 ring atoms, which optionally contain fused rings and are optionally substituted. Preference is furthermore given to 5-, 6-, 7- or 8-membered carbocyclic groups, in which, in addition, one or more C atoms may be replaced by Si and/or one or more CH groups may be replaced by N and/or one or more non-adjacent CH₂ groups may be replaced by -O- and/or -S-.

Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]-pentane-1,3-diyl, bicyclo[2.2.2]octane-1,4-diyl, spiro[3.3]heptane-2,6-diyl, octahydro-4,7-methanoindane-2,5-diyl.

Preferred substituents of the above-mentioned cyclic groups are, for example, solubility-promoting groups, such as alkyl or alkoxy, electron-withdrawing groups, such as fluorine, nitro or nitrile, or substituents for increasing the glass transition temperature (Tg) in the polymer, in particular bulky groups, such as, for example, t-butyl or optionally substituted aryl groups.

Preferred substituents of the above-mentioned cyclic groups, hereinafter also referred to as "L^{s}", are, for example, F, Cl, Br, I, -CN, -NO₂, -NCS, -C(=O)N(R^{x})₂, -C(=O)Y¹, -C(=O)R^{x}, -N(R^{x})₂, straight-chain or branched alkyl, alkoxy, alkylcarbonyl, alkoxycarbonyl, alkylcarbonyloxy or alkoxycarbonyloxy each having 1 to 25 C atoms, in which one or more H atoms may optionally be replaced by F or C!, optionally substituted silyl having 1 to 20 Si atoms, or optionally substituted aryl having 6 to 25, preferably 6 to 15, C atoms,
wherein R^{x} denotes H, F, Cl, CN, or linear, branched or cyclic alkyl having 1 to 25 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F, Cl, P- or P-Sp-, and
Y¹ denotes halogen.

"Substituted silyl or aryl" preferably means substituted by halogen, -CN, R⁰, -OR⁰, -CO-R⁰, -CO-O-R⁰, -O-CO-R⁰ or -O-CO-O-R⁰, wherein R⁰ denotes H or alkyl with 1 to 20 C atoms.

Particularly preferred substituents L^{s} are, for example, F, Cl, CN, NO₂, CH₃, C₂H₅, OCH₃, OC₂H₅, COCH₃, COC₂H₅, COOCH₃, COOC₂H₅, CF₃, OCF₃, OCHF₂, OC₂F₅, furthermore phenyl. 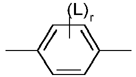 is preferably 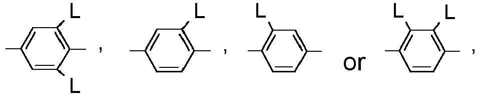 in which L has one of the meanings indicated above.

The polymerizable group P is a group which is suitable for a polymerization reaction, such as, for example, free-radical or ionic chain polymerization, polyaddition or polycondensation, or for a polymer-analogous reaction, for example addition or condensation onto a main polymer chain. Particular preference is given to groups for chain polymerization, in particular those containing a C=C double bond or -C≡C- triple bond, and groups which are suitable for polymerization with ring opening, such as, for example, oxetane or epoxide groups.

Preferred groups P are selected from the group consisting of CH₂=CW¹-CO-O-, CH₂=CW¹-CO-, 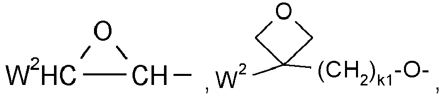 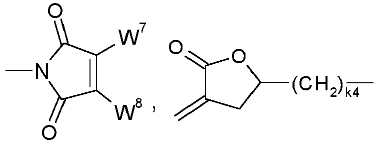 , CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, which is optionally substituted by one or more radicals L as defined above which are other than P-Sp-, k₁, k₂ and k₃ each, independently of one another, denote 0 or 1, k₃ preferably denotes 1, and k₄ denotes an integer from 1 to 10.

Very preferred groups P are selected from the group consisting of CH₂=CW¹-CO-O-, CH₂=CW¹-CO-, 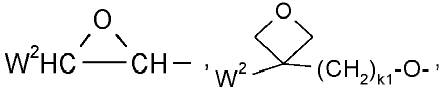 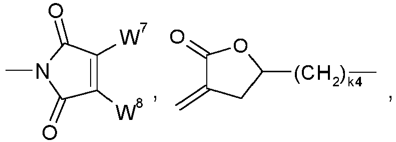 CH₂=CW²-O-, CH₂=CW²-, CW¹=CH-CO-(O)ₖ₃-, CW¹=CH-CO-NH-, CH₂=CW¹-CO-NH-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, k₁, k₂ and k₃ each, independently of one another, denote 0 or 1, k₃ preferably denotes 1, and k₄ denotes an integer from 1 to 10.

Very particularly preferred groups P are selected from the group consisting of CH₂=CW¹-CO-O-, in particular CH₂=CH-CO-O-, CH₂=C(CH₃)-CO-O- and CH₂=CF-CO-O-, furthermore CH₂=CH-O-, (CH₂=CH)₂CH-O-CO-, (CH₂=CH)₂CH-O-,

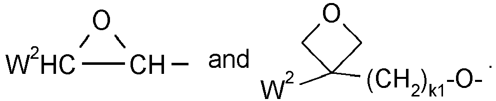

Further preferred polymerizable groups P are selected from the group consisting of vinyloxy, acrylate, methacrylate, fluoroacrylate, chloroacrylate, oxetane and epoxide, most preferably methacrylate.

If the spacer group Sp is different from a single bond, it is preferably of the formula Sp"-X", so that the respective radical P-Sp- conforms to the formula P-Sp"-X"-, wherein
- Sp": denotes linear or branched alkylene having 1 to 20, preferably 1 to 12, C atoms, which is optionally mono- or polysubstituted by F, C!, Br, I or CN and in which, in addition, one or more non-adjacent CH₂ groups may each be replaced, independently of one another, by -O-, -S-, -NH-, -N(R⁰)-, -Si(R⁰R⁰⁰)-, -CO-, -CO-O-, -O-CO-, -O-CO-O-, -S-CO-, -CO-S-, -N(R⁰⁰)-CO-O-, -O-CO-N(R⁰)-, -N(R⁰)-CO-N(R⁰⁰)-, -CH=CH- or -C≡C-in such a way that O and/or S atoms are not linked directly to one another,
- X": denotes -O-, -S-, -CO-, -CO-O-, -O-CO-, -O-CO-O-, -CO-N(R⁰)-, -N(R⁰)-CO-, -N(R⁰)-CO-N(R⁰⁰)-, -OCH₂-, -CH₂O-, -SCH₂-, -CH₂S-, -CF₂O-,-OCF₂-, -CF₂S-, -SCF₂-, -CF₂CH₂-, -CH₂CF₂-, -CF₂CF₂-, -CH=N-,-N=CH-, -N=N-, -CH=CR⁰-, -CY²=CY³-, -C≡C-, -CH=CH-CO-O-, -O-CO-CH=CH- or a single bond,
- R⁰ and R⁰⁰: each, independently of one another, denote H or alkyl having 1 to 20 C atoms, and
- Y² and Y³: each, independently of one another, denote H, F, Cl or CN.
- X": is preferably -O-, -S-, -CO-, -COO-, -OCO-, -O-COO-, -CO-NR⁰-, -NR⁰-CO-, -NR⁰-CO-NR⁰⁰- or a single bond.

Typical spacer groups Sp and -Sp"-X"- are, for example, -(CH₂)ₚ₁-, -(CH₂)ₚ₁-O-, -(CH₂)ₚ₁-O-CO-, -(CH₂)ₚ₁-CO-O-, -(CH₂)ₚ₁-O-CO-O-, -(CH₂CH₂O)_{q1}-CH₂CH₂-, - CH₂CH₂-S-CH₂CH₂-, -CH₂CH₂-NH-CH₂CH₂- or -(SiR⁰R⁰⁰-O)ₚ₁-, in which p1 is an integer from 1 to 12, q1 is an integer from 1 to 3, and R⁰ and R⁰⁰ have the meanings indicated above.

Particularly preferred groups Sp and -Sp"-X"- are -(CH₂)ₚ₁-, -(CH₂)ₚ₁-O-, - (CH₂)ₚ₁-O-CO-, -(CH₂)ₚ₁-CO-O-, -(CH₂)ₚ₁-O-CO-O-, in which p1 and q1 have the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methylimino-ethylene, 1-methylalkylene, ethenylene, propenylene and butenylene.

In one embodiment of the invention the compounds of formula I or II and its subformulae contain a spacer group Sp that is substituted by one or more polymerizable groups P, so that the group Sp-P corresponds to Sp(P)ₛ, with s being ≥2 (branched polymerizable groups).

Preferred compounds of formula I according to this embodiment are those wherein s is 2, i.e. compounds which contain a group Sp(P)₂. Very preferred compounds of formula I according to this preferred embodiment contain a group selected from the following formulae:

-X-alkyl-CHPP S1

-X-alkyl-CH((CH₂)ₐₐP)((CH₂)_{bb}P) S2

-X-N((CH₂)ₐₐP)((CH₂)_{bb}P) S3

-X-alkyl-CHP-CH₂-CH₂P S4

-X-alkyl-C(CH₂P)(CH₂P)-CₐₐH₂ₐₐ₊₁ S5

-X-alkyl-CHP-CH₂P S6

-X-alkyl-CPP-CₐₐH₂ₐₐ₊₁ S7

-X-alkyl-CHPCHP-CₐₐH₂ₐₐ₊₁ S8

in which P is as defined in formula I,
- alkyl: denotes a single bond or straight-chain or branched alkylene having 1 to 12 C atoms which is unsubstituted or mono- or polysubstituted by F, Cl or CN and in which one or more non-adjacent CH₂ groups may each, independently of one another, be replaced by -C(R⁰)=C(R⁰)-, -C≡C-, -N(R⁰)-, -O-, -S-, -CO-, -CO-O-, -O-CO-, -O-CO-O- in such a way that O and/or S atoms are not linked directly to one another, where R° has the meaning indicated above,
- aa and bb: each, independently of one another, denote 0, 1, 2, 3, 4, 5 or 6,
- X: has one of the meanings indicated for X", and is preferably O, CO, SO₂, O-CO-, CO-O or a single bond.

Preferred spacer groups Sp(P)₂ are selected from formulae S1, S2 and S3.

Very peferred spacer groups Sp(P)₂ are selected from the following subformulae:

| | |
|---|---|
| -CHPP | S1a |
| -O-CHPP | S1b |
| -CH₂-CHPP | S1c |
| -OCH₂-CHPP | S1d |
| -CH(CH₂-P)(CH₂-P) | S2a |
| -OCH(CH₂-P)(CH₂-P) | S2b |
| -CH₂-CH(CH₂-P)(CH₂-P) | S2c |
| -OCH₂-CH(CH₂-P)(CH₂-P) | S2d |
| -CO-NH((CH₂)₂P)((CH₂)₂P) | S3a |

In the compounds of formula I, II or III and its subformulae as described above and below, P is preferably selected from the group consisting of vinyloxy, acrylate, methacrylate, fluoroacrylate, chloroacrylate, oxetane and epoxide, most preferably from acrylate and methacrylate.

Further preferred are compounds of formula I, II or III and its subformulae as described above and below, wherein all polymerizable groups P that are present in the compound have the same meaning, and very preferably denote acrylate or methacrylate, most preferably methacrylate.

In the compounds of formula I, II or III and its subformulae as described above and below, R preferably denotes P-Sp-.

Further preferred are compounds of formula I, II or III and its subformulae as described above and below, wherein Sp denotes a single bond or -(CH₂)ₚ₁-, -O-(CH₂)ₚ₁-, -O-CO-(CH₂)ₚ₁, or -CO-O-(CH₂)ₚ₁, wherein p1 is 2, 3, 4, 5 or 6, and, if Sp is -O-(CH₂)ₚ₁-, -O-CO-(CH₂)ₚ₁ or -CO-O-(CH₂)ₚ₁ the O-atom or CO-group, respectively, is linked to the benzene ring.

Further preferred are compounds of formula I, II or III and its subformulae as described above and below, wherein one or none of the groups Sp is different from a single bond, and where Sp is not a single bond, Sp is preferably selected from -(CH₂)ₚ₁-, -O-(CH₂)ₚ₁-, -O-CO-(CH₂)ₚ₁, or -CO-O-(CH₂)ₚ₁, wherein p1 is 2, 3, 4, 5 or 6, and, if Sp is -O-(CH₂)ₚ₁-, -O-CO-(CH₂)ₚ₁ or -CO-O-(CH₂)ₚ₁ the O-atom or CO-group, respectively, is linked to the benzene ring.

Preferred compounds of formula I are selected from the following formulae: 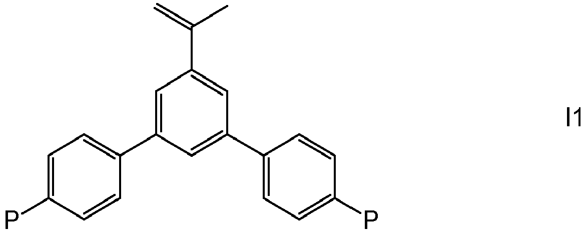 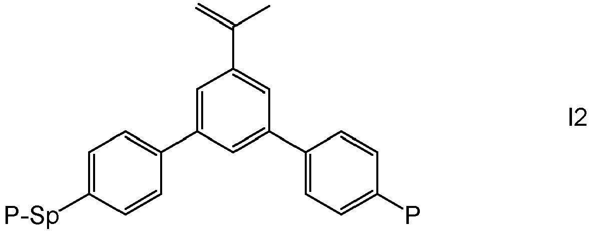 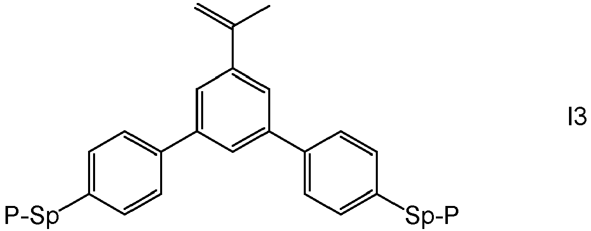 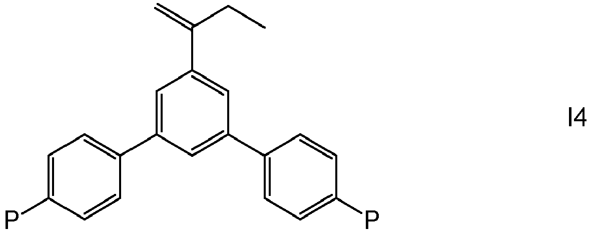 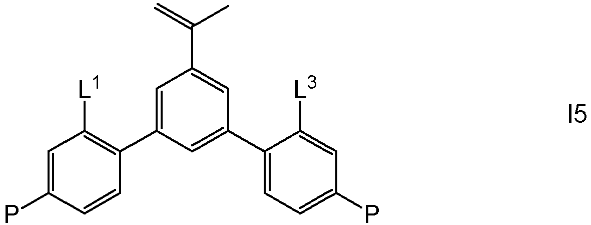 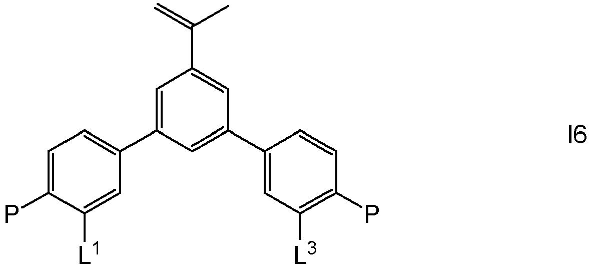 wherein
- P: is a polymerizable group, preferably a methacrylate group,
- Sp: a spacer group, and
- L¹, L³: independently are defined as for formula I above.

Very preferred compounds of formula I are selected from the following subformulae:

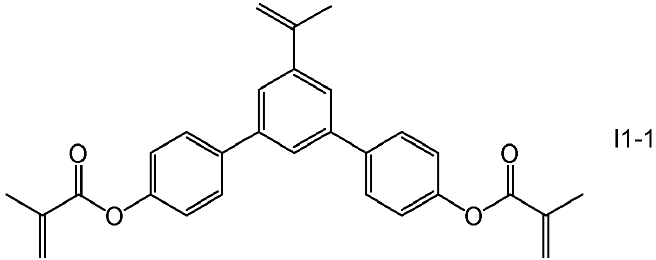

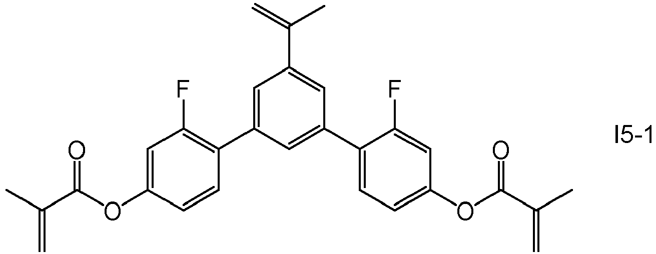

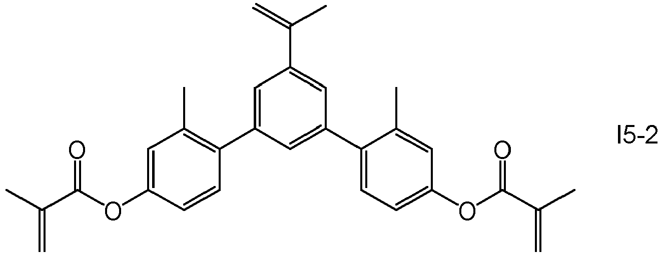

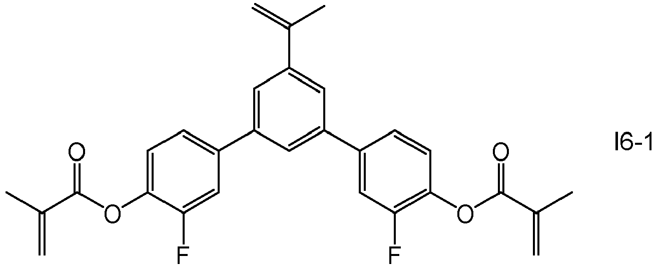

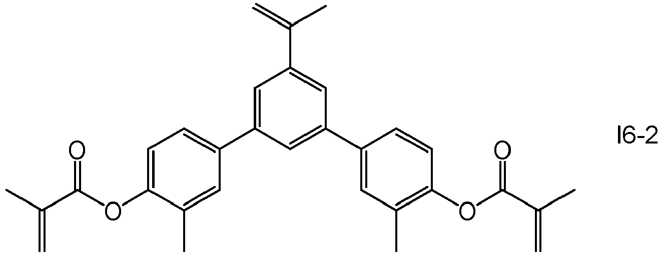

Preferred compounds of formula II are selected from the following formulae: 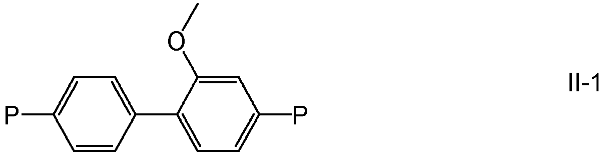 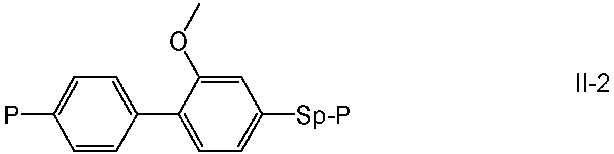 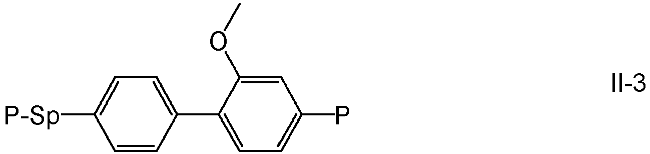 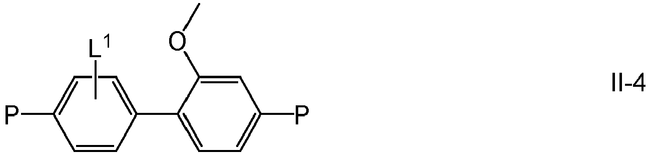 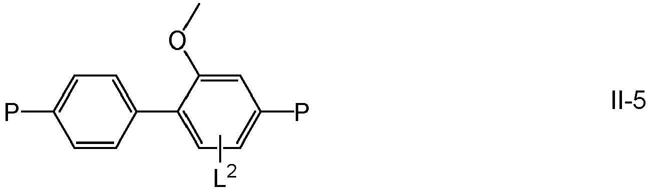 wherein P, L¹ and L² are defined as for formula II, and
- Sp: is a spacer group.

Very preferred compounds of formula II are selected from the following subformulae:

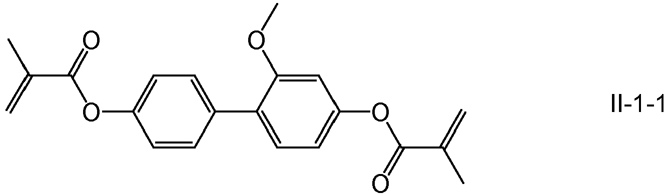

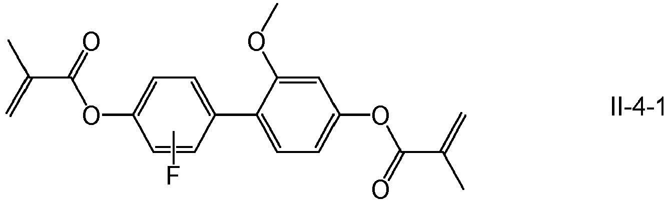

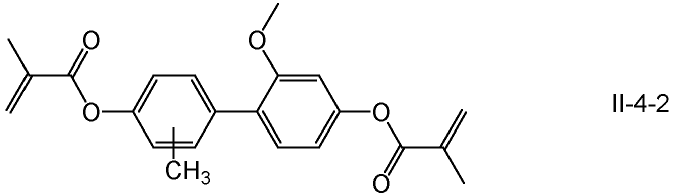

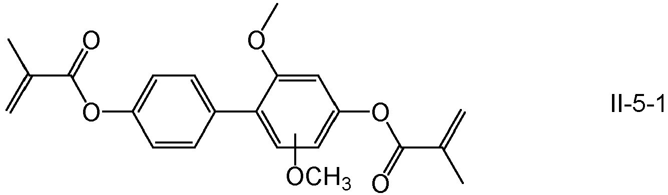

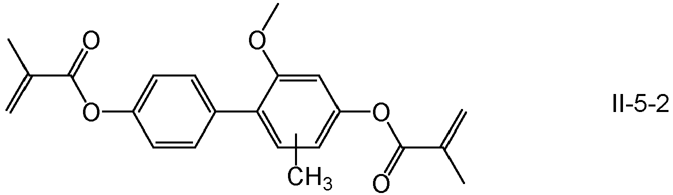

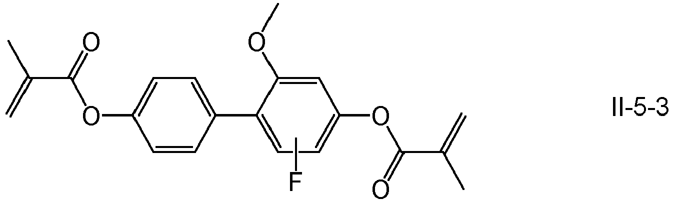

Preferred compounds of formula I or II and their subformulae are selected from the following preferred embodiments, including any combination thereof:
- All groups P in the compound have the same meaning,
- P is selected from the group consisting of acrylate, methacrylate and oxetane, very preferably acrylate or methacrylate,
- P is methacrylate,
- r = 0 and s = 0,
- R^{L} is methyl or ethyl, preferably methy.,
- all groups Sp in formula I are a single bond,
- Sp, when being different from a single bond, is -(CH₂)ₚ₂-, -(CH₂)ₚ₂-O-, -(CH₂)_{P2}-CO-O-, -(CH₂)_{P2}-O-CO-, wherein p2 is 2, 3, 4, 5 or 6, and the O-atom or the CO-group, respectively, is connected to the benzene ring,
- Sp is a single bond or denotes a spacer selected from -(CH₂)ₚ₂-, -(CH₂)ₚ₂-O-, -(CH₂)ₚ₂-CO-O- and -(CH₂)ₚ₂-O-CO-, wherein p2 is 2, 3, 4, 5 or 6, and the O-atom or the CO-group, respectively, is connected to the benzene ring, and
- L¹ denotes F, Cl or CH₃.

In a preferred embodiment of the current invention the LC medium comprises one or more, preferably one or two, self-alignment additives for vertical alignment of formula III.

Self-alignment additives can be polymerised in the LC medium under similar conditions as applied for the RMs in the PSA process. Usually they will polymerize simultaneously with the RM in the PSA process.

Suitable SA additives to induce homeotropic alignment, especially for use in SA-VA mode displays, are disclosed for example in US 2013/0182202, A1, US 2014/0838581 A1, US 2015/0166890 A1 and US 2015/0252265 A1.

In formula III the group MES preferably is a group selected from the following structures, which may be mono- or polysubstituted by any of the substituents L¹ and -Sp-P: 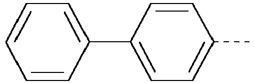 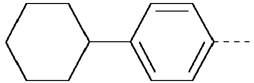 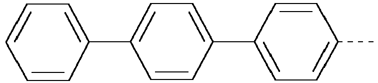 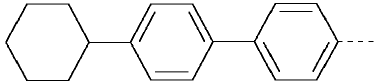 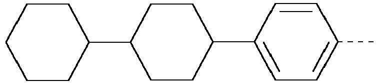 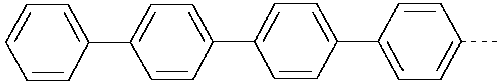 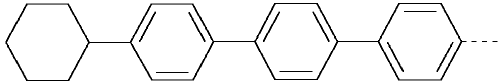 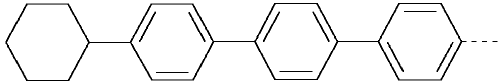 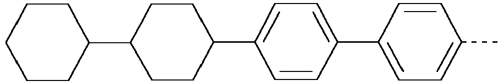 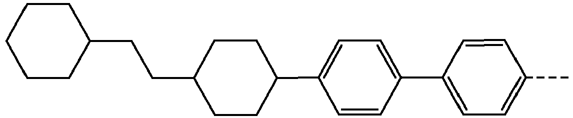 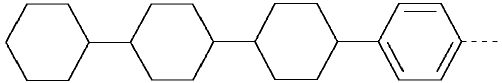 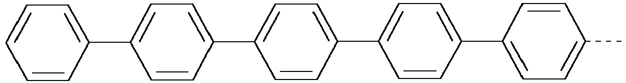 wherein
- L¹: in each case, independently of one another, denotes F, Cl, Br, I, -CN, -NO₂, -NCO, -NCS, -OCN, -SCN, -C(=O)N(R⁰)₂, -C(=O)R°, optionally substituted silyl, optionally substituted aryl or cycloalkyl having 3 to 20 C atoms, or straight-chain or branched alkyl, alkoxy, alkylcarbonyl, alkoxycarbonyl, alkyl-carbonyloxy or alkoxycarbonyloxy having up to 25 C atoms, in which, in addition, one or more H atoms may each be replaced by F or Cl,
- P: denotes a polymerizable group, and
- Sp: denotes a spacer group or a single bond, and the dotted line indicates the attachment point of the polar anchor group R^{a}.

Preferably the self-alignment additive for vertical alignment is selected of formula IIIa

R¹-[A²-Z²]ₘ-A¹-R^{a} IIIa

in which
- A¹, A²: each, independently of one another, denote an aromatic, heteroaromatic, alicyclic or heterocyclic group, which may also contain fused rings, and which may also be mono- or polysubstituted by a group L or -Sp-P,
- L: in each case, independently of one another, denotes H, F, Cl, Br, I, -CN, -NO₂, -NCO, -NCS, -OCN, -SCN, -C(=O)N(R⁰)₂, -C(=O)R°, optionally substituted silyl, optionally substituted aryl or cycloalkyl having 3 to 20 C atoms, or straight-chain or branched alkyl, alkoxy, alkylcarbonyl, alkoxycarbonyl, alkylcarbonyloxy or alkoxycarbonyloxy having up to 25 C atoms, in which, in addition, one or more H atoms may each be replaced by F or Cl,
- P: denotes a polymerizable group,
- Sp: denotes a spacer group or a single bond,
- Z²: in each case, independently of one another, denotes a single bond, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)n1-, -CH=CH-, -CF=CF-, -C≡C-, -CH=CH-COO-, -OCO-CH=CH-, -(CR⁰R⁰⁰)ₙ₁-, -CH(-Sp-P)-, -CH₂CH(-Sp-P)-, or -CH(-Sp-P)CH(-Sp-P)-,
- n1: denotes 1, 2, 3 or 4,
- m: denotes 1, 2, 3, 4, 5 or 6,
- R⁰: in each case, independently of one another, denotes alkyl having 1 to 12 C atoms,
- R⁰⁰: in each case, independently of one another, denotes H or alkyl having 1 to 12 C atoms,
- R¹: independently of one another, denotes H, halogen, straight-chain, branched or cyclic alkyl having 1 to 25 C atoms, in which, in addition, one or more non-adjacent CH₂ groups may each be replaced by -C≡C-, -CH=CH-, -O-, -S-, -CO-, -CO-O-, -O-CO-, or -O-CO-O- in such a way that O and/or S atoms are not linked directly to one another and in which, in addition, one or more H atoms may each be replaced by F or Cl, or a group -Sp-P, and
- R^{a}: is defined as above, preferably denotes a polar anchor group further defined by having at least one group selected from -OH, -NH₂, NHR¹¹, C(O)OH and -CHO, where R¹¹ denotes alkyl having 1 to 12 C atoms.

In a preferred embodiment of the invention the self-alignment additive is a polymerizable compound, which has at least one polymerizable group P, more preferably wherein at least one of the ring elements A¹ and A² is substituted by at least one group -Sp-P.

In another preferred embodiment an LC medium or a polymer stabilised SA-VA display according to the present invention contains one or more self-alignment additives selected from Table D below.

The anchor group R^{a} of the self-alignment additive is more preferably defined as
- R^{a}: an anchor group of the formula 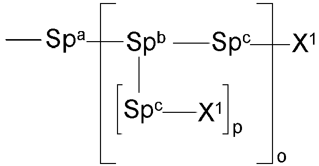 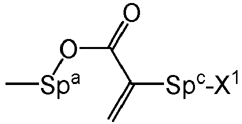 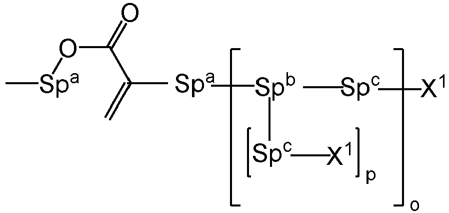 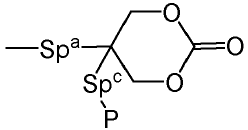 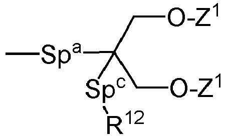 or 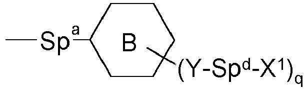
wherein
- p: denotes 1 or 2,
- q: denotes 2, 3 or 4,
- B: denotes a substituted or unsubstituted ring system or condensed ring system, preferably a ring system selected from benzene, pyridine, cyclohexane, dioxane or tetrahydropyran,
- Y,: independently of one another, denotes -O-, -S-, -C(O)-, -C(O)O-, -OC(O)-, -NR¹¹- or a single bond,
- o: denotes 0 or 1,
- X¹,: independently of one another, denotes H, alkyl, fluoroalkyl, OH, NH₂, NHR¹¹, NR¹¹₂, -PO(OR¹¹)₂, -SO₂R¹¹, OR¹¹, C(O)OH, or -CHO, where at least one group X¹ denotes a radical selected from -OH, -NH₂, NHR¹¹, -PO(OR¹¹)₂, -SO₂R¹¹, C(O)OH and -CHO,
- Z¹: independently -(CO)-CH₂(CO)OCH₃, -(CO)-CH₂(CO)-(C=CH₂)-OCH₃, -(CO)-CH₂(CO)-(CH=CH)-OCH₃, -(CO)-(CO)OCH₃, -CH₂-(CO)-(CO)OCH₃, -(CO)-CH₃, -(CO)-CH₂(CO)-(CH₂CH₂)-OCH₃,
- P: a polymerizable group,
- R¹¹: denotes alkyl having 1 to 12 C atoms,
- R¹²: H, alkyl having 1 to 12 C atoms, P or X¹,
- Sp^{a}, Sp^{c}, Sp^{d}: each, independently of one another, denote a spacer group or a single bond, and
- Sp^{b}: denotes a tri- or tetravalent group, preferably CH, N or C.

Formulae III and IIIa optionally include polymerizable compounds. Within this disclosure the "medium comprising a compound of formula III/IIIa" refers to both, the medium comprising the compound of formula III/Illa and, alternatively, to the medium comprising the compound in its polymerized form.

For the case the one or more compounds of formula III are substituted with one or more polymerizable groups (-Sp-P), the LC medium according to the invention comprises
- a polymerizable component A) comprising, preferably consisting of, polymerizable compounds, at least one of which is a compound of formula I and at least one of which is of formula II and at least one of which is of formula III,
- a liquid-crystalline component B), hereinafter also referred to as "LC host mixture", comprising, preferably consisting of, one or more mesogenic or liquid-crystalline compounds.

In the compounds of the formulae IIIa, and subformulae thereof, Z¹ and Z² preferably denote a single bond, -C₂H₄-, -CF₂O- or -CH₂O-. In a specifically preferred embodiment Z¹ and Z² each independently denote a single bond.

In the compounds of the formula IIIa, the group L, in each case independently, preferably denotes F or alkyl, preferably CH₃, C₂H₅ or C₃H₇.

Preferred compounds of the formula III are illustrated by the following sub-formulae III-A to III-D 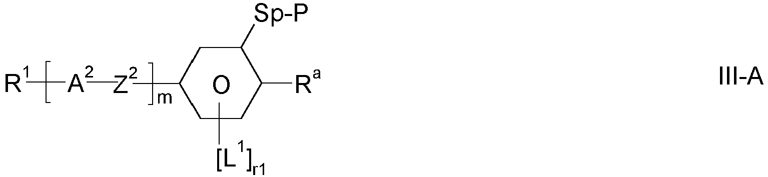 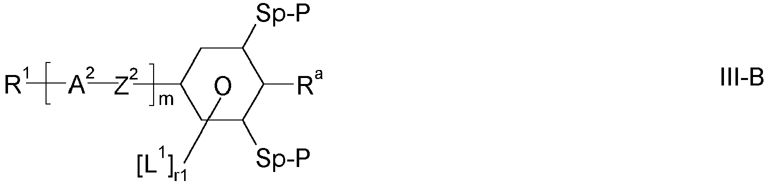 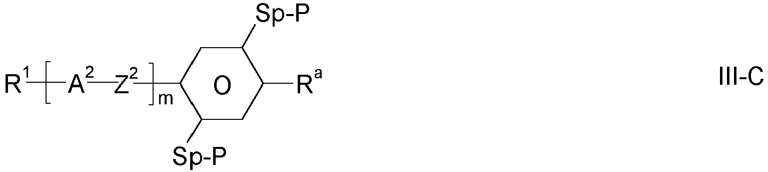 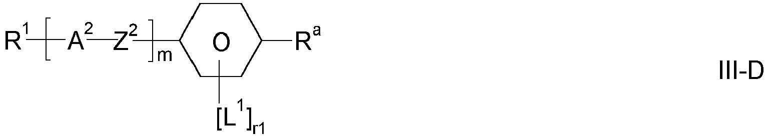 in which R¹, R^{a}, A², Z², Sp, and P have the meanings as defined for formula IIIa above,
L¹ is independently defined as L in formula IIIa above,
m independently is 1, 2 or 3, and
r1 independently is 0, 1, 2, 3, or 4, preferably 0, 1 or 2.

In the compounds of the formulae III-A to III-D, L¹ preferably denotes F or alkyl, preferably CH₃, C₂H₅ or C₃H₇.

In a preferred embodiment, r2 denotes 1 and/or r1 denotes 0.

The polymerizable group P of formulae III, IIIa, III-A to III-D preferably is methacrylate, acrylate or another substituted acrylate, most preferably methacrylate.

In the above and below formulae IIIa or III-A to III-D and their subformulae Z¹ preferably independently denotes a single bond or -CH₂CH₂-, and very particularly a single bond.

R^{a} denotes preferably 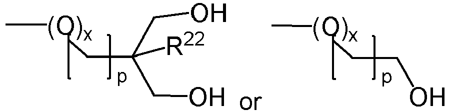
wherein p = 1, 2, 3, 4, 5 or 6,
x = 1 or 0, preferably 1, and
R²² is H, methyl, ethyl, n-propyl, i-propyl, n-butyl, tert-butyl, n-pentyl, or -CH₂CH₂-tert-butyl
in particular
   -O(CH₂)₂-OH, -O(CH₂)₃-OH, 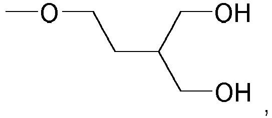 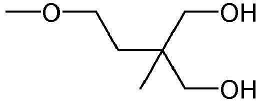 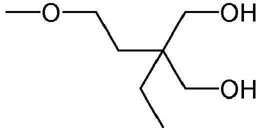 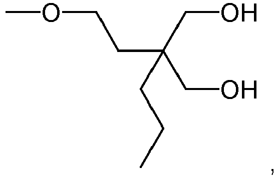 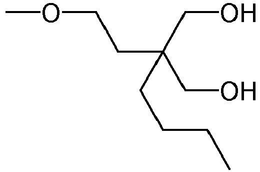 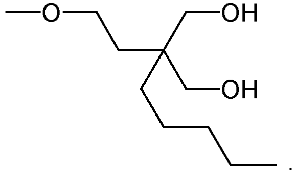 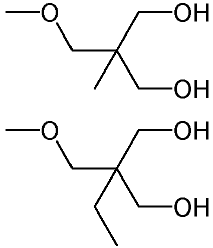 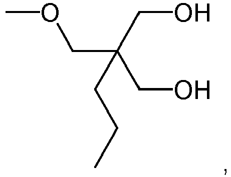 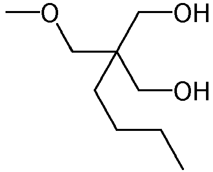 or

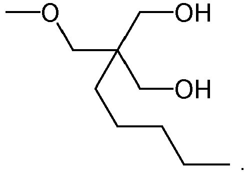

In the formula IIIaand in the sub-formulae of the formula IIIa R¹ preferably denotes a straight-chain alkyl or branched alkyl radical having 1-8 C atoms, preferably a straight-chain alkyl radical. In the compounds of the formulae IIIa or III-A to III-D R¹ more preferably denotes CH₃, C₂H₅, n-C₃H₇, n-C₄H₉, n-C₅H₁₁, n-C₆H₁₃ or CH₂CH(C₂H₅)C₄H₉. R¹ furthermore may denote alkenyloxy, in particular OCH₂CH=CH₂, OCH₂CH=CHCH₃, OCH₂CH=CHC₂H₅, or alkoxy, in particular OC₂H₅, OC₃H₇, OC₄H₉, OC₅H₁₁ and OC₆H₁₃. Particularly preferable R¹ denotes a linear alkyl residue, preferably C₅H₁₁.

The compounds and intermediates of the formulae I, II and III and sub-formulae thereof can be prepared analogously to processes known to the person skilled in the art and described in standard works of organic chemistry, such as, for example, in Houben-Weyl, Methoden der organischen Chemie [Methods of Organic Chemistry], Thieme-Verlag, Stuttgart.

For example, compounds of formula I and II can be synthesised by esterification or etherification of intermediates, wherein the group Sp-P on both ends denotes OH, using corresponding acids, acid derivatives, or halogenated compounds containing a polymerizable group P.

For example, acrylic or methacrylic esters can be prepared by esterification of the corresponding alcohols with acid derivatives like, for example, (meth)acryloyl chloride or (meth)acrylic anhydride in the presence of a base like pyridine or triethyl amine, and 4-(*N*,*N*-dimethylamino)pyridine (DMAP). Alternatively the esters can be prepared by esterification of the alcohols with (meth)acrylic acid in the presence of a dehydrating reagent, for example according to Steglich with dicyclohexylcarbodiimide (DCC), N-(3-dimethylaminopropyl)-N'-ethylcarbodiimide (EDC) or N-(3-dimethylaminopropyl)-N'-ethylcarbodiimide hydrochloride and DMAP.

Further suitable methods are shown in the examples.

For the production of PSA displays, the polymerizable compounds contained in the LC medium are polymerised or crosslinked (if one compound contains two or more polymerizable groups) by in-situ polymerization in the LC medium between the substrates of the LC display, optionally while a voltage is applied to the electrodes.

The structure of the PSA displays according to the invention corresponds to the usual geometry for PSA displays, as described in the prior art cited at the outset. Geometries without protrusions are preferred, in particular those in which, in addition, the electrode on the colour filter side is unstructured and only the electrode on the TFT side has slots. Particularly suitable and preferred electrode structures for PS-VA displays are described, for example, in US 2006/0066793 A1.

A preferred PSA type LC display of the present invention comprises:
- a first substrate including a pixel electrode defining pixel areas, the pixel electrode being connected to a switching element disposed in each pixel area and optionally including a micro-slit pattern, and optionally a first alignment layer disposed on the pixel electrode,
- a second substrate including a common electrode layer, which may be disposed on the entire portion of the second substrate facing the first substrate, and optionally a second alignment layer,
- an LC layer disposed between the first and second substrates and including an LC medium according to the invention as described above and below, wherein the polymerizable component (A )may also be polymerised.

The self-alignment additive contained in the medium initiates vertical alignment of the LC layer (perpendicular to the surfaces) or tilted vertical alignment.

The LC layer with the LC medium can be deposited between the substrates of the display by methods that are conventionally used by display manufacturers, for example the so-called one-drop-filling (ODF) method or ink-jet printing. The polymerizable component of the LC medium is then polymerised for example by UV photopolymerization. The polymerization can be carried out in one step or in two or more steps.

The PSA display may comprise further elements, like a colour filter, a black matrix, a passivation layer, optical retardation layers, transistor elements for addressing the individual pixels, etc., all of which are well known to the person skilled in the art.

The electrode structure can be designed by the skilled person depending on the individual display type. For example for PS-VA displays a multi-domain orientation of the LC molecules can be induced by providing electrodes having slits and/or bumps or protrusions in order to create two, four or more different tilt alignment directions.

Upon polymerization the polymerizable compounds form a crosslinked polymer, which causes a certain pretilt of the LC molecules in the LC medium. Without wishing to be bound to a specific theory, it is believed that at least a part of the crosslinked polymer, which is formed by the polymerizable compounds, will phase-separate or precipitate from the LC medium and form a polymer layer on the substrates or electrodes. Microscopic measurement data (like SEM and AFM) have confirmed that at least a part of the formed polymer accumulates at the LC/substrate interface.

The polymerization can be carried out in one step. It is also possible firstly to carry out the polymerization, optionally while applying a voltage, in a first step in order to produce a pretilt angle, and subsequently, in a second polymerization step without an applied voltage, to polymerise or crosslink the compounds which have not reacted in the first step ("end curing").

Suitable and preferred polymerization methods are, for example, thermal or photopolymerization, preferably photopolymerization, in particular UV induced photopolymerization, which can be achieved by exposure of the polymerizable compounds to UV radiation.

Optionally one or more polymerization initiators are added to the LC medium. Suitable conditions for the polymerization and suitable types and amounts of initiators are known to the person skilled in the art and are described in the literature. Suitable for free-radical polymerization are, for example, the commercially available photoinitiators Irgacure651^{®}, Irgacure184^{®}, lrgacure907^{®}, Irgacure369^{®} or Darocure1173^{®} (Ciba AG). If a polymerization initiator is employed, its proportion is preferably 0.001 to 5% by weight, particularly preferably 0.001 to 1% by weight.

The polymerizable compounds according to the invention are also suitable for polymerization without an initiator, which is accompanied by considerable advantages, such, for example, lower material costs and in particular less contamination of the LC medium by possible residual amounts of the initiator or degradation products thereof. The polymerization can thus also be carried out without the addition of an initiator. In a preferred embodiment, the LC medium thus does not contain a polymerization initiator.

The LC medium may also comprise one or more stabilisers in order to prevent undesired spontaneous polymerization of the RMs, for example during storage or transport. Suitable types and amounts of stabilisers are known to the person skilled in the art and are described in the literature. Particularly suitable are, for example, the commercially available stabilisers from the Irganox^{®} series (Ciba AG), such as, for example, Irganox^{®} 1076. If stabilisers are employed, their proportion, based on the total amount of RMs or the polymerizable component (component A), is preferably 10-500,000 ppm, particularly preferably 50-50,000 ppm (1000 ppm = 0.1 % by weight).

The combination of polymerizable components as disclosed herein is advantageously sensitive to UV radiation even without photoinitiator. The medium can be used at wavelengths of 300-380 nm, or even 340 nm or more, and preferably 400 nm or less.

The polymerizable compounds of formula I, II and III do in particular show good UV absorption in, and are therefore especially suitable for, a process of preparing a PSA display including one or more of the following features:
- the polymerizable medium is exposed to UV light in the display in a 2-step process, including a first UV exposure step ("UV-1 step") to generate the tilt angle, and a second UV exposure step ("UV-2 step") to finish polymerization,
- the polymerizable medium is exposed to UV light in the display generated by an energy-saving flurescent UV lamp (also known as "Green UV lamps"). These lamps are characterized by a relative low intensity (1/100-1/10 of a conventional UV1 lamp) in their absorption spectra from 300-380 nm, and are preferably used in the UV2 step, but are optionally also used in the UV1 step when avoiding high intensity is necessary for the process.
- the polymerizable medium is exposed to UV light in the display generated by a UV lamp with a radiation spectrum that is shifted to longer wavelengths, preferably 340nm or more, to avoid short UV light exposure in the PS-VA process.

Both using lower intensity and a UV shift to longer wavelengths protect the organic layer against damage that may be caused by the UV light.

A preferred embodiment of the present invention relates to a process for preparing a PSA display as described above and below, comprising one or more of the following features:
- the polymerizable LC medium is exposed to UV light in a 2-step process, including a first UV exposure step ("UV-1 step") to generate the tilt angle, and a second UV exposure step ("UV-2 step") to finish polymerization,
- the polymerizable LC medium is exposed to UV light generated by a UV lamp having an intensity of from 0.5 mW/cm² to 10 mW/cm² in the wavelength range from 300-380nm, preferably used in the UV2 step, and optionally also in the UV1 step,
- the polymerizable LC medium is exposed to UV light having a wavelength of 340 nm or more, and preferably 400 nm or less.

This preferred process can be carried out for example by using the desired UV lamps or by using a band pass filter and/or a cut-off filter, which are substantially transmissive for UV light with the respective desired wavelength(s) and are substantially blocking light with the respective undesired wavelengths. For example, when irradiation with UV light of wavelengths λ of 300-400nm is desired, UV exposure can be carried out using a wide band pass filter being substantially transmissive for wavelengths 300nm < λ < 400nm. When irradiation with UV light of wavelength λ of more than 340 nm is desired, UV exposure can be carried out using a cut-off filter being substantially transmissive for wavelengths λ > 340 nm.

"Substantially transmissive" means that the filter transmits a substantial part, preferably at least 50% of the intensity, of incident light of the desired wavelength(s). "Substantially blocking" means that the filter does not transmit a substantial part, preferably at least 50% of the intensity, of incident light of the undesired wavelengths. "Desired (undesired) wavelength" e.g. in case of a band pass filter means the wavelengths inside (outside) the given range of λ, and in case of a cut-off filter means the wavelengths above (below) the given value of λ.

This preferred process enables the manufacture of displays by using longer UV wavelengths, thereby reducing or even avoiding the hazardous and damaging effects of short UV light components.

UV radiation energy is in general from 6 to 100 J/cm², depending on the production process conditions.

Preferably the LC medium according to the present invention does essentially consist of a polymerizable component A), or one or more polymerizable compounds of formula I, II and III, and an LC component B) or LC host mixture, as described above and below.

However, the LC medium may additionally comprise one or more further components or additives, preferably selected from the list including but not limited to co-monomers, chiral dopants, polymerization initiators, inhibitors, stabilisers, surfactants, wetting agents, lubricating agents, dispersing agents, hydrophobing agents, adhesive agents, spreading agents, flow improvers, defoaming agents, deaerators, diluents, reactive diluents, auxiliaries, colourants, dyes, pigments and nanoparticles.

Preference is furthermore given to LC media in which the liquid-crystalline component B) or the LC host mixture has a nematic LC phase, and preferably has no chiral liquid crystal phase.

The LC component B), or LC host mixture, is preferably a nematic LC mixture.

Preference is furthermore given to achiral compounds of formula I, and to LC media in which the compounds of component A and/or B are selected exclusively from the group consisting of achiral compounds.

Preferably the proportion of the polymerizable component A) in the LC medium is from > 0.3 to < 5%, very preferably from > 0.6 to < 4%, most preferably from 0.9 to 3%.

Preferably the proportion of compounds of formula I in the LC medium is from >0 to < 5%, very preferably from >0.3 to < 3%, most preferably from 0. 1 to 2.5%.

Preferably the proportion of compounds of formula II in the LC medium is from >0.1 to <5%, very preferably from >0.2 to < 3%, most preferably from 0.2 to 1.5%.

Preferably the proportion of the LC component B) in the LC medium is from 95 to < 100%, very preferably from 97 to <100%.

In another preferred embodiment the polymerizable component B) comprises, in addition to the compounds of formula I, II and IIII, one or more further polymerizable compounds ("co-monomers"), preferably selected from RMs.

Suitable and preferred mesogenic co-monomers are selected from the following formulae: 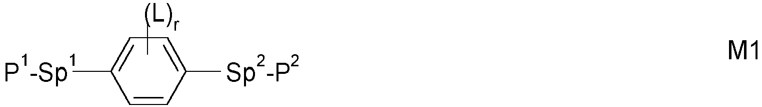 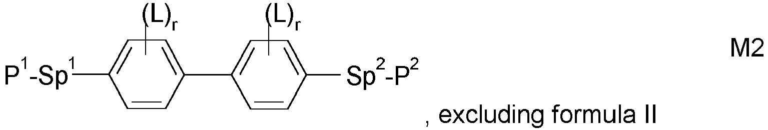 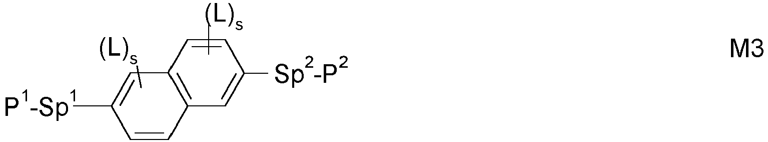 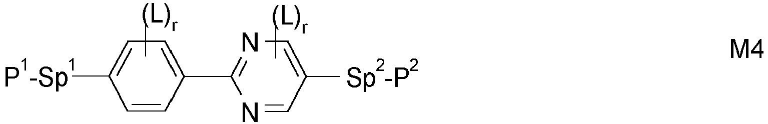 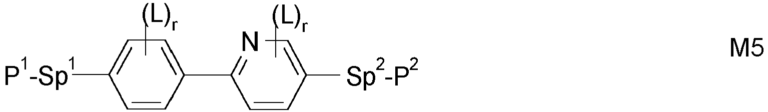 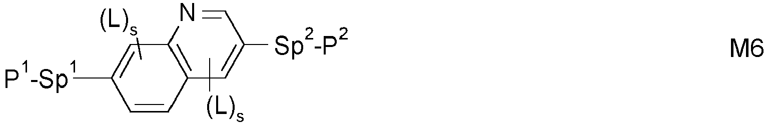 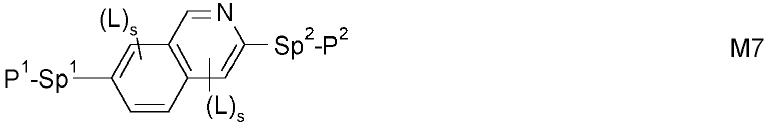 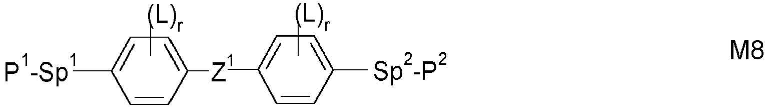 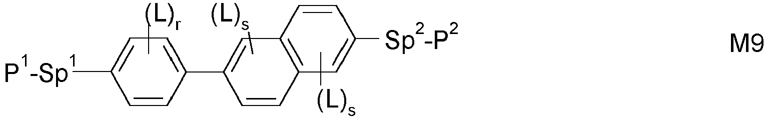 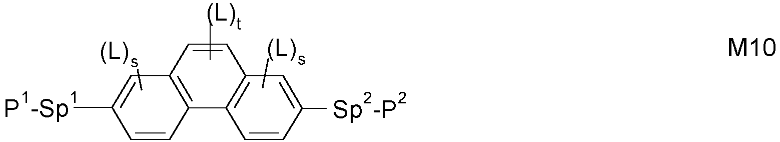 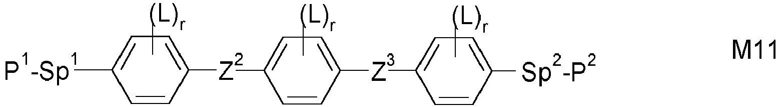 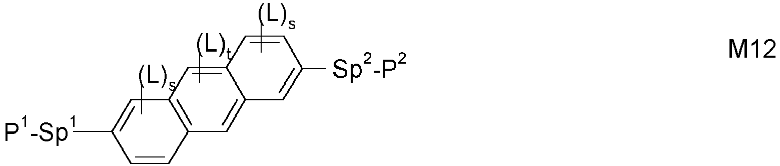 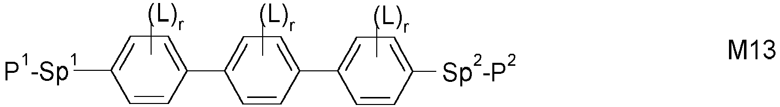 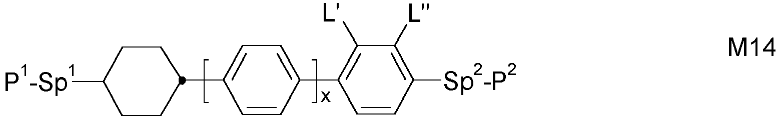 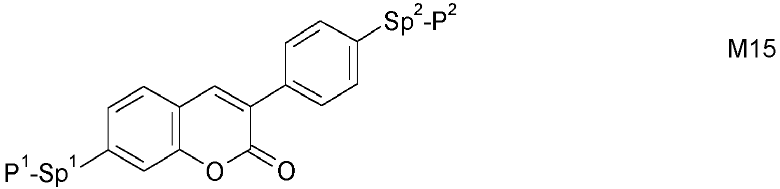 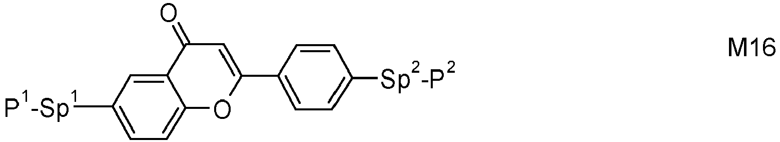 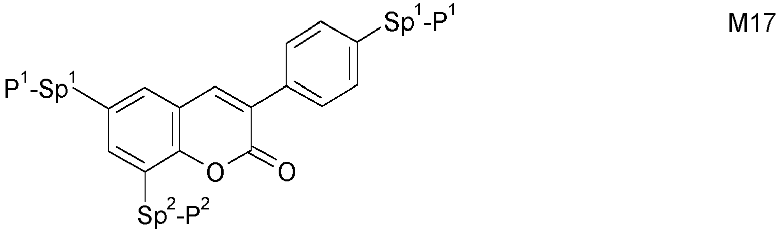 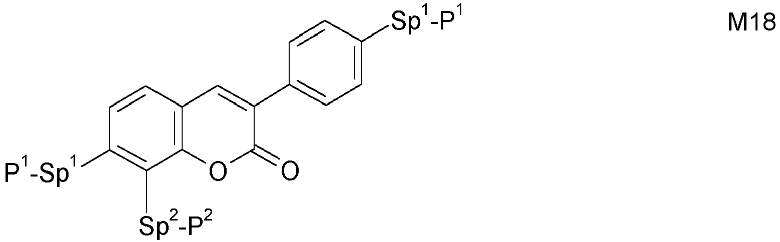 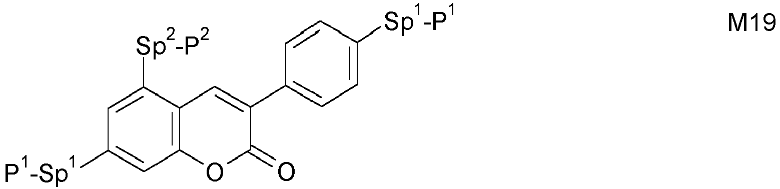 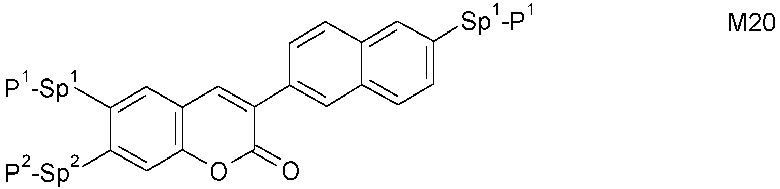 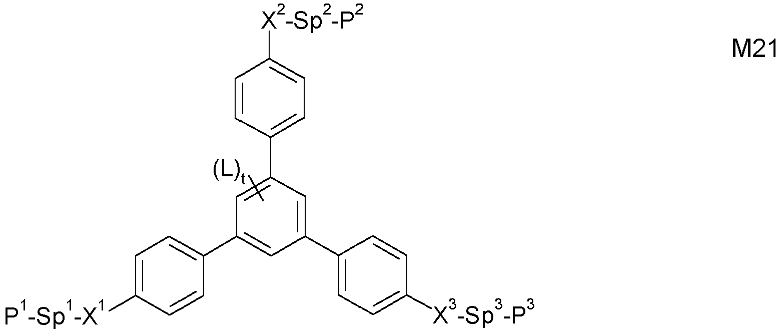 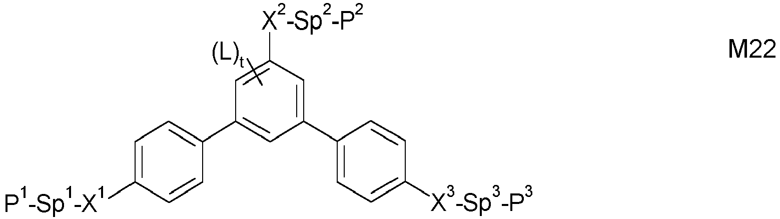 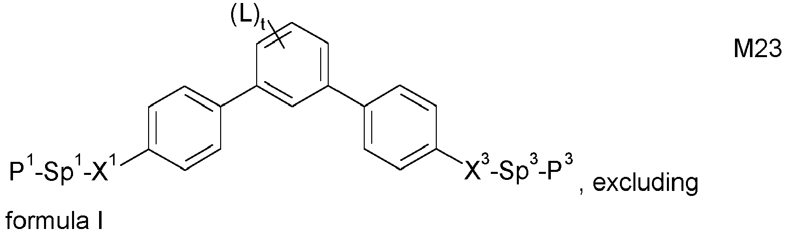 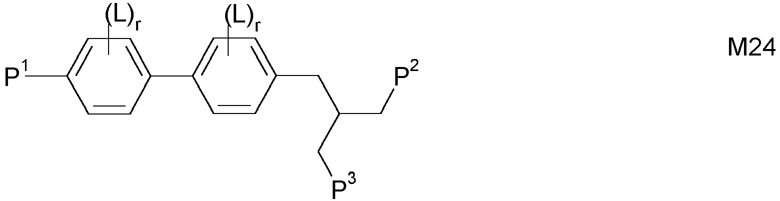 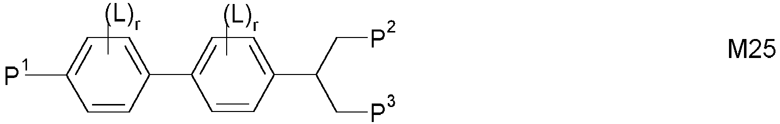 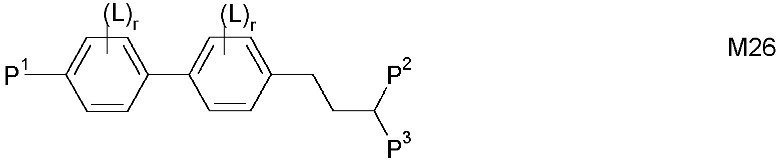 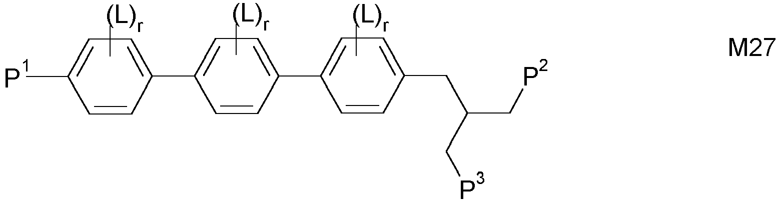 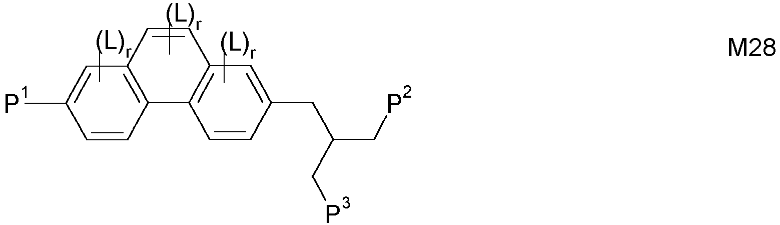 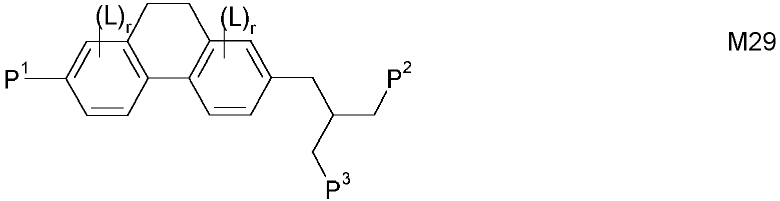 in which the individual radicals have the following meanings:
- P¹, P² and P³: each, independently of one another, denote an acrylate or methacrylate group,
- Sp¹, Sp² and Sp³: each, independently of one another, denote a single bond or a spacer group having one of the meanings indicated above and below for Sp, and particularly preferably denote -(CH₂)ₚ₁-, -(CH₂)ₚ₁-O-, -(CH₂)ₚ₁-CO-O-, -(CH₂)ₚ₁-O-CO- or -(CH₂)ₚ₁-O-CO-O-, in which p1 is an integer from 1 to 12, where, in addition, one or more of the radicals P¹-Sp¹-, P¹-Sp²- and P³-Sp³- may denote R^{aa}, with the proviso that at least one of the radicals P¹-Sp¹-, P²-Sp² and P³-Sp³- present is different from R^{aa},
- R^{aa}: denotes H, F, Cl, CN or straight-chain or branched alkyl having 1 to 25 C atoms, in which, in addition, one or more non-adjacent CH₂ groups may each be replaced, independently of one another, by C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),
- R⁰, R⁰⁰: each, independently of one another and identically or differently on each occurrence, denote H or alkyl having 1 to 12 C atoms,
- R^{y} and R^{z}: each, independently of one another, denote H, F, CH₃ or CF₃,
- X¹, X² and X³: each, independently of one another, denote -CO-O-, -O-CO- or a single bond,
- Z¹: denotes -O-, -CO-, -C(R^{y}R^{z})- or -CF₂CF₂-,
- Z² and Z³: each, independently of one another, denote -CO-O-, -O-CO-, -CH₂O-, -OCH₂-, -CF₂O-, -OCF₂- or -(CH₂)ₙ-, where n is 2, 3 or 4,
- L: on each occurrence, identically or differently, denotes F, Cl, CN or straight-chain or branched, optionally mono- or poly-fluorinated alkyl, alkoxy, alkenyl, alkynyl, alkylcarbonyl, alkoxycarbonyl, alkylcarbonyloxy or alkoxycarbonyloxy having 1 to 12 C atoms, preferably F,
- L' and L": each, independently of one another, denote H, F or Cl,
- r: denotes 0, 1, 2, 3 or 4,
- s: denotes 0, 1, 2 or 3,
- t: denotes 0, 1 or 2,
- x: denotes 0 or 1.

Especially preferred are compounds of formulae M2, M13, M17, M22, M23, M24 and M30.

A preferred co-monomer is of formula M2-1: 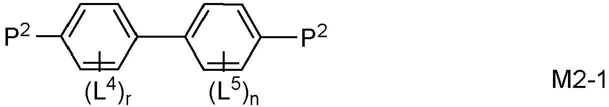 wherein
- L⁴, L⁵: independently are F, Cl or linear, branched or cyclic alkyl having 1 to 5 C atoms, wherein one or more non-adjacent CH₂-groups are optionally replaced by -S-, -CO-, -CO-O-, -O-CO- or -O-CO-O- in such a manner that O- and/or S-atoms are not directly connected with each other, and wherein one or more H atoms are each optionally replaced by F or Cl, preferably F, Cl, CH₃, or CH₂CH₃.
particularly of formula selected from M2-1-1 to M2-1-4

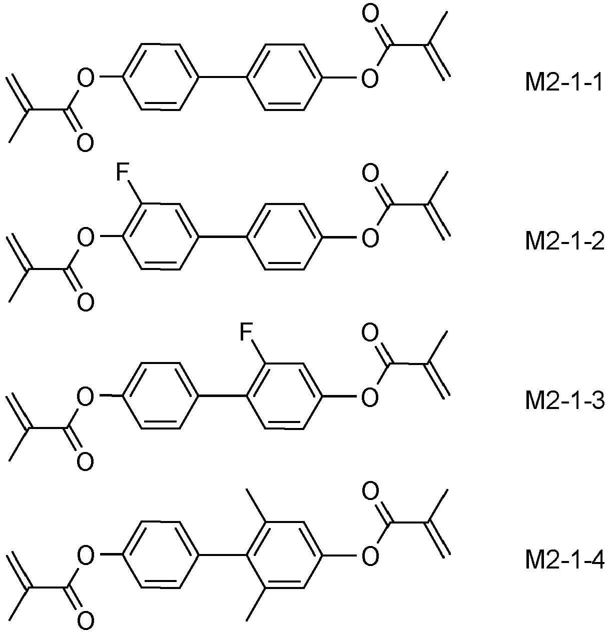

In a preferred embodiment of the invention the LC medium comprises a compound of formula M2, wherein L is defined as above, but not methoxy, preferably of formula M2-1 and most preferably of formula M2-1-1.

Further preferred are trireactive compounds M15 to M30, in particular M17, M18, M19, M22, M23, M24, M25, M26, M30 and M31.

In the compounds of formulae M1 to M29 the group 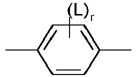 is preferably 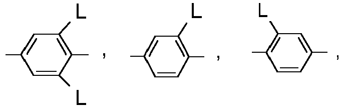 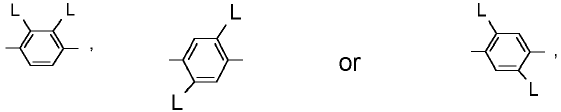 wherein L on each occurrence, identically or differently, has one of the meanings given above or below, and is preferably F, Cl, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ or P-Sp-, very preferably F, Cl, CN, CH₃, C₂H₅, OCH₃, COCH₃, OCF₃ or P-Sp-, more preferably F, Cl, CH₃, OCH₃, COCH₃ oder OCF₃, especially F or CH₃.

Besides the polymerizable compounds described above, the LC media for use in the LC displays according to the invention comprise an LC mixture ("host mixture") comprising one or more, preferably two or more LC compounds which are selected from low-molecular-weight compounds that are unpolymerizable. These LC compounds are selected such that they stable and/or unreactive to a polymerization reaction under the conditions applied to the polymerization of the polymerizable compounds.

In principle, any LC mixture which is suitable for use in conventional displays is suitable as host mixture. Suitable LC mixtures are known to the person skilled in the art and are described in the literature, for example mixtures in VA displays in EP 1 378 557 A1 and mixtures for OCB displays in EP 1 306 418 A1 and DE 102 24 046 A1.

Besides the polymerizable component A) as described above, the LC media according to the present invention comprise an LC component B), or LC host mixture, comprising one or more, preferably two or more LC compounds which are selected from low-molecular-weight compounds that are unpolymerizable. These LC compounds are selected such that they stable and/or unreactive to a polymerization reaction under the conditions applied to the polymerization of the polymerizable compounds.

In a preferred embodiment the LC medium contains an LC component B), or LC host mixture, based on compounds with negative dielectric anisotropy. Such LC media are especially suitable for use in PS-VA and PS-UB-FFS displays. Particularly preferred embodiments of such an LC medium are those of sections a)-y) below:
a) LC medium wherein the component B) or LC host mixture comprises one or more compounds selected from formulae CY and PY: 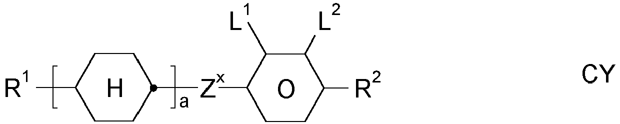 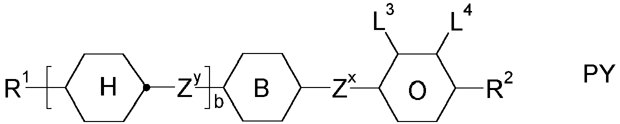 wherein
   - a: denotes 1 or 2,
   - b: denotes 0 or 1, 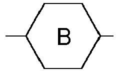 denotes 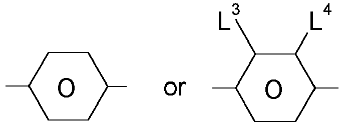
   - R¹ and R²: each, independently of one another, denote alkyl having 1 to 12 C atoms, where, in addition, one or two non-adjacent CH₂ groups may be replaced by -O-, -CH=CH-, 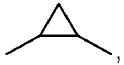 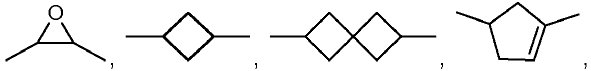 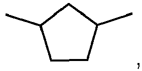 -C≡C-, -CO-, -OCO- or -COO- in such a way that O atoms are not linked directly to one another, preferably alkyl or alkoxy having 1 to 6 C atoms,
   - Z^{x} and Z^{y}: each, independently of one another, denote -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- or a single bond, preferably a single bond,
   - L¹⁻⁴: each, independently of one another, denote F, Cl, OCF₃, CF₃, CH₃, CH₂F, CHF₂.

Preferably, both L¹ and L² denote F or one of L¹ and L² denotes F and the other denotes C!, or both L³ and L⁴ denote F or one of L³ and L⁴ denotes F and the other denotes Cl.

The compounds of the formula CY are preferably selected from the group consisting of the following sub-formulae: 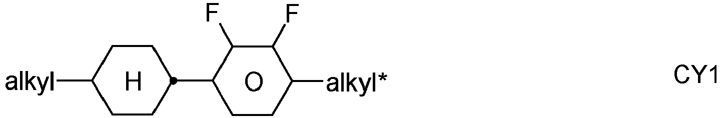 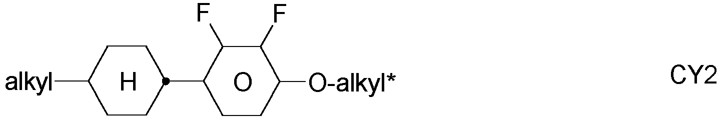 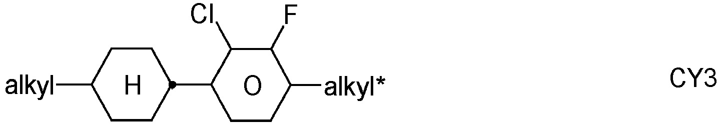 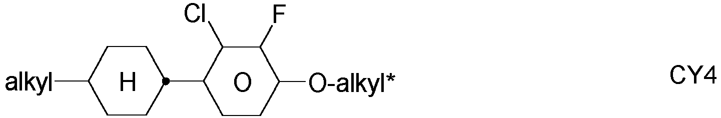 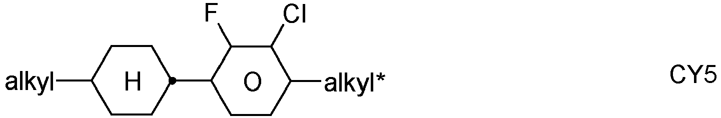 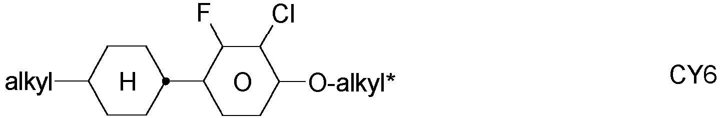 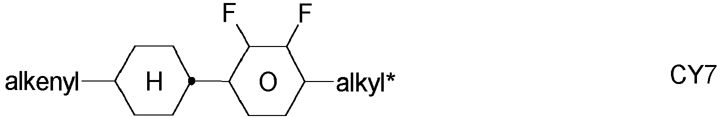 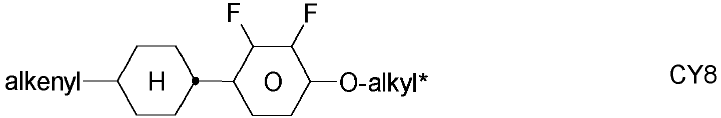 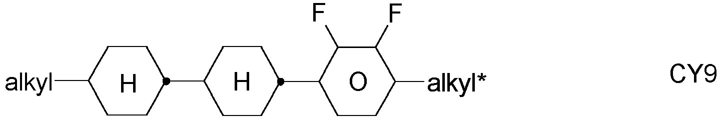 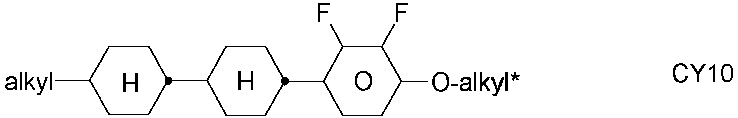 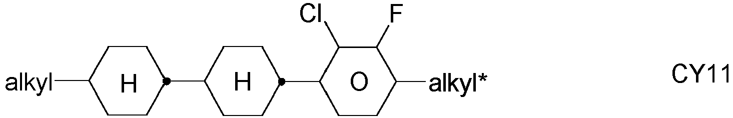 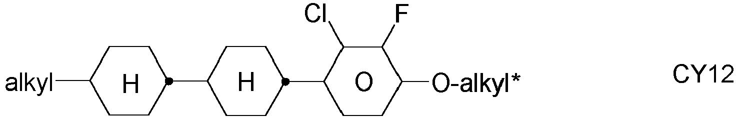 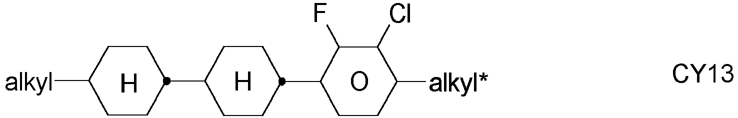 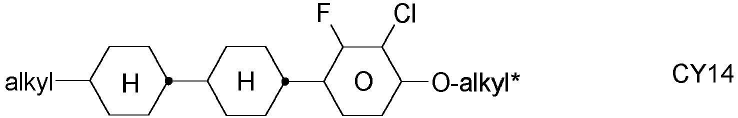 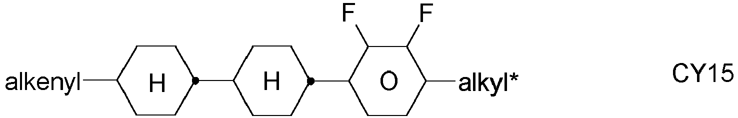 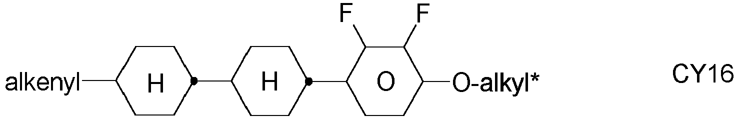 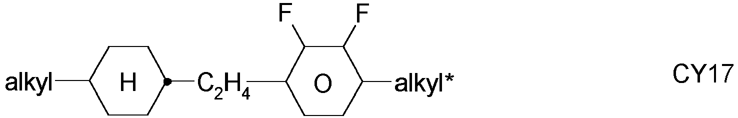 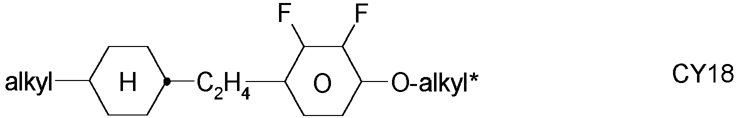 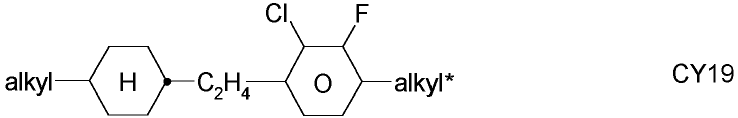 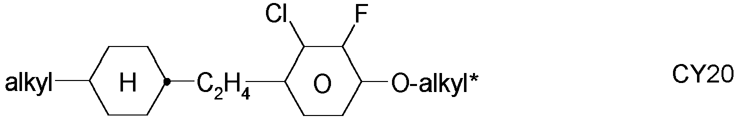 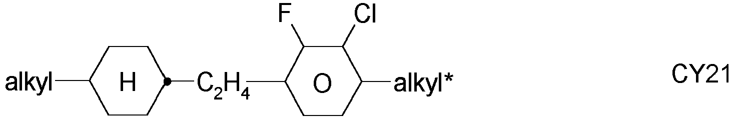 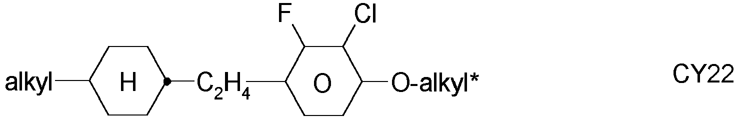 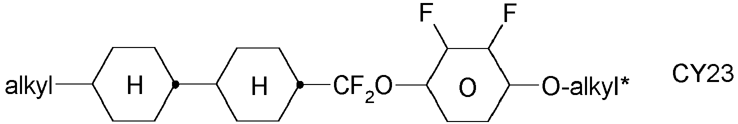 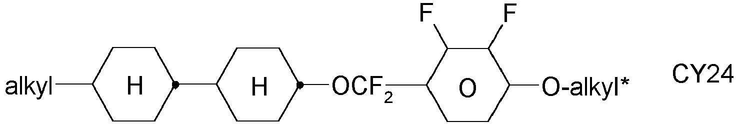 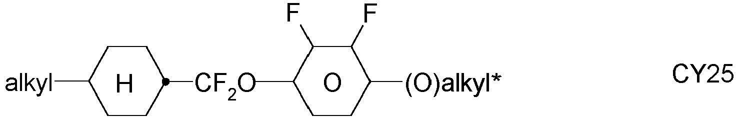 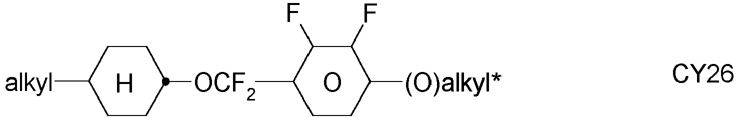 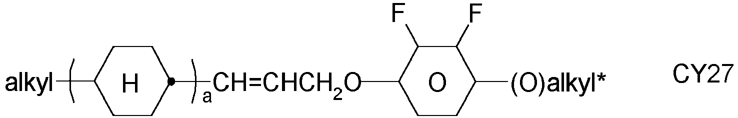 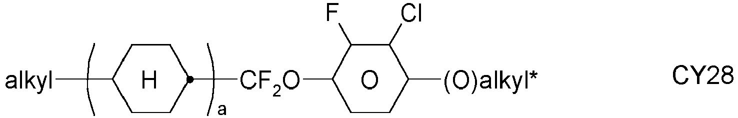 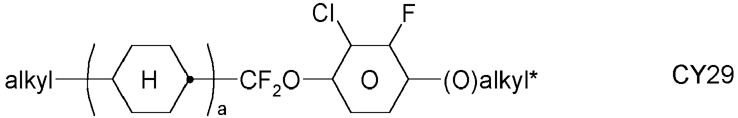 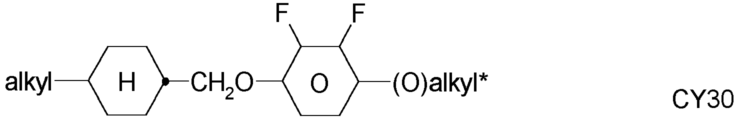 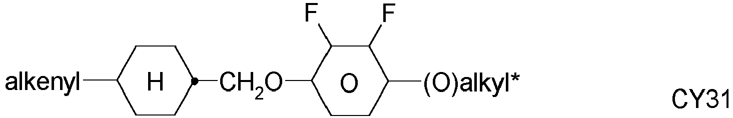 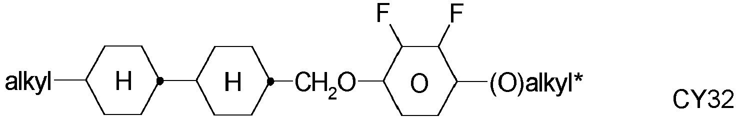 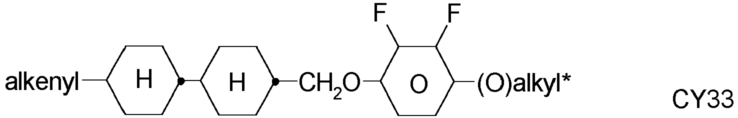 in which a denotes 1 or 2, alkyl and alkyl* each, independently of one another, denote a straight-chain alkyl radical having 1-6 C atoms, cyclopentyl or cyclopropylmethyl, and alkenyl denotes a straight-chain alkenyl radical having 2-6 C atoms, and (O) denotes an oxygen atom or a single bond. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

The compounds of the formula PY are preferably selected from the group consisting of the following sub-formulae: 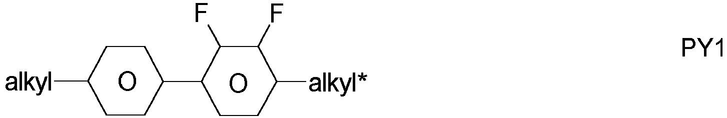 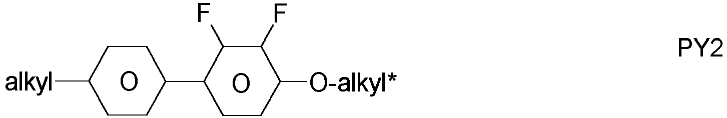 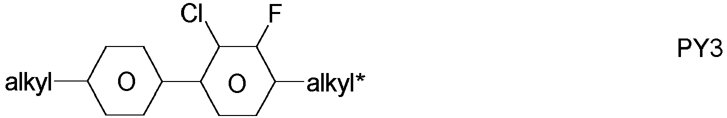 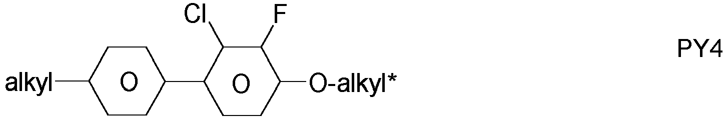 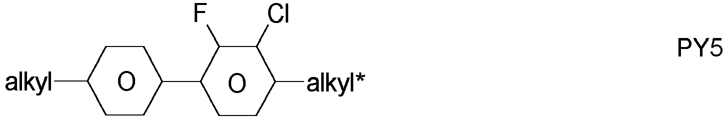 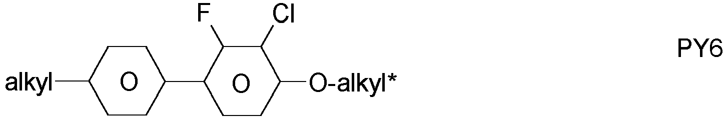 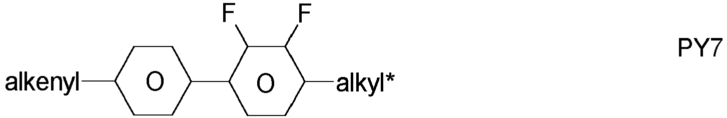 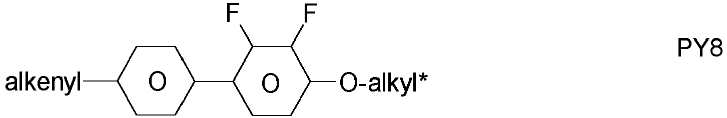 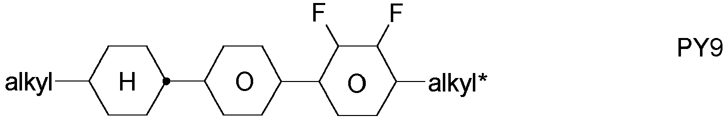 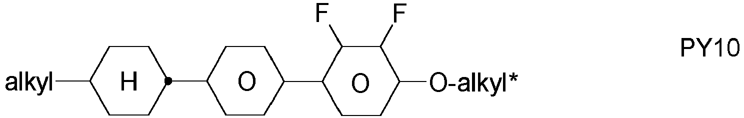 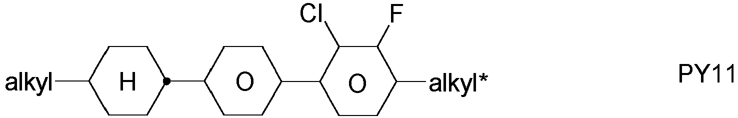 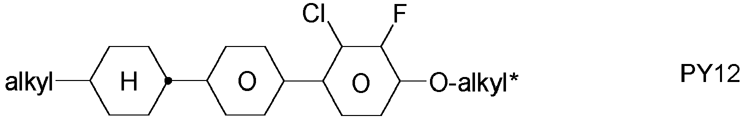 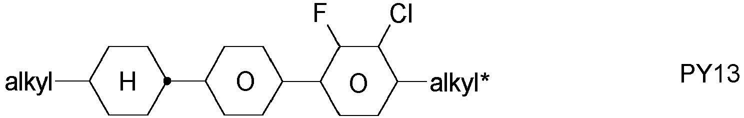 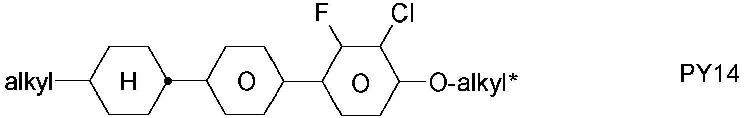 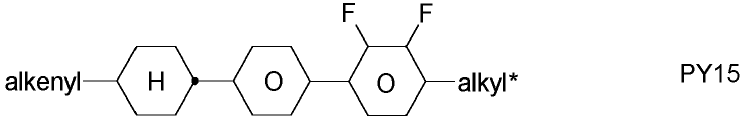 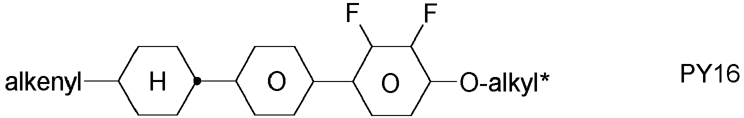 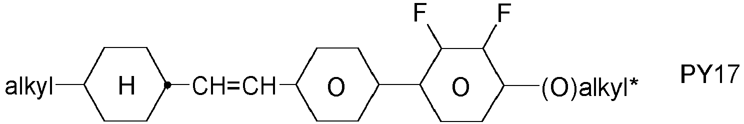 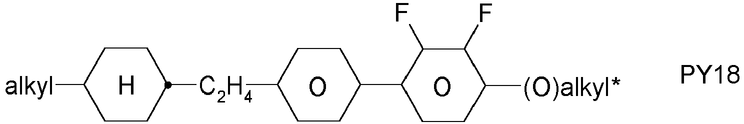 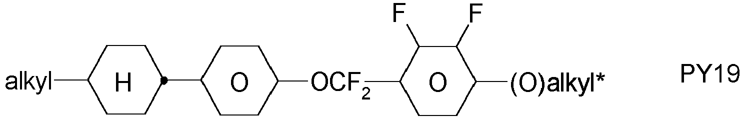 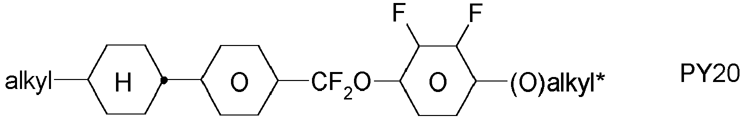 in which alkyl and alkyl* each, independently of one another, denote a straight-chain alkyl radical having 1-6 C atoms, cyclopentyl or cyclopropylmethyl, and alkenyl denotes a straight-chain alkenyl radical having 2-6 C atoms, and (O) denotes an oxygen atom or a single bond. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
c) LC medium wherein the component B) or LC host mixture comprises one or more compounds of the following formula: 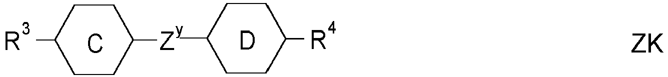 in which the individual radicals have the following meanings: 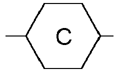 denotes 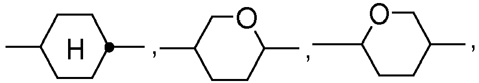 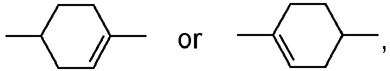 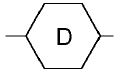 denotes 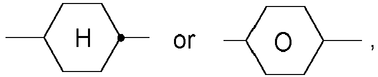
- R³ and R⁴: each, independently of one another, denote alkyl having 1 to 12 C atoms, in which, in addition, one or two non-adjacent CH₂ groups may be replaced by -O-, -CH=CH-, 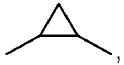 --CO-, -O-CO- or -CO-O- in such a way that O atoms are not linked directly to one another,
- Z^{y}: denotes -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-or a single bond, preferably a single bond.

The compounds of the formula ZK are preferably selected from the group consisting of the following sub-formulae: 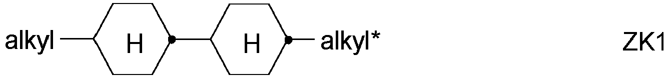 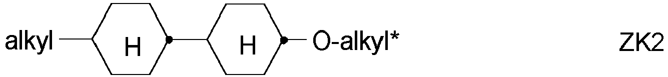 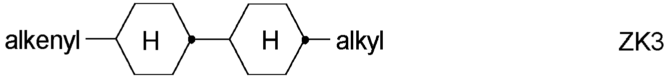 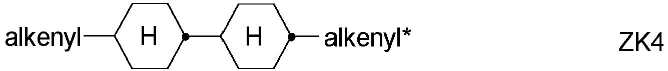 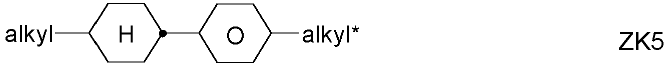 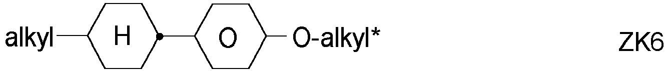 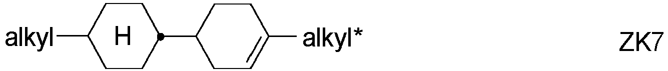 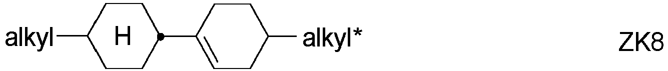 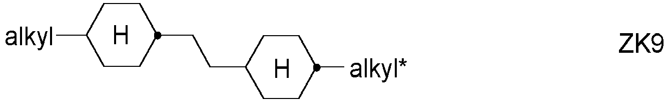 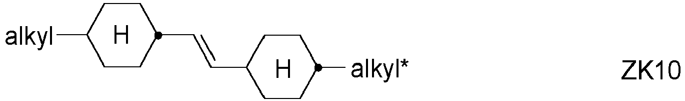 in which alkyl and alkyl* each, independently of one another, denote a straight-chain alkyl radical having 1-6 C atoms, and alkenyl denotes a straight-chain alkenyl radical having 2-6 C atoms. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Especially preferred are compounds of formula ZK1.

Particularly preferred compounds of formula ZK are selected from the following sub-formulae: 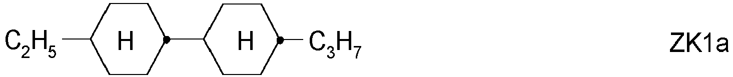 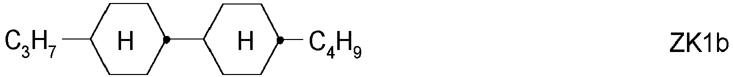 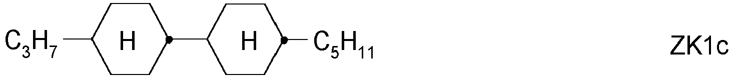 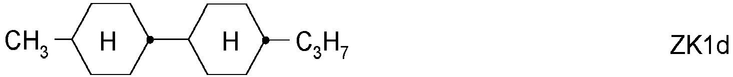 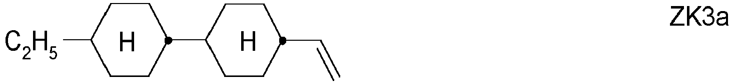 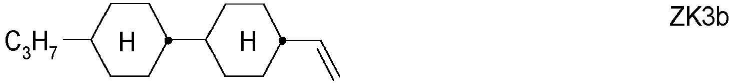 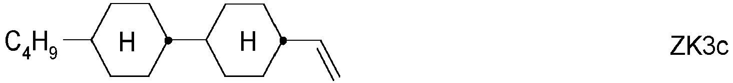 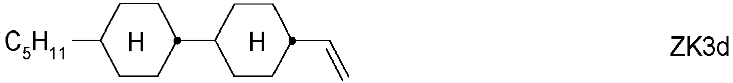 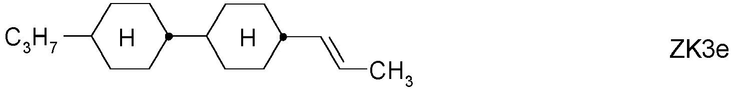 wherein the propyl, butyl and pentyl groups are straight-chain groups.

Most preferred are compounds of formula ZK1a and ZK3b.
d) LC medium wherein component B) or the LC host mixture additionally comprises one or more compounds of the following formula: 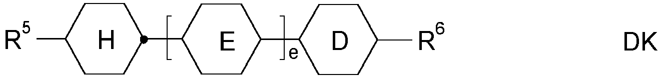 in which the individual radicals on each occurrence, identically or differently, have the following meanings:
- R⁵ and R⁶: each, independently of one another, denote alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another, preferably alkyl or alkoxy having 1 to 6 C atoms, 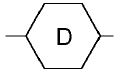 denotes 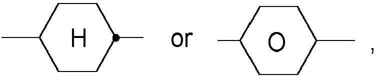 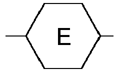 denotes 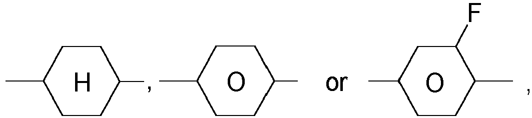 and
- e: denotes 1 or 2.

The compounds of the formula DK are preferably selected from the group consisting of the following sub-formulae: 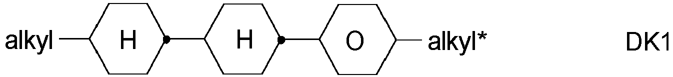 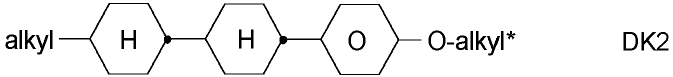 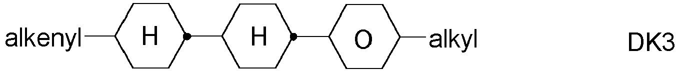 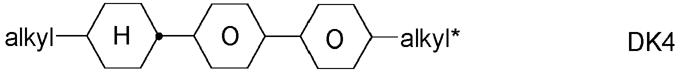 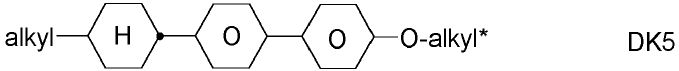 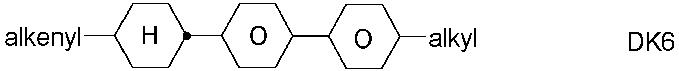 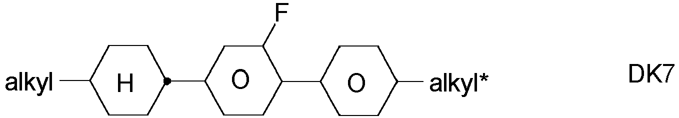 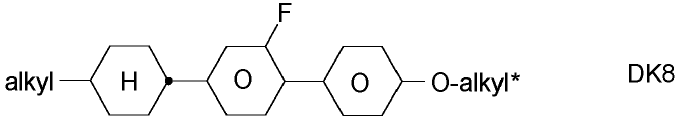 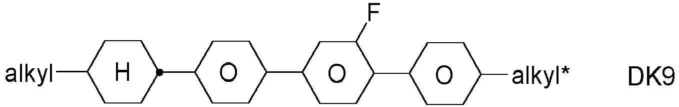 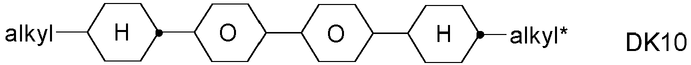 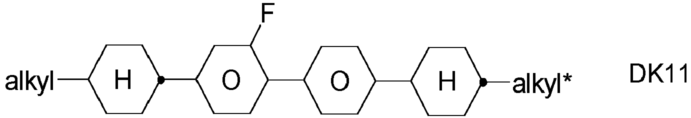 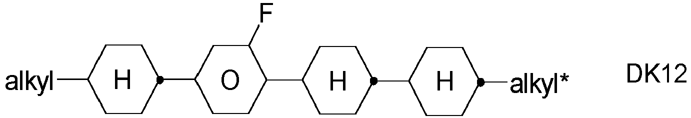 in which alkyl and alkyl* each, independently of one another, denote a straight-chain alkyl radical having 1-6 C atoms, and alkenyl denotes a straight-chain alkenyl radical having 2-6 C atoms. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
e) LC medium wherein component B) or the LC host mixture additionally comprises one or more compounds of the following formula: 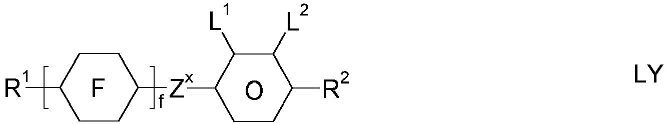 in which the individual radicals have the following meanings: 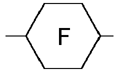 denotes 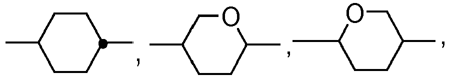 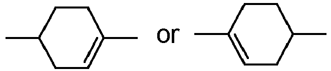 with at least one ring F being different from cyclohexylene,
- f: denotes 1 or 2,
- R¹ and R²: each, independently of one another, denote alkyl having 1 to 12 C atoms, where, in addition, one or two non-adjacent CH₂ groups may be replaced by -O-, -CH=CH-, 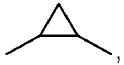 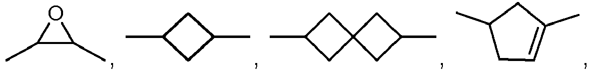 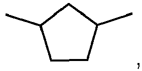 -C≡C-, -CO-, -OCO- or -COO- in such a way that O atoms are not linked directly to one another,
- Z^{x}: denotes -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- or a single bond, preferably a single bond,
- L¹ and L²: each, independently of one another, denote F, Cl, OCF₃, CF₃, CH₃, CH₂F, CHF₂.

Preferably, both radicals L¹ and L² denote F or one of the radicals L¹ and L² denotes F and the other denotes Cl.

The compounds of the formula LY are preferably selected from the group consisting of the following sub-formulae: 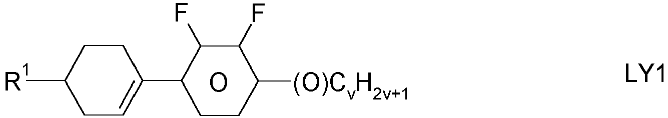 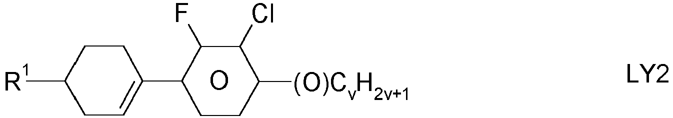 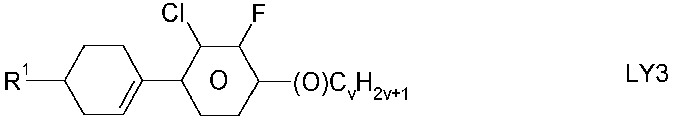 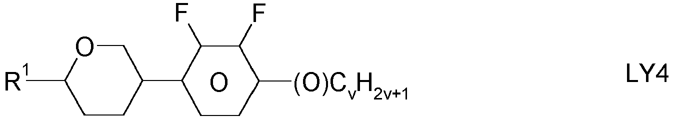 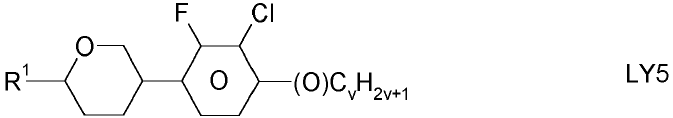 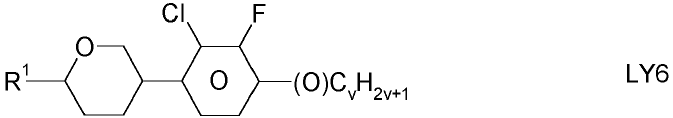 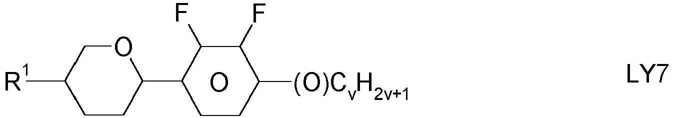 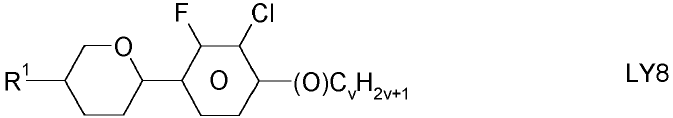 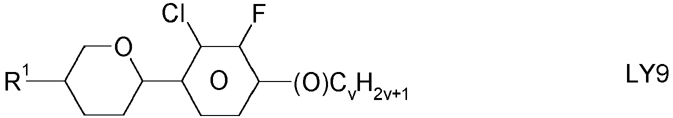 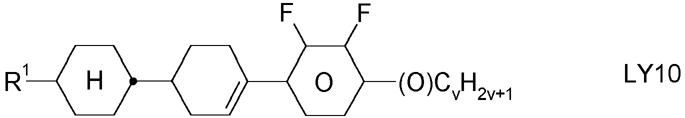 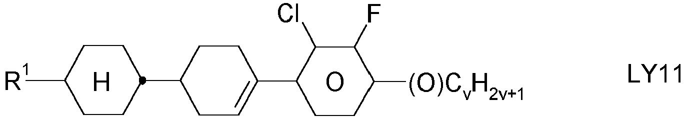 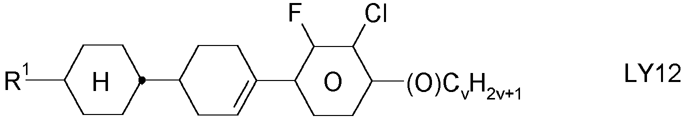 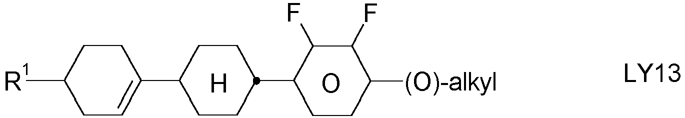 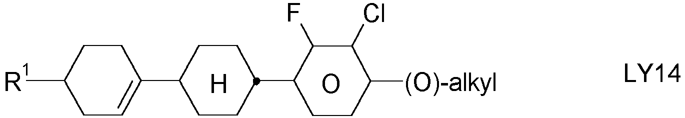 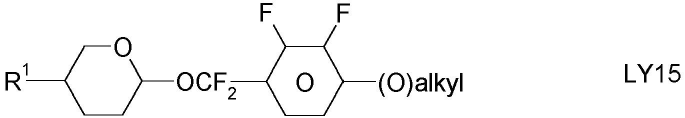 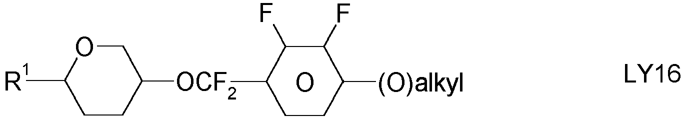 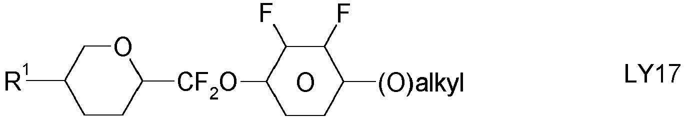 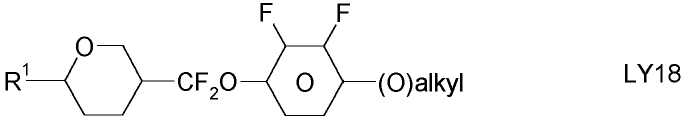 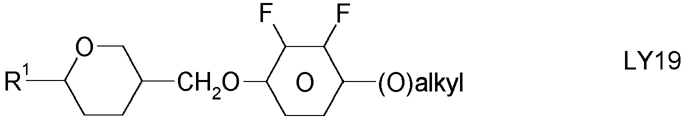 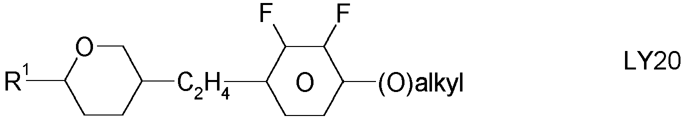 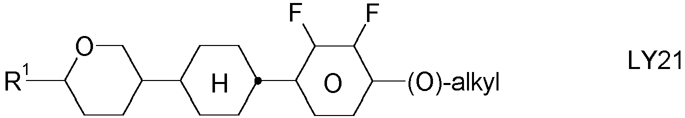 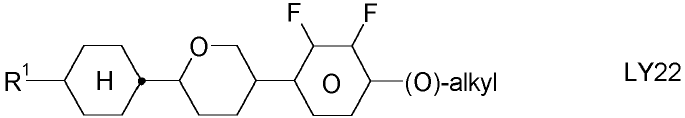 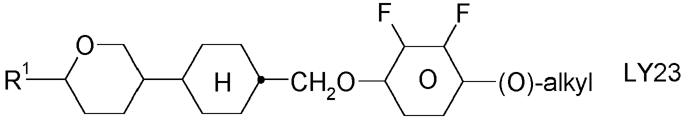 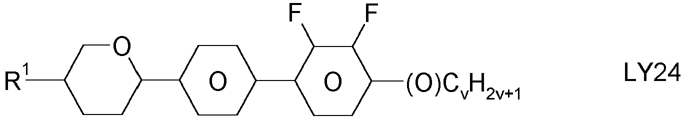 in which R¹ has the meaning indicated above, alkyl denotes a straight-chain alkyl radical having 1-6 C atoms, cyclopentyl or cyclopropylmethyl, (O) denotes an oxygen atom or a single bond, and v denotes an integer from 1 to 6. R¹ preferably denotes straight-chain alkyl having 1 to 6 C atoms, cyclopentyl, cyclopropylmethyl, cyclopropyl, cyclobutyl or straight-chain alkenyl having 2 to 6 C atoms, in particular CH₃, C₂H₅, n-C₃H₇, n-C₄H₉, n-C₅H₁₁, cyclo-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
f) LC medium wherein component B) or the LC host mixture additionally comprises one or more compounds selected from the group consisting of the following formulae: 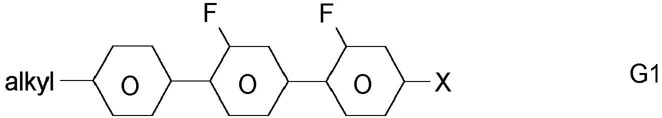 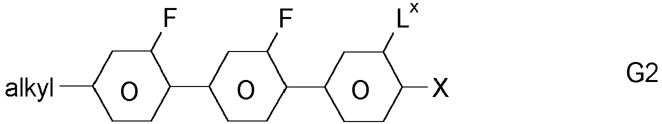 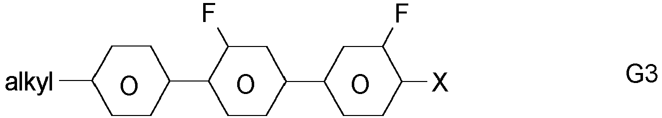 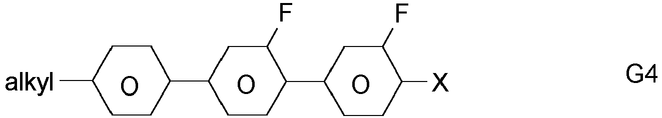 in which alkyl denotes C₁₋₆-alkyl, L^{x} denotes H or F, and X denotes F, Cl, OCF₃, OCHF₂ or OCH=CF₂. Particular preference is given to compounds of the formula G1 in which X denotes F.
g) LC medium wherein component B) or the LC host mixture additionally comprises one or more compounds selected from the group consisting of the following formulae: 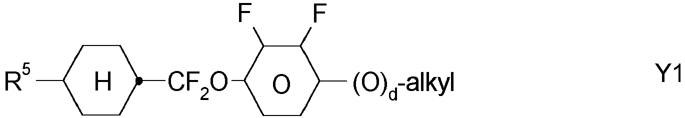 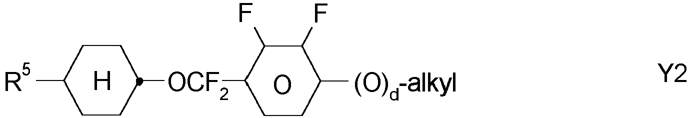 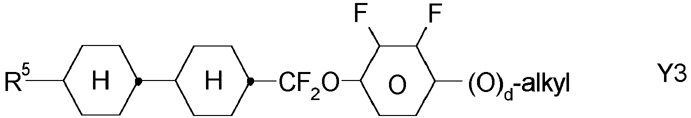 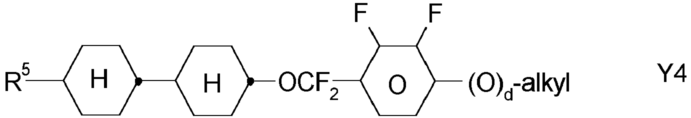 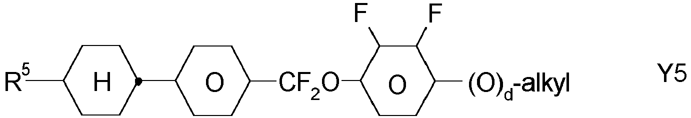 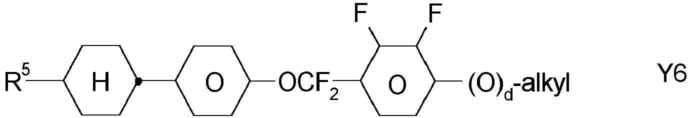 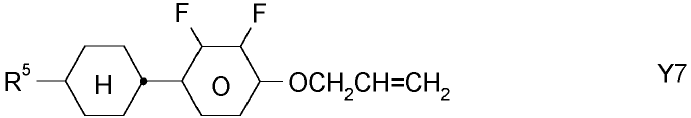 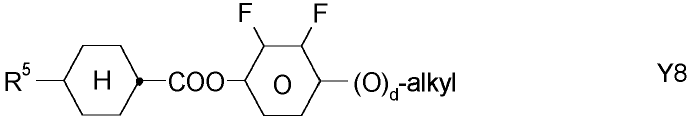 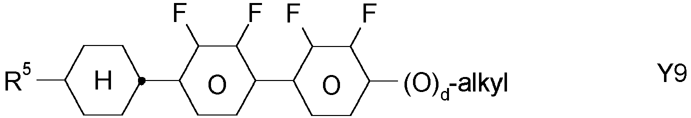 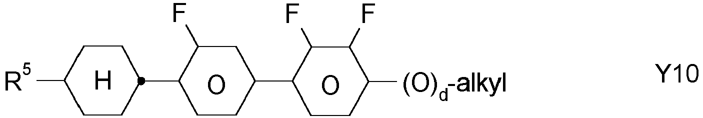 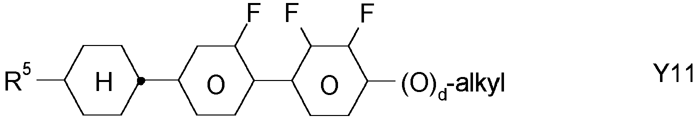 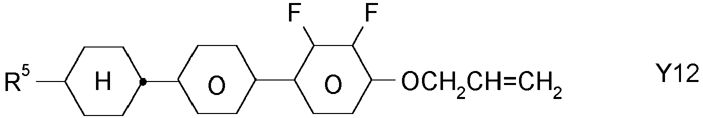 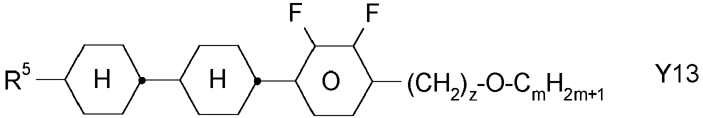 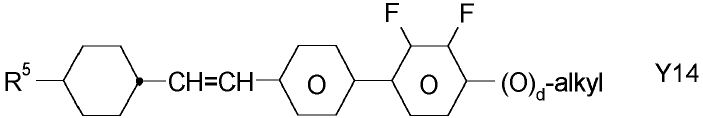 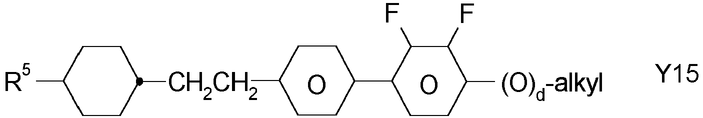 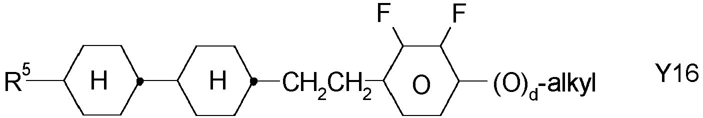 in which R⁵ has one of the meanings indicated above for R¹, alkyl denotes C₁₋₆-alkyl, d denotes 0 or 1, and z and m each, independently of one another, denote an integer from 1 to 6. R⁵ in these compounds is particularly preferably C₁₋₆-alkyl or -alkoxy or C₂₋₆-alkenyl, d is preferably 1. The LC medium according to the invention preferably comprises one or more compounds of the above-mentioned formulae in amounts of ≥ 5% by weight.
h) LC medium wherein component B) or the LC host mixture additionally comprises one or more biphenyl compounds selected from the group consisting of the following formulae: 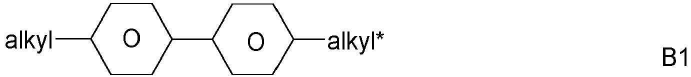 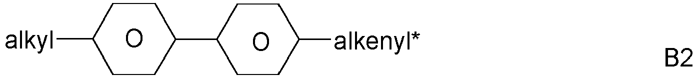 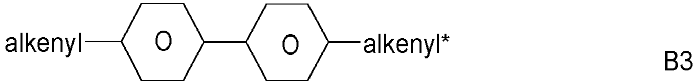 in which alkyl and alkyl* each, independently of one another, denote a straight-chain alkyl radical having 1-6 C atoms, and alkenyl and alkenyl* each, independently of one another, denote a straight-chain alkenyl radical having 2-6 C atoms. Alkenyl and alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

The proportion of the biphenyls of the formulae B1 to B3 in the LC host mixture is preferably at least 3% by weight, in particular ≥ 5% by weight.

The compounds of the formula B2 are particularly preferred.

The compounds of the formulae B1 to B3 are preferably selected from the group consisting of the following sub-formulae: 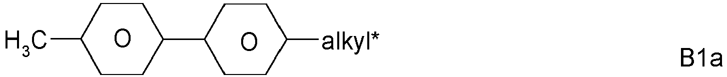 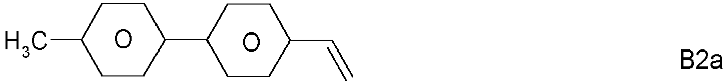 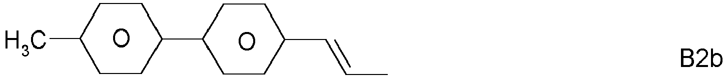 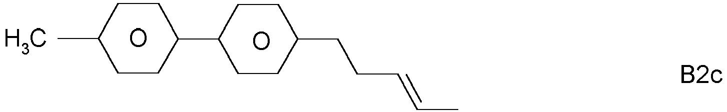 in which alkyl* denotes an alkyl radical having 1-6 C atoms. The medium according to the invention particularly preferably comprises one or more compounds of the formulae B1a and/or B2c.
i) LC medium wherein component B) or the LC host mixture additionally comprises one or more terphenyl compounds of the following formula: 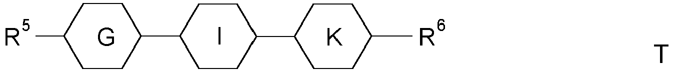 in which R⁵ and R⁶ each, independently of one another, have one of the meanings indicated above, and 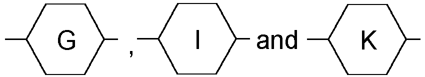 each, independently of one another, denote 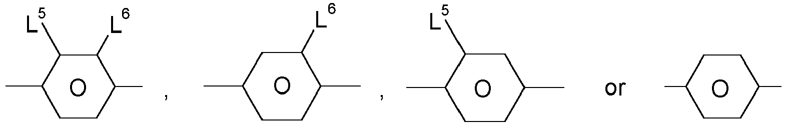 in which L⁵ denotes F or Cl, preferably F, and L⁶ denotes F, Cl, OCF₃, CF₃, CH₃, CH₂F or CHF₂, preferably F.

The compounds of the formula T are preferably selected from the group consisting of the following sub-formulae: 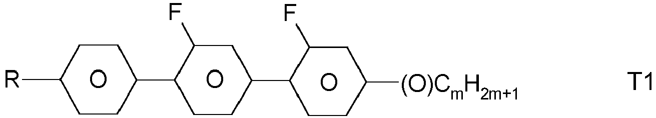 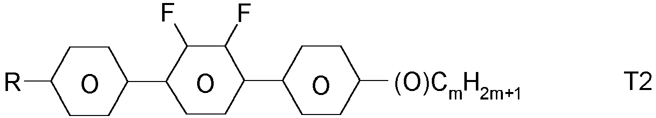 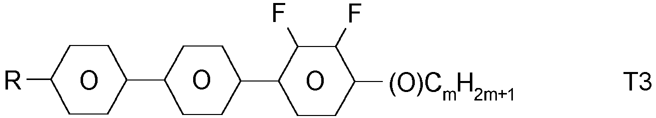 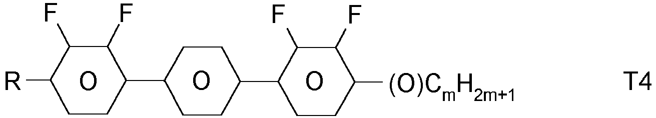 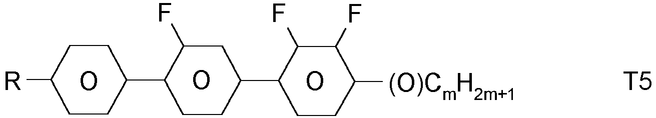 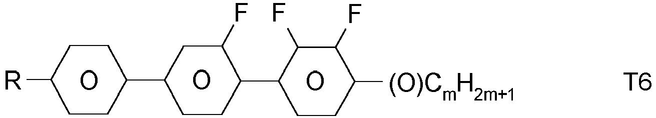 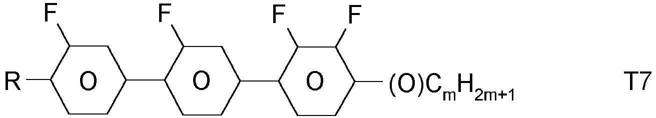 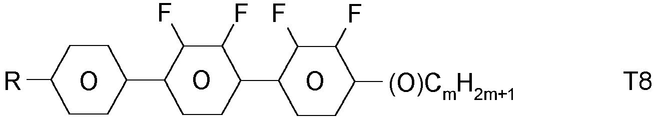 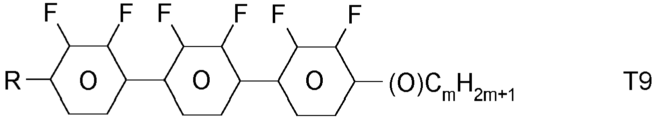 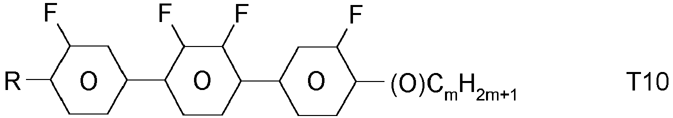 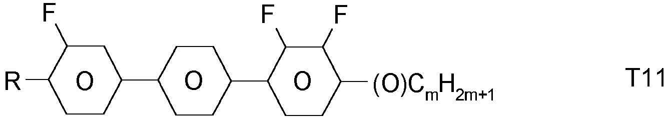 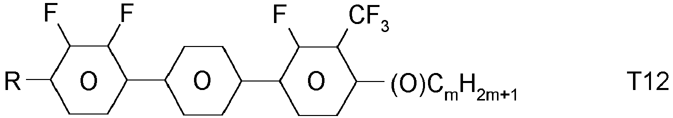 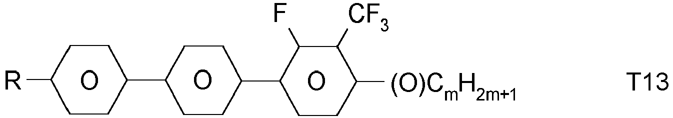 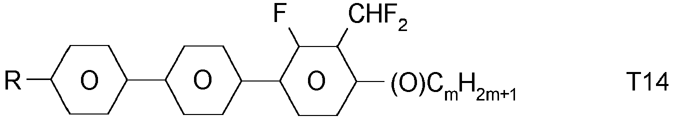 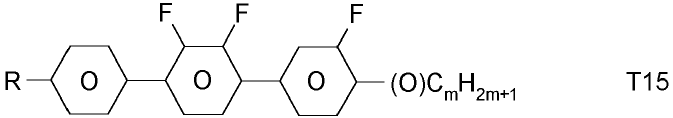 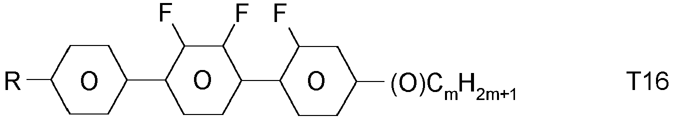 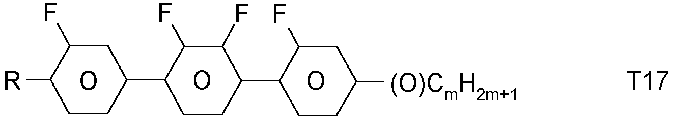 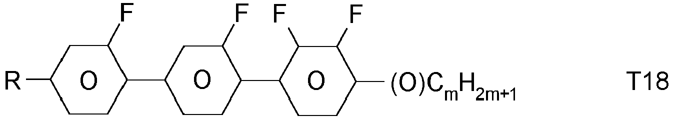 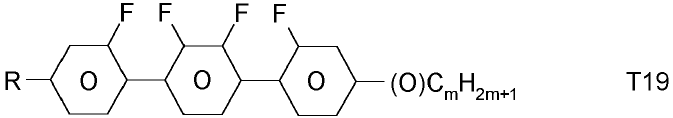 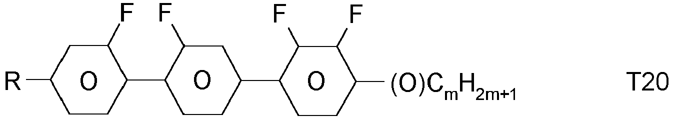 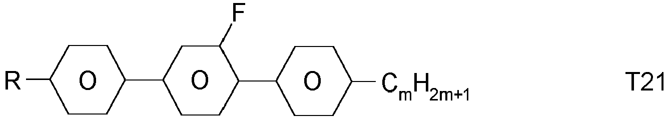 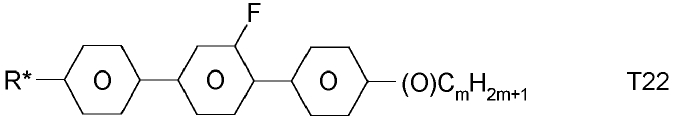 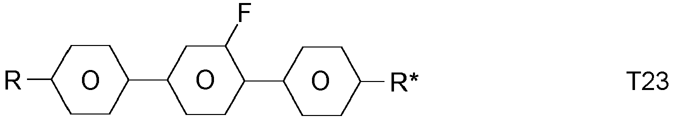 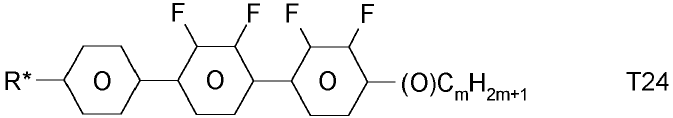 in which R denotes a straight-chain alkyl or alkoxy radical having 1-7 C atoms, R* denotes a straight-chain alkenyl radical having 2-7 C atoms, (O) denotes an oxygen atom or a single bond, and m denotes an integer from 1 to 6. R* preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

R preferably denotes methyl, ethyl, propyl, butyl, pentyl, hexyl, methoxy, ethoxy, propoxy, butoxy or pentoxy.

The LC host mixture according to the invention preferably comprises the terphenyls of the formula T and the preferred sub-formulae thereof in an amount of 0.5-30% by weight, preferably 1-20 % by weight, in particular 2-10% by weight.

Particular preference is given to compounds of the formulae T1, T2, T3 and T21, most preferably T2. In these compounds, R preferably denotes alkyl, furthermore alkoxy, each having 1-5 C atoms. The group (O) is preferably a single bond.

The terphenyls are preferably employed in LC media according to the invention if the Δn value of the mixture is to be ≥ 0.1. Preferred LC media comprise 2-20% by weight of one or more terphenyl compounds of the formula T, preferably selected from the group of compounds T1 to T22.
k) LC medium wherein component B) or the LC host mixture additionally comprises one or more quaterphenyl compounds selected from the group consisting of the following formulae: 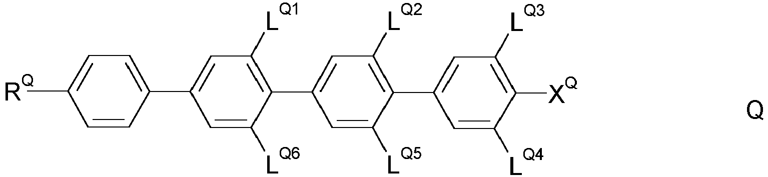 wherein
- R^{Q}: is alkyl, alkoxy, oxaalkyl or alkoxyalkyl having 1 to 9 C atoms or alkenyl or alkenyloxy having 2 to 9 C atoms, all of which are optionally fluorinated,
- X^{Q}: is F, C!, halogenated alkyl or alkoxy having 1 to 6 C atoms or halogenated alkenyl or alkenyloxy having 2 to 6 C atoms,
- L^{Q1} to L^{Q6}: independently of each other are H or F, with at least one of L^{Q1} to L^{Q6} being F.

Preferred compounds of formula Q are those wherein R^{Q} denotes straight-chain alkyl with 2 to 6 C-atoms, very preferably ethyl, n-propyl or n-butyl.

Preferred compounds of formula Q are those wherein L^{Q3} and L^{Q4} are F. Further preferred compounds of formula Q are those wherein L^{Q3}, L^{Q4} and one or two of L^{Q1} and L^{Q2} are F.

Preferred compounds of formula Q are those wherein X^{Q} denotes F or OCF₃, very preferably F.

The compounds of formula Q are preferably selected from the following subformulae 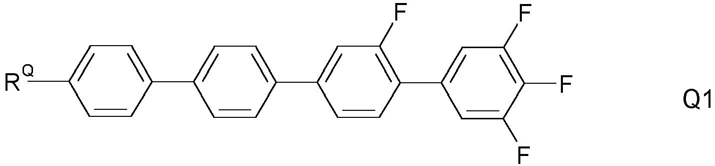 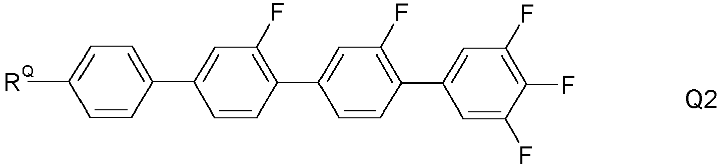 wherein R^{Q} has one of the meanings of formula Q or one of its preferred meanings given above and below, and is preferably ethyl, n-propyl or n-butyl.

Especially preferred are compounds of formula Q1, in particular those wherein R^{Q} is n-propyl.

Preferably the proportion of compounds of formula Q in the LC host mixture is from >0 to ≤5% by weight, very preferably from 0.1 to 2% by weight, most preferably from 0.2 to 1.5% by weight.

Preferably the LC host mixture contains 1 to 5, preferably 1 or 2 compounds of formula Q.

The addition of quaterphenyl compounds of formula Q to the LC host mixture enables to reduce ODF mura, whilst maintaining high UV absorption, enabling quick and complete polymerization, enabling strong and quick tilt angle generation, and increasing the UV stability of the LC medium.

Besides, the addition of compounds of formula Q, which have positive dielectric anisotropy, to the LC medium with negative dielectric anisotropy allows a better control of the values of the dielectric constants ε_{||} and ε_{⊥}, and in particular enables to achieve a high value of the dielectric constant ε_{||} while keeping the dielectric anisotropy Δε constant, thereby reducing the kick-back voltage and reducing image sticking.
I) LC medium wherein component B) or the LC host mixture additionally comprises one or more compounds of formula C: 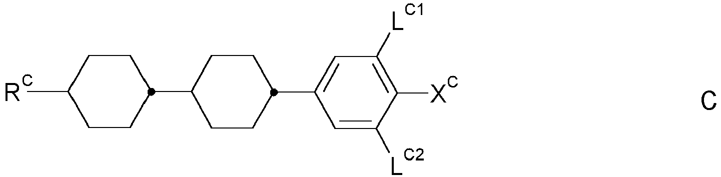 wherein
- R^{C}: denotes alkyl, alkoxy, oxaalkyl or alkoxyalkyl having 1 to 9 C atoms or alkenyl or alkenyloxy having 2 to 9 C atoms, all of which are optionally fluorinated,
- X^{C}: denotes F, Cl, halogenated alkyl or alkoxy having 1 to 6 C atoms or halogenated alkenyl or alkenyloxy having 2 to 6 C atoms,
- L^{C1} , L^{C2}: independently of each other denote H or F, with at least one of L^{C1} and L^{C2} being F.

Preferred compounds of formula C are those wherein R^{C} denotes straight-chain alkyl with 2 to 6 C-atoms, very preferably ethyl, n-propyl or n-butyl.

Preferred compounds of formula C are those wherein L^{C1} and L^{C2} are F.

Preferred compounds of formula C are those wherein X^{C} denotes F or OCF₃, very preferably F.

Preferred compounds of formula C are selected from the following formula 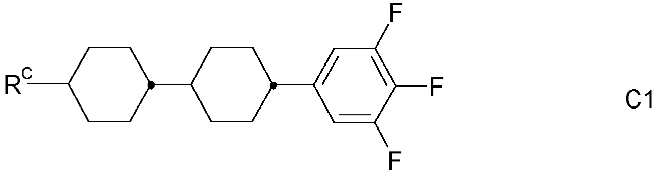 wherein R^{C} has one of the meanings of formula C or one of its preferred meanings given above and below, and is preferably ethyl, n-propyl or n-butyl, very preferably n-propyl.

Preferably the proportion of compounds of formula C in the LC host mixture is from >0 to ≤ 10% by weight, very preferably from 0.1 to 8% by weight, most preferably from 0.2 to 5% by weight.

Preferably the LC host mixture contains 1 to 5, preferably 1, 2 or 3 compounds of formula C.

The addition of compounds of formula C, which have positive dielectric anisotropy, to the LC medium with negative dielectric anisotropy allows a better control of the values of the dielectric constants ε_{||} and ε_{⊥}, and in particular enables to achieve a high value of the dielectric constant ε_{||} while keeping the dielectric anisotropy Δε constant, thereby reducing the kick-back voltage and reducing image sticking. Besides, the addition of compounds of formula C enables to reduce the viscosity and the response time of the LC medium.
m) LC medium wherein component B) or the LC host mixture additionally comprises one or more compounds selected from the group consisting of the following formulae: 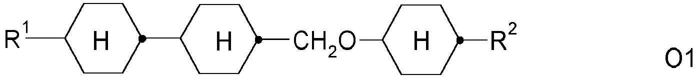 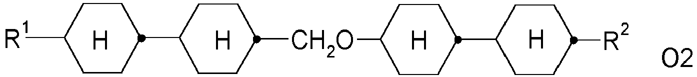 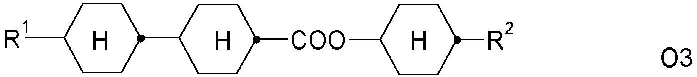 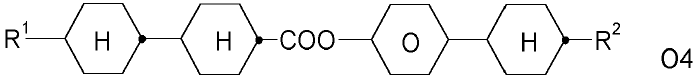 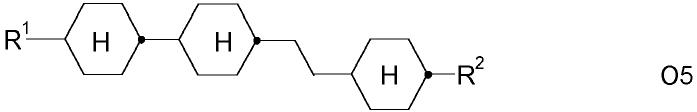 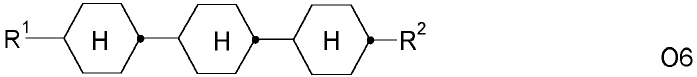 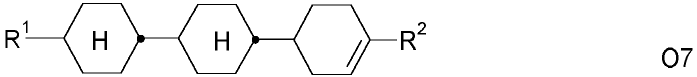 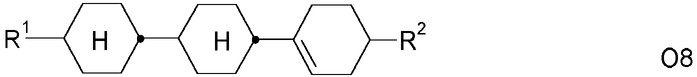 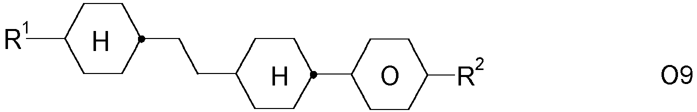 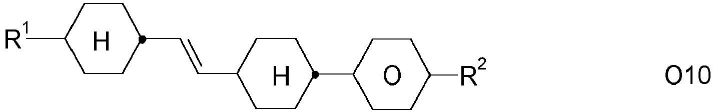 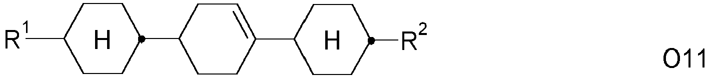 in which R¹ and R² have the meanings indicated above and preferably each, independently of one another, denote straight-chain alkyl having 1 to 6 C atoms or straight-chain alkenyl having 2 to 6 C atoms.

Preferred media comprise one or more compounds selected from the formulae 01, 03 and O4.
n) LC medium wherein component B) or the LC host mixture additionally comprises one or more compounds of the following formula: 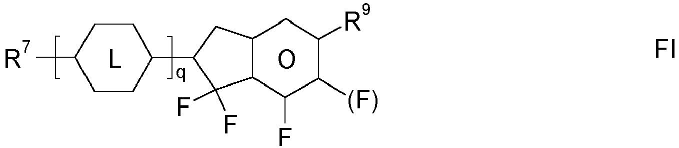 in which 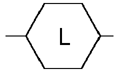 denotes

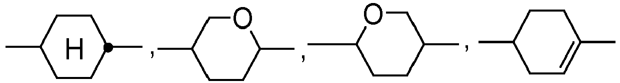

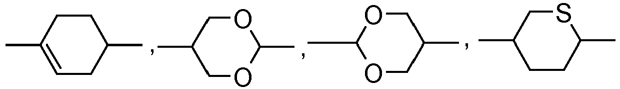

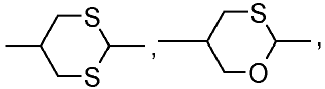

R⁹ denotes H, CH₃, C₂H₅ or n-C₃H₇, (F) denotes an optional fluorine substituent, and q denotes 1, 2 or 3, and R⁷ has one of the meanings indicated for R¹, preferably in amounts of > 3% by weight, in particular ≥ 5% by weight and very particularly preferably 5-30% by weight.

Particularly preferred compounds of the formula Fl are selected from the group consisting of the following sub-formulae: 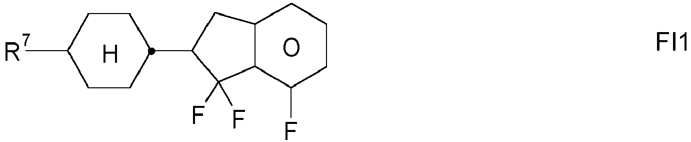 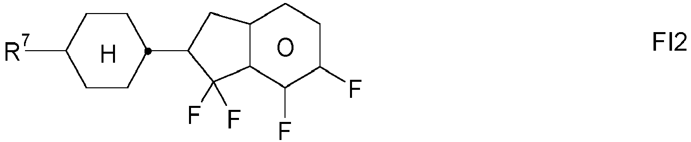 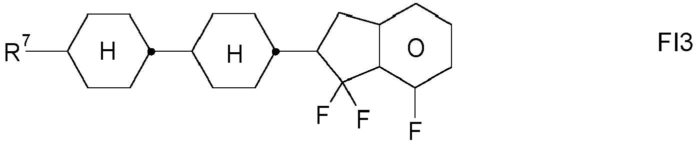 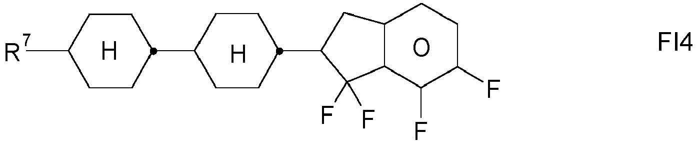 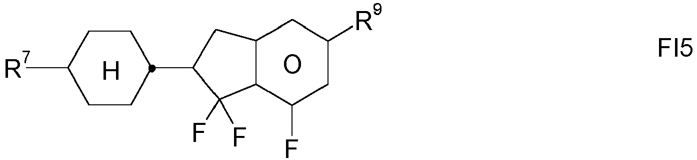 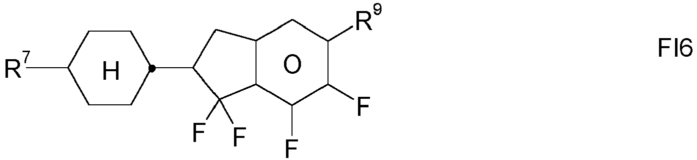 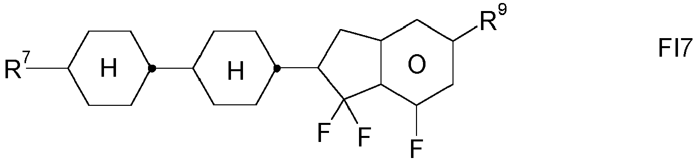 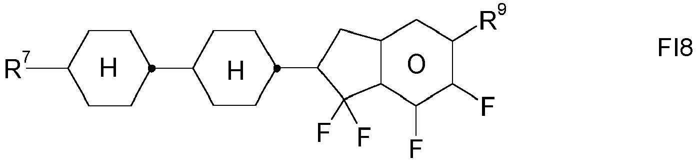 in which R⁷ preferably denotes straight-chain alkyl, and R⁹ denotes CH₃, C₂H₅ or n-C₃H₇. Particular preference is given to the compounds of the formulae Fl1, Fl2 and Fl3.
o) LC medium wherein component B) or the LC host mixture additionally comprises one or more compounds selected from the group consisting of the following formulae: 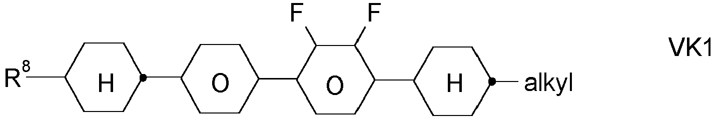 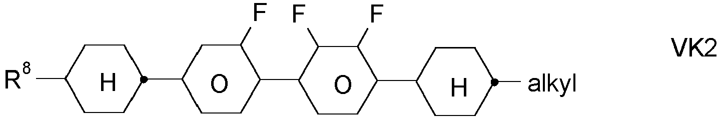 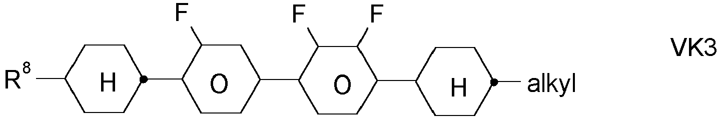 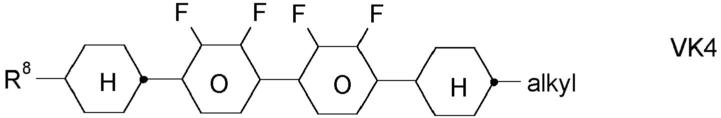 in which R⁸ has the meaning indicated for R¹, and alkyl denotes a straight-chain alkyl radical having 1-6 C atoms.
p) LC medium wherein component B) or the LC host mixture additionally comprises one or more compounds which contain a tetrahydronaphthyl or naphthyl unit, such as, for example, the compounds selected from the group consisting of the following formulae: 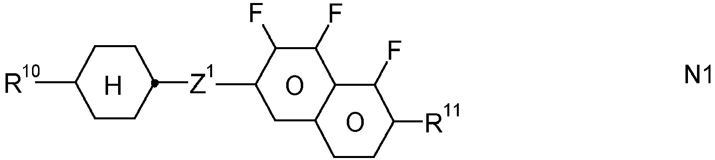 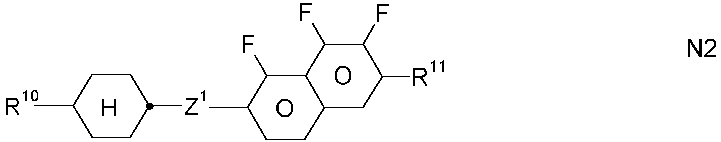 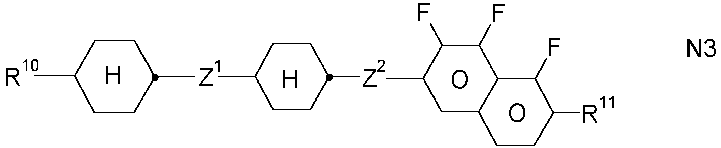 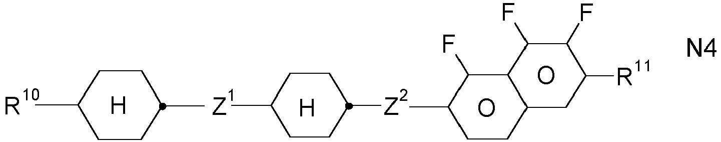 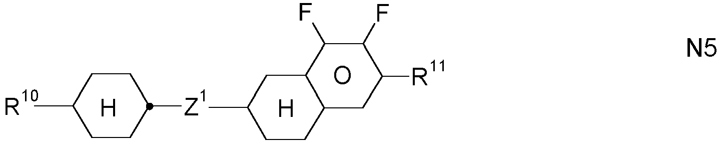 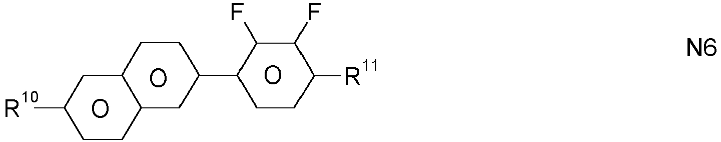 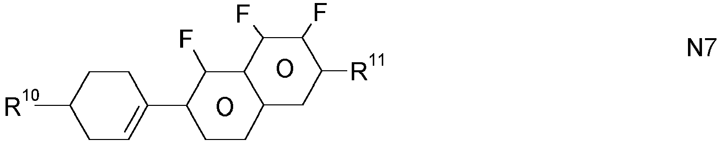 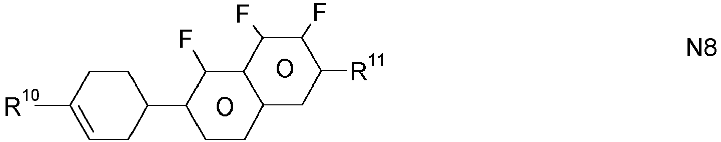 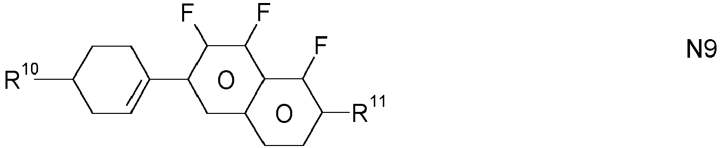 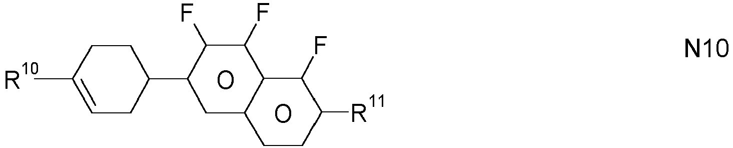 in which
   - R¹⁰ and R¹¹: each, independently of one another, denote alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another, preferably alkyl or alkoxy having 1 to 6 C atoms,
   and R¹⁰ and R¹¹ preferably denote straight-chain alkyl or alkoxy having 1 to 6 C atoms or straight-chain alkenyl having 2 to 6 C atoms, and
   - Z¹ and Z²: each, independently of one another, denote -C₂H₄-, -CH=CH-, -(CH₂)₄-, -(CH₂)₃O-, -O(CH₂)₃-, -CH=CH-CH₂CH₂-, -CH₂CH₂CH=CH-, -CH₂O-, -OCH₂-, -CO-O-, -O-CO-, -C₂F₄-, -CF=CF-, -CF=CH-, -CH=CF-, -CH₂- or a single bond.
q) LC medium wherein component B) or the LC host mixture additionally comprises one or more difluorodibenzochromans and/or chromans of the following formulae: 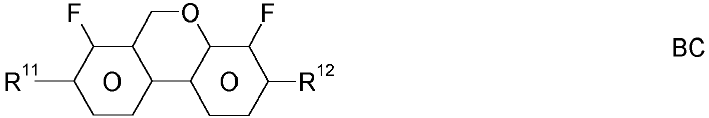 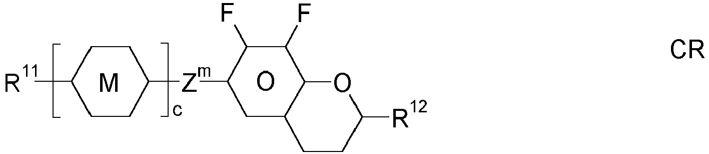 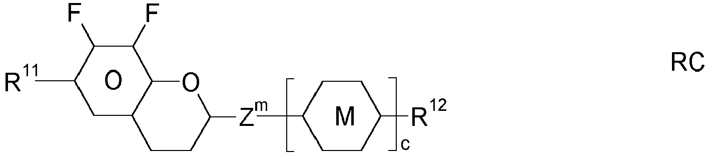 in which
   - R¹¹ and R¹²: each, independently of one another, have one of the meanings indicated above for R¹¹,
   - ring M: is trans-1,4-cyclohexylene or 1,4-phenylene,
   - Z^{m}: -C₂H₄-, -CH₂O-, -OCH₂-, -CO-O- or -O-CO-,
   - c: is 0, 1 or 2,
preferably in amounts of 3 to 20% by weight, in particular in amounts of 3 to 15% by weight.

Particularly preferred compounds of the formulae BC, CR and RC are selected from the group consisting of the following sub-formulae: 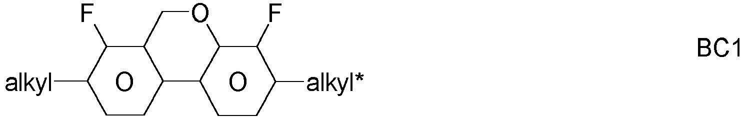 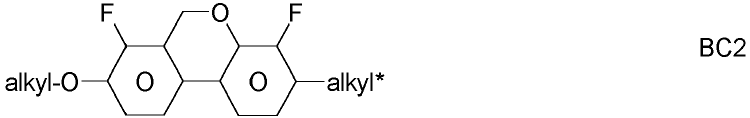 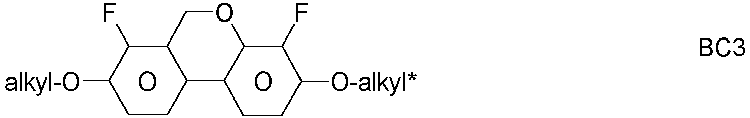 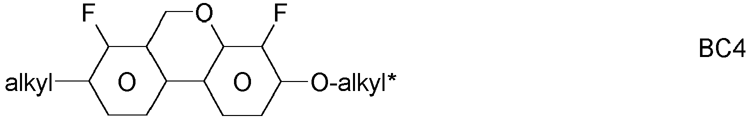 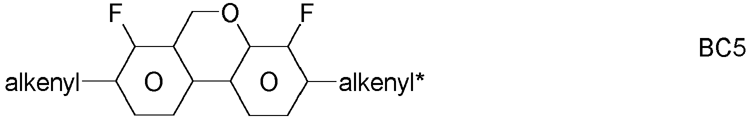 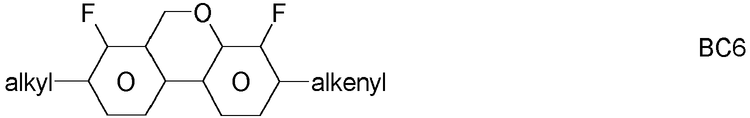 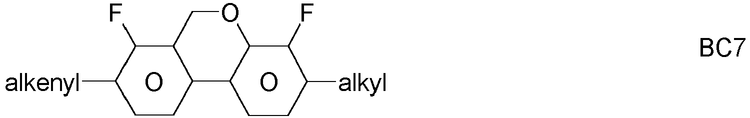 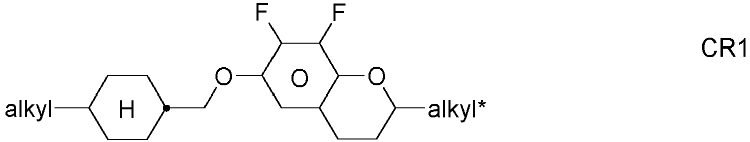 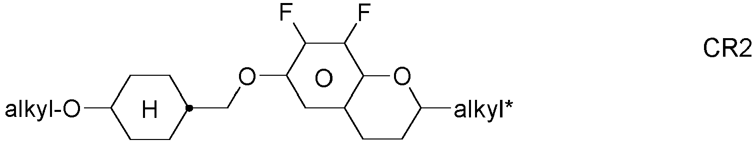 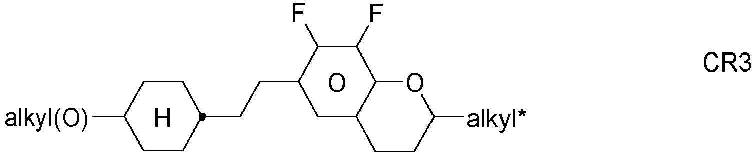 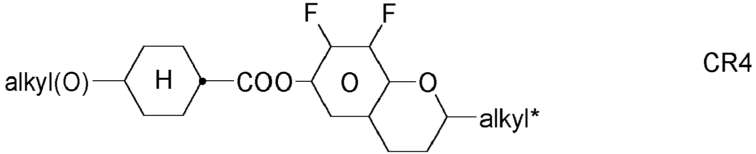 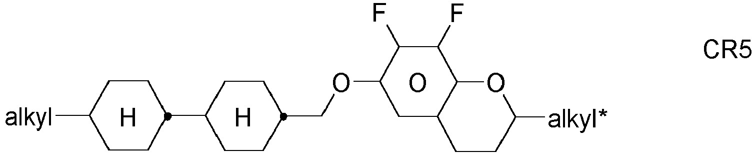 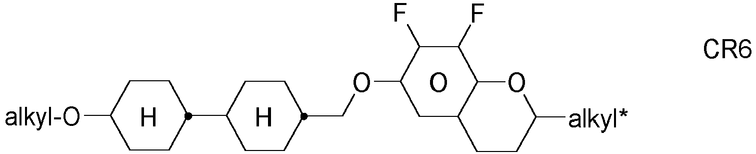 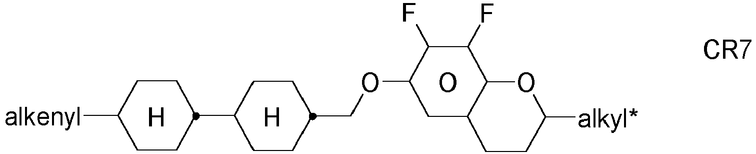 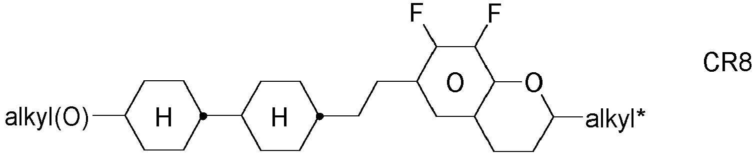 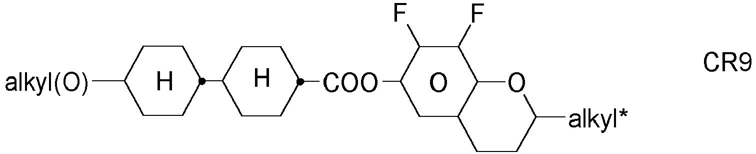 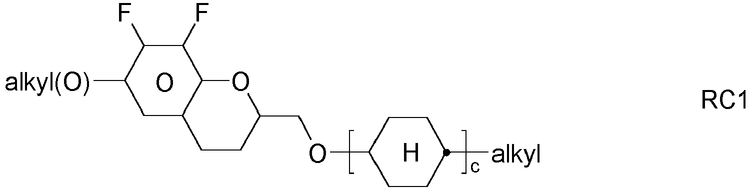 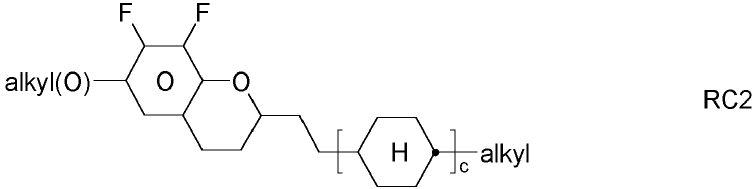 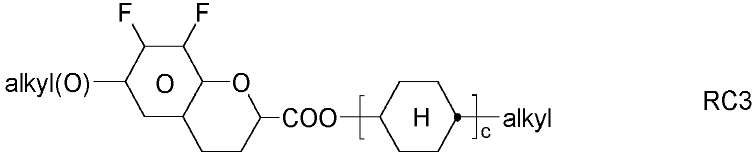 in which alkyl and alkyl* each, independently of one another, denote a straight-chain alkyl radical having 1-6 C atoms, (O) denotes an oxygen atom or a single bond, c is 1 or 2, and alkenyl and alkenyl* each, independently of one another, denote a straight-chain alkenyl radical having 2-6 C atoms. Alkenyl and alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very particular preference is given to LC host mixtures comprising one, two or three compounds of the formula BC-2.
r) LC medium wherein component B) or the LC host mixture additionally comprises one or more fluorinated phenanthrenes and/or dibenzofurans of the following formulae: 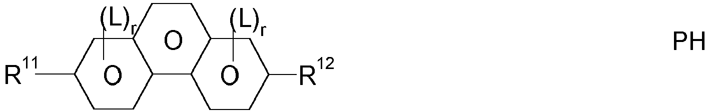 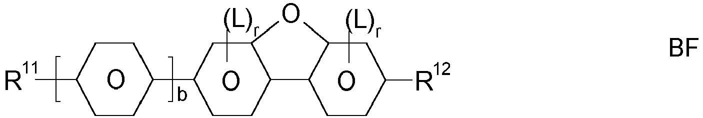 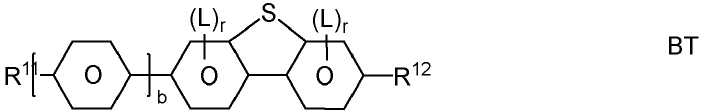 in which R¹¹ and R¹² each, independently of one another, have one of the meanings indicated above for R¹¹, b denotes 0 or 1, L denotes F, and r denotes 1, 2 or 3.

Particularly preferred compounds of the formulae PH, BF and BS are selected from the group consisting of the following sub-formulae: 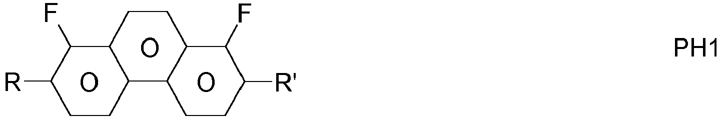 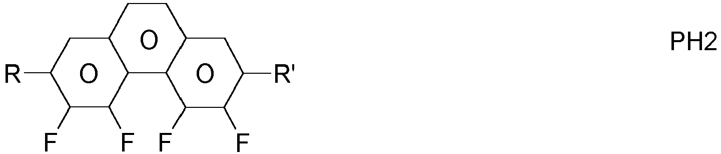 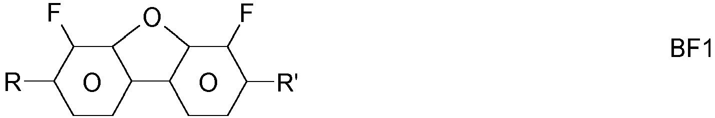 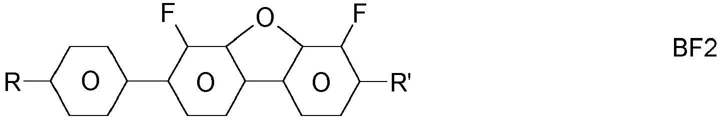 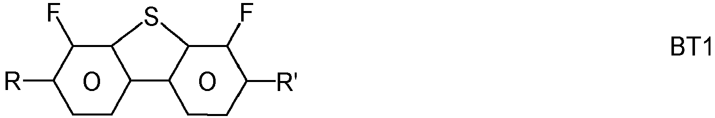 in which R and R' each, independently of one another, denote a straight-chain alkyl, cyclopentyl, cyclopentylmethoxy, cyclopropylmethoxy or an alkoxy radical having 1-7 C atoms.
s) LC medium wherein component B) or the LC host mixture additionally comprises one or more monocyclic compounds of the following formula 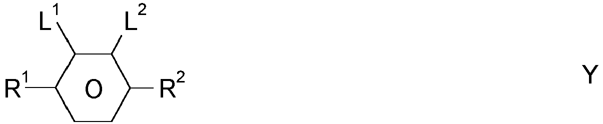 wherein
- R¹ and R²: each, independently of one another, denote alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another, preferably alkyl or alkoxy having 1 to 6 C atoms,
- L¹ and L²: each, independently of one another, denote F, Cl, OCF₃, CF₃, CH₃, CH₂F, CHF₂.

Preferably, both L¹ and L² denote F or one of L¹ and L² denotes F and the other denotes Cl,

The compounds of the formula Y are preferably selected from the group consisting of the following sub-formulae: 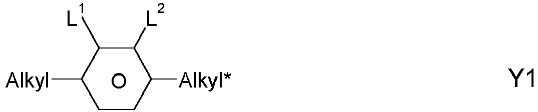 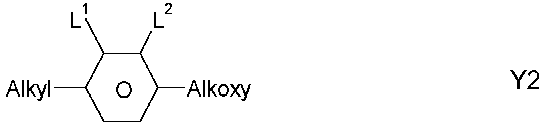 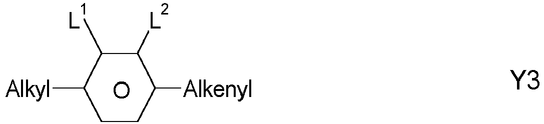 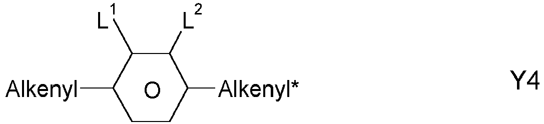 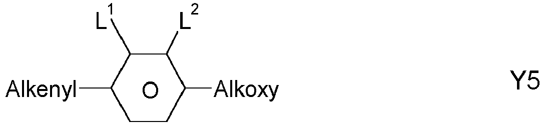 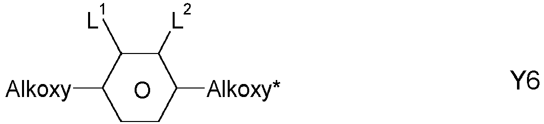 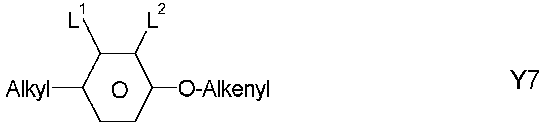 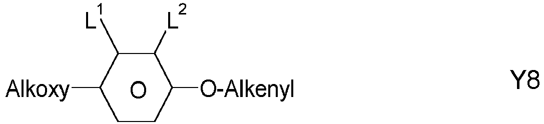 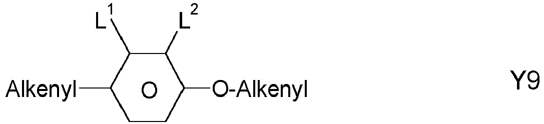 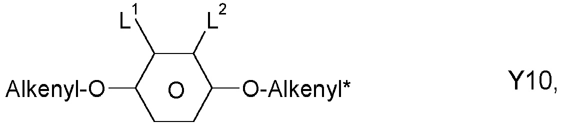 in which, Alkyl and Alkyl* each, independently of one another, denote a straight-chain alkyl radical having 1-6 C atoms, Alkoxy denotes a straight-chain alkoxy radical having 1-6 C atoms, Alkenyl and Alkenyl* each, independently of one another, denote a straight-chain alkenyl radical having 2-6 C atoms, and O denotes an oxygen atom or a single bond. Alkenyl and Alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred compounds of the formula Y are selected from the group consisting of the following sub-formulae: 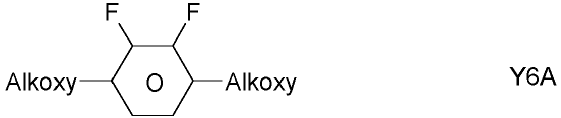 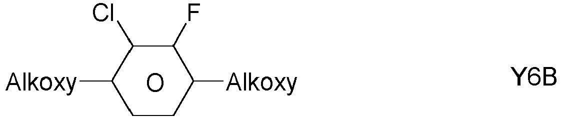 wherein Alkoxy preferably denotes straight-chain alkoxy with 3, 4, or 5 C atoms.
t) LC medium which, apart from the polymerizable compounds as described above and below, does not contain a compound which contains a terminal vinyloxy group (-O-CH=CH₂).
u) LC medium wherein component B) or the LC host mixture comprises 1 to 8, preferably 1 to 5, compounds of the formulae CY1, CY2, PY1 and/or PY2. The proportion of these compounds in the LC host mixture as a whole is preferably 5 to 60%, particularly preferably 10 to 35%. The content of these individual compounds is preferably in each case 2 to 20%.
v) LC medium wherein component B) or the LC host mixture comprises one or more, preferably 1 to 8, more preferably 1 to 5, compounds of the formulae CY9, CY10, PY9 and/or PY10. The proportion of these compounds in the LC host mixture as a whole is preferably 5 to 60%, particularly preferably 10 to 35%. The content of these individual compounds is preferably in each case 2 to 20%.
w) LC medium wherein component B) or the LC host mixture comprises 1 to 10, preferably 1 to 8, compounds of the formula ZK, in particular compounds of the formulae ZK1, ZK2 and/or ZK3. The proportion of these compounds in the LC host mixture as a whole is preferably 3 to 25%, particularly preferably 5 to 45%. The content of these individual compounds is preferably in each case 2 to 25%.
x) LC medium in which the proportion of compounds of the formulae CY, PY and ZK in the LC host mixture as a whole is greater than 70%, preferably greater than 80%.
y) LC medium wherein component B) or the LC host mixture contains one or more, preferably 1 to 5, compounds selected of formula PY1-PY8, very preferably of formula PY2. The proportion of these compounds in the LC host mixture as a whole is preferably 1 to 30%, particularly preferably 2 to 20%. The content of these individual compounds is preferably in each case 1 to 20%.

The combination of compounds of the preferred embodiments mentioned above with the polymerised compounds described above causes low threshold voltages, low rotational viscosities and very good low-temperature stabilities in the LC media according to the invention at the same time as constantly high clearing points and high HR values, and allows the rapid establishment of a particularly low pretilt angle in PSA displays. In particular, the LC media exhibit significantly shortened response times, in particular also the grey-shade response times, in PSA displays compared with the media from the prior art.

The LC media and LC host mixtures of the present invention preferably have a nematic phase range of at least 80 K, particularly preferably at least 100 K, and a rotational viscosity ≤ 250 mPa·s, preferably ≤ 200 mPas, at 20°C.

In the VA-type displays according to the invention, the molecules in the layer of the LC medium in the switched-off state are aligned perpendicular to the electrode surfaces (homeotropically) or have a a tilted homeotropic alignment. On application of an electrical voltage to the electrodes, a realignment of the LC molecules takes place with the longitudinal molecular axes parallel to the electrode surfaces.

LC media according to the invention based on compounds with negative dielectric anisotropy according to the first preferred embodiment, in particular for use in displays of the PS-VA, PS-UB-FFS and SA-VA type, have a negative dielectric anisotropy Δε, preferably from -0.5 to -10, in particular from -2.5 to -7.5, at 20°C and 1 kHz.

The birefringence Δn in LC media according to the invention for use in displays of the PS-VA, PS-UB-FFS and SA-VA type is preferably below 0.16, particularly preferably from 0.06 to 0.14, very particularly preferably from 0.07 to 0.12.

In the OCB-type displays according to the invention, the molecules in the layer of the LC medium have a "bend" alignment. On application of an electrical voltage, a realignment of the LC molecules takes place with the longitudinal molecular axes perpendicular to the electrode surfaces.

The birefringence Δn in LC media according to the invention for use in displays of the PS-OCB type is preferably from 0.14 to 0.22, particularly preferably from 0.16 to 0.22.

The LC media according to the invention may also comprise further additives which are known to the person skilled in the art and are described in the literature, such as, for example, polymerization initiators, inhibitors, stabilisers, surface-active substances or chiral dopants. These may be polymerizable or non-polymerizable. Polymerisable additives are accordingly ascribed to the polymerizable component or component A). Non-polymerizable additives are accordingly ascribed to the non-polymerizable component or component B).

In a preferred embodiment the LC media contain one or more chiral dopants, preferably in a concentration from 0.01 to 1%, very preferably from 0.05 to 0.5%. The chiral dopants are preferably selected from the group consisting of compounds from Table B below, very preferably from the group consisting of R- or S-1011, R- or S-2011, R- or S-3011, R- or S-4011, and R- or S-5011.

In another preferred embodiment the LC media contain a racemate of one or more chiral dopants, which are preferably selected from the chiral dopants mentioned in the previous paragraph.

Furthermore, it is possible to add to the LC media, for example, 0 to 15% by weight of pleochroic dyes, furthermore nanoparticles, conductive salts, preferably ethyldimethyldodecylammonium 4-hexoxybenzoate, tetrabutylammonium tetraphenylborate or complex salts of crown ethers (cf., for example, Haller et al., Mol. Cryst. Liq. Cryst. 24, 249-258 (1973)), for improving the conductivity, or substances for modifying the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

The individual components of the preferred embodiments a)-z) of the LC media according to the invention are either known or methods for the preparation thereof can readily be derived from the prior art by the person skilled in the relevant art, since they are based on standard methods described in the literature. Corresponding compounds of the formula CY are described, for example, in EP-A-0 364 538. Corresponding compounds of the formula ZK are described, for example, in DE-A-26 36 684 and DE-A-33 21 373.

The LC media which can be used in accordance with the invention are prepared in a manner conventional per se, for example by mixing one or more of the above-mentioned compounds with one or more polymerizable compounds as defined above, and optionally with further liquid-crystalline compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing. The invention furthermore relates to the process for the preparation of the LC media according to the invention.

It goes without saying to the person skilled in the art that the LC media according to the invention may also comprise compounds in which, for example, H, N, O, Cl, F have been replaced by the corresponding isotopes like deuterium etc.

The following examples explain the present invention without restricting it. However, they show the person skilled in the art preferred mixture concepts with compounds preferably to be employed and the respective concentrations thereof and combinations thereof with one another. In addition, the examples illustrate which properties and property combinations are accessible.

Preferred mixture components are shown in Tables A1 and A2 below. The compounds shown in Table A1 are especially suitable for use in LC mixtures with positive dielectric anisotropy. The compounds shown in Table A2 are especially suitable for use in LC mixtures with negative dielectric anisotropy.

**Table A1**

| In Table A1, m and n are independently of each other an integer from 1 to 12, preferably 1, 2, 3, 4, 5 or 6, k is 0, 1, 2, 3, 4, 5 or 6, and (O)CₘH₂ₘ₊₁ means CₘH₂ₘ₊₁ or OCₘH₂ₘ₊₁. | |
|---|---|
| 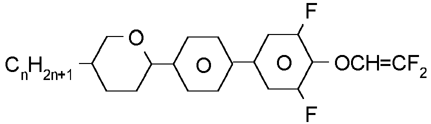 | 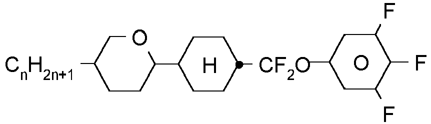 |
| **APU-n-OXF** | **ACQU-n-F** |
| 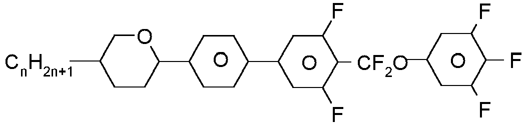 | |
| **APUQU-n-F** | |
| 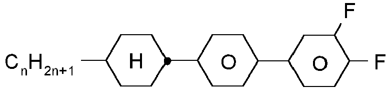 | 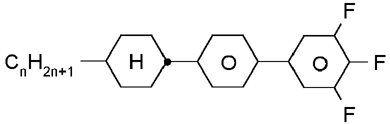 |
| **BCH-nF.F** | **BCH-nF.F.F** |
| 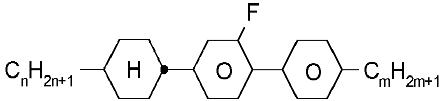 | 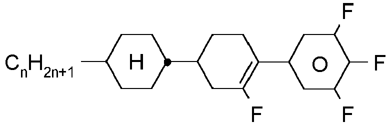 |
| **BCH-n.Fm** | **CFU-n-F** |
| 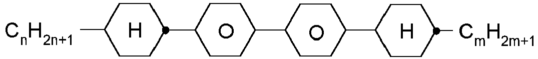 | |
| **CBC-nm** | |
| 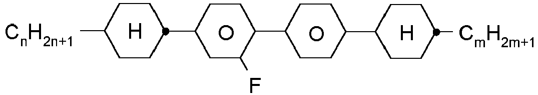 | |
| **CBC-nmF** | |
| 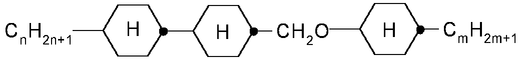 | |
| **CCOC-n-m** | |
| 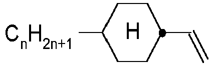 | 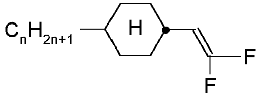 |
| **C-n-V** | **C-n-XF** |
| 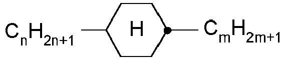 | 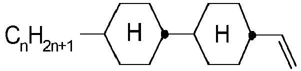 |
| **C-n-m** | **CC-n-V** |
| 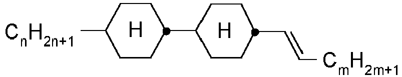 | 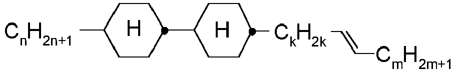 |
| **CC-n-Vm** | **CC-n-kVm** |
| 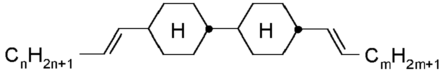 | 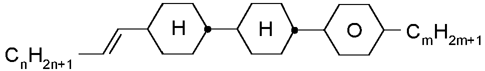 |
| **CC-nV-Vm** | **CCP-nV-m** |
| 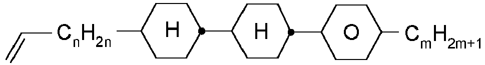 | 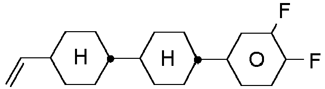 |
| **CCP-Vn-m** | **CCG-V-F** |
| 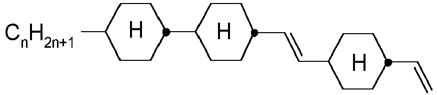 | 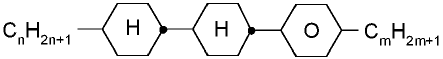 |
| **CCVC-n-V** | **CCP-n-m** |
| 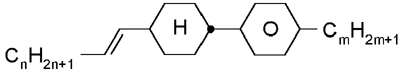 | 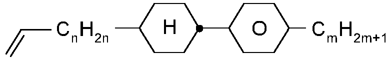 |
| **CP-nV-m** | **CP-Vn-m** |
| 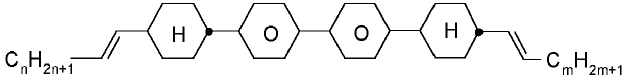 | |
| **CPPC-nV-Vm** | |
| 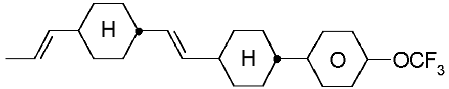 | |
| **CVCP-1V-OT** | |
| 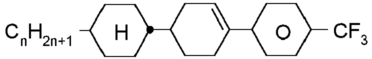 | 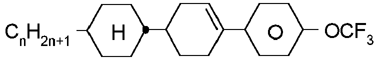 |
| **CLP-n-T** | **CLP-n-OT** |
| 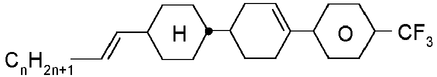 | 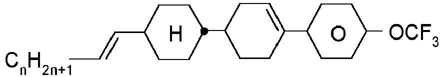 |
| **CLP-nV-T** | **CLP-nV-OT** |
| 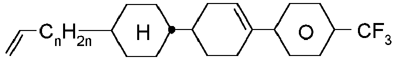 | 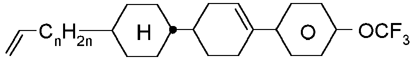 |
| **CLP-Vn-T** | **CLP-Vn-OT** |
| 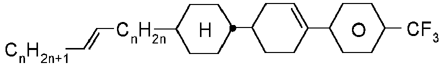 | 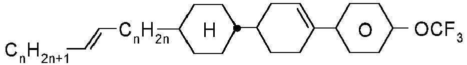 |
| **CLP-nVm-T** | **CLP-nVm-OT** |
| 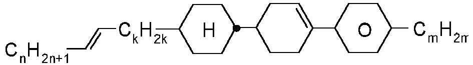 | |
| **CLP-nVk-m** | |
| 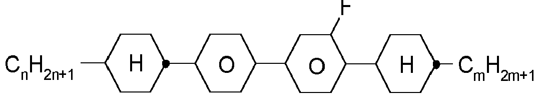 | |
| **CPGP-n-m** | |
| 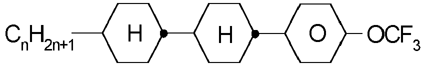 | 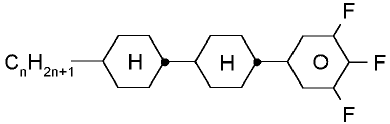 |
| **CCP-n0CF₃** | **CCP-nF.F.F** |
| 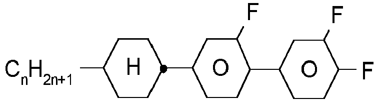 | 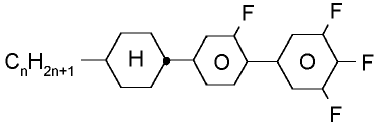 |
| **CGG-n-F** | **CGU-n-F** |
| 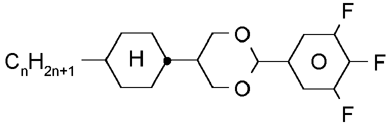 | 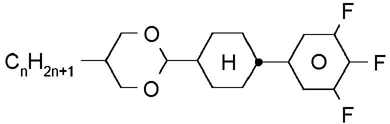 |
| **CDU-n-F** | **DCU-n-F** |
| 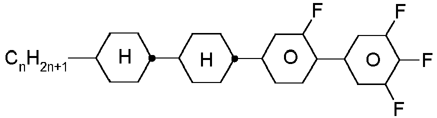 | 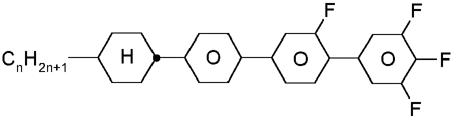 |
| **CCGU-n-F** | **CPGU-n-F** |
| 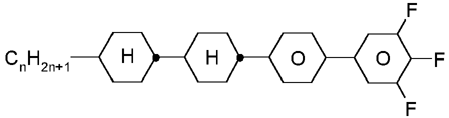 | 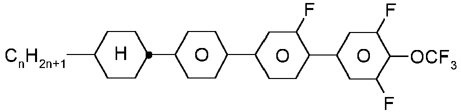 |
| **CCPU-n-F** | **CPGU-n-OT** |
| 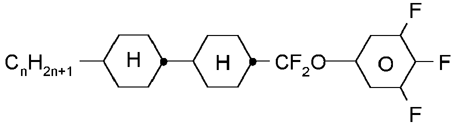 | 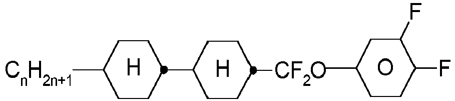 |
| **CCQU-n-F** | **CCQG-n-F** |
| 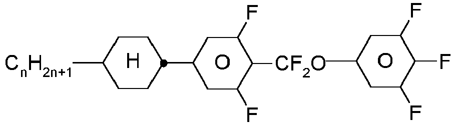 | 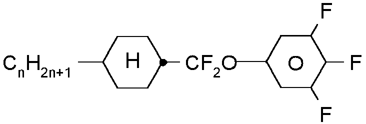 |
| **CUQU-n-F** | **CQU-n-F** |
| 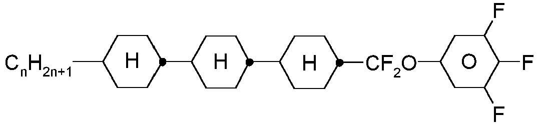 | |
| **CCCQU-n-F** | |
| 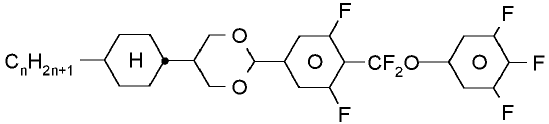 | |
| **CDUQU-n-F** | |
| 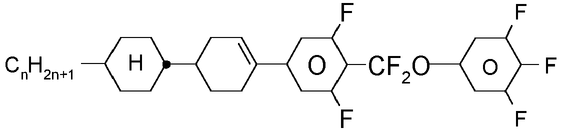 | |
| **CLUQU-n-F** | |
| 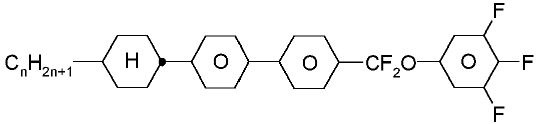 | |
| **CPPQU-n-F** | |
| 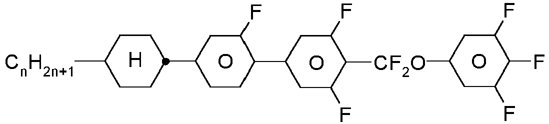 | |
| **CGUQU-n-F** | |
| 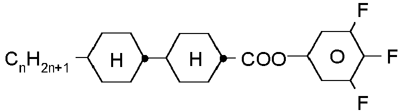 | 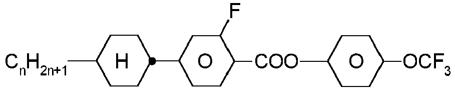 |
| **CCZU-n-F** | **CGZP-n-OT** |
| 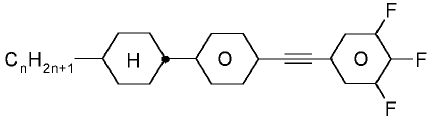 | 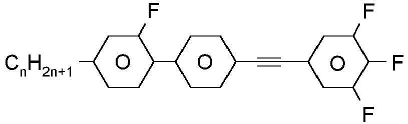 |
| **CPTU-n-F** | **GPTU-n-F** |
| 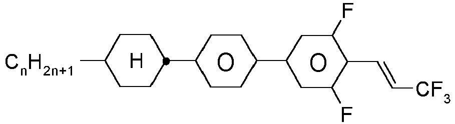 | 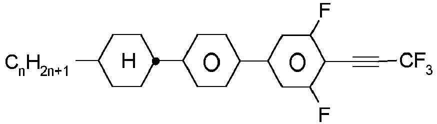 |
| **CPU-n-VT** | **CPU-n-AT** |
| 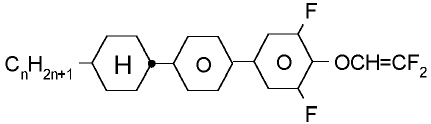 | |
| **CPU-n-OXF** | |
| 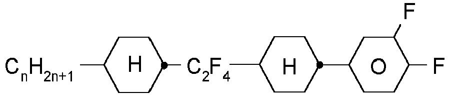 | 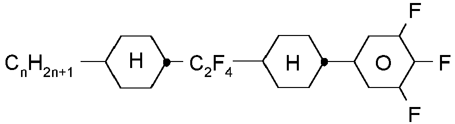 |
| **CWCG-n-F** | **CWCU-n-F** |
| 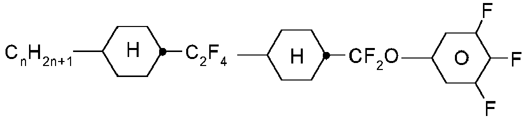 | |
| **CWCQU-n-F** | |
| 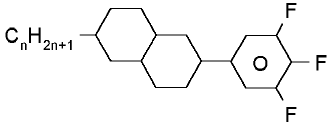 | 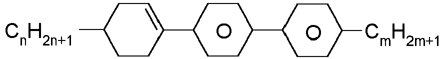 |
| **Dec-U-n-F** | **LPP-n-m** |
| 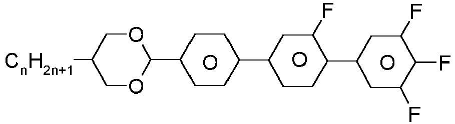 | 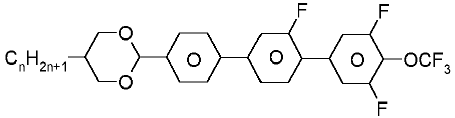 |
| **DPGU-n-F** | **DPGU-n-OT** |
| 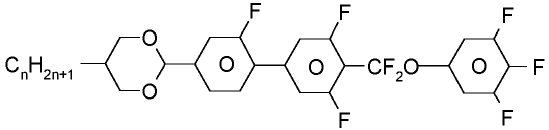 | |
| **DGUQU-n-F** | |
| 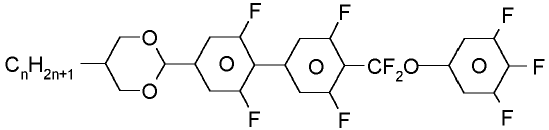 | |
| **DUUQU-n-F** | |
| 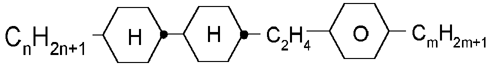 | 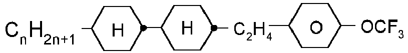 |
| **ECCP-nm** | **ECCP-nOCF₃** |
| 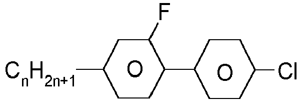 | 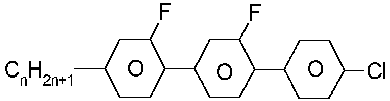 |
| **GP-n-CI** | **GGP-n-CI** |
| 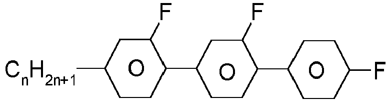 | 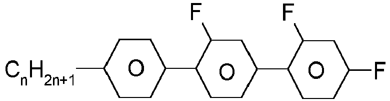 |
| **GGP-n-F** | **PGIGI-n-F** |
| 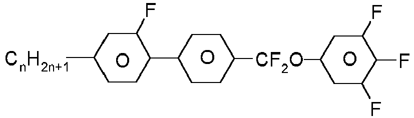 | 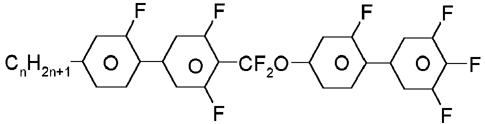 |
| **GPQU-n-F** | **GUQGU-n-F** |
| 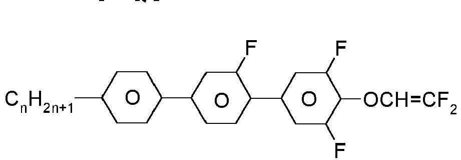 | 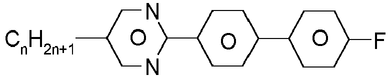 |
| **PGU-n-OXF** | **MPP-n-F** |
| 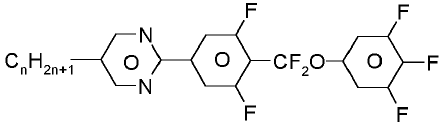 | 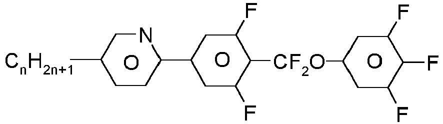 |
| **MUQU-n-F** | **NUQU-n-F** |
| 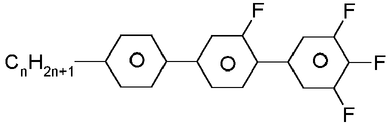 | 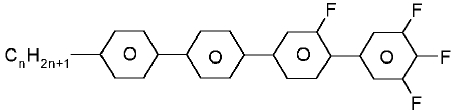 |
| **PGU-n-F** | **PPGU-n-F** |
| 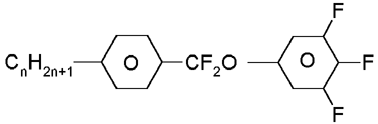 | 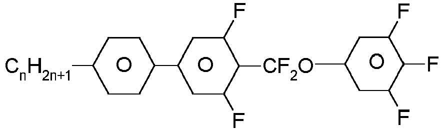 |
| **PQU-n-F** | **PUQU-n-F** |
| 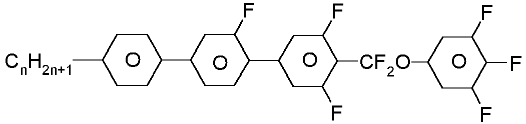 | |
| **PGUQU-n-F** | |
| 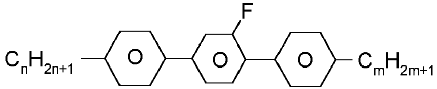 | 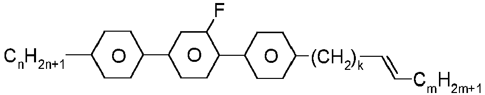 |
| **PGP-n-m** | **PGP-n-kVm** |
| 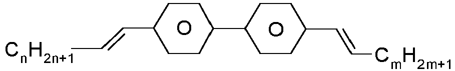 | 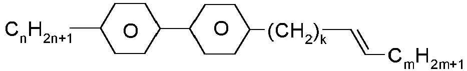 |
| **PP-nV-Vm** | **PP-n-kVm** |
| 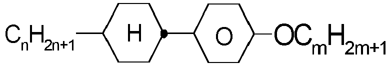 | 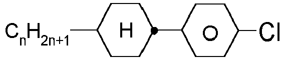 |
| **PCH-nOm** | **PCH-nCl** |
| 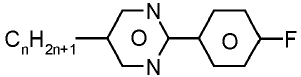 | |
| **PYP-nF** | |

**Table A2**

| In Table A2, m and n are independently of each other an integer from 1 to 12, preferably 1, 2, 3, 4, 5 or 6, k is 0, 1, 2, 3, 4, 5 or 6, and (O)CₘH₂ₘ₊₁ means CₘH₂ₘ₊₁ or OCₘH₂ₘ₊₁. |
|---|
| 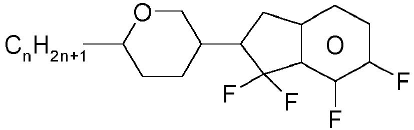 |
| **AIK-n-F** |
| 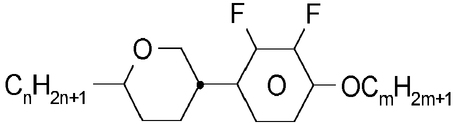 |
| **AlY-n-Om** |
| 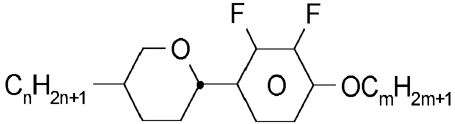 |
| **AY-n-Om** |
| 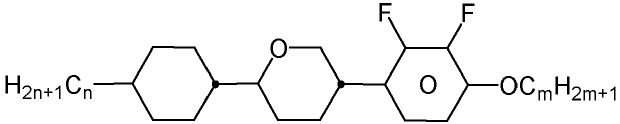 |
| **CAIY-n-Om** |
| 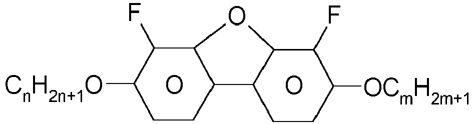 |
| **B-nO-Om** |
| 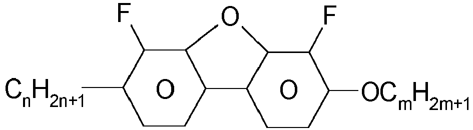 |
| **B-n-Om** |
| 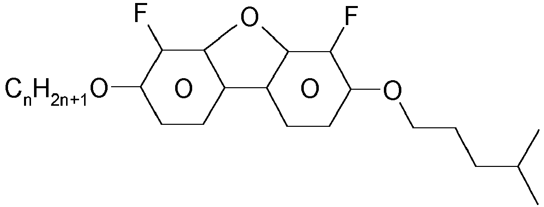 |
| **B-nO-O5i** |
| 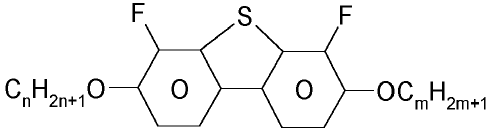 |
| **B(S)-nO-Om** |
| 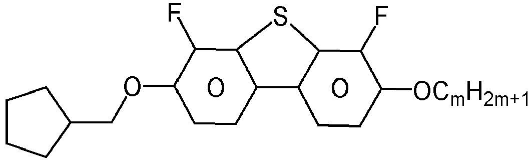 |
| **B(S)-cp1O-Om** |
| 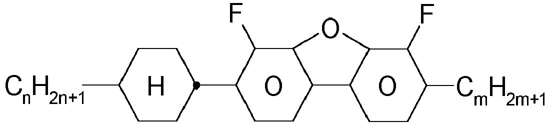 |
| **CB-n-m** |
| 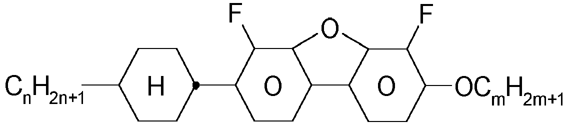 |
| **CB-n-Om** |
| 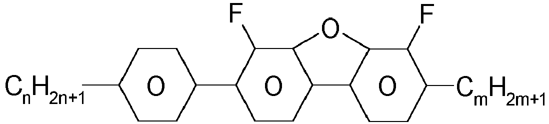 |
| **PB-n-m** |
| 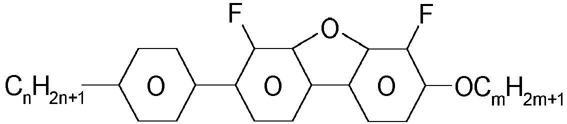 |
| **PB-n-Om** |
| 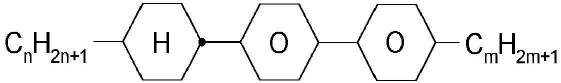 |
| **BCH-nm** |
| 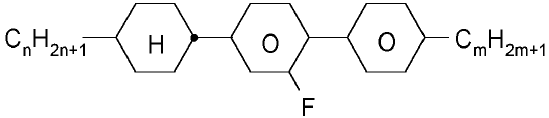 |
| **BCH-nmF** |
| 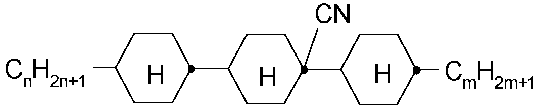 |
| **BCN-nm** |
| 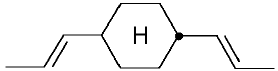 |
| **C-1V-V1** |
| 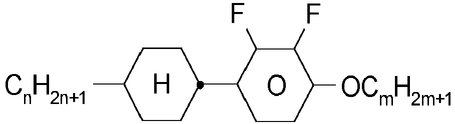 |
| **CY-n-Om** |
| 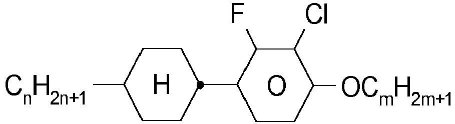 |
| **CY(F,Cl)-n-Om** |
| 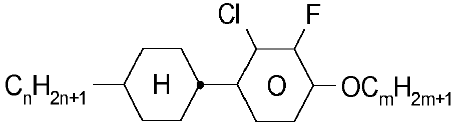 |
| **CY(CI,F)-n-Om** |
| 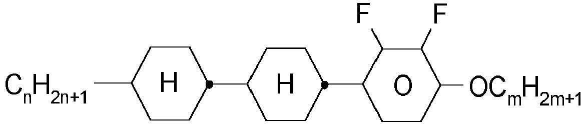 |
| **CCY-n-Om** |
| 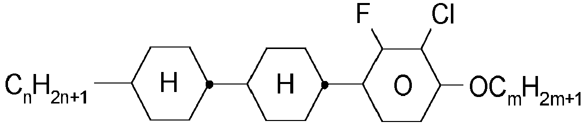 |
| **CCY(F,Cl)-n-Om** |
| 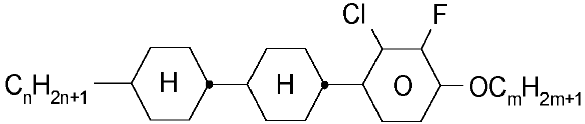 |
| **CCY(Cl,F)-n-Om** |
| 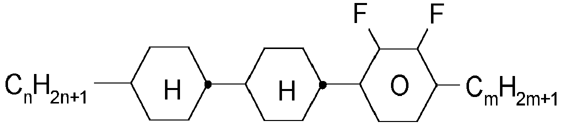 |
| **CCY-n-m** |
| 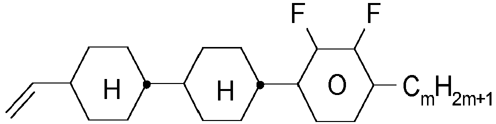 |
| **CCY-V-m** |
| 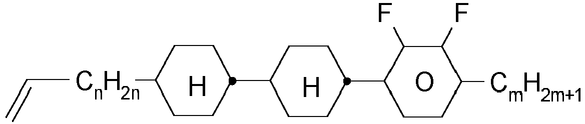 |
| **CCY-Vn-m** |
| 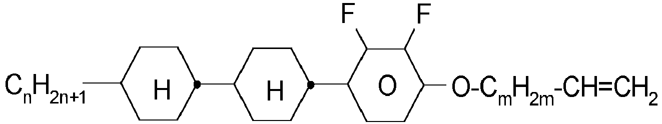 |
| **CCY-n-OmV** |
| 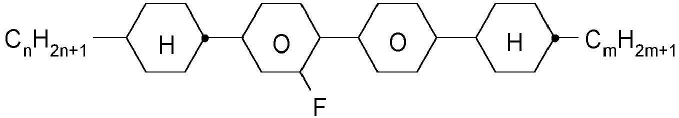 |
| **CBC-nmF** |
| 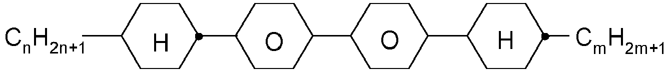 |
| **CBC-nm** |
| 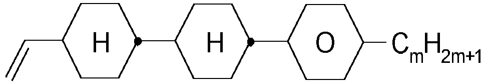 |
| **CCP-V-m** |
| 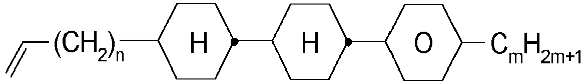 |
| **CCP-Vn-m** |
| 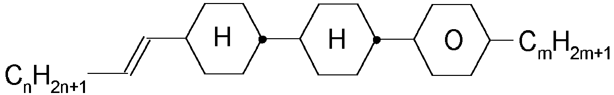 |
| **CCP-nV-m** |
| 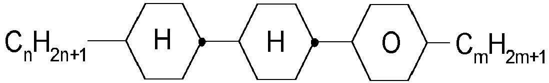 |
| **CCP-n-m** |
| 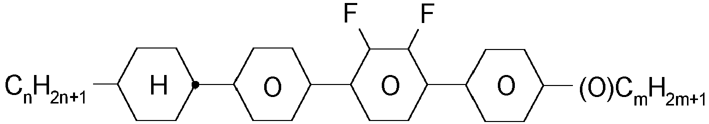 |
| **CPYP-n-(O)m** |
| 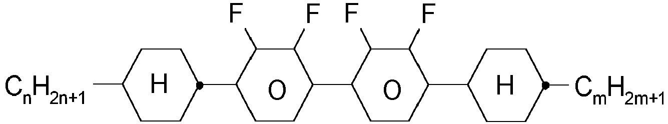 |
| **CYYC-n-m** |
| 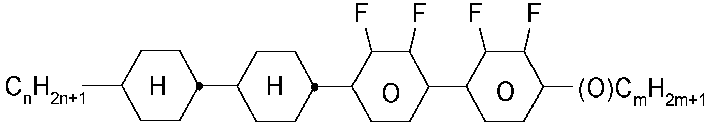 |
| **CCYY-n-(O)m** |
| 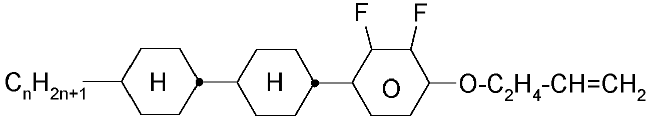 |
| **CCY-n-O2V** |
| 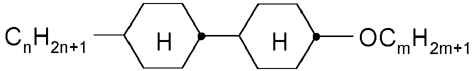 |
| **CCH-nOm** |
| 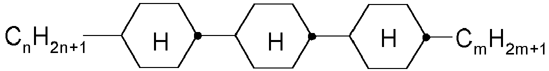 |
| **CCC-n-m** |
| 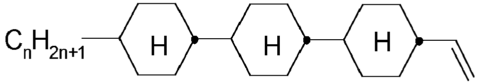 |
| **CCC-n-V** |
| 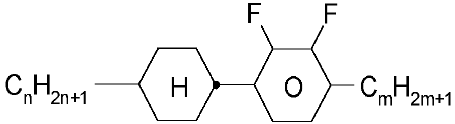 |
| **CY-n-m** |
| 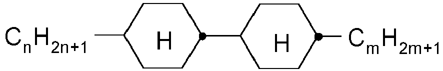 |
| **CCH-nm** |
| 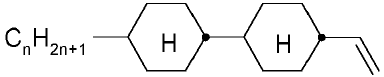 |
| **CC-n-V** |
| 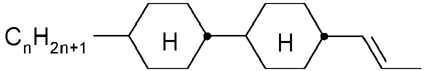 |
| **CC-n-V1** |
| 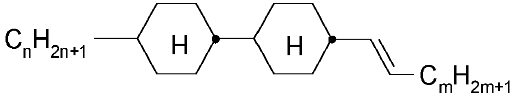 |
| **CC-n-Vm** |
| 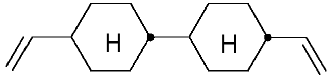 |
| **CC-V-V** |
| 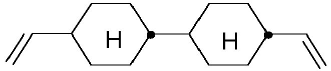 |
| **CC-V-V1** |
| 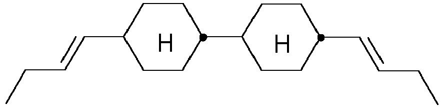 |
| **CC-2V-V2** |
| 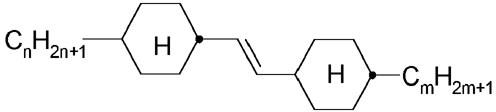 |
| **CVC-n-m** |
| 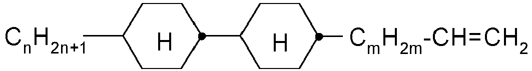 |
| **CC-n-mV** |
| 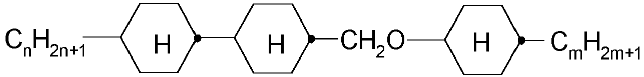 |
| **CCOC-n-m** |
| 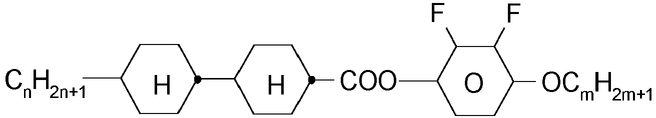 |
| **CP-nOmFF** |
| 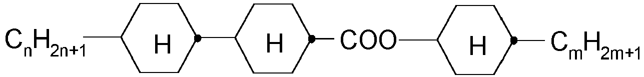 |
| **CH-nm** |
| 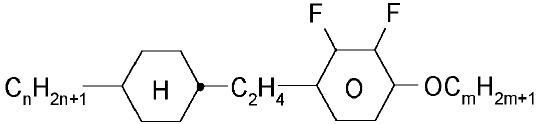 |
| **CEY-n-Om** |
| 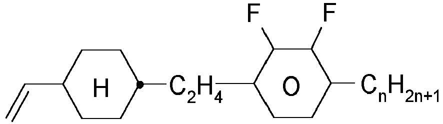 |
| **CEY-V-n** |
| 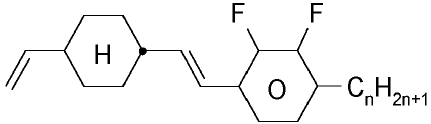 |
| **CVY-V-n** |
| 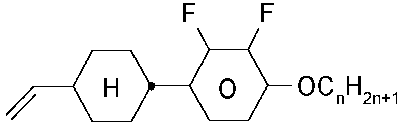 |
| **CY-V-On** |
| 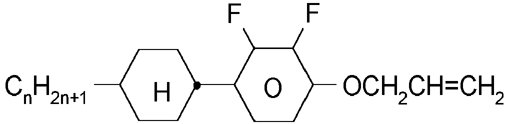 |
| **CY-n-O1V** |
| 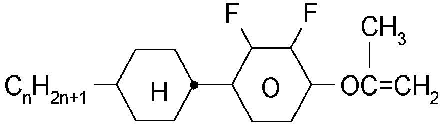 |
| **CY-n-OC(CH₃)=CH₂** |
| 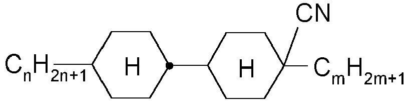 |
| **CCN-nm** |
| 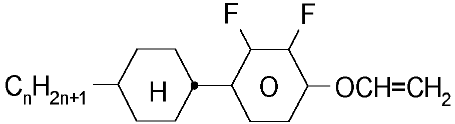 |
| **CY-n-OV** |
| 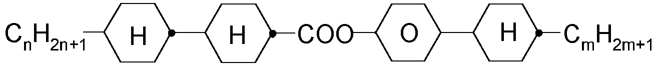 |
| **CCPC-nm** |
| 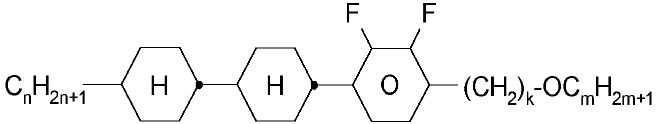 |
| **CCY-n-kOm** |
| 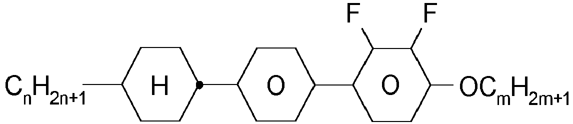 |
| **CPY-n-Om** |
| 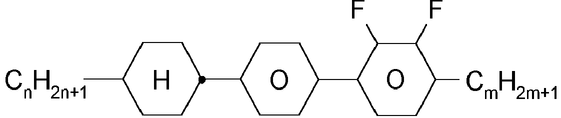 |
| **CPY-n-m** |
| 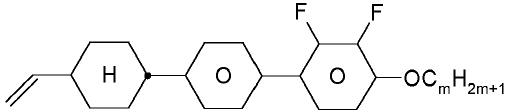 |
| **CPY-V-Om** |
| 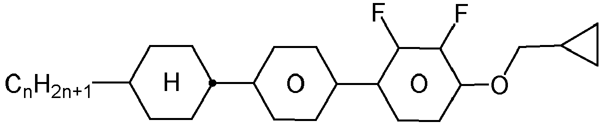 |
| **CPY-3-O1cpr** |
| 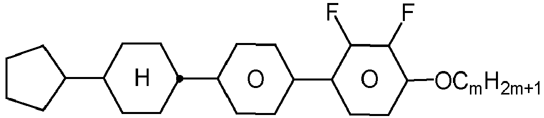 |
| **CPY-cp-Om** |
| 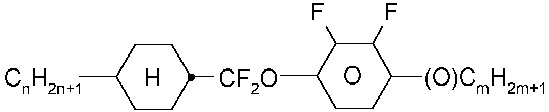 |
| **CQY-n-(O)m** |
| 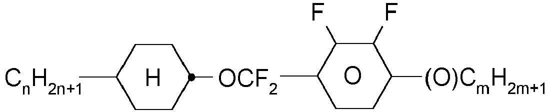 |
| **CQIY-n-(O)m** |
| 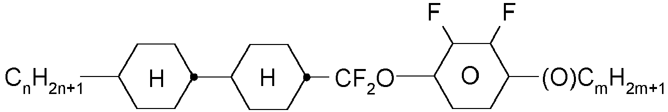 |
| **CCQY-n-(O)m** |
| 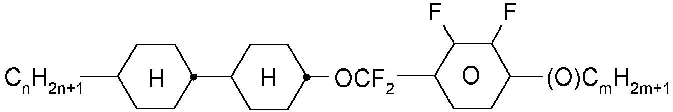 |
| **CCQIY-n-(O)m** |
| 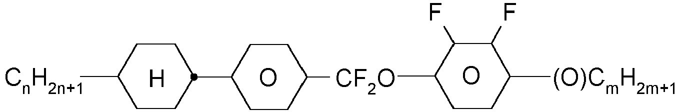 |
| **CPQY-n-(O)m** |
| 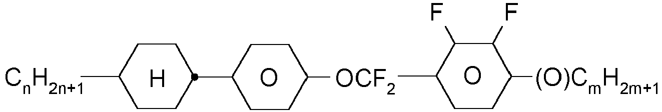 |
| **CPQIY-n-(O)m** |
| 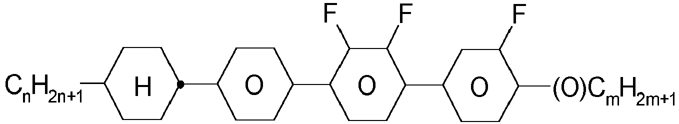 |
| **CPYG-n-(O)m** |
| 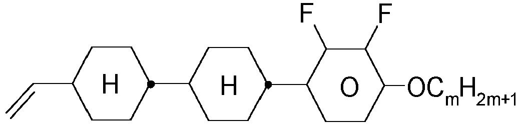 |
| **CCY-V-Om** |
| 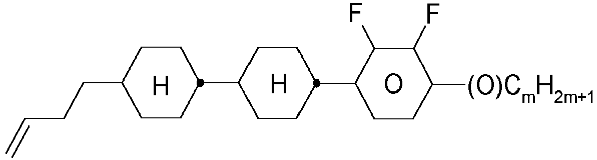 |
| **CCY-V2-(O)m** |
| 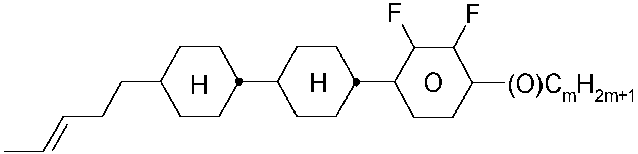 |
| **CCY-1V2-(O)m** |
| 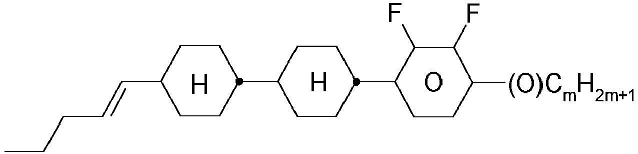 |
| **CCY-3V-(O)m** |
| 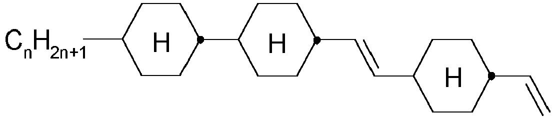 |
| **CCVC-n-V** |
| 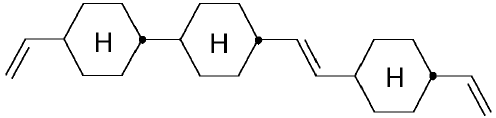 |
| **CCVC-V-V** |
| 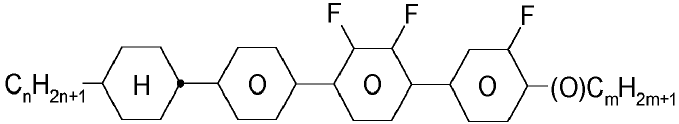 |
| **CPYG-n-(O)m** |
| 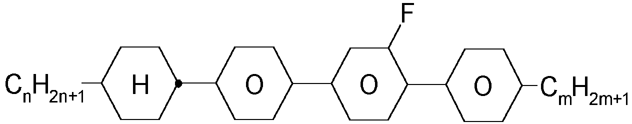 |
| **CPGP-n-m** |
| 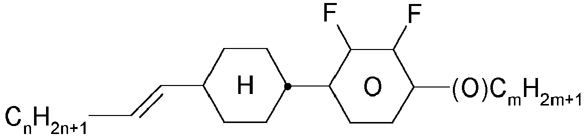 |
| **CY-nV-(O)m** |
| 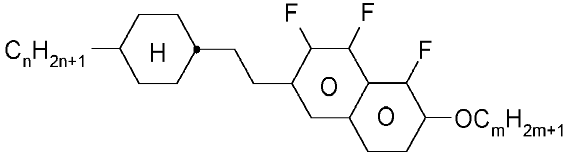 |
| **CENaph-n-Om** |
| 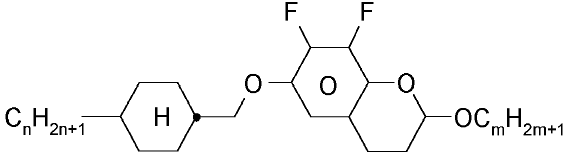 |
| **COChrom-n-Om** |
| 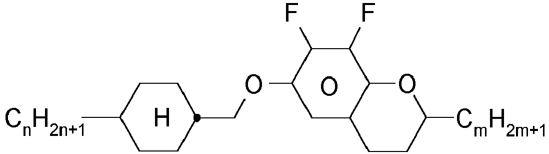 |
| **COChrom-n-m** |
| 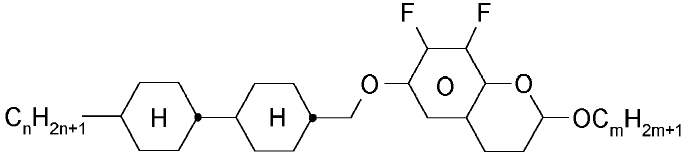 |
| **CCOChrom-n-Om** |
| 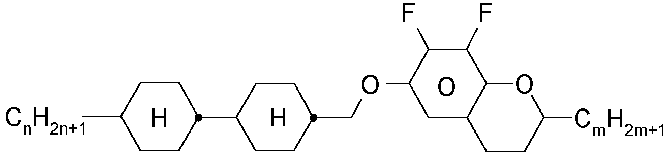 |
| **CCOChrom-n-m** |
| 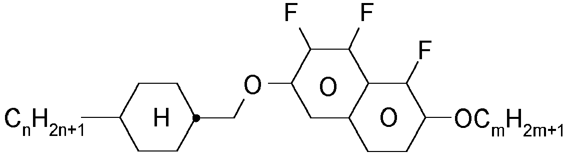 |
| **CONaph-n-Om** |
| 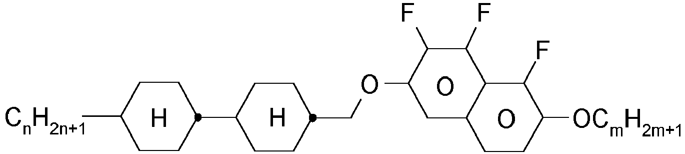 |
| **CCONaph-n-Om** |
| 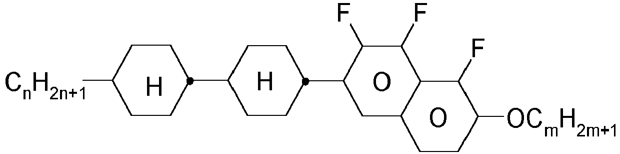 |
| **CCNaph-n-Om** |
| 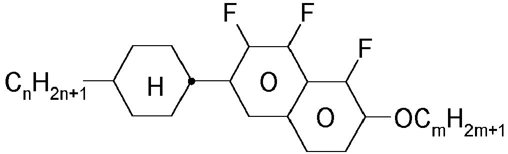 |
| **CNaph-n-Om** |
| 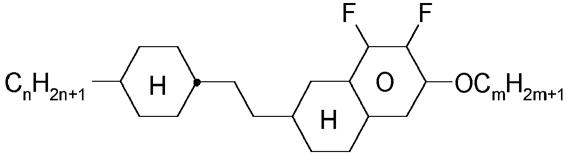 |
| **CETNaph-n-Om** |
| 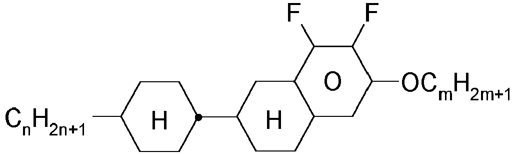 |
| **CTNaph-n-Om** |
| 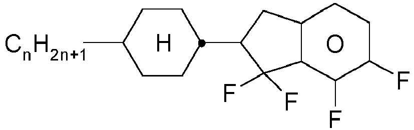 |
| **CK-n-F** |
| 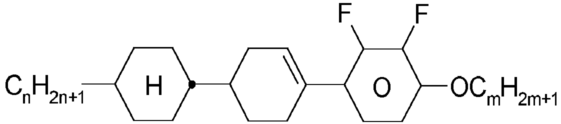 |
| **CLY-n-Om** |
| 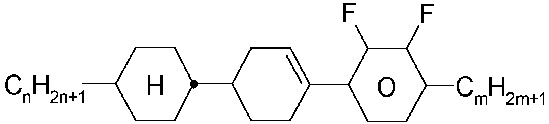 |
| **CLY-n-m** |
| 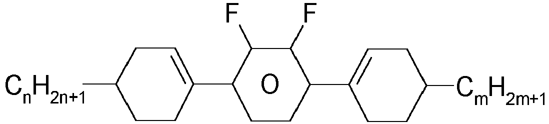 |
| **LYLI-n-m** |
| 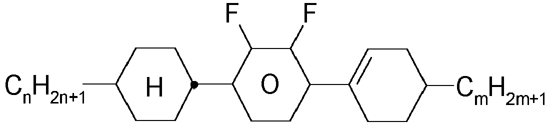 |
| **CYLI-n-m** |
| 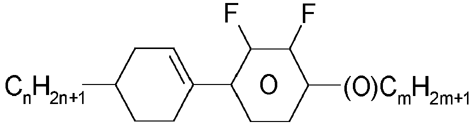 |
| **LY-n-(O)m** |
| 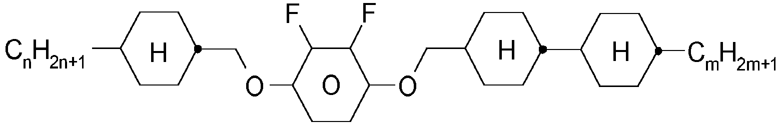 |
| **COYOICC-n-m** |
| 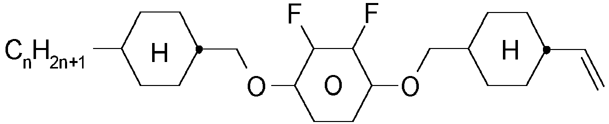 |
| **COYOIC-n-V** |
| 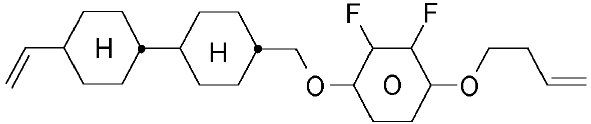 |
| **CCOY-V-O2V** |
| 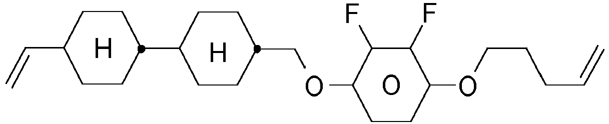 |
| **CCOY-V-O3V** |
| 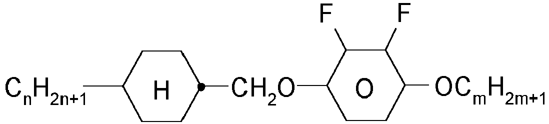 |
| **COY-n-Om** |
| 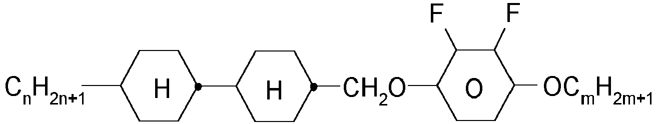 |
| **CCOY-n-Om** |
| 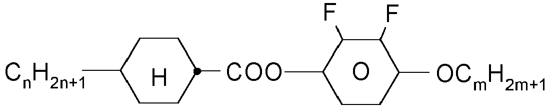 |
| **D-nOmFF** |
| 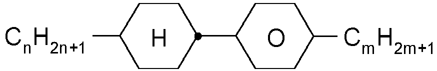 |
| **PCH-nm** |
| 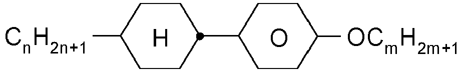 |
| **PCH-nOm** |
| 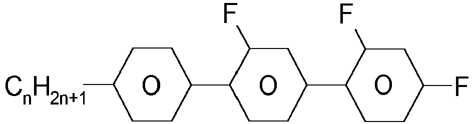 |
| **PGIGI-n-F** |
| 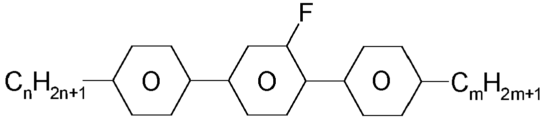 |
| **PGP-n-m** |
| 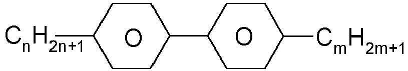 |
| **PP-n-m** |
| 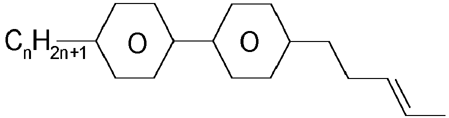 |
| **PP-n-2V1** |
| 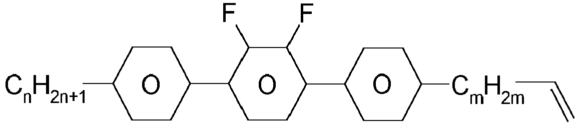 |
| **PYP-n-mV** |
| 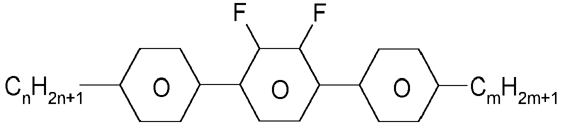 |
| **PYP-n-m** |
| 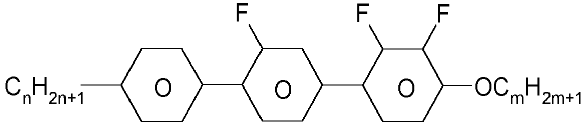 |
| **PGIY-n-Om** |
| 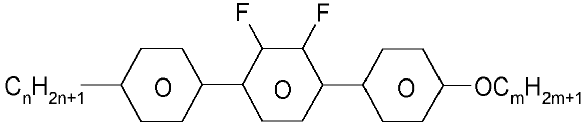 |
| **PYP-n-Om** |
| 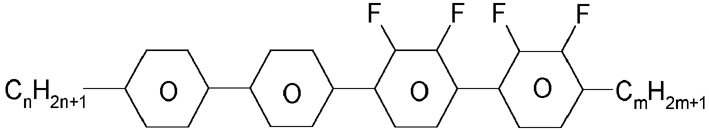 |
| **PPYY-n-m** |
| 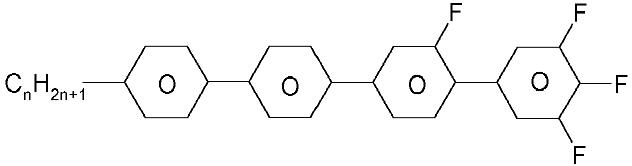 |
| **PPGU-n-F** |
| 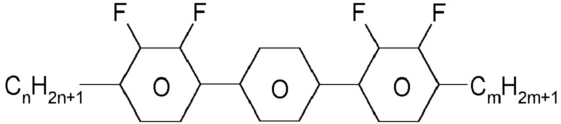 |
| **YPY-n-m** |
| 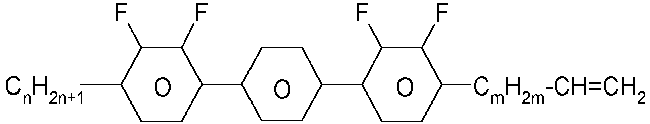 |
| **YPY-n-mV** |
| 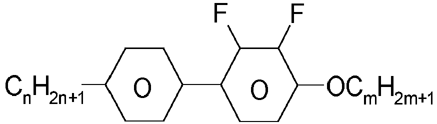 |
| **PY-n-Om** |
| 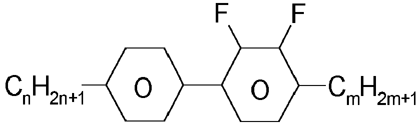 |
| **PY-n-m** |
| 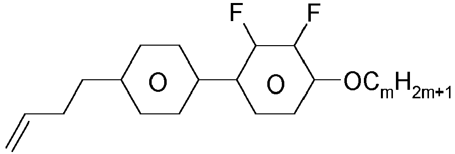 |
| **PY-V2-Om** |
| 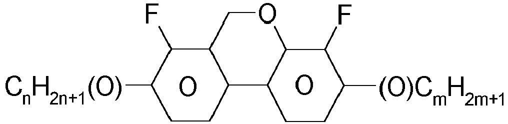 |
| **DFDBC-n(O)-(O)m** |
| 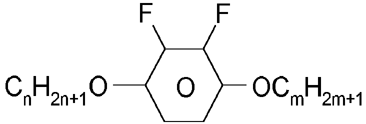 |
| **Y-nO-Om** |
| 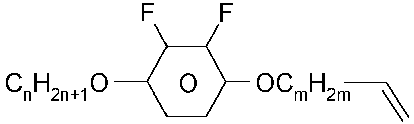 |
| **Y-nO-OmV** |
| 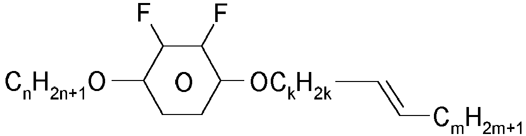 |
| **Y-nO-OkVm** |
| 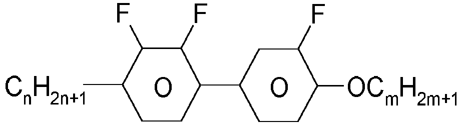 |
| **YG-n-Om** |
| 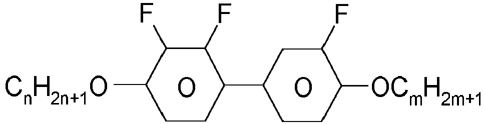 |
| **YG-nO-Om** |
| 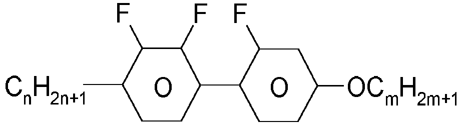 |
| **YGI-n-Om** |
| 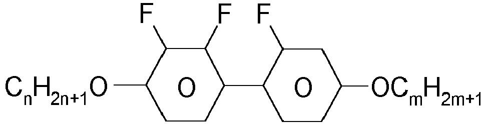 |
| **YGI-nO-Om** |
| 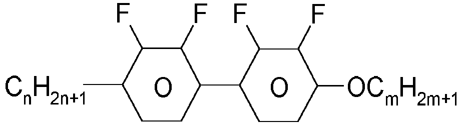 |
| **YY-n-Om** |
| 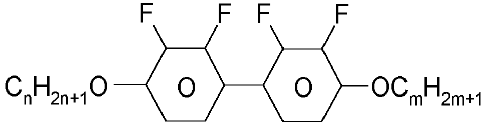 |
| **YY-n O-Om** |

In a preferred embodiment of the present invention, the LC media according to the invention, especially those with negative dielectric anisotropy, comprise one or more compounds selected from the group consisting of compounds from Table A2.

**Table B**

| Table B shows possible chiral dopants which can be added to the LC media according to the invention. | |
|---|---|
| 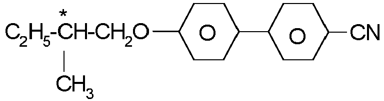 | 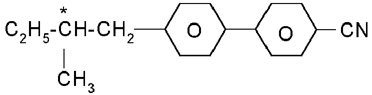 |
| **C 15** | **CB 15** |
| 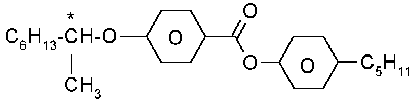 | 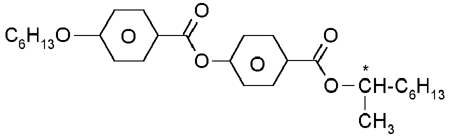 |
| **CM 21** | **R/S-811** |
| 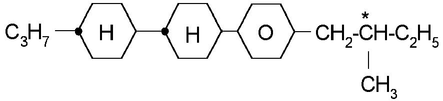 | 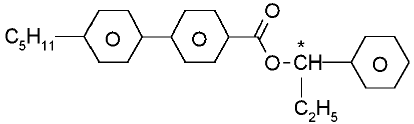 |
| **CM 44** | **CM 45** |
| 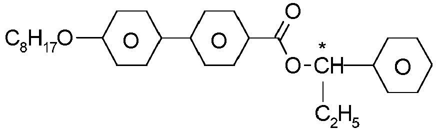 | 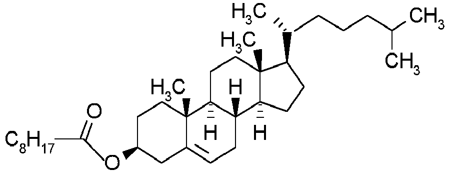 |
| **CM 47** | **CN** |
| 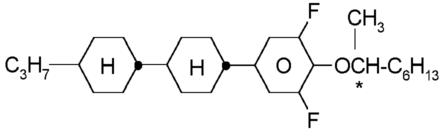 | 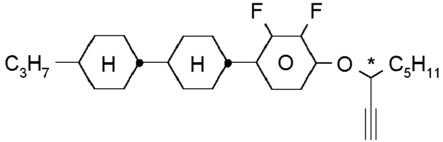 |
| **R/S-2011** | **R/S-3011** |
| 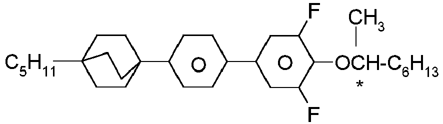 | 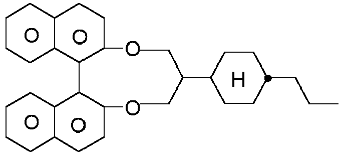 |
| **R/S-4011** | **R/S-5011** |
| 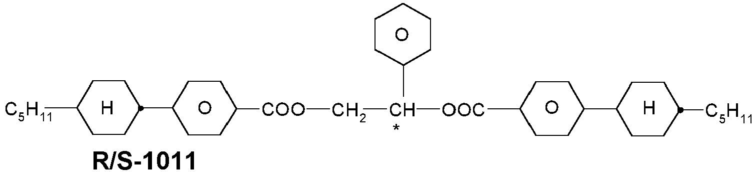 | |

The LC media preferably comprise 0 to 10% by weight, in particular 0.01 to 5% by weight, particularly preferably 0.1 to 3% by weight, of dopants. The LC media preferably comprise one or more dopants selected from the group consisting of compounds from Table B.

**Table C**

| | |
|---|---|
| Table C shows possible stabilisers which can be added to the LC media according to the invention. Therein n denotes an integer from 1 to 12, preferably 1, 2, 3, 4, 5, 6, 7 or 8. | |
| 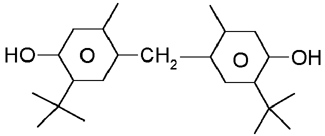 | 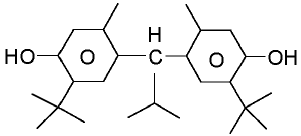 |
| 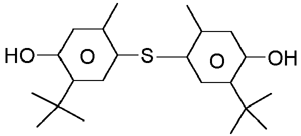 | 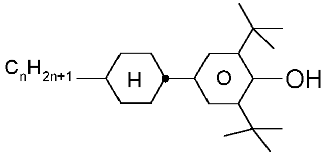 |
| | e.g. STABILIX^{®} (n=3) |
| 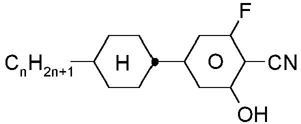 | 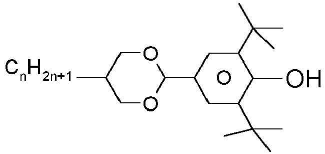 |
| 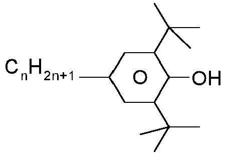 | 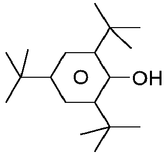 |
| 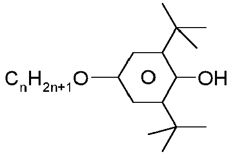 | 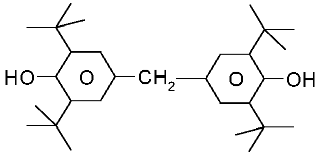 |
| 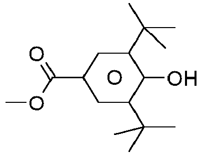 | 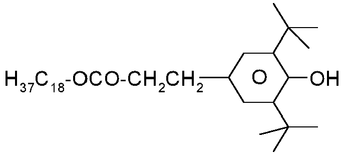 |
| | Irganox-1076^{®} |
| 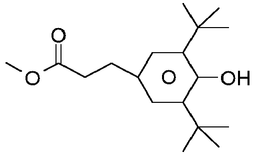 | 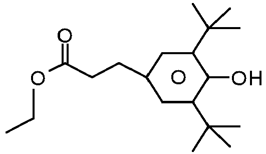 |

| | |
|---|---|
| 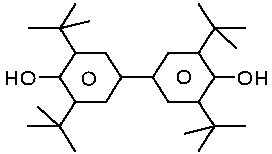 | 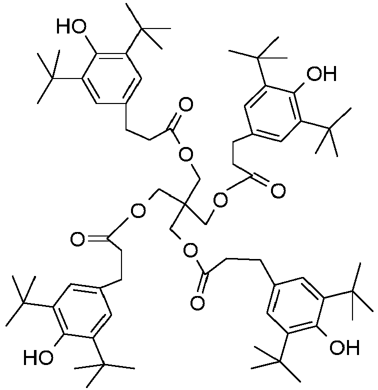 |
| 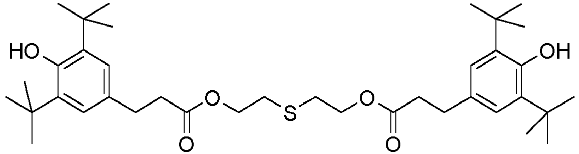 | |
| 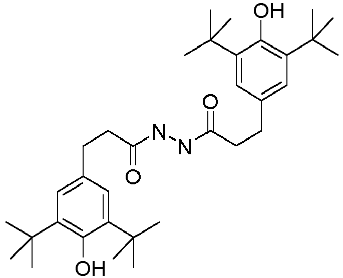 | 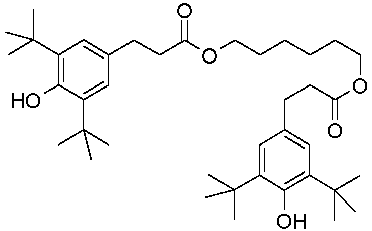 |
| 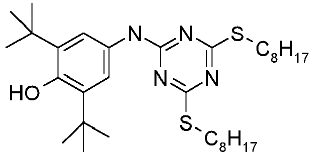 | 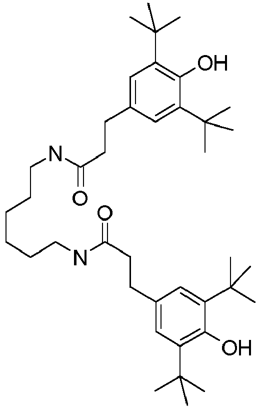 |

| | |
|---|---|
| 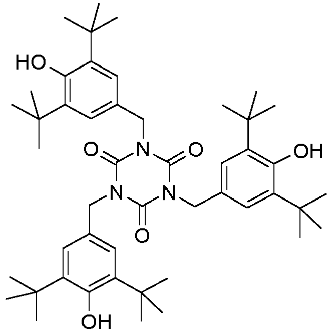 | 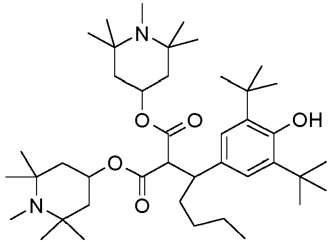 |
| 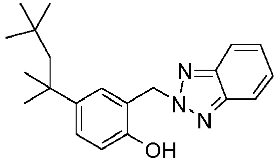 | 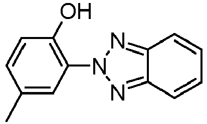 |
| 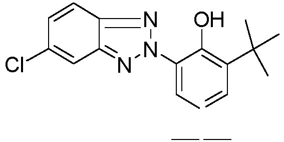 | 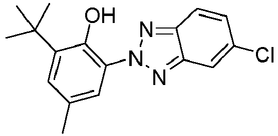 |
| 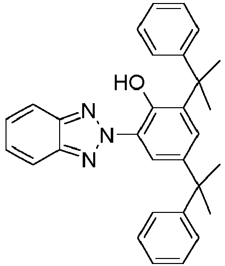 | 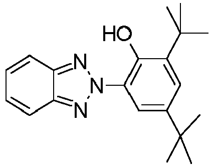 |
| 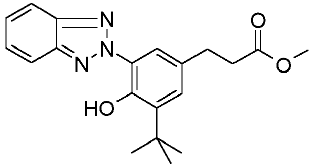 | 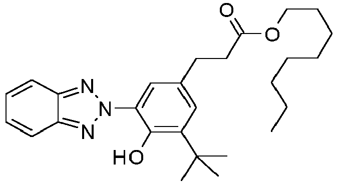 |

| | |
|---|---|
| 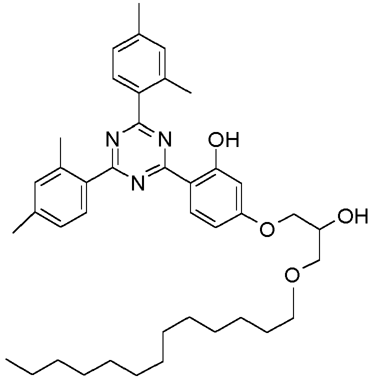 | 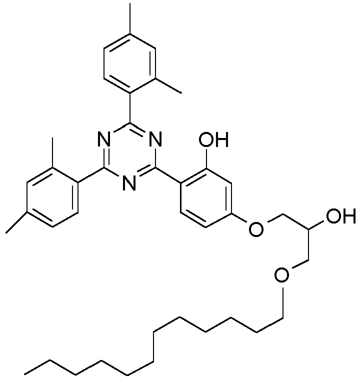 |
| 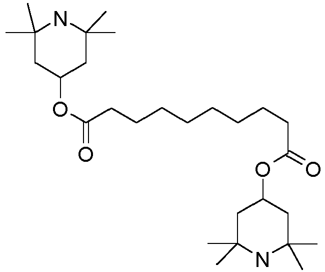 | 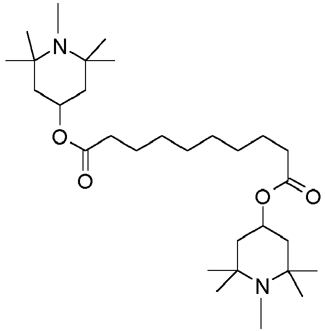 |
| 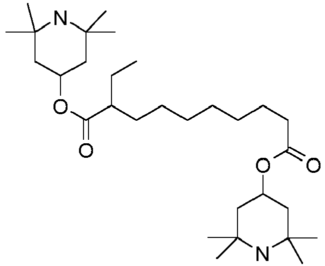 | 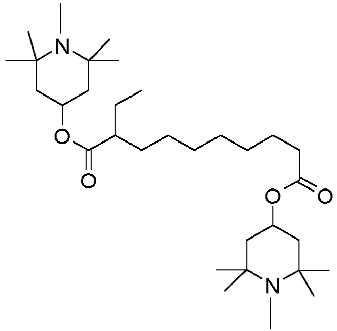 |

| | |
|---|---|
| 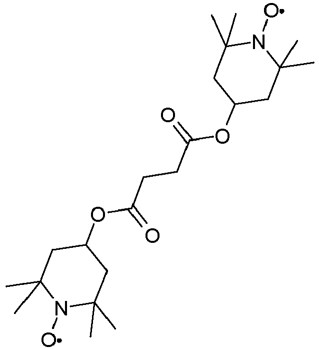 | 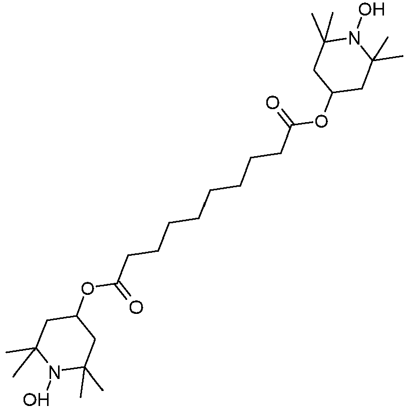 |
| 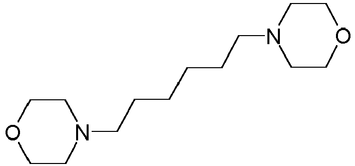 | |
| 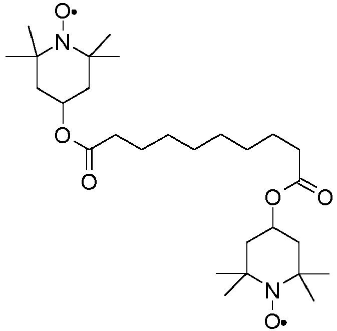 | 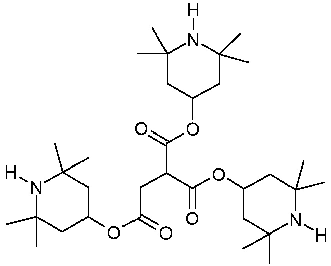 |
| 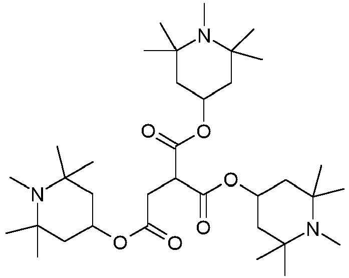 | 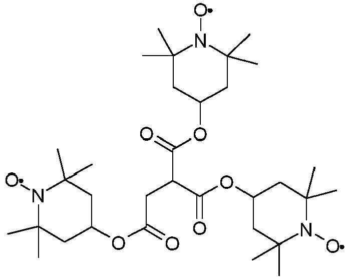 |

| | |
|---|---|
| 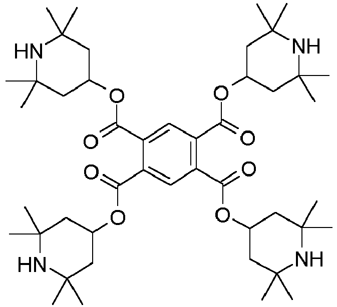 | 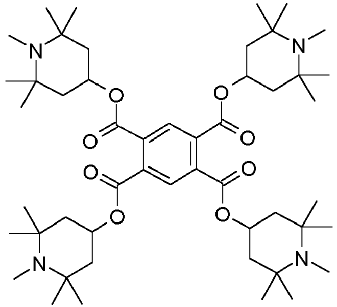 |
| 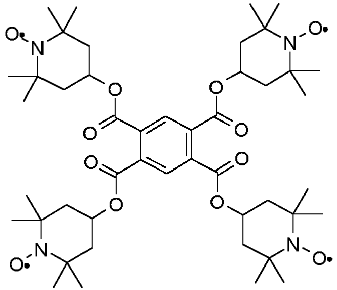 | 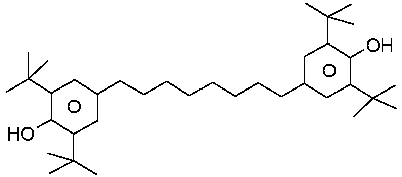 |

The LC media preferably comprise 0 to 10% by weight, in particular 1 ppm to 5% by weight, particularly preferably 1 ppm to 1% by weight, of stabilisers. The LC media preferably comprise one or more stabilisers selected from the group consisting of compounds from Table C.

**Table D**

| Table D shows self-alignment additives for vertical alignment which can be used in LC media according to the present invention together with the polymerizable compounds of formula I: | |
|---|---|
| 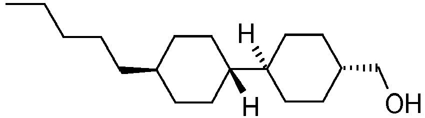 | SA-1 |
| 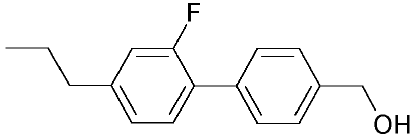 | SA-2 |
| 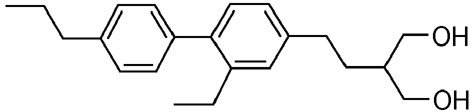 | SA-3 |
| 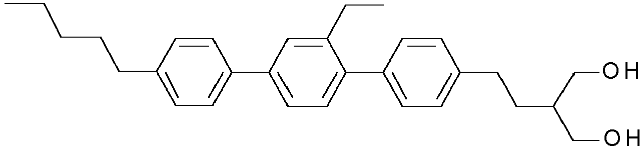 | SA-4 |
| 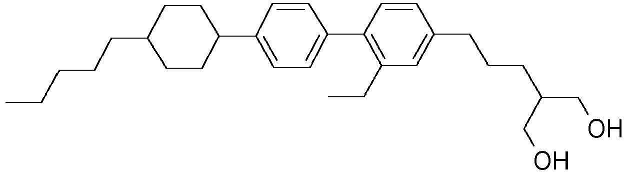 | SA-5 |
| 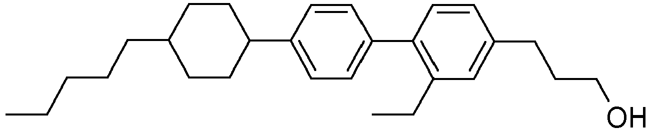 | SA-6 |
| 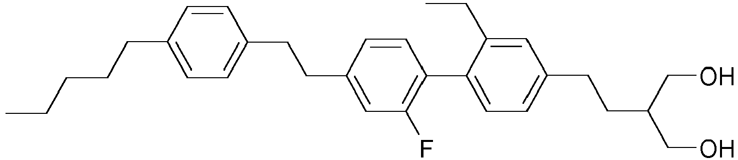 | SA-7 |
| 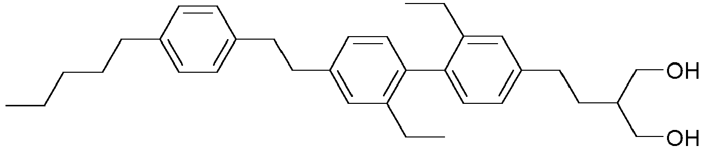 | SA-8 |
| 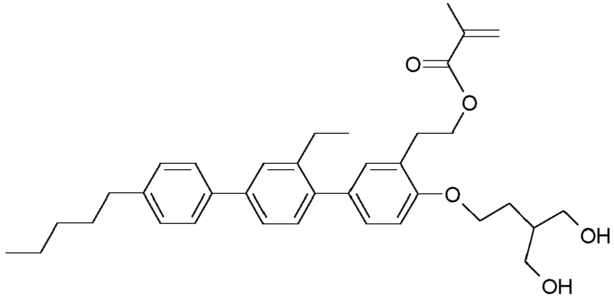 | SA-9 |
| 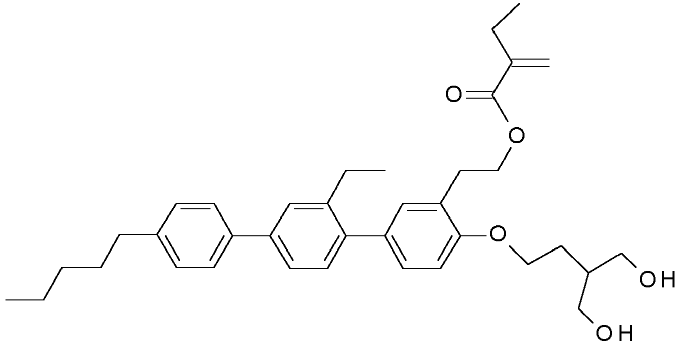 | SA-10 |
| 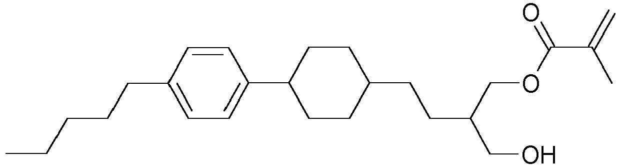 | SA-11 |
| 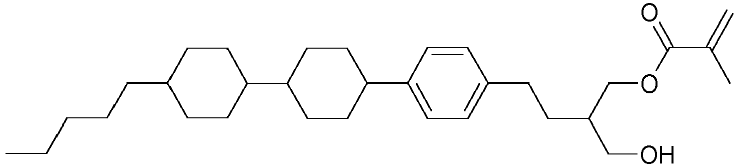 | SA-12 |
| 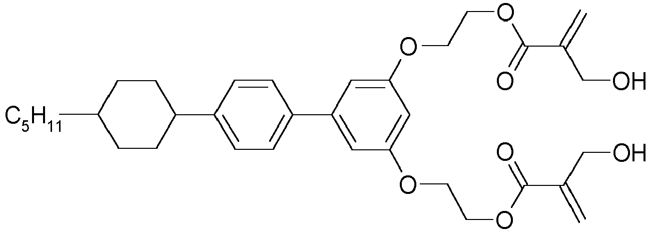 | SA-13 |
| 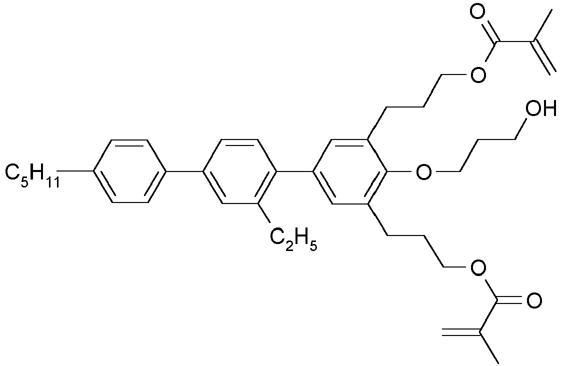 | SA-14 |
| 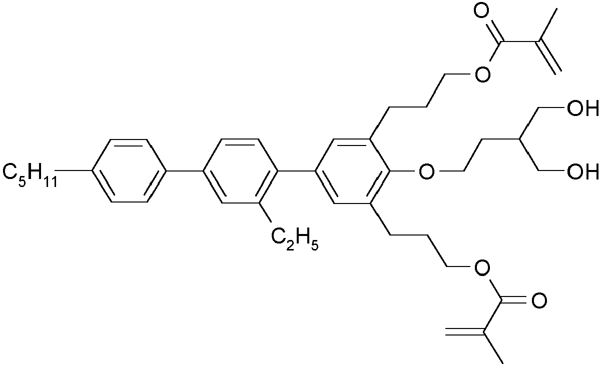 | SA-15 |
| 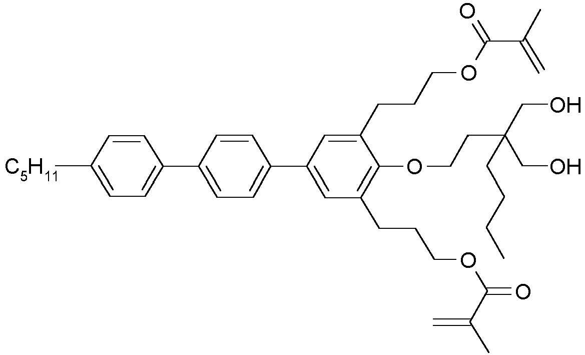 | SA-16 |
| 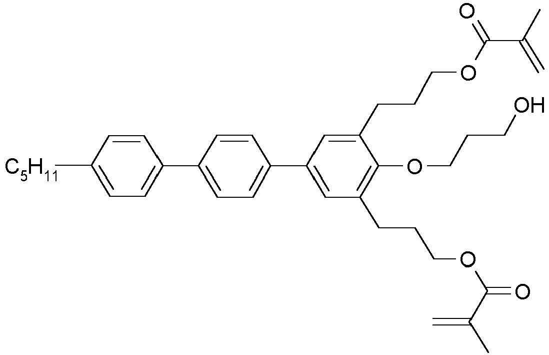 | SA-17 |
| 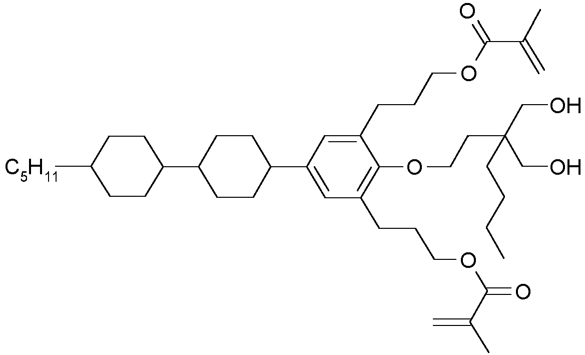 | SA-18 |
| 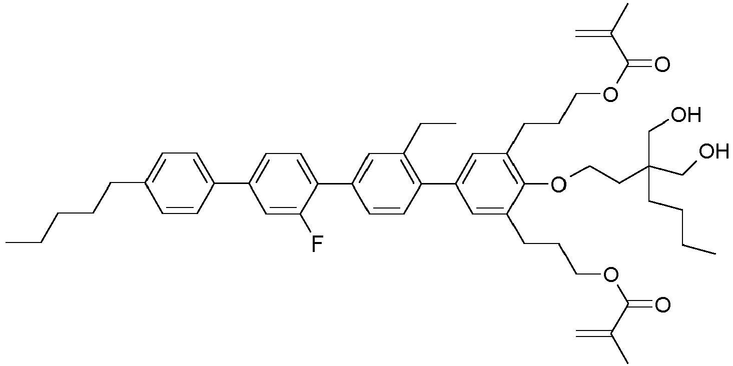 | SA-19 |
| 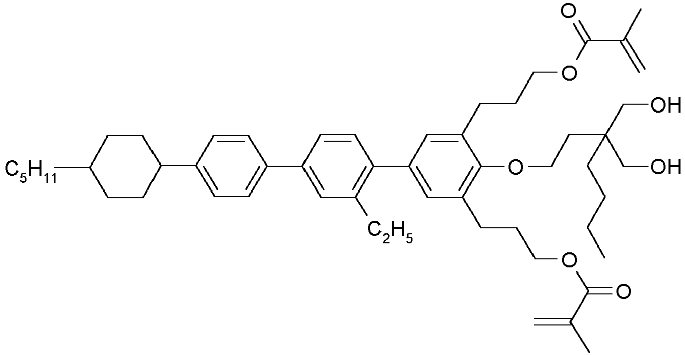 | SA-20 |
| 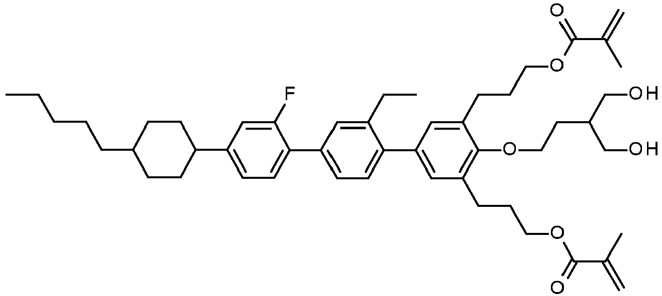 | SA-21 |
| 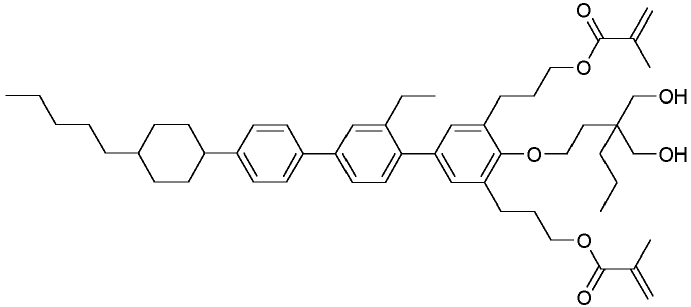 | SA-22 |
| 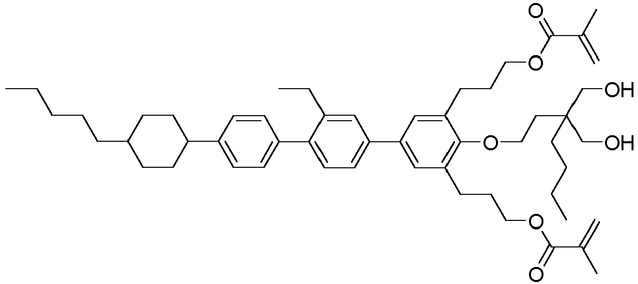 | SA-23 |
| 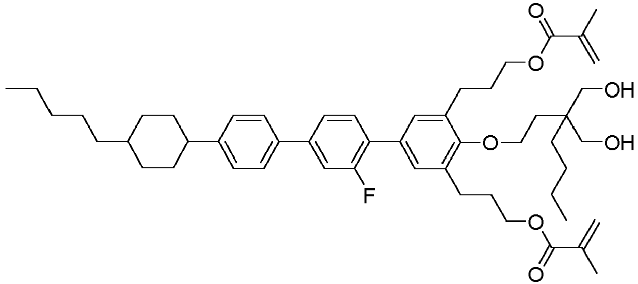 | SA-24 |
| 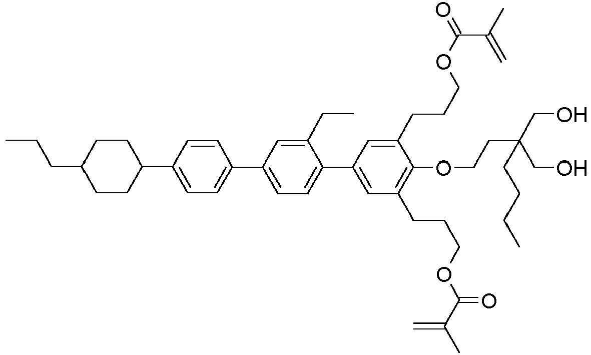 | SA-25 |
| 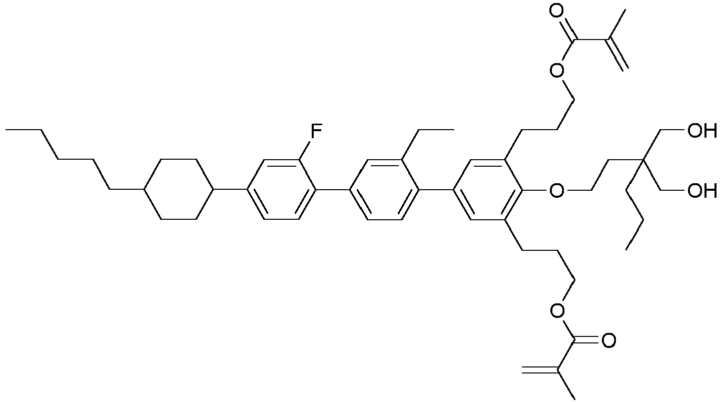 | SA-26 |
| 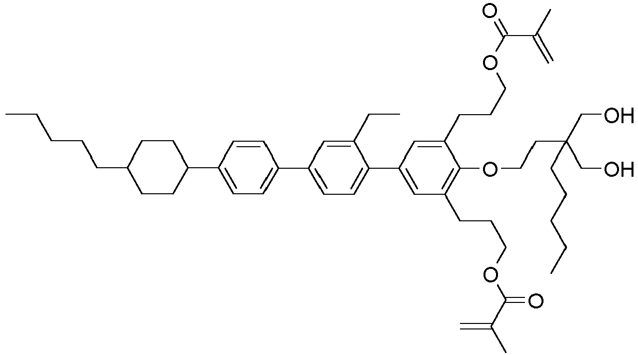 | SA-27 |
| 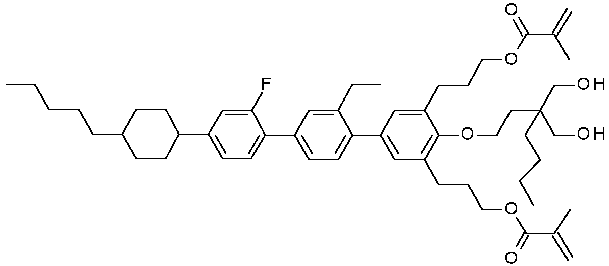 | SA-28 |
| 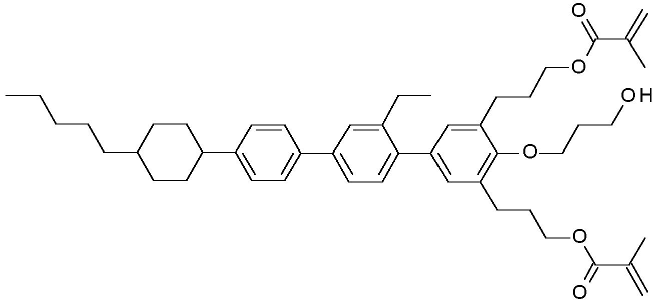 | SA-29 |
| 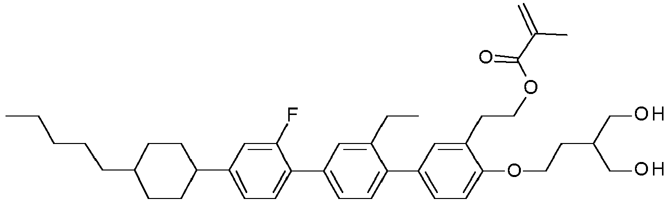 | SA-30 |
| 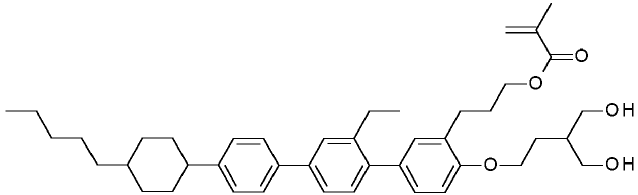 | SA-31 |
| 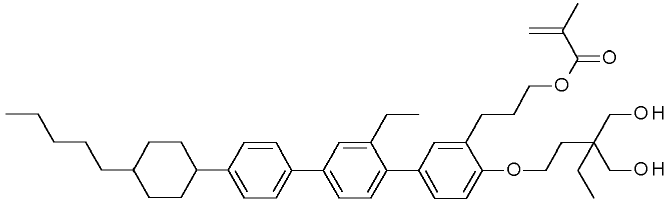 | SA-32 |
| 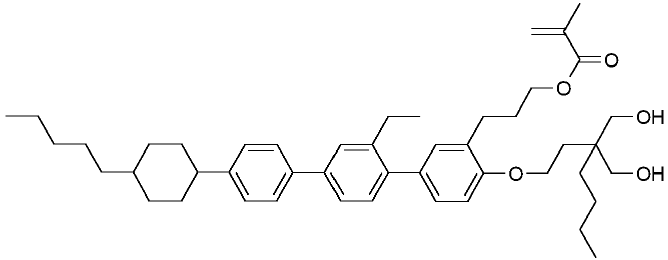 | SA-33 |
| 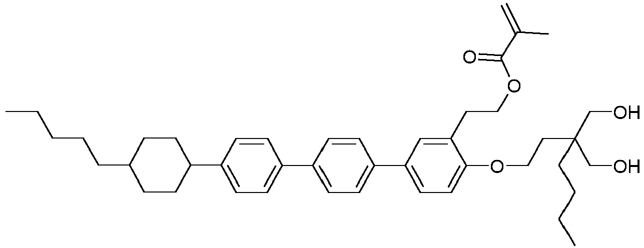 | SA-34 |
| 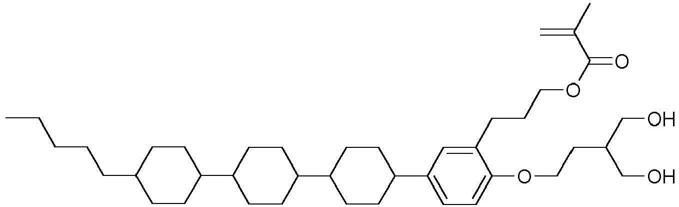 | SA-35 |
| 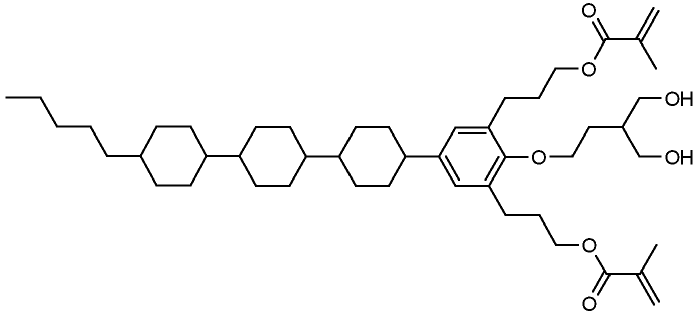 | SA-36 |
| 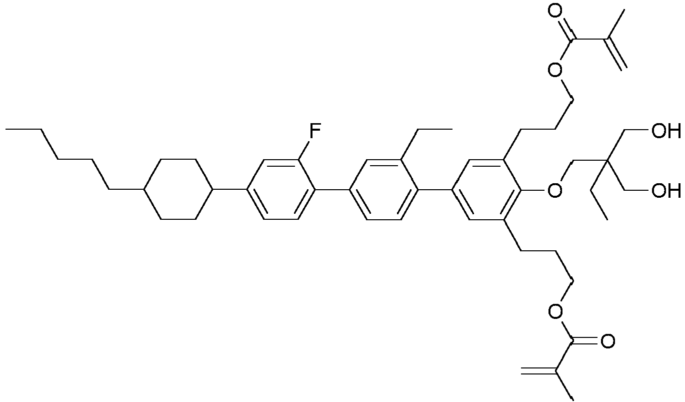 | SA-37 |
| 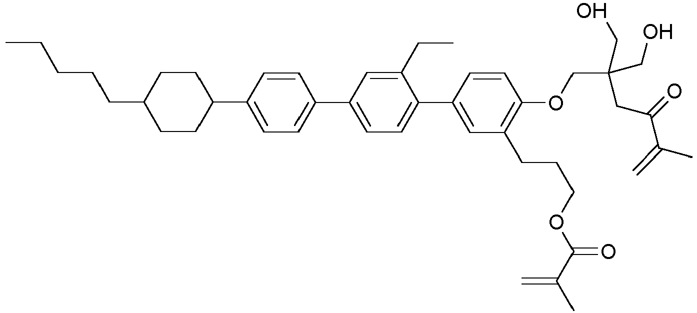 | SA-38 |

In a preferred embodiment, the LC media, SA-VA displays according to the present invention comprise one or more SA additives selected from formulae SA-1 to SA-38, preferably from formulae SA-14 to SA-36, very preferably from formulae SA-20 to SA-28, most preferably of formula SA-20 or SA-22, in combination with one or more RMs of formula I and one or more of formula II. Very preferred is a combination of polymerizable compound RM-2 of Synthesis Example 1 below and of polymerizable compound RM-3, with an SA additive of formula SA-20 to SA-28, very preferably of formula SA-20 or SA-22.

### Examples

The following examples explain the present invention without restricting it. However, they show the person skilled in the art preferred mixture concepts with compounds preferably to be employed and the respective concentrations thereof and combinations thereof with one another. In addition, the examples illustrate which properties and property combinations are accessible.

In addition, the following abbreviations and symbols are used:

| | |
|---|---|
| V₀ | threshold voltage, capacitive [V] at 20°C, |
| nₑ | extraordinary refractive index at 20°C and 589 nm, |
| nₒ | ordinary refractive index at 20°C and 589 nm, |
| Δn | optical anisotropy at 20°C and 589 nm, |
| ε_{┴} | dielectric permittivity perpendicular to the director at 20°C and 1 kHz, |
| ε_{∥} | dielectric permittivity parallel to the director at 20°C and 1 kHz, |
| Δε | dielectric anisotropy at 20°C and 1 kHz, |
| cl.p., T(N,I) | clearing point [°C], |
| γ₁ | rotational viscosity at 20°C [mPa·s], |
| K₁ | elastic constant, "splay" deformation at 20°C [pN], |
| K₂ | elastic constant, "twist" deformation at 20°C [pN], |
| K₃ | elastic constant, "bend" deformation at 20°C [pN]. |

Unless explicitly noted otherwise, all concentrations in the present application are quoted in per cent by weight and relate to the corresponding mixture as a whole, comprising all solid or liquid-crystalline components, without solvents.

Unless explicitly noted otherwise, all temperature values indicated in the present application, such as, for example, for the melting point T(C,N), the transition from the smectic (S) to the nematic (N) phase T(S,N) and the clearing point T(N,I), are quoted in degrees Celsius (°C). M.p. denotes melting point, cl.p. = clearing point. Furthermore, C = crystalline state, N = nematic phase, S = smectic phase and I = isotropic phase. The data between these symbols represent the transition temperatures.

All physical properties are and have been determined in accordance with "Merck Liquid Crystals, Physical Properties of Liquid Crystals", Status Nov. 1997, Merck KGaA, Germany, and apply for a temperature of 20°C, and Δn is determined at 589 nm and Δε at 1 kHz, unless explicitly indicated otherwise in each case.

The term "threshold voltage" for the present invention relates to the capacitive threshold (V₀), also known as the Freedericks threshold, unless explicitly indicated otherwise. In the examples, the optical threshold may also, as generally usual, be quoted for 10% relative contrast (V₁₀).

Unless stated otherwise, the process of polymerising the polymerizable compounds in the PSA displays as described above and below is carried out at a temperature where the LC medium exhibits a liquid crystal phase, preferably a nematic phase, and most preferably is carried out at room temperature.

Unless stated otherwise, methods of preparing test cells and measuring their electrooptical and other properties are carried out by the methods as described hereinafter or in analogy thereto.

The display used for measurement of the capacitive threshold voltage consists of two plane-parallel glass outer plates at a separation of 25 µm, each of which has on the inside an electrode layer and an unrubbed polyimide alignment layer on top, which effect a homeotropic edge alignment of the liquid crystal molecules.

The PSVA display or PSVA or test cell used for measurement of the tilt angles consists of two plane-parallel glass outer plates at a separation of 4 µm, each of which has on the inside an electrode layer and a polyimide alignment layer on top, where the two polyimide layers are rubbed antiparallel to one another and effect a homeotropic edge alignment of the liquid crystal molecules.

The polymerizable compounds are polymerised in the display or test cell by irradiation with UV light of defined intensity for a prespecified time, with a voltage simultaneously being applied to the display (usually 10 V to 30 V alternating current, 1 kHz). In the examples, unless indicated otherwise, a metal halide lamp and an intensity of 100 mW/cm² is used for polymerization.

The intensity is measured using a standard meter (Hoenle UV-meter high end with UV sensor).

The tilt angle is determined using the Mueller Matrix Polarimeter "AxoScan" from Axometrics. A low value (i.e. a large deviation from the 90° angle) corresponds to a large tilt here.

Unless stated otherwise, the term "tilt angle" means the angle between the LC director and the substrate, and "LC director" means in a layer of LC molecules with uniform orientation the preferred orientation direction of the optical main axis of the LC molecules, which corresponds, in case of calamitic, uniaxially positive birefringent LC molecules, to their molecular long axis.

Polymerizable additives for use in the polymerizable media:

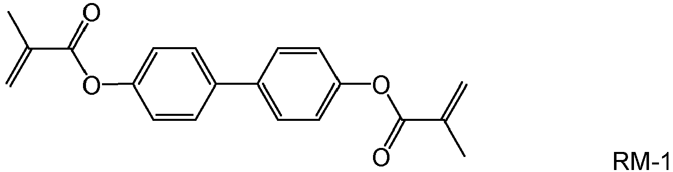

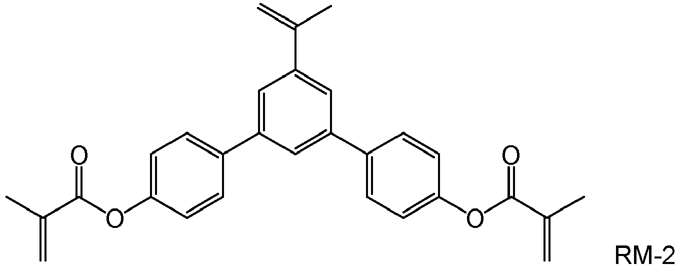

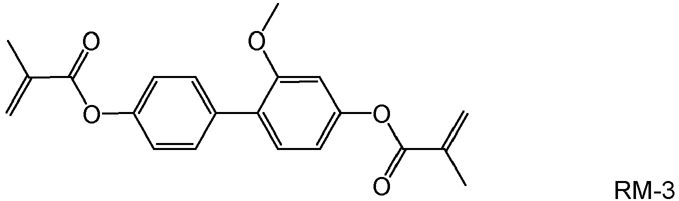

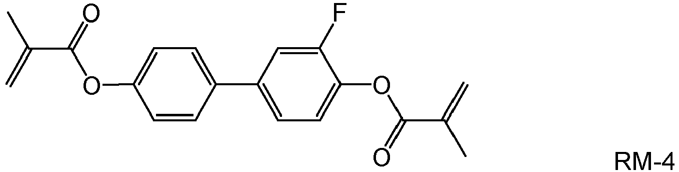

RM-2 is prepared as follows.

### Synthesis example 1

### 1.1 Synthesis of 4-[4-(3-hydroxyphenyl)-5-(2-propenyl)-phenyl]phenole 1

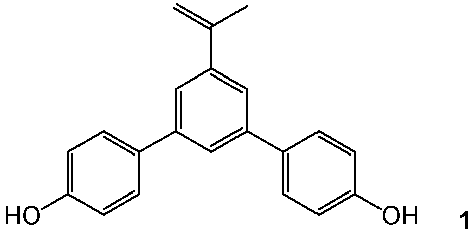

74.3 g (537.5 mmol) K₂CO₃ are dissolved in 220 ml water and to the solution is added 38.9 g (282 mmol) 4-hydroxybenzene boronic-acid and 37.1 g (134 mmol) of 1,3-dibromo-5-(2-propenyl)benzene (CAS 874504-14-0) dissolved in 350 ml THF. The mixture is degassed three times with argon and 203 mg (5.375 mmol) CataCXium A and 246 mg (2.69 mmol) of tris(dibenzylideneacetone)-dipalladium(0) is added. The reaction mixture is refluxed for 1 h, cooled to room temperature and is diluted with water and MTBE. The mixture is filtered and the layers are separated. The water layer is extracted with

MTBE and the combined organic layers are washed with ammonium chloride solution, with brine, dried over Na₂SO₄ and evaporated under vacuum to give the product. The crude product is filtered with acetic acid ethyl ester (EE) and heptane (from 3:1 to 1:1) over silica gel and the product containing fractions are combined and evaporated under vacuum to yield the product as a slightly yellow solid.

### 1.2 Synthesis of [4-[4-[3-(2-methylprop-2-enoyloxy)phenyl]-5-(2-propenyl)-phenyl]phenyl] 2-methylprop-2-enoate 2

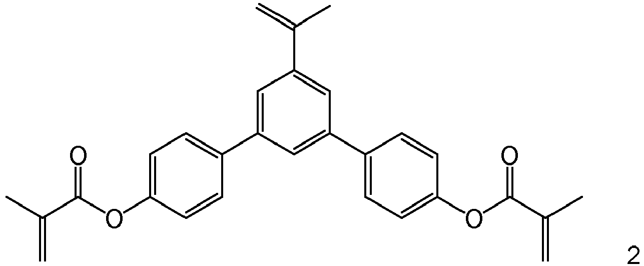

32.6 g (113.1 mmol) of diol **1** is dissolved in 720 ml dichloro-methane. 29.9 g (248.2 mmol) methacrylic acid and 2.76 g (122,1 mmol) 4-(dimethylamino)-pyridine is added and the mixture is cooled to 5°C. It is then added dropwise with 53.0 g (341 mmol) 1-(3-dimethylaminopropy)-3-ethylcarbodiimide at max. 10°C and the mixture is then stirred for 16 h at room temperature. The mixture is evaporated under vacuum, dissolved in 2 l dichloromethane and filtered over silica gel. The product containing fractions are combined and evaporated under vacuum to give the product as a non-crystalline solid **2** (decomp. >125 °C).

The following compounds are synthesized analogously to Synthesis Example 1 and in accordance with literature procedures:

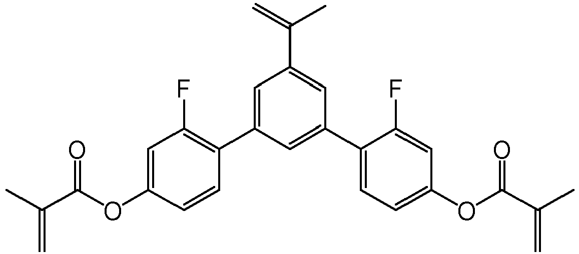

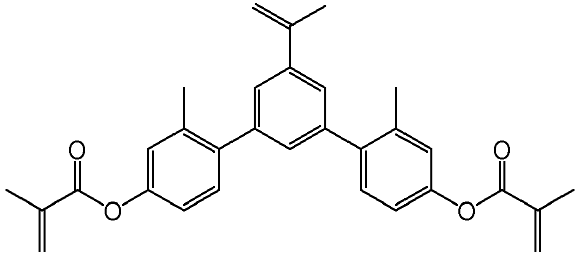

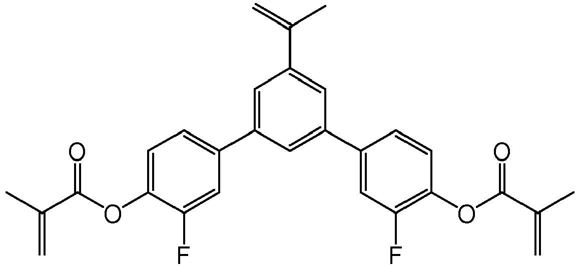

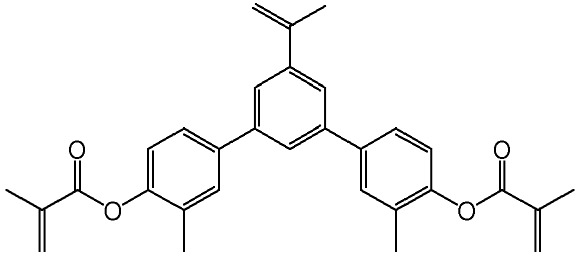

### Mixture Examples

### Polymerisable Mixtures

The polymerizable mixtures according to the present invention are prepared by adding the polymerizable compounds and the polymerizable self-alignment additive to a nematic LC host mixture. Further additives, e.g. stabilisers, are optionally added or are already comprised as additives within the mixture components.

The nematic LC host mixtures are formulated as follows. Unless indicated otherwise, the dielectric anisotropy Δε is negative, and percentages are % by weight:
Host mixture N1 is formulated as follows:

| | | | |
|---|---|---|---|
| BCH-32 | 6.5 % | cl.p. | 74.7 °C |
| CC-3-V1 | 8.0 % | Δn | 0.1039 |
| CCH-23 | 17.0 % | Δε | -3.0 |
| CCH-34 | 6.5 % | ε_{∥} | 3.4 |
| CCY-3-O1 | 3.5 % | K₃/K₁ | 1.07 |
| CCY-3-O2 | 12.5 % | γ₁ | 106 mPa s |
| CPY-2-O2 | 5.5% | V₀ | 2.43 V |
| CPY-3-O2 | 10.0 % | | |
| CY-3-O2 | 15.5 % | | |
| PCH-3O1 | 4.5 % | | |
| PP-1-2V1 | 5.0 % | | |
| PY-3-O2 | 5.5 % | | |
| ∑ | 100.0 % | | |

Host mixture N2

| | | | |
|---|---|---|---|
| BCH-32 | 2.0 % | cl.p. | 74.7 °C |
| CC-3-V | 22.5 % | Δn | 0.1039 |
| CC-3-V1 | 9.5 % | Δε | -3.0 |
| CCP-3-1 | 3.0 % | ε_{∥} | 3.5 |
| CCY-3-O2 | 3.5 % | K₃/K₁ | 1.17 |
| CCY-4-O2 | 4.0 % | γ₁ | 99 mPa s |
| CPY-2-O2 | 12.0 % | V₀ | 2.39 |
| CPY-3-O2 | 12.5 % | | |
| CY-3-O2 | 15.5 % | | |
| CY-3-O4 | 4.0 % | | |
| PCH-3O1 | 7.0 % | | |
| PP-1-2V1 | 1.5 % | | |
| PYP-2-3 | 3.0 % | | |
| ∑ | 100.0 % | | |

Host mixture N3

| | | | | |
|---|---|---|---|---|
| CC-3-V1 | 9.0 | % | cl.p. [°C]: | 74.6 |
| CCH-301 | 3.5 | % | Δn [589 nm, 20°C]: | 0.0984 |
| CCH-34 | 8.0 | % | nₑ [589 nm, 20°C]: | 1.5804 |
| CCH-35 | 8.0 | % | nₒ [589 nm, 20°C]: | 1.4820 |
| CCP-3-1 | 6.0 | % | Δε [1 kHz, 20°C]: | -3.6 |
| CCY-3-O1 | 6.5 | % | ε_{∥} [1 kHz, 20°C]: | 3.6 |
| CCY-3-O2 | 12.5 | % | ε_{┴} [1 kHz, 20°C]: | 7.1 |
| CPY-3-O2 | 10.0 | % | K₁ [pN, 20°C]: | 14.1 |
| CY-3-O2 | 15.5 | % | K₃ [pN, 20°C]: | 17.0 |
| PCH-3O1 | 8.5 | % | K₃/K₁ [pN, 20°C]: | 1.21 |
| PY-3-O2 | 12.5 | % | V₀ [V, 20°C]: | 2.31 |
| ∑ | 100.0 | % | | |

Host mixture N4

| | | | | |
|---|---|---|---|---|
| BCH-32 | 10.0 | % | cl.p. [°C]: | 74.6 |
| CC-3-V1 | 6.5 | % | Δn [589 nm, 20°C]: | 0.1113 |
| CCH-34 | 8.0 | % | nₑ [589 nm, 20°C]: | 1.5981 |
| CCH-35 | 8.0 | % | nₒ [589 nm, 20°C]: | 1.4868 |
| CCY-3-O2 | 12.0 | % | Δε [1 kHz, 20°C]: | -3.3 |
| CPY-2-O2 | 6.5 | % | ε_{∥} [1 kHz, 20°C]: | 3.5 |
| CPY-3-O2 | 11.0 | % | ε_{┴} [1 kHz, 20°C]: | 6.8 |
| CY-3-O2 | 15.0 | % | K₁ [pN, 20°C]: | 14.5 |
| CY-5-O2 | 13.0 | % | K₃ [pN, 20°C]: | 15.3 |
| PP-1-4 | 10.0 | % | K₃/K₁ [pN, 20°C]: | 1.06 |
| ∑ | 100.0 | % | V₀ [V, 20°C]: | 2.28 |

Host mixture N5

| | | | | |
|---|---|---|---|---|
| BCH-32 | 7.5 | % | cl.p. [°C]: | 75.5 |
| CC-3-V1 | 6.5 | % | Δn [589 nm, 20°C]: | 0.1105 |
| CCH-34 | 8.0 | % | nₑ [589 nm, 20°C]: | 1.5970 |
| CCH-35 | 8.0 | % | nₒ [589 nm, 20°C]: | 1.4865 |
| CCY-3-O2 | 12.0 | % | Δε [1 kHz, 20°C]: | -3.3 |
| CPY-2-O2 | 9.5 | % | ε_{∥} [1 kHz, 20°C]: | 3.5 |
| CPY-3-O2 | 11.0 | % | ε_{┴} [1 kHz, 20°C]: | 6.8 |
| CY-3-O2 | 12.0 | % | K₁ [pN, 20°C]: | 14.2 |
| CY-5-O2 | 13.0 | % | K₃ [pN, 20°C]: | 15.4 |
| PP-1-4 | 8.5 | % | K₃/K₁ [pN, 20°C]: | 1.08 |
| PCH-3O1 | 4.0 | % | V₀ [V, 20°C]: | 2.28 |
| ∑ | 100.0 | % | | |

| Host mixture N6 | | | | |
|---|---|---|---|---|
| B(S)-2O-O4 | 4.0 | % | cl.p. [°C]: | |
| B(S)-2O-O5 | 5.0 | % | Δn [589 nm, 20°C] | |
| BCH-32 | 7.0 | % | nₑ [589 nm, 20°C]: | |
| CC-3-V1 | 8.0 | % | nₒ [589 nm, 20°C]: | |
| CC-4-V1 | 11.0 | % | Δε [1 kHz, 20°C]: | |
| CCH-34 | 8.0 | % | ε_{∥} [1 kHz, 20°C]: | |
| CCH-35 | 6.0 | % | ε_{┴} [1 kHz, 20°C]: | |
| CCY-3-O2 | 11.0 | % | K₁ [pN, 20°C]: | |
| CPY-2-O2 | 3.0 | % | K₃ [pN, 20°C]: | |
| CPY-3-O2 | 5.0 | % | K₃/K₁ [pN, 20°C]: | |
| CY-3-O2 | 15.0 | % | V₀ [V, 20°C]: | |
| PCH-3O2 | 5.0 | % | | |
| PY-1-O2 | 4.0 | % | | |
| PY-2-O2 | 7.0 | % | | |
| PPGU-3-F | 1.0 | % | | |
| ∑ | 100.0 | % | | |

Host mixture N7

| | | | | |
|---|---|---|---|---|
| CC-3-V1 | 8.5 | % | cl.p. [°C]: | 75.1 |
| CC-4-V1 | 19.0 | % | Δn [589 nm, 20°C]: | 0.1123 |
| CCY-3-O1 | 6.0 | % | nₑ [589 nm, 20°C]: | 1.5969 |
| CCY-3-O2 | 11.0 | % | nₒ [589 nm, 20°C]: | 1.4846 |
| CLY-3-O2 | 5.0 | % | Δε [1 kHz, 20°C]: | -3.9 |
| CPY-3-O2 | 11.0 | % | ε_{∥} [1 kHz, 20°C]: | 3.7 |
| CY-3-O2 | 6.0 | % | ε_{┴} [1 kHz, 20°C]: | 7.5 |
| PCH-3O2 | 13.5 | % | K₁ [pN, 20°C]: | 15.2 |
| PY-1-O2 | 6.0 | % | K₃ [pN, 20°C]: | 18.3 |
| PY-2-O2 | 6.0 | % | K₃/K₁ [pN, 20°C]: | 1.20 |
| PY-3-O2 | 8.0 | % | V₀ [V, 20°C]: | 2.29 |
| ∑ | 100.0 | % | | |

Host mixture N8

| | | | | |
|---|---|---|---|---|
| CC-3-V1 | 9.0 | % | cl.p. [°C]: | 75.4 |
| CCH-23 | 14.0 | % | Δn [589 nm, 20°C]: | 0.1055 |
| CCH-34 | 6.0 | % | nₑ [589 nm, 20°C]: | 1.5907 |
| CCH-35 | 6.0 | % | nₒ [589 nm, 20°C]: | 1.4852 |
| CCP-3-1 | 7.0 | % | Δε [1 kHz, 20°C]: | -2.8 |
| CCY-3-O1 | 5.0 | % | ε_{∥} [1 kHz, 20°C]: | 3.3 |
| CCY-3-O2 | 10.0 | % | ε_{┴} [1 kHz, 20°C]: | 6.1 |
| CPY-3-O2 | 12.0 | % | K₁ [pN, 20°C]: | 16.2 |
| CY-3-O2 | 9.5 | % | K₃ [pN, 20°C]: | 17.3 |
| PP-1-2V1 | 8.5 | % | K₃/K₁ [pN, 20°C]: | 1.07 |
| PY-3-O2 | 12.0 | % | V₀ [V, 20°C]: | 2.67 |
| PY-4-O2 | 1.0 | % | | |
| ∑ | 100.0 | % | | |

Host mixture N9

| | | | | |
|---|---|---|---|---|
| CC-3-V1 | 9.0 | % | cl.p. [°C]: | 74.7 |
| CCH-23 | 18.0 | % | Δn [589 nm, 20°C]: | 0.0982 |
| CCH-34 | 3.0 | % | nₑ [589 nm, 20°C]: | 1.5800 |
| CCH-35 | 7.0 | % | nₒ [589 nm, 20°C]: | 1.4818 |
| CCP-3-1 | 5.5 | % | Δε [1 kHz, 20°C]: | -3.4 |
| CCY-3-O2 | 11.5 | % | ε_{∥} [1 kHz, 20°C]: | 3.5 |
| CPY-2-O2 | 8.0 | % | ε_{┴} [1 kHz, 20°C]: | 6.9 |
| CPY-3-O2 | 11.0 | % | K₁ [pN, 20°C]: | 14.9 |
| CY-3-O2 | 15.5 | % | K₃ [pN, 20°C]: | 15.9 |
| PY-3-O2 | 11.5 | % | K₃/K₁ [pN, 20°C]: | 1.07 |
| ∑ | 100.0 | % | V₀ [V, 20°C]: | 2.28 |

Host mixture N10

| | | | | |
|---|---|---|---|---|
| BCH-32 | 6.5 | % | cl.p. [°C]: | 74.7 |
| CC-3-V1 | 8.0 | % | Δn [589 nm, 20°C]: | 0.1039 |
| CCH-23 | 17.0 | % | nₑ [589 nm, 20°C]: | 1.5900 |
| CCH-34 | 6.5 | % | nₒ [589 nm, 20°C]: | 1.4861 |
| CCY-3-O1 | 3.5 | % | Δε [1 kHz, 20°C]: | -3.0 |
| CCY-3-O2 | 12.5 | % | ε_{∥} [1 kHz, 20°C]: | 3.4 |
| CPY-2-O2 | 5.5 | % | ε_{┴} [1 kHz, 20°C]: | 6.3 |
| CPY-3-O2 | 10.0 | % | K₁ [pN, 20°C]: | 14.8 |
| CY-3-O2 | 15.5 | % | K₃ [pN, 20°C]: | 15.8 |
| PCH-3O1 | 4.5 | % | K₃/K₁ [pN, 20°C]: | 1.07 |
| PP-1-2V1 | 5.0 | % | V₀ [V, 20°C]: | 2.43 |
| PY-3-O2 | 5.5 | % | | |
| ∑ | 100.0 | % | | |

Host mixture N11

| | | | | |
|---|---|---|---|---|
| CC-3-V1 | 8.0 | % | cl.p. [°C]: | 74.6 |
| CCH-23 | 15.0 | % | Δn [589 nm, 20°C]: | 0.0899 |
| CCH-34 | 5.0 | % | nₑ [589 nm, 20°C]: | 1.5694 |
| CCH-35 | 6.0 | % | nₒ [589 nm, 20°C]: | 1.4795 |
| CCP-3-1 | 3.0 | % | Δε [1 kHz, 20°C]: | -3.3 |
| CCY-3-O1 | 8.0 | % | ε_{∥} [1 kHz, 20°C]: | 3.5 |
| CCY-3-O2 | 10.0 | % | ε_{┴} [1 kHz, 20°C]: | 6.8 |
| CCY-3-O3 | 6.0 | % | K₁ [pN, 20°C]: | 13.9 |
| CCY-4-O2 | 6.0 | % | K₃ [pN, 20°C]: | 14.6 |
| CY-3-O2 | 12.0 | % | K₃/K₁ [pN, 20°C]: | 1.05 |
| CY-3-O4 | 3.75 | % | V₀ [V, 20°C]: | 2.22 |
| PCH-3O1 | 3.0 | | | % |
| PY-3-O2 | 2.75 | | | % |
| PY-4-O2 | 6.5 | | | % |
| PYP-2-3 | 5.0 | | | % |
| ∑ | 100.0 | | | % |

Host mixture N12

| | | | | |
|---|---|---|---|---|
| B(S)-2O-O4 | 0.25 | % | cl.p. [°C]: | 74.6 |
| BCH-32 | 4.5 | % | Δn [589 nm, 20°C]: | 0.1034 |
| CC-3-V1 | 13.0 | % | nₑ [589 nm, 20°C]: | 1.5883 |
| CCH-23 | 15.0 | % | nₒ [589 nm, 20°C]: | 1.4849 |
| CCH-301 | 1.0 | % | Δε [1 kHz, 20°C]: | -2.9 |
| CCH-34 | 2.0 | % | ε_{∥} [1 kHz, 20°C]: | 3.4 |
| CCH-35 | 0.5 | % | ε_{┴} [1 kHz, 20°C]: | 6.3 |
| CCY-3-O2 | 6.5 | % | K₁ [pN, 20°C]: | 13.0 |
| CPY-2-O2 | 12.0 | % | K₃ [pN, 20°C]: | 15.3 |
| CPY-3-O2 | 15.0 | % | K₃/K₁ [pN, 20°C]: | 1.18 |
| CY-3-O2 | 15.5 | % | V₀ [V, 20°C]: | 2.44 |
| CY-3-O4 | 0.25 | % | | |
| PCH-3O1 | 13.0 | % | | |
| PP-1-2V1 | 0.5 | % | | |
| PYP-2-3 | 1.0 | % | | |
| ∑ | 100.0 | % | | |

Host mixture N13

| | | | | |
|---|---|---|---|---|
| CCH-301 | 6.0 | % | cl.p. [°C]: | 109.9 |
| CCH-303 | 10.0 | % | Δn [589 nm, 20°C]: | 0.0976 |
| CCH-501 | 4.0 | % | nₑ [589 nm, 20°C]: | 1.5806 |
| CCP-3-1 | 7.0 | % | nₒ [589 nm, 20°C]: | 1.4830 |
| CCPC-33 | 3.0 | % | Δε [1 kHz, 20°C]: | -3.6 |
| CCPC-34 | 3.0 | % | ε_{∥} [1 kHz, 20°C]: | 3.4 |
| CCY-3-O1 | 5.5 | % | ε_{┴} [1 kHz, 20°C]: | 7.0 |
| CCY-3-O2 | 9.5 | % | K₁ [pN, 20°C]: | 16.9 |
| CCY-3-O3 | 7.0 | % | K₃ [pN, 20°C]: | 19.6 |
| CCY-4-O2 | 8.5 | % | K₃/K₁ [pN, 20°C]: | 1.16 |
| CPY-2-O2 | 3.0 | % | V₀ [V, 20°C]: | 2.47 |
| CPY-3-O2 | 12.5 | % | | |
| CY-3-O4 | 9.5 | % | | |
| PCH-3O1 | 11.5 | % | | |
| ∑ | 100.0 | % | | |

Host mixture N14

| | | | | |
|---|---|---|---|---|
| BCH-32 | 8.0 | % | cl.p. [°C]: | 74.6 |
| CC-3-V1 | 13.0 | % | Δn [589 nm, 20°C]: | 0.1042 |
| CC-4-V1 | 2.5 | % | nₑ [589 nm, 20°C]: | 1.5897 |
| CCH-301 | 10.0 | % | nₒ [589 nm, 20°C]: | 1.4855 |
| CCH-34 | 5.0 | % | Δε [1 kHz, 20°C]: | -3.1 |
| CCH-35 | 5.0 | % | ε_{∥} [1 kHz, 20°C]: | 3.5 |
| CLY-3-O2 | 12.5 | % | ε_{┴} [1 kHz, 20°C]: | 6.6 |
| CPY-2-O2 | 11.5 | % | K₁ [pN, 20°C]: | 13.7 |
| CPY-3-O2 | 4.0 | % | K₃ [pN, 20°C]: | 15.4 |
| CY-3-O2 | 15.0 | % | K₃/K₁ [pN, 20°C]: | 1.12 |
| PCH-3O1 | 6.5 | % | V₀ [V, 20°C]: | 2.37 |
| PY-1-O2 | 7.0 | % | | |
| ∑ | 100.0 | % | | |

Host mixture N15

| | | | | |
|---|---|---|---|---|
| B(S)-2O-O5 | 0.25 | % | cl.p. [°C]: | 74.5 |
| BCH-32 | 5.5 | % | Δn [589 nm, 20°C]: | 0.1028 |
| CC-3-V | 10.0 | % | nₑ [589 nm, 20°C]: | 1.5880 |
| CC-3-V1 | 7.5 | % | nₒ [589 nm, 20°C]: | 1.4852 |
| CC-4-V1 | 16.5 | % | Δε [1 kHz, 20°C]: | -3.1 |
| CCH-35 | 0.25 | % | ε_{∥} [1 kHz, 20°C]: | 3.6 |
| CCP-3-1 | 7.5 | % | ε_{┴} [1 kHz, 20°C]: | 6.7 |
| CCY-3-O2 | 11.0 | % | K₁ [pN, 20°C]: | 13.8 |
| CCY-3-O3 | 1.0 | % | K₃ [pN, 20°C]: | 15.5 |
| CCY-4-O2 | 7.0 | % | K₃/K₁ [pN, 20°C]: | 1.12 |
| CCY-5-O2 | 2.0 | % | V₀ [V, 20°C]: | 2.37 |
| CY-3-O2 | 9.0 | % | | |
| PY-1-O2 | 9.0 | % | | |
| PY-2-O2 | 9.0 | % | | |
| PY-3-O2 | 4.5 | % | | |
| ∑ | 100.0 | % | | |

Host mixture N16

| | | | | |
|---|---|---|---|---|
| BCH-32 | 4.5 | % | cl.p. [°C]: | 74.8 |
| CC-3-V | 15.0 | % | Δn [589 nm, 20°C]: | 0.1030 |
| CC-3-V1 | 7.5 | % | nₑ [589 nm, 20°C]: | 1.5889 |
| CC-4-V1 | 12.5 | % | nₒ [589 nm, 20°C]: | 1.4859 |
| CCP-3-1 | 7.0 | % | Δε [1 kHz, 20°C]: | -3.1 |
| CCY-3-O1 | 7.0 | % | ε_{∥} [1 kHz, 20°C]: | 3.6 |
| CCY-3-O2 | 10.5 | % | ε_{┴} [1 kHz, 20°C]: | 6.8 |
| CCY-4-O2 | 6.5 | % | K₁ [pN, 20°C]: | 13.8 |
| CY-3-O2 | 4.5 | % | K₃ [pN, 20°C]: | 15.4 |
| PY-1-O2 | 9.5 | % | K₃/K₁ [pN, 20°C]: | 1.12 |
| PY-2-O2 | 9.0 | % | V₀ [V, 20°C]: | 2.35 |
| PY-3-O2 | 6.5 | % | | |
| ∑ | 100.0 | % | | |

Host mixture N17

| | | | | |
|---|---|---|---|---|
| CC-3-V | 10.5 | % | cl.p. [°C]: | 74.5 |
| CC-3-V1 | 5.5 | % | Δn [589 nm, 20°C]: | 0.1033 |
| CC-4-V1 | 20.0 | % | nₑ [589 nm, 20°C]: | 1.5875 |
| CCH-34 | 2.0 | % | nₒ [589 nm, 20°C]: | 1.4842 |
| CCH-35 | 1.5 | % | Δε [1 kHz, 20°C]: | -3.3 |
| CCY-3-1 | 2.0 | % | ε_{∥} [1 kHz, 20°C]: | 3.6 |
| CCY-3-O1 | 7.5 | % | ε_{┴} [1 kHz, 20°C]: | 6.9 |
| CCY-3-O2 | 11.0 | % | K₁ [pN, 20°C]: | 14.4 |
| CCY-4-O2 | 8.5 | % | K₃ [pN, 20°C]: | 15.1 |
| CLY-2-O4 | 1.0 | % | K₃/K₁ [pN, 20°C]: | 1.05 |
| CLY-3-O2 | 2.0 | % | V₀ [V, 20°C]: | 2.29 |
| PP-1-2V1 | 3.5 | % | | |
| PY-1-O2 | 9.5 | % | | |
| PY-2-O2 | 9.5 | % | | |
| PY-3-O2 | 6.0 | % | | |
| ∑ | 100.0 | % | | |

Host mixture N18

| | | | | |
|---|---|---|---|---|
| CC-3-V1 | 7.5 | % | cl.p. [°C]: | 74.5 |
| CC-4-V1 | 20.0 | % | Δn [589 nm, 20°C]: | 0.1030 |
| CCH-34 | 5.0 | % | nₑ [589 nm, 20°C]: | 1.5861 |
| CCH-35 | 7.5 | % | nₒ [589 nm, 20°C]: | 1.4831 |
| CCP-3-1 | 2.0 | % | Δε [1 kHz, 20°C]: | -3.5 |
| CCY-3-O1 | 8.0 | % | ε_{∥} [1 kHz, 20°C]: | 3.6 |
| CCY-3-O2 | 12.0 | % | ε_{┴} [1 kHz, 20°C]: | 7.1 |
| CCY-4-O2 | 3.0 | % | K₁ [pN, 20°C]: | 15.1 |
| CLY-3-O2 | 4.0 | % | K₃ [pN, 20°C]: | 15.4 |
| CY-3-O2 | 1.5 | % | K₃/K₁ [pN, 20°C]: | 1.02 |
| PY-1-O2 | 9.5 | % | V₀ [V, 20°C]: | 2.23 |
| PY-2-O2 | 9.5 | % | | |
| PY-3-O2 | 10.5 | % | | |
| ∑ | 100.0 | % | | |

Host mixture N19

| | | | | |
|---|---|---|---|---|
| CC-3-V1 | 7.5 | % | cl.p. [°C]: | 75 |
| CC-4-V1 | 19.5 | % | Δn [589 nm, 20°C]: | 0.1041 |
| CCH-301 | 5.5 | % | nₑ [589 nm, 20°C]: | 1.5884 |
| CCH-34 | 5.0 | % | nₒ [589 nm, 20°C]: | 1.4843 |
| CCP-3-1 | 11.0 | % | Δε [1 kHz, 20°C]: | -3.1 |
| CLY-3-O2 | 5.0 | % | ε_{∥} [1 kHz, 20°C]: | 3.6 |
| CPY-2-O2 | 6.0 | % | ε_{┴} [1 kHz, 20°C]: | 6.7 |
| CPY-3-O2 | 11.5 | % | K₁ [pN, 20°C]: | 14.0 |
| CY-3-O2 | 15.0 | % | K₃ [pN, 20°C]: | 15.7 |
| PY-1-O2 | 6.5 | % | K₃/K₁ [pN, 20°C]: | 1.12 |
| PY-2-O2 | 7.5 | % | V₀ [V, 20°C]: | 2.37 |
| ∑ | 100.0 | % | | |

Host mixture N20

| | | | | |
|---|---|---|---|---|
| CC-3-V1 | 2.5 | % | cl.p. [°C]: | 105.9 |
| CC-4-V1 | 10.0 | % | Δn [589 nm, 20°C]: | |
| CCH-301 | 3.0 | % | nₑ [589 nm, 20°C]: | |
| CCH-34 | 4.0 | % | nₒ [589 nm, 20°C]: | |
| CCH-35 | 4.0 | % | Δε [1 kHz, 20°C]: | -3.6 |
| CCP-3-1 | 6.0 | % | ε_{∥} [1 kHz, 20°C]: | 3.4 |
| CCP-3-3 | 6.0 | % | ε_{┴} [1 kHz, 20°C]: | 7.0 |
| CCY-3-O1 | | 4.0 | % | K₁ [pN, 20°C]: |
| CCY-3-O2 | | 4.0 | % | K₃ [pN, 20°C]: |
| CCY-3-O3 | | 4.0 | % | K₃/K₁ [pN, 20°C] |
| CCY-4-O2 | | 4.0 | % | V₀ [V, 20°C]: |
| CCY-5-O2 | | 4.0 | % | |
| CPY-2-O2 | | 10.0 | % | |
| CPY-3-O2 | | 10.0 | % | |
| CY-3-O2 | | 6.5 | % | |
| CY-3-O4 | | 10.0 | % | |
| PYP-2-3 | | 5.0 | % | |
| PYP-2-4 | | 3.0 | % | |
| ∑ | | 100.0 | % | |

Host mixture N21

| | | | | |
|---|---|---|---|---|
| BCH-52 | 9.0 | % | cl.p. [°C]: | 105 |
| CC-3-V1 | 2.0 | % | Δn [589 nm, 20°C]: | |
| CC-4-V1 | 12.5 | % | nₑ [589 nm, 20°C]: | |
| CCH-301 | 2.0 | % | nₒ [589 nm, 20°C]: | |
| CCH-34 | 3.5 | % | Δε [1 kHz, 20°C]: | -3.6 |
| CCH-35 | 4.0 | % | ε_{∥} [1 kHz, 20°C]: | 3.4 |
| CCP-3-1 | 7.5 | % | ε_{┴} [1 kHz, 20°C]: | 7.0 |
| CCY-3-O1 | 4.0 | % | K₁ [pN, 20°C]: | |
| CCY-3-O2 | 4.0 | % | K₃ [pN, 20°C]: | |
| CCY-3-O3 | 4.0 | % | K₃/K₁ [pN, 20°C]: | |
| CCY-4-O2 | 4.0 | % | V₀ [V, 20°C]: | |
| CCY-5-O2 | 4.0 | % | | |
| CPY-2-O2 | 10.0 | % | | |
| CPY-3-O2 | 10.0 | % | | |
| CY-3-O4 | 12.5 | % | | |
| PY-1-O2 | 7.0 | | | % |
| ∑ | 100.0 | | | % |

Host mixture N22

| | | | | |
|---|---|---|---|---|
| B(S)-2O-O5 | 0.25 | % | cl.p. [°C]: | 75.1 |
| BCH-32 | 1.5 | % | Δn [589 nm, 20°C]: | 0.1038 |
| CC-3-V1 | 8.0 | % | nₑ [589 nm, 20°C]: | 1.5864 |
| CC-4-V1 | 20.0 | % | nₒ [589 nm, 20°C]: | 1.4826 |
| CCH-303 | 1.5 | % | Δε [1 kHz, 20°C]: | -3.0 |
| CCH-34 | 6.0 | % | ε_{∥} [1 kHz, 20°C]: | 3.4 |
| CCH-35 | 8.0 | % | ε_{┴} [1 kHz, 20°C]: | 6.5 |
| CCY-3-O2 | 9.5 | % | K₁ [pN, 20°C]: | 15.6 |
| CPY-2-O2 | 6.0 | % | K₃ [pN, 20°C]: | 16.0 |
| CPY-3-O2 | 11.0 | % | K₃/K₁ [pN, 20°C]: | 1.03 |
| CY-3-O2 | 12.5 | % | V₀ [V, 20°C]: | 2.44 |
| PP-1-2V1 | 2.75 | % | | |
| PY-1-O2 | 5.5 | % | | |
| PY-2-O2 | 4.5 | % | | |
| PY-3-O2 | 3.0 | % | | |
| ∑ | 100.0 | % | | |

Host mixture N23

| | | | | |
|---|---|---|---|---|
| BCH-32 | 0.5 | % | cl.p. [°C]: | 74.8 |
| CC-3-V1 | 7.0 | % | Δn [589 nm, 20°C]: | 0.1036 |
| CC-4-V1 | 19.5 | % | nₑ [589 nm, 20°C]: | 1.5884 |
| CCH-301 | 12.0 | % | nₒ [589 nm, 20°C]: | 1.4848 |
| CCH-34 | 1.5 | % | Δε [1 kHz, 20°C]: | -3.1 |
| CCP-3-1 | 9.0 | % | ε_{∥} [1 kHz, 20°C]: | 3.6 |
| CCY-3-O1 | 1.5 | % | ε_{┴} [1 kHz, 20°C]: | 6.7 |
| CCY-3-O2 | 9.5 | % | K₁ [pN, 20°C]: | 13.8 |
| CPY-2-O2 | 3.0 | % | K₃ [pN, 20°C]: | 15.6 |
| CPY-3-O2 | 11.0 | % | K₃/K₁ [pN, 20°C]: | 1.13 |
| CY-3-O2 | 6.5 | % | V₀ [V, 20°C]: | 2.39 |
| PY-1-O2 | 9.0 | % | | |
| PY-2-O2 | 9.0 | % | | |
| PY-3-O2 | 1.0 | % | | |
| ∑ | 100.0 | % | | |

Host mixture N24

| | | | | |
|---|---|---|---|---|
| B-2O-O5 | 4.0 | % | cl.p. [°C]: | 74.2 |
| BCH-32 | 8.0 | % | Δn [589 nm, 20°C]: | 0.1091 |
| CC-3-V1 | 9.0 | % | nₑ [589 nm, 20°C]: | 1.5953 |
| CCH-301 | 2.0 | % | nₒ [589 nm, 20°C]: | 1.4862 |
| CCH-34 | 8.0 | % | Δε [1 kHz, 20°C]: | -3.1 |
| CCH-35 | 7.0 | % | ε_{∥} [1 kHz, 20°C]: | 3.6 |
| CCP-3-1 | 8.0 | % | ε_{┴} [1 kHz, 20°C]: | 6.7 |
| CCP-V2-1 | 5.0 | % | K₁ [pN, 20°C]: | 14.5 |
| CCY-3-O2 | 10.5 | % | K₃ [pN, 20°C]: | 16.5 |
| CLY-3-O2 | 1.0 | % | K₃/K₁ [pN, 20°C]: | 1.14 |
| CPY-3-O2 | 2.5 | % | V₀ [V, 20°C]: | 2.41 |
| CY-3-O2 | 11.5 | % | | |
| PCH-3O1 | 5.5 | % | | |
| PY-3-O2 | 18.0 | % | | |
| ∑ | 100.0 | % | | |

Host mixture N25

| | | | | |
|---|---|---|---|---|
| CC-3-V1 | 3.0 | % | cl.p. [°C]: | 74.8 |
| CCH-301 | 9.0 | % | Δn [589 nm, 20°C]: | 0.0891 |
| CCH-303 | 5.0 | % | nₑ [589 nm, 20°C]: | 1.5681 |
| CCH-34 | 9.0 | % | nₒ [589 nm, 20°C]: | 1.4790 |
| CCH-35 | 9.0 | % | Δε [1 kHz, 20°C]: | -3.2 |
| CCP-3-1 | 8.0 | % | ε_{∥} [1 kHz, 20°C]: | 3.5 |
| CCY-3-O2 | 11.5 | % | ε_{┴} [1 kHz, 20°C]: | 6.7 |
| CCY-5-O2 | 9.0 | % | K₁ [pN, 20°C]: | 14.2 |
| CPY-3-O2 | 6.0 | % | K₃ [pN, 20°C]: | 16.3 |
| CY-3-O2 | 15.0 | % | K₃/K₁ [pN, 20°C]: | 1.15 |
| PCH-3O1 | 4.5 | % | V₀ [V, 20°C]: | 2.38 |
| PY-3-O2 | 11.0 | % | | |
| ∑ | 100.0 | % | | |

Host mixture N26

| | | | | |
|---|---|---|---|---|
| BCH-32 | 10.5 | % | cl.p. [°C]: | 74.5 |
| CCH-34 | 9.0 | % | Δn [589 nm, 20°C]: | 0.1090 |
| CCH-35 | 9.0 | % | nₑ [589 nm, 20°C]: | 1.5953 |
| CCP-3-1 | 8.0 | % | nₒ [589 nm, 20°C]: | 1.4863 |
| CCY-3-O2 | 9.5 | % | Δε [1 kHz, 20°C]: | -3.4 |
| CCY-4-O2 | 5.5 | % | ε_{∥} [1 kHz, 20°C]: | 3.7 |
| CPY-3-O2 | 5.5 | % | ε_{┴} [1 kHz, 20°C]: | 7.0 |
| CY-3-O2 | 15.0 | % | K₁ [pN, 20°C]: | 14.0 |
| CY-5-O2 | 5.0 | % | K₃ [pN, 20°C]: | 15.7 |
| PCH-3O1 | 7.0 | % | K₃/K₁ [pN, 20°C]: | 1.12 |
| PY-3-O2 | 16.0 | % | V₀ [V, 20°C]: | 2.25 |
| ∑ | 100.0 | % | | |

Host mixture N27

| | | | | |
|---|---|---|---|---|
| B(S)-2O-O5 | 4.0 | % | cl.p. [°C]: | 74.7 |
| BCH-32 | 5.0 | % | Δn [589 nm, 20°C]: | 0.1024 |
| CC-3-V1 | 6.0 | % | nₑ [589 nm, 20°C]: | 1.5885 |
| CCH-34 | 9.0 | % | nₒ [589 nm, 20°C]: | 1.4861 |
| CCH-35 | 9.0 | % | Δε [1 kHz, 20°C]: | -3.2 |
| CCP-3-1 | 8.0 | % | ε_{∥} [1 kHz, 20°C]: | 3.6 |
| CCY-3-O1 | 6.5 | % | ε_{┴} [1 kHz, 20°C]: | 6.7 |
| CCY-3-O2 | 9.0 | % | K₁ [pN, 20°C]: | 13.5 |
| CLY-3-O2 | 1.0 | % | K₃ [pN, 20°C]: | 16.5 |
| CPY-3-O2 | 4.5 | % | K₃/K₁ [pN, 20°C]: | 1.22 |
| CY-3-O2 | 13.0 | % | V₀ [V, 20°C]: | 2.39 |
| PCH-3O1 | 15.0 | % | | |
| PY-1-O2 | 8.0 | % | | |
| PY-2-O2 | 2.0 | % | | |
| ∑ | 100.0 | % | | |

Host mixture N28

| | | | | |
|---|---|---|---|---|
| CCH-301 | 9.0 | % | cl.p. [°C]: | 110.9 |
| CCH-34 | 9.0 | % | Δn [589 nm, 20°C]: | 0.1022 |
| CCH-35 | 8.0 | % | nₑ [589 nm, 20°C]: | 1.5867 |
| CCOC-4-3 | 3.0 | % | nₒ [589 nm, 20°C]: | 1.4845 |
| CCP-3-1 | 6.0 | % | Δε [1 kHz, 20°C]: | -3.0 |
| CCP-3-3 | 6.0 | % | ε_{∥} [1 kHz, 20°C]: | 3.3 |
| CCPC-33 | 3.0 | % | ε_{┴} [1 kHz, 20°C]: | 6.3 |
| CCY-3-1 | 3.5 | % | K₁ [pN, 20°C]: | 18.8 |
| CCY-3-O2 | 4.5 | % | K₃ [pN, 20°C]: | 19.6 |
| CCY-3-O3 | 6.0 | % | K₃/K₁ [pN, 20°C]: | 1.04 |
| CCY-4-O2 | 6.0 | % | V₀ [V, 20°C]: | 2.69 |
| CCY-5-O2 | 5.0 | % | | |
| CPY-2-O2 | 10.5 | % | | |
| CPY-3-O2 | 6.5 | % | | |
| CY-3-O2 | 1.0 | | | % |
| PCH-3O2 | 4.0 | | | % |
| PY-2-O2 | 9.0 | | | % |
| ∑ | 100.0 | | | % |

Host mixture N29

| | | | | |
|---|---|---|---|---|
| BCH-32 | 3.0 | % | cl.p. [°C]: | 109.8 |
| CCH-301 | 9.0 | % | Δn [589 nm, 20°C]: | 0.1020 |
| CCH-34 | 9.0 | % | nₑ [589 nm, 20°C]: | 1.5867 |
| CCH-35 | 2.5 | % | nₒ [589 nm, 20°C]: | 1.4847 |
| CCOC-4-3 | 3.0 | % | Δε [1 kHz, 20°C]: | -3.0 |
| CCP-3-1 | 6.0 | % | ε_{∥} [1 kHz, 20°C]: | 3.3 |
| CCP-3-3 | 5.0 | % | ε_{┴} [1 kHz, 20°C]: | 6.2 |
| CCY-3-1 | 3.0 | % | K₁ [pN, 20°C]: | 18.4 |
| CCY-3-O2 | 6.0 | % | K₃ [pN, 20°C]: | 20.3 |
| CCY-3-O3 | 6.0 | % | K₃/K₁ [pN, 20°C]: | 1.10 |
| CCY-4-O2 | 6.0 | % | V₀ [V, 20°C]: | 2.75 |
| CCY-5-O2 | 6.0 | % | | |
| CPY-2-O2 | 10.0 | % | | |
| CPY-3-O2 | 8.5 | % | | |
| CY-3-O2 | 6.0 | % | | |
| PCH-3O2 | 11.0 | % | | |
| ∑ | 100.0 | % | | |

Host mixture N30

| | | | | |
|---|---|---|---|---|
| B(S)-2O-O5 | 2.0 | % | cl.p. [°C]: | 74.3 |
| BCH-32 | 9.5 | % | Δn [589 nm, 20°C]: | 0.1080 |
| CCP-3-1 | 9.5 | % | nₑ [589 nm, 20°C]: | 1.5962 |
| CCY-3-O1 | 6.5 | % | nₒ [589 nm, 20°C]: | 1.4882 |
| CCY-5-O2 | 9.5 | % | Δε [1 kHz, 20°C]: | -3.3 |
| CLY-3-O2 | 1.0 | % | ε_{∥} [1 kHz, 20°C]: | 3.7 |
| CPY-3-O2 | 5.5 | % | ε_{┴} [1 kHz, 20°C]: | 7.0 |
| CC-3-V1 | 6.5 | % | K₁ [pN, 20°C]: | 12.9 |
| CCH-301 | 8.5 | % | K₃ [pN, 20°C]: | 15.9 |
| CCH-34 | 3.0 | % | K₃/K₁ [pN, 20°C]: | 1.23 |
| CY-3-O2 | 15.5 | % | V₀ [V, 20°C]: | 2.31 |
| PCH-3O1 | 5.0 | % | | |
| PCH-3O2 | 6.5 | % | | |
| PY-2-O2 | 11.5 | % | | |
| ∑ | 100.0 | % | | |

Host mixture N31

| | | | | |
|---|---|---|---|---|
| CY-3-O4 | 12 | % | cl.p. [°C]: | 77 |
| PY-3-O2 | 9 | % | Δn [589 nm, 20°C]: | 0.088 |
| CPY-3-O2 | 12 | % | nₑ [589 nm, 20°C]: | |
| CCOY-2-O2 | 8 | % | nₒ [589 nm, 20°C]: | |
| CCY-5-O2 | 10 | % | Δε [1 kHz, 20°C]: | -3.1 |
| CC-3-V | 20 | % | ε_{∥} [1 kHz, 20°C]: | |
| CCH-32 | 30 | % | ε_{┴} [1 kHz, 20°C]: | |
| | | | K₁ [pN, 20°C]: | |
| | | | K₃ [pN, 20°C]: | |
| | | | K₃/K₁ [pN, 20°C]: | |
| | | | V₀ [V, 20°C]: | |
| ∑ | 100.0 | % | | |

Host mixture N32

| | | | | |
|---|---|---|---|---|
| CCH-32 | 10 | % | cl.p. [°C]: | 86 |
| COY-3-O2 | 10 | % | Δn [589 nm, 20°C]: | 0.105 |
| COY-3-O1 | 10 | % | nₑ [589 nm, 20°C]: | |
| CCOY-2-O2 | 9 | % | nₒ [589 nm, 20°C]: | |
| CCY-3-O1 | 7 | % | Δε [1 kHz, 20°C]: | -5.9 |
| CCY-3-O2 | 6 | % | ε_{∥} [1 kHz, 20°C]: | |
| CCY-4-O2 | 6 | % | ε_{┴} [1 kHz, 20°C]: | |
| CPY-5-O2 | 8 | % | K₁ [pN, 20°C]: | |
| CPY-3-O1 cpr | 10 | % | K₃ [pN, 20°C]: | |
| CPY-2-O2 | 10 | % | K₃/K₁ [pN, 20°C]: | |
| CY-3-O2 | 7 | % | V₀ [V, 20°C]: | |
| CY-3-O4 | 7 | % | | |
| ∑ | 100.0 | % | | |

Host mixture N33

| | | | | |
|---|---|---|---|---|
| CCH-32 | 11 | % | cl.p. [°C]: | 79 |
| CC-3-V | 10 | % | Δn [589 nm, 20°C]: | 0.112 |
| PP-5-O2 | 5 | % | nₑ [589 nm, 20°C]: | |
| COY-3-O2 | 8 | % | nₒ [589 nm, 20°C]: | |
| COY-3-O1 | 7 | % | Δε [1 kHz, 20°C]: | -4.3 |
| CCOY-2-O2 | 13 | % | ε_{∥} [1 kHz, 20°C]: | |
| CPY-cp-O2 | 7 | % | ε_{┴} [1 kHz, 20°C]: | |
| CPY-3-O2 | 10 | % | K₁ [pN, 20°C]: | |
| CPY-2-O2 | 10 | % | K₃ [pN, 20°C]: | |
| PY-3-O2 | 10 | % | K₃/K₁ [pN, 20°C]: | |
| CCP-3-1 | 2 | % | V₀ [V, 20°C]: | |
| CCP-V-1 | 4 | % | | |
| CCP-V2-1 | 4 | % | | |
| ∑ | 100.0 | % | | |

Host mixture N34

| | | | | |
|---|---|---|---|---|
| CY-5-O2 | 11 | % | cl.p. [°C]: | 60 |
| PY-3-O2 | 9 | % | Δn [589 nm, 20°C]: | 0.097 |
| COY-3-O2 | 17 | % | nₑ [589 nm, 20°C]: | |
| B(S)-cp1O-O4 | 4 | % | nₒ [589 nm, 20°C]: | |
| PP-1-5 | 10 | % | Δε [1 kHz, 20°C]: | -2.8 |
| CC-3-V1 | 26 | % | ε_{∥} [1 kHz, 20°C]: | |
| CCH-32 | 5 | % | ε_{┴} [1 kHz, 20°C]: | |
| CCP-3-1 | 12 | % | K₁ [pN, 20°C]: | |
| BCH-32 | 6 | % | K₃ [pN, 20°C]: | |
| | | | K₃/K₁ [pN, 20°C]: | |
| | | | V₀ [V, 20°C]: | |
| ∑ | 100.0 | | | |

Host mixture N35

| | | | | |
|---|---|---|---|---|
| CCH-23 | 16.5 | % | cl.p. [°C]: | 75 |
| CCH-34 | 3.0 | % | Δn [589 nm, 20°C]: | 0.112 |
| PCH-3O1 | 15.0 | % | nₑ [589 nm, 20°C]: | |
| PP-1-3 | 9.0 | % | nₒ [589 nm, 20°C]: | |
| BCH-32 | 8.0 | % | Δε [1 kHz, 20°C]: | -3.0 |
| COY-3-O1 | 8.5 | % | ε_{∥} [1 kHz, 20°C]: | |
| CCOY-3-O2 | 17.0 | % | ε_{┴} [1 kHz, 20°C]: | |
| CPY-2-O2 | 6.5 | % | K₁ [pN, 20°C]: | |
| CPY-3-O2 | 8.0 | % | K₃ [pN, 20°C]: | |
| CPY-3-O4 | 8.5 | % | K₃/K₁ [pN, 20°C]: | |
| | | | V₀ [V, 20°C]: | |
| ∑ | 100.0 | % | | |

Host mixture N36

| | | | | |
|---|---|---|---|---|
| CCH-23 | 12 | % | cl.p. [°C]: | 111 |
| CCH-34 | 8 | % | Δn [589 nm, 20°C]: | 0.097 |
| CCH-35 | 7 | % | nₑ [589 nm, 20°C]: | |
| PCH-3O1 | 8 | % | nₒ [589 nm, 20°C]: | |
| CCP-3-1 | 7 | % | Δε [1 kHz, 20°C]: | -3.1 |
| CCP-3-3 | 4 | % | ε_{∥} [1 kHz, 20°C]: | |
| BCH-32 | 5 | % | ε_{┴} [1 kHz, 20°C]: | |
| CCOY-2-O2 | 15 | % | K₁ [pN, 20°C]: | |
| CCOY-3-O2 | 15 | % | K₃ [pN, 20°C]: | |
| CPY-2-O2 | 5 | % | K₃/K₁ [pN, 20°C]: | |
| CPY-3-O2 | 5 | % | V₀ [V, 20°C]: | |
| CPY-3-O3 | 5 | % | | |
| CPY-3-O4 | 4 | % | | |
| ∑ | 100.0 | % | | |

Host mixture N37

| | | | | |
|---|---|---|---|---|
| CC-3-V | 32 | % | cl.p. [°C]: | 74 |
| PP-1-3 | 11 | % | Δn [589 nm, 20°C]: | 0.104 |
| CCP-3-1 | 8 | % | nₑ [589 nm, 20°C]: | |
| CY-5-O2 | 2 | % | nₒ [589 nm, 20°C]: | |
| COY-3-O1 | 11.5 | % | Δε [1 kHz, 20°C]: | -2.9 |
| CCY-3-O2 | 11.5 | % | ε_{∥} [1 kHz, 20°C]: | |
| CPY-2-O2 | 7 | % | ε_{┴} [1 kHz, 20°C]: | |
| CPY-3-O2 | 8 | % | K₁ [pN, 20°C]: | |
| CPY-3-O4 | 9 | % | K₃ [pN, 20°C]: | |
| | | | K₃/K₁ [pN, 20°C]: | |
| | | | V₀ [V, 20°C]: | |
| ∑ | 100.0 | % | | |

Host mixture N38

| | | | | |
|---|---|---|---|---|
| CCH-23 | 21.5 | % | cl.p. [°C]: | 75 |
| CCH-34 | 9.5 | % | Δn [589 nm, 20°C]: | 0.103 |
| PP-1-3 | 13.5 | % | nₑ [589 nm, 20°C]: | |
| CCP-3-1 | 6 | % | nₒ [589 nm, 20°C]: | |
| COY-3-O1 | 11.5 | % | Δε [1 kHz, 20°C]: | -2.8 |
| CCOY-3-O2 | 14 | % | ε_{∥} [1 kHz, 20°C]: | |
| CPY-2-O2 | 7 | % | ε_{⊥} [1 kHz, 20°C]: | |
| CPY-3-O2 | 8 | % | K₁ [pN, 20°C]: | |
| CPY-3-O4 | 9 | % | K₃ [pN, 20°C]: | |
| | | | K₃/K₁ [pN, 20°C]: | |
| | | | V₀ [V, 20°C]: | |
| ∑ | 100.0 | % | | |

Host mixture N39

| | | | | |
|---|---|---|---|---|
| CEY-3-O2 | 7 | % | cl.p. [°C]: | 89 |
| CCY-3-O2 | 8 | % | Δn [589 nm, 20°C]: | 0.115 |
| CCOY-3-O2 | 5 | % | nₑ [589 nm, 20°C]: | |
| CLY-2-O2 | 8 | % | nₒ [589 nm, 20°C]: | |
| CAIY-3-O2 | 3 | % | Δε [1 kHz, 20°C]: | -1.9 |
| CAIY-5-O2 | 4 | % | ε_{∥} [1 kHz, 20°C]: | |
| PYP-2-3 | 7 | % | ε_{⊥} [1 kHz, 20°C]: | |
| PYP-2-4 | 7 | % | K₁ [pN, 20°C]: | |
| CC-4-V | 15 | % | K₃ [pN, 20°C]: | |
| CC-3-V1 | 6 | % | K₃/K₁ [pN, 20°C]: | |
| CC-1-2V1 | 6 | % | V₀ [V, 20°C]: | |
| CC-3-2V1 | 4 | % | | |
| PP-1-2V | 5 | % | | |
| PP-1-2V1 | 5 | % | | |
| CCP-3-1 | 6 | % | | |
| CBC-33F | 4 | % | | |
| ∑ | 100.0 | % | | |

Host mixture N40

| | | | | |
|---|---|---|---|---|
| B(S)-2O-O5 | 2.0 | % | cl.p. [°C]: | 74 |
| BCH-32 | 9.5 | % | Δn [589 nm, 20°C]: | 0.108 |
| CCP-3-1 | 9.5 | % | nₑ [589 nm, 20°C]: | |
| CCY-3-O1 | 6.5 | % | nₒ [589 nm, 20°C]: | |
| CCY-5-O2 | 9.5 | % | Δε [1 kHz, 20°C]: | -3.6 |
| CLY-3-O2 | 1.0 | % | ε_{∥} [1 kHz, 20°C]: | |
| CPY-3-O2 | 5.5 | % | ε_{⊥} [1 kHz, 20°C]: | |
| CC-3-V1 | 6.5 | % | K₁ [pN, 20°C]: | |
| CCH-301 | 8.5 | % | K₃ [pN, 20°C]: | |
| CCH-34 | 3.0 | % | K₃/K₁ [pN, 20°C]: | |
| COY-3-O2 | 15.5 | % | | |
| PCH-3O1 | 5.0 | % | | |
| PCH-3O2 | 6.5 | % | | |
| PY-2-O2 | 11.5 | % | | |
| ∑ | 100.0 | % | | |

Host mixture N41

| | | | | |
|---|---|---|---|---|
| B(S)-2O-O4 | 4.0 | % | cl.p. [°C]: | 75 |
| B(S)-2O-O4 | 4.0 | % | Δn [589 nm, 20°C]: | 0.114 |
| BCH-32 | 7.5 | % | nₑ [589 nm, 20°C]: | 1.606 |
| CC-3-V | 25.75 | % | nₒ [589 nm, 20°C]: | 1.492 |
| CC-3-V1 | 10.0 | % | Δε [1 kHz, 20°C]: | -2.6 |
| CCP-3-1 | 13.0 | % | ε_{∥} [1 kHz, 20°C]: | 3.6 |
| CCP-3-3 | 3.25 | % | ε_{⊥} [1 kHz, 20°C]: | 6.1 |
| CLY-3-O2 | 2.0 | % | K₁ [pN, 20°C]: | 13.7 |
| CPY-2-O2 | 9.5 | % | K₃ [pN, 20°C]: | 14.2 |
| PY-2-O2 | 11.0 | % | K₃/K₁ [pN, 20°C]: | |
| PY-2-O1 | 10.0 | % | | |
| ∑ | 100.0 | % | | |

Host mixture N42

| | | | | |
|---|---|---|---|---|
| BCH-32 | 4.0 | % | cl.p. [°C]: | 75.0 |
| CC-3-V1 | 8.0 | % | Δn [589 nm, 20°C]: | 0.101 |
| CCH-23 | 17.5 | % | nₑ [589 nm, 20°C]: | |
| CCH-34 | 7.0 | % | nₒ [589 nm, 20°C]: | |
| CCY-3-O2 | 10.0 | % | Δε [1 kHz, 20°C]: | -3.4 |
| CPY-2-O2 | 11.0 | % | ε_{∥} [1 kHz, 20°C]: | |
| CPY-3-O2 | 12.0 | % | ε_{⊥} [1 kHz, 20°C]: | |
| CY-3-O2 | 13.5 | % | K₁ [pN, 20°C]: | 13.1 |
| CY-3-O4 | 12.0 | % | K₃ [pN, 20°C]: | 13.8 |
| PYP-2-3 | 5.0 | % | K₃/K₁ [pN, 20°C]: | 1.05 |
| ∑ | 100.0 | % | | |

Host mixture N43

| | | | | |
|---|---|---|---|---|
| CC-3-V1 | 9.0 | % | cl.p. [°C]: | 74.4 |
| CC-4-V1 | 15.0 | % | Δn [589 nm, 20°C]: | 0.102 |
| CCH-34 | 7.0 | % | nₑ [589 nm, 20°C]: | 1.582 |
| CCH-45 | 6.5 | % | nₒ [589 nm, 20°C]: | 1.480 |
| CCY-3-O2 | 11.0 | % | Δε [1 kHz, 20°C]: | -3.1 |
| CPY-2-O2 | 2.5 | % | ε_{∥} [1 kHz, 20°C]: | 3.5 |
| CPY-3-O2 | 12.0 | % | ε_{⊥} [1 kHz, 20°C]: | 6.6 |
| CY-3-O2 | 15.0 | % | K₁ [pN, 20°C]: | 14.4 |
| CY-5-O2 | 8.5 | % | K₃ [pN, 20°C]: | 15.3 |
| PP-1-2V1 | 4.0 | | K₃/K₁ [pN, 20°C]: | 1.06 |
| PY-2-O2 | 4.5 | | γ₁ [mPa s, 20°C] | 86 |
| PYP-2-3 | 5.0 | % | V₀ [V, 20°C]: | 2.35 |
| ∑ | 100.0 | % | | |

The host mixtures are advantageously stabilized before or when polymerizable additives are added. For example, 0.01 % by weight of Irganox-1076 (R) are added to the hosts. Further the polymerizable mixture is optionally stabilized by 0.015 % by weight of STABILIX (R). Further optional stabilisers are disclosed in Table C.

### Mixture Example P1

The polymerizable mixture P1 according to the present invention is prepared by adding 0.3 % of RM-1, 0.2 % of RM-2, 0.5 % of RM-3 and 0.9 % of SA-20 as the polymerizable compounds to the nematic LC host mixture N1, and the mixture is homogenized.

### Mixture Example P2

The polymerizable mixture P2 according to the present invention is prepared by adding 0.3 % RM-1, 0.3 % RM-2, 0.5 % RM-3 and 1.5 % of SA-20 as the polymerizable compounds to nematic LC host mixture N1, and the mixture is homogenized.

### Comparative Mixture Examples: Polymerisable Mixtures C1 - C4

For comparison purpose, polymerizable mixture C1 and C2 is prepared by adding only RM-1 to nematic LC host mixture N1 (0.6 %, 0.9 % respectively). Further, comparative polymerizable mixture C3 is prepared by adding 0.3 % RM-1, 0.2 % RM-2 and 0.9 % of SA-20 to nematic LC host mixture N1. Even further, comparative polymerizable mixture C4 is prepared by adding 0.3 % RM-1, 0.2 % RM-2 and 1.5 % of SA-20 to nematic LC host mixture N1.

### Mixture Example P3

The polymerizable mixture P3 according to the present invention is prepared by adding 0.3 % of RM-1, 0.2 % of RM-2, 0.5 % of RM-3 and 0.9 % of SA-20 as the polymerizable compounds to the nematic LC host mixture N1, and the mixture is homogenized.

The compositions of some further polymerizable mixtures prepared analogously to the above procedures are shown in Table 1.

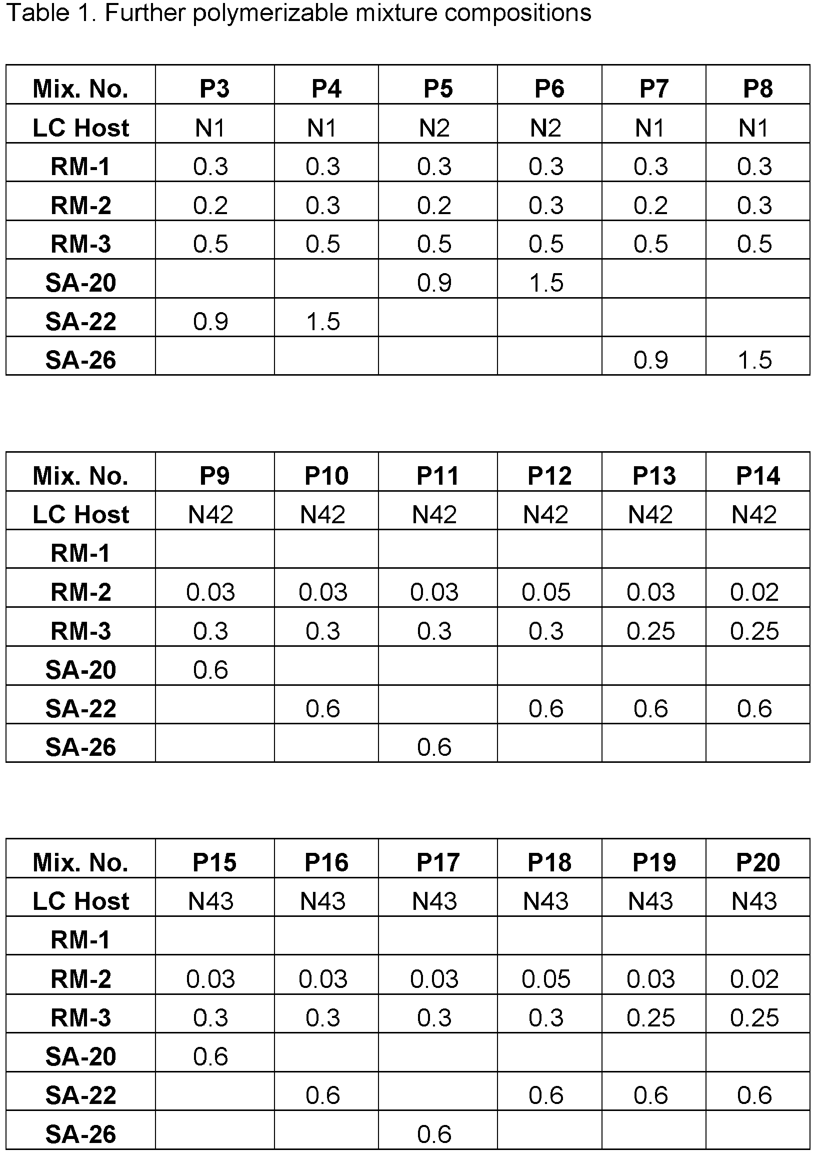

To the mixture N43 is added 0.015 % by weight of stabilizer STABILIX (R) before calculating and adding the other additives.

### Use Examples (self-aligned PS-VA)

The individual polymerizable mixtures are filled into PSA test cells and test panels, the RM is polymerised under application of a voltage, and several typical performance properties like tilt generation, residual RM content, VHR under stress, image sticking and tilt angle stability are measured.

### Tilt generation by control of UV1 curing time:

The prepared LC media are tested for their tilt generation behaviour by polymerizing them inside the test cell in a first UV polymerization step (UV1). A preferred duration of the UV1 step is from 40 to 150 s. In this range the tilt generation can be controlled carefully enough, while the tact time for completion of the polymerization step is kept short. The tilt generation behaviour is described by the following tables 2.a/b, wherein the signs stand for:
X: uncontrollable (tilt generation too fast and/or strong), △ : acceptable, ○: well controllable.

**Table 2.a. Tilt generation behaviour within standard UV1 curing time (40 - 150 s):**

| Mixture | RM-1 | RM-2 (moderator RM) | RM-3 | SA-20 | achievement of suitable UV1 curing time and tilt generation |
|---|---|---|---|---|---|
| C1 | 0.3% | - | - | 0.6% | △ |
| C2 | 0.3% | - | - | 0.9% | X |
| C3 | 0.3% | 0.2% | - | 0.9% | O |
| C4 | 0.3% | 0.2% | - | 1.5% | O |
| C5 | 0.3% | - | 0.5% | 0.9% | X |
| P1 | 0.3% | 0.2% | 0.5% | 0.9% | O |
| P2 | 0.3% | 0.3% | 0.5% | 1.5% | O |

All the samples showed vertical alignment with a certain degree of tilt. The samples P1 and P2 according to the invention reached the desired tilt generation after an UV1 irradiation time of about 50 (±10) seconds, which is well in the desired time frame. The comparative example C1 has a relatively thin layer of polymer deposited on the electrode planes. For C2 and C5 the tilt generation was too strong and fast to reach the target values. The conventional mixture C1 has an acceptable tilt generation. The comparative examples C3 and C4 achieved tilt well in the prescribed time frame for UV1 irradiation, but the residual RM is remarkably high (see below).

**Table 2.b. Tilt generation behaviour within standard UV1 curing time (40 - 150 s):**

| Mixture | RM-2 | RM-3 | SA-22 | achievement of suitable UV1 curing time and tilt generation | |
|---|---|---|---|---|---|
| P10 | 0.03 | 0.3 | 0.6 | | O (2.6° tilt, 100 s curing) |
| P12 | 0.05 | 0.3 | 0.6 | | O |
| P13 | 0.03 | 0.25 | 0.6 | | O |
| P14 | 0.02 | 0.25 | 0.6 | | O |

The samples showed vertical alignment with a suitable degree of tilt within the desired range and after an irradiation time in the desired time frame.

### Residual RM Measurement:

The content of residual, unpolymerized RM (in % by weight) in the mixture after UV exposure is determined. The UV procedure is made in analogy to process conditions in panel manufacture (first UV curing for 40 to 120 s (Fe-I metal-halide lamp); second UV end-curing for 120 min (UV-C fluorescent lamp, 0.5 mW/cm²).

For this purpose, the polymerizable mixtures are filled into electrooptic test cells made of AF glass coated with an approximately 200 nm thick layer of ITO with a cell gap of 3.3 µm.

The test cells are illuminated for a variable time typical for end curing (1-2 h).

After polymerization the test cells are opened, and the mixture is dissolved and rinsed out of the test cell with 2 ml ethyl methyl ketone and analyzed by High Performance Liquid Chromatography (HPLC). The results are shown in Table 3.a/b.

**Table 3.a - Residual RM content after 1 h UV end curing (UV-C):**

| **Mixture** | **RM-1** | **RM-2** | **RM-3** | **SA-20** |
|---|---|---|---|---|
| P1 | not found | not found | not found | < 60 ppm |
| P2 | not found | not found | not found | < 60 ppm |
| C2 | 503 ppm | 166 ppm | not added | 429 ppm |

**Table 3.b - Residual RM content after 2 h UV end curing (UV-C):**

| **Mixture** | **RM-1** | **RM-2** | **RM-3** | **SA-20** |
|---|---|---|---|---|
| P1 | not found | not found | not found | not found |
| P2 | not found | not found | not found | not found |
| C2 | 66 ppm | not found | not added | 84 ppm |

From Table 3.a/b it can be seen that, for polymerizable mixtures with RM-3 in addition to RM-1 and RM-2 according to the invention, the residual RM amount of RM-1, RM-2 and SA-20 is advantageously reduced after 1 h. After 2 h end curing the mixtures P1 and P2 have no detectable residual RM content at all, in contrast to conventional RM mixtures.

Further results are obtained by a modified UV-2 procedure (Table 3.c; first UV curing for 40 to 120 s (Fe-I metal-halide lamp); second UV end-curing for 90 min (365 nm, 4 mW/cm², 35 °C).

**Table 3.c - Residual RM content after 2 h UV end curing (365 nm):**

| **Mixture** | **RM-2** | **RM-3** | **SA-20** |
|---|---|---|---|
| P9 | 24 ppm | not found | 28 ppm |

The mixture and resulting device is within the specifications for a PSA display.

### Tilt stability measurement:

The tilt stability of mixtures was determined by comparison of the tilt angle before and after stress conditions (60 Vpp, 200 Hz, 72 H). For mixture P9 the tilt stability is determined at the advantageous level of 0.21°.

### Voltage Holding Ratio (VHR) measurement:

The reliability of the devices using the media according to the invention is also determined by VHR values after the second UV step. Here VHR is determined at 1 V/0.6 Hz/60°C, first UV curing for 70-120 s (Fe-I metal-halide lamp); second UV end-curing for 90 min (365 nm, 4 mW/cm², 35 °C).

Mixture P9 shows a VHR value of 94.9 %. For comparison, a mixture without the additive RM-2 showed a lower VHR of 93 %.

### Image sticking under alternate and direct current and backlight stress:

A series of test cells was driven with 40 Vpp AC + DC for 14 h with backlight at room temperature as a stress test. The grey levels of the test cells were then compared to their reference values without stress test. The average difference in luminance was used as the image sticking value (ISV). ISV values are compared to the comparative test cell using mixture C2.

The tendency to have image sticking after AC/DC stress conditions of the inventive mixtures is reduced significantly compared to a conventional mixture. Reliability of the display panel is improved, and the findings indicate a superior stability of the orientation and the tilt angle of the LC medium.

In summary the above results demonstrate that the polymerizable LC media according to the present invention enable the production of LC panels with low residual RM and superior image sticking behavior. Thus, the LC media according to the present invention show a superior performance.

### Mixture Examples P15 to P54

The polymerizable mixtures P15 to P54 according to the present invention are prepared by adding 0.3 % of RM-1, 0.2 % of RM-2, 0.5 % of RM-3 and 0.9 % of SA-20 as the polymerizable compounds to the nematic LC host mixture N3 to N43 respectively, and each mixture is homogenized. 0.015 % of STABILIX (R) are added to each host mixture.

### Mixture Examples P56 to P96

The polymerizable mixtures P56 to P96 according to the present invention are prepared by adding 0.3 % of RM-1, 0.2 % of RM-2, 0.5 % of RM-3 and 0.9 % of SA-22 as the polymerizable compounds to the nematic LC host mixture N3 to N43 respectively, and each mixture is homogenized.

### Mixture Examples P97 to P137

The polymerizable mixtures P97 to P137 according to the present invention are prepared by adding 0.3 % of RM-1, 0.2 % of RM-2, 0.5 % of RM-3 and 0.9 % of SA-26 as the polymerizable compounds to the nematic LC host mixture N3 to N43 respectively, and each mixture is homogenized.

## Claims

1. A liquid crystal (LC) medium comprising
- a polymerizable component A) comprising polymerizable compounds,
at least a first one of which is a compound of formula I,
at least a second one of which is a compound of formula II, and
at least a third one is a polymerizable self-alignment additive for vertical alignment of formula III
and
- a liquid-crystalline LC component B) comprising one or more mesogenic or liquid-crystalline compounds,
wherein the formulae are defined as: 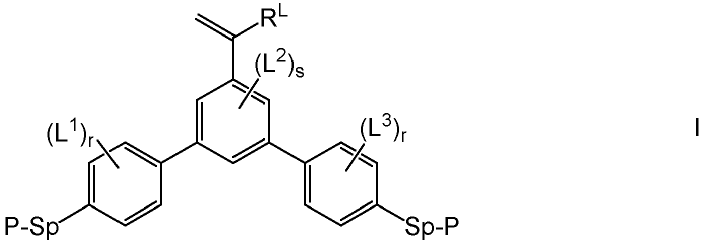 wherein the individual radicals, independently of each other and on each occurrence identically or differently, have the following meanings
P a polymerizable group,
Sp a spacer group or a single bond,
R^{L} -CH₃, -C₂H₅ or -CH₂CH₂CH₃,
r independently is 0, 1 or 2,
s is 0 or 1, and
L¹, L², L³ independently are F, Cl or linear, branched or cyclic alkyl having 1 to 5 C atoms, wherein one or more non-adjacent CH₂-groups are optionally replaced by -O-, -S-, -CO-, -CO-O-, -O-CO- or -O-CO-O- in such a manner that O- and/or S-atoms are not directly connected with each other, and wherein one or more H atoms are each optionally replaced by F or Cl, 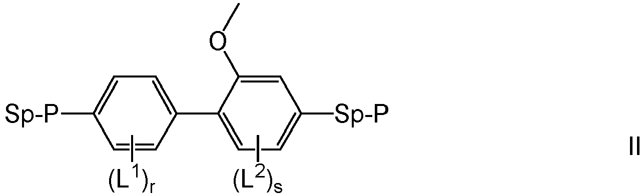
wherein the individual radicals, independently of each other and on each occurrence identically or differently, have the following meanings
P a polymerizable group,
Sp a spacer group or a single bond,
r independently is 0, 1 or 2,
s is 0 or 1, and
L¹, L² independently are F, Cl or linear, branched or cyclic alkyl having 1 to 5 C atoms, wherein one or more non-adjacent CH₂-groups are optionally replaced by -O-, -S-, -CO-, -CO-O-, -O-CO- or -O-CO-O- in such a manner that O- and/or S-atoms are not directly connected with each other, and wherein one or more H atoms are each optionally replaced by F or Cl,
MES-R^{a} III
in which
MES is a calamitic mesogenic group comprising two or more rings, which are connected directly or indirectly to each other or which are condensed to each other, which rings are optionally substituted and which is optionally substituted additionally by one or more polymerizable groups, which are connected to MES directly or via a spacer, and
R^{a} is a polar anchor group, residing in a terminal position of the calamitic mesogenic group MES, which group R^{a} comprises at least one carbon atom and at least one group selected from -OH, -SH, -COOH, -CHO or primary or secondary amine function and which is optionally substituted by one or two polymerizable groups, which are connected to R^{a} directly or via a spacer,
where at least one of MES or R^{a} is substituted by at least one polymerizable group directly or via a spacer.

2. The LC medium according to Claim 1, wherein the compound of formula I is selected from the following formulae 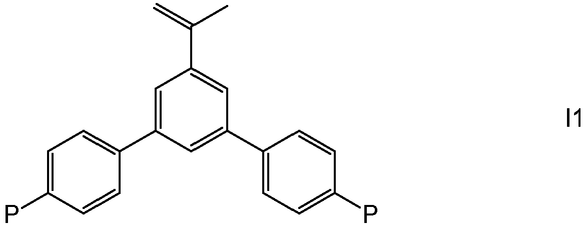 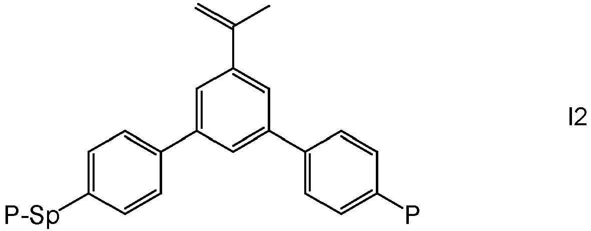 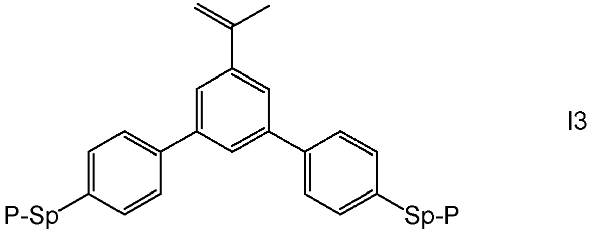 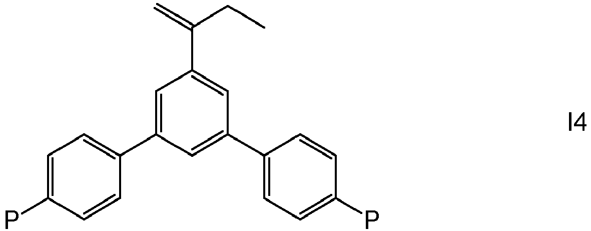 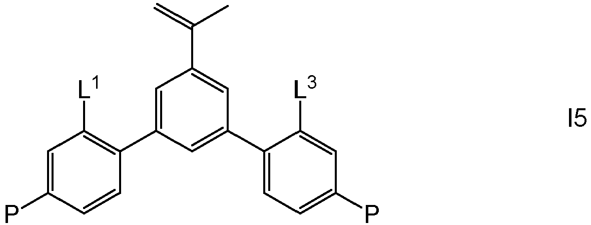 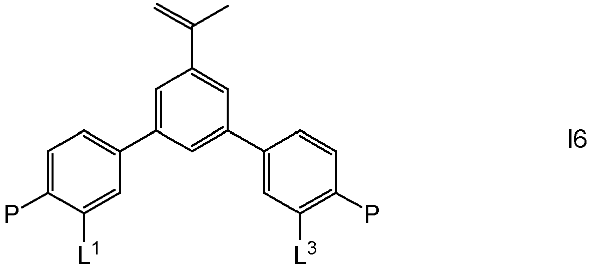 wherein
P is a polymerizable group,
Sp a spacer group, and
L¹, L³ independently are defined as for formula I in Claim 1.

3. The LC medium according to Claim 1 or 2, **characterized in that** it comprises in addition to the compounds of formula I, II and III, one or more further polymerizable compounds selected from the following formulae 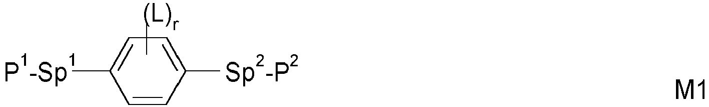 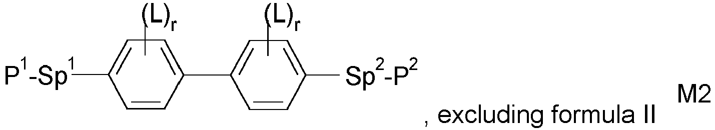 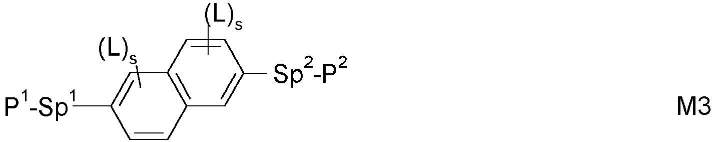 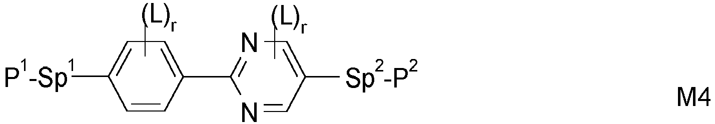 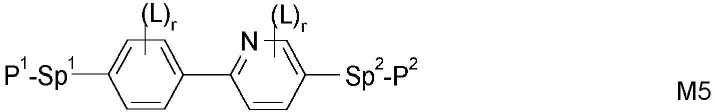 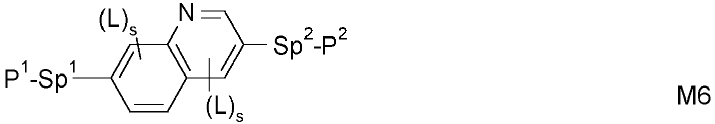 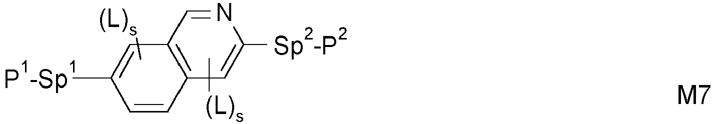 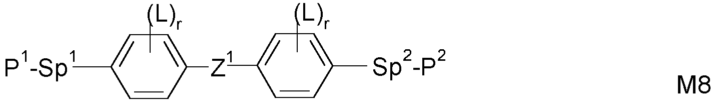 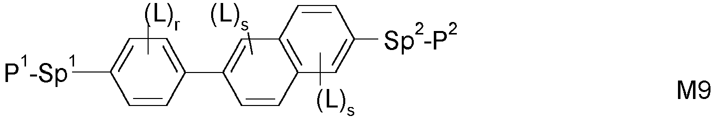 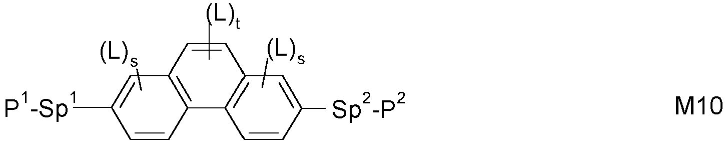 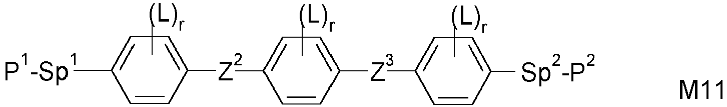 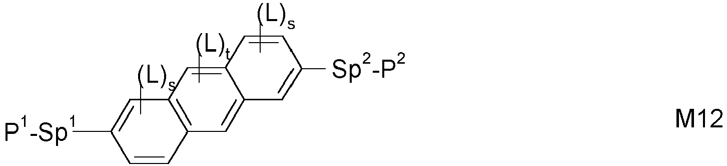 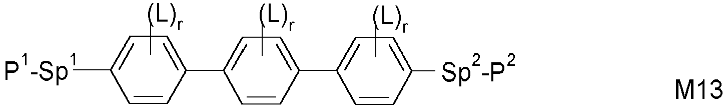 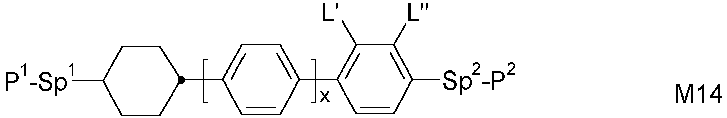 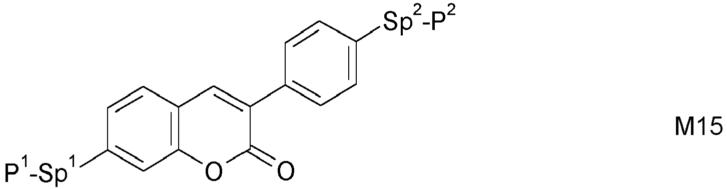 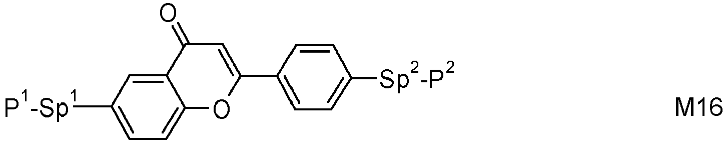 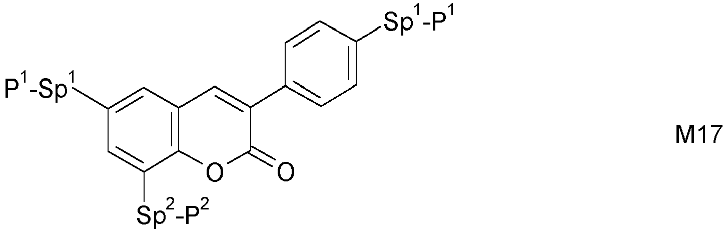 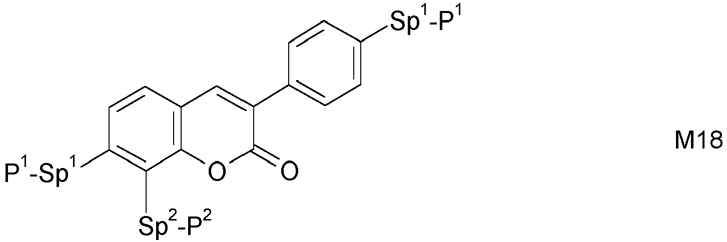 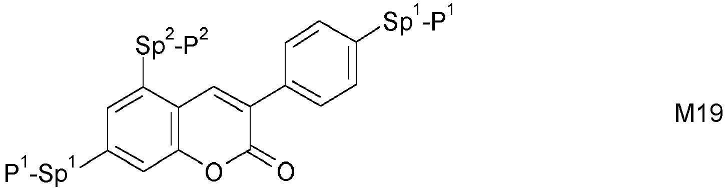 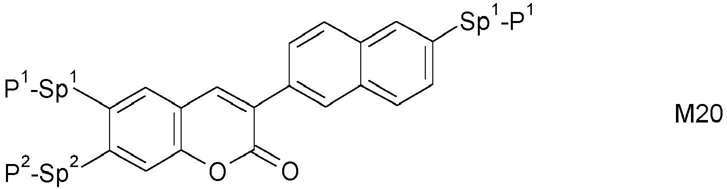 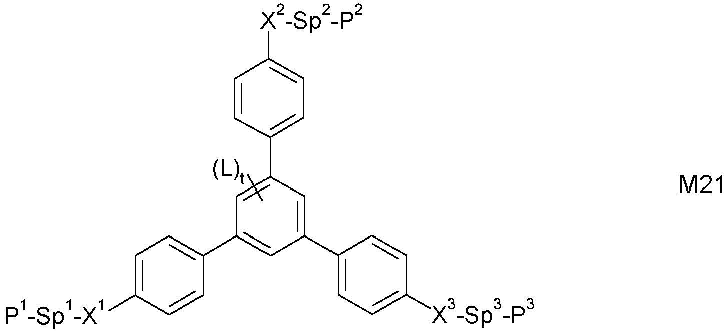 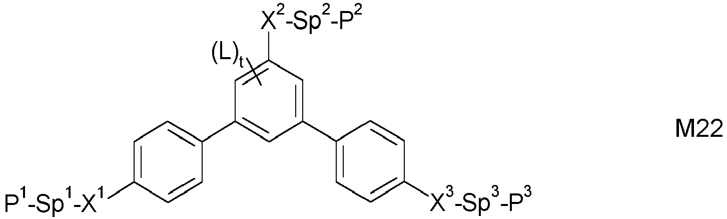 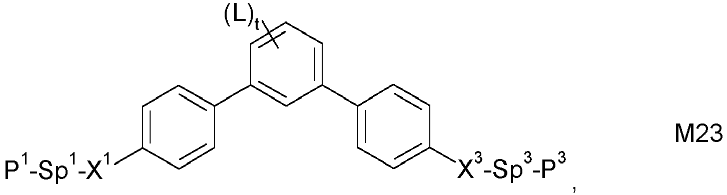 excluding formula I 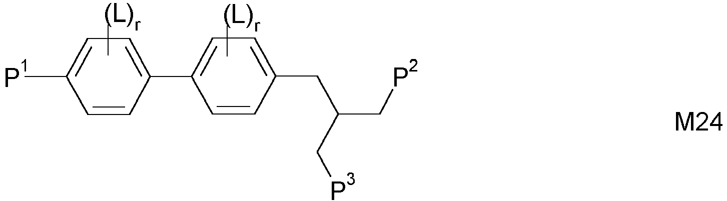 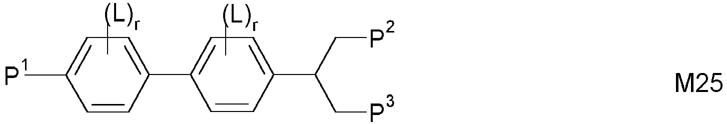 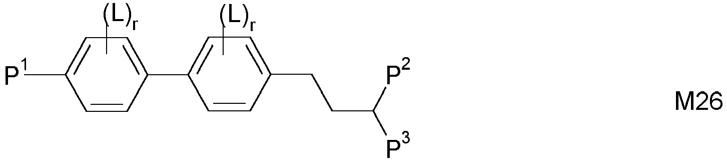 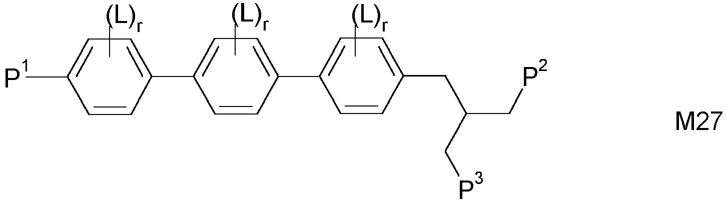 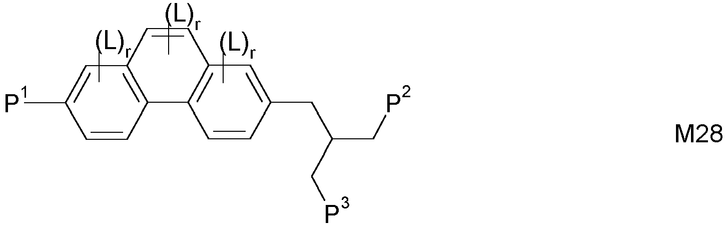 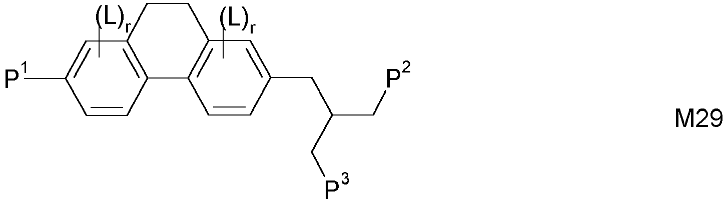 in which the individual radicals have the following meanings:
P¹, P² and P³ each, independently of one another, denote an acrylate or methacrylate group,
Sp¹, Sp² and Sp³ each, independently of one another, denote a single bond or a spacer group having one of the meanings indicated above and below for Sp, and particularly preferably denote -(CH₂)ₚ₁-, -(CH₂)ₚ₁-O-, -(CH₂)ₚ₁-CO-O-, -(CH₂)ₚ₁-O-CO- or -(CH₂)ₚ₁-O-CO-O-, in which p1 is an integer from 1 to 12, where, in addition, one or more of the radicals P¹-Sp¹-, P¹-Sp²- and P³-Sp³- may denote R^{aa}, with the proviso that at least one of the radicals P¹-Sp¹-, P²-Sp² and P³-Sp³- present is different from R^{aa},
R^{aa} denotes H, F, Cl, CN or straight-chain or branched alkyl having 1 to 25 C atoms, in which, in addition, one or more non-adjacent CH₂ groups may each be replaced, independently of one another, by C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or P¹-Sp¹-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),
R⁰, R⁰⁰ each, independently of one another and identically or differently on each occurrence, denote H or alkyl having 1 to 12 C atoms,
R^{y} and R^{z} each, independently of one another, denote H, F, CH₃ or CF₃,
X¹, X² and X³ each, independently of one another, denote -CO-O-, -O-CO- or a single bond,
Z¹ denotes -O-, -CO-, -C(R^{y}R^{z})- or -CF₂CF₂-,
Z² and Z³ each, independently of one another, denote -CO-O-, -O-CO-, -CH₂O- -OCH₂-, -CF₂O-, -OCF₂- or -(CH₂)ₙ-, where n is 2, 3 or 4,
L on each occurrence, identically or differently, denotes F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms, preferably F,
L' and L" each, independently of one another, denote H, F or Cl,
r denotes 0, 1, 2, 3 or 4,
s denotes 0, 1, 2 or 3,
t denotes 0, 1 or 2,
x denotes 0 or 1.

4. The LC medium according to any one of Claims 1 to 3, wherein in formula I, II and III P denotes an acrylate or methacrylate group.

5. The LC medium according to one or more of Claims 1 to 4, wherein said self-alignment additive for vertical alignment is of formula IIIa
R¹-[A²-Z²]ₘ-A¹-R^{a} IIIa
in which
A¹, A² each, independently of one another, denote an aromatic, heteroaromatic, alicyclic or heterocyclic group, which may also contain fused rings, and which may also be mono- or polysubstituted by a group L or -Sp-P,
L in each case, independently of one another, denotes H, F, Cl, Br, I, -CN, -NO₂, -NCS, -C(=O)N(R⁰)₂, -C(=O)R⁰, optionally substituted silyl, optionally substituted aryl or cycloalkyl having 3 to 20 C atoms, or straight-chain or branched alkyl, alkoxy, alkylcarbonyl, alkoxycarbonyl, alkylcarbonyloxy or alkoxycarbonyloxy having up to 25 C atoms, in which, in addition, one or more H atoms may each be replaced by F or Cl,
P denotes a polymerizable group,
Sp denotes a spacer group or a single bond,
Z² in each case, independently of one another, denotes a single bond, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-, -CH(-Sp-P)-, -CH₂CH-(-Sp-P)-, or -CH(-Sp-P)CH(-Sp-P)-,
n1 denotes 1, 2, 3 or 4,
m denotes 1, 2, 3, 4 or 5,
R⁰ in each case, independently of one another, denotes alkyl having 1 to 12 C atoms,
R⁰⁰ in each case, independently of one another, denotes H or alkyl having 1 to 12 C atoms,
R¹ independently of one another, denotes H, halogen, straight-chain, branched or cyclic alkyl having 1 to 25 C atoms, in which, in addition, one or more non-adjacent CH₂ groups may each be replaced by 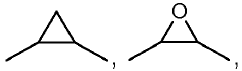 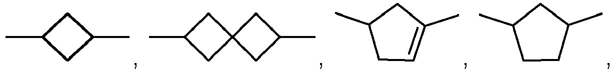 -C≡C-, CH=CH-, -O-, -S-, -CO-, -CO-O-, -O-CO-, or -O-CO-O- in such a way that O and/or S atoms are not linked directly to one another and in which, in addition, one or more H atoms may each be replaced by F or Cl, or a group -Sp-P,
and R^{a} denotes a polar anchor group as defined in Claim 1.

6. The liquid-crystalline medium according to one or more of Claims 1 to 5, wherein said self-alignment additive has an anchor group R^{a} which is selected from the formulae 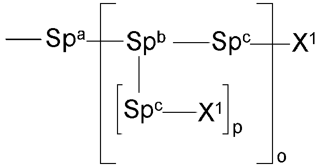 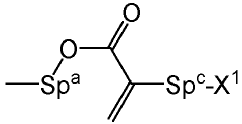 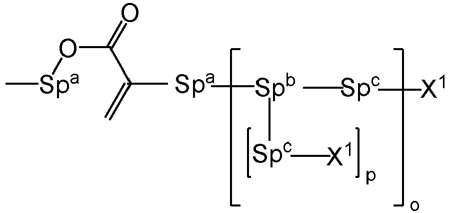 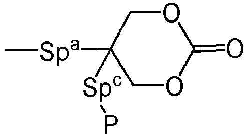 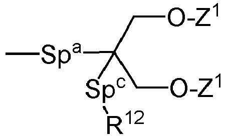 or 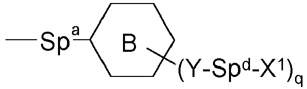 wherein
p denotes 1 or 2,
q denotes 2, 3 or 4, where each group may be the same or different,
B denotes a substituted or unsubstituted ring system or condensed ring system,
Y independently of one another, denotes -O-, -S-, -C(O)-, -C(O)O-, -OC(O)-, -NR¹¹- or a single bond,
∘ denotes 0 or 1,
X¹ independently of one another, denotes H, alkyl, fluoroalkyl, OH, NH₂, NHR¹¹, NR¹¹₂, -PO(OR¹¹)₂, -SO₂R¹¹, -OR¹¹, C(O)OH, P or -CHO, where at least one group X¹ denotes a radical selected from -OH, -NH₂, NHR¹¹, -PO(OR¹¹)₂, -SO₂R¹¹, C(O)OH and -CHO,
Z¹ independently -(CO)-CH₂(CO)OCH₃, -(CO)-CH₂(CO)-(C=CH₂)-OCH₃, -(CO)-CH₂(CO)-(CH=CH)-OCH₃, -(CO)-(CO)OCH₃, -CH₂-(CO)-(CO)OCH₃, -(CO)-CH₃, -(CO)-CH₂(CO)-(CH₂CH₂)-OCH₃,
P a polymerizable group,
R¹¹ denotes alkyl having 1 to 12 C atoms,
R¹² H, alkyl having 1 to 12 C atoms, P or X¹,
Sp^{a}, Sp^{c}, Sp^{d} each, independently of one another, denote a spacer group or a single bond, and
Sp^{b} denotes a tri- or tetravalent group.

7. The liquid-crystalline medium according to one or more of Claims 1 to 6, wherein said self-alignment additive for vertical alignment is selected from the compounds of formulae III-A to III-D, 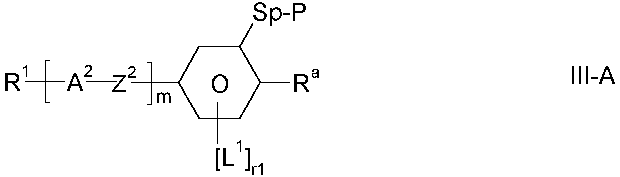 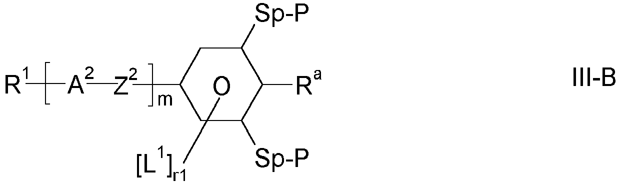 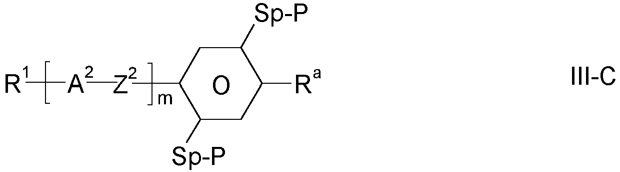 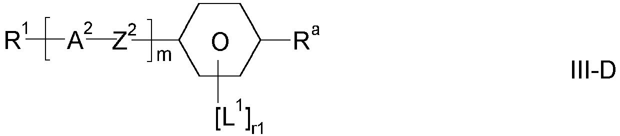 in which R¹, R^{a}, A², Z², Sp, P have the meanings as defined for formula IIIa in Claim 5,
L¹ is defined as L in Claim 3,
m 1, 2, 3 or 4,
and
r1 is 0, 1, 2, 3 or 4.

8. The LC medium according to any one of Claims 1 to 7, **characterized in that** the one or more compounds of formula II are selected from the formulae 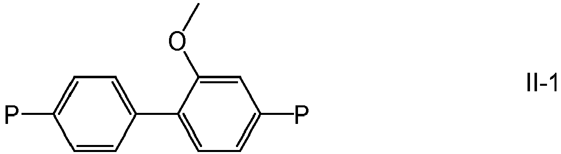 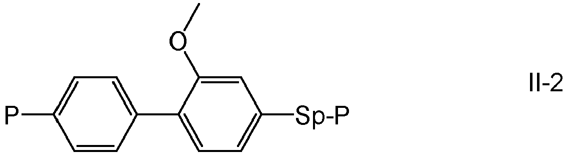 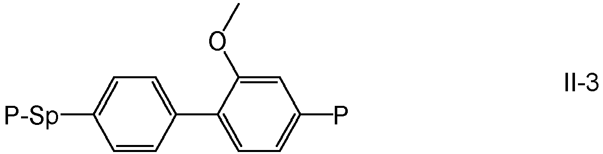 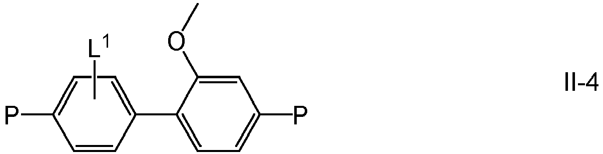 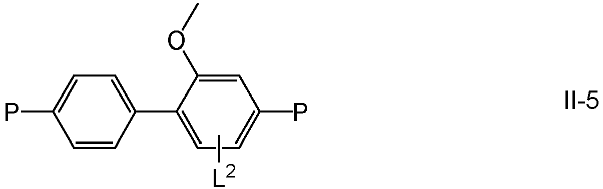
wherein P and L¹ are defined as in formula II of Claim 1, and
Sp is a spacer group.

9. The LC medium according to any one of Claims 1 to 8, **characterized in that** it additionally comprises a polymerizable compound selected from the following structures

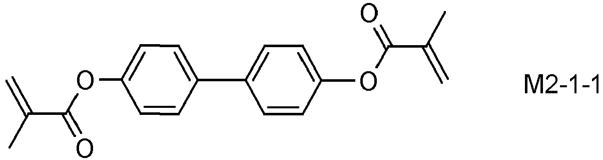

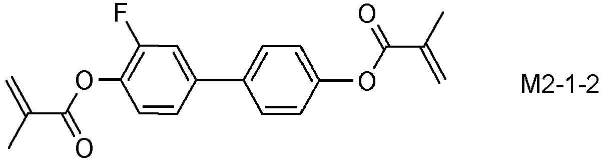

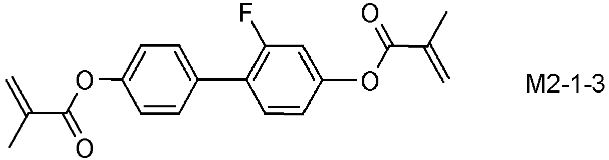

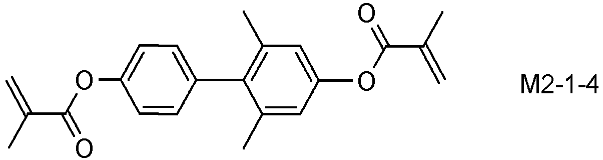

10. The LC medium according to any one of Claims 1 to 9, **characterized in that** it comprises one or more compounds of the formulae CY and/or PY: 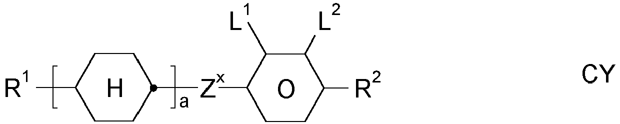 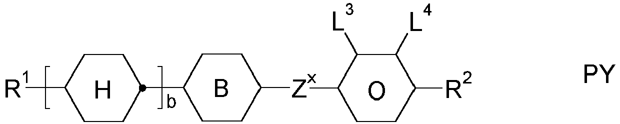 in which the individual radicals have the following meanings:
a denotes 1 or 2,
b denotes 0 or 1, 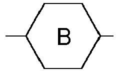 denotes 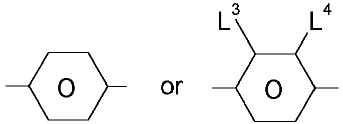
R¹ and R² each, independently of one another, denote alkyl having 1 to 12 C atoms, where, in addition, one or two non-adjacent CH₂ groups may be replaced by -O-, -CH=CH-, 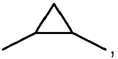 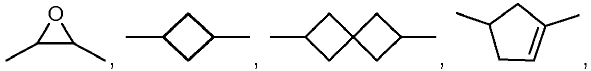 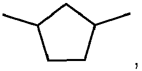 -C≡C-, -CO-, -O-CO- or -CO-O- in such a way that O atoms are not linked directly to one another,
Z^{x} denotes -CH=CH-, -CH₂O-, -OCH₂-, -CF₂O-, -OCF₂-, -O-, -CH₂-, -CH₂CH₂- or a single bond, preferably a single bond,
L¹⁻⁴ each, independently of one another, denote F, Cl, OCF₃, CF₃, CH₃, CH₂F, CHF₂.

11. The LC medium according to any one of Claims 1 to 10, **characterized in that** it comprises one or more compounds selected of the formulae CY9, CY10, PY9 and/or PY10 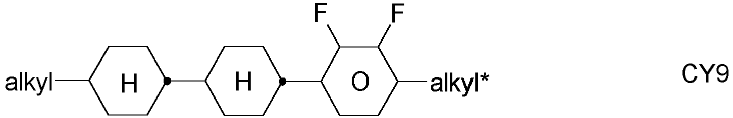 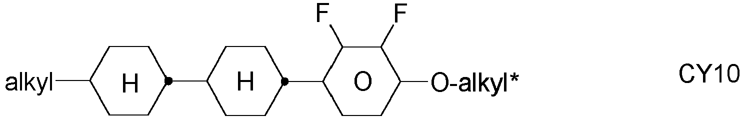 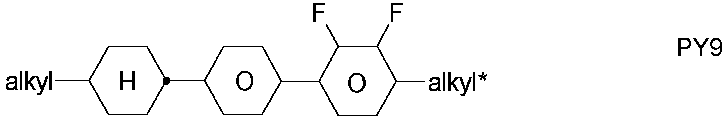 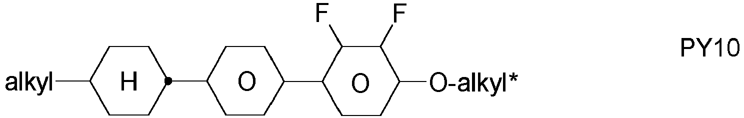 in which alkyl and alkyl* each, independently of one another, denote a straight-chain alkyl radical having 1-6 C atoms, cyclopentyl or cyclopropylmethyl.

12. The LC medium according to any one of Claims 1 to 11, **characterized in that** it comprises one or more compounds of the following formula: 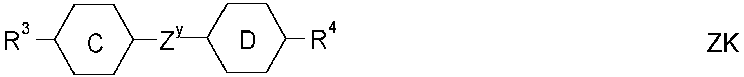 in which the individual radicals have the following meanings: 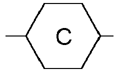 denotes 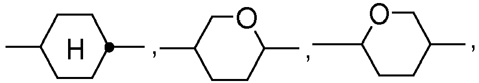 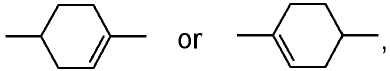 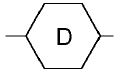 denotes 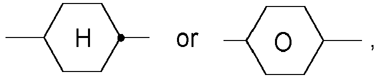
R³ and R⁴ each, independently of one another, denote alkyl having 1 to 12 C atoms, in which, in addition, one or two non-adjacent CH₂ groups may be replaced by -O-, -CH=CH-, -CO-, -O-CO-or -CO-O- in such a way that O atoms are not linked directly to one another,
Z^{y} denotes -CH₂CH₂-, -CH=CH-, -CF₂O-, -OCF₂-, -CH₂O-, -OCH₂-, -COO-, -OCO-, -C₂F₄-, -CF=CF- or a single bond.

13. The LC medium according to any one of Claims 1 to 12, **characterized in that** the polymerizable compounds of formula I, II and III are polymerised.

14. A process of preparing an LC medium of any one of Claims 1 to 13, comprising the steps of mixing a liquid-crystalline component B) as defined in Claim 1, with one or more compounds each of formula I, II and III as defined in one or more of Claims 1 to 6, and optionally with further liquid-crystalline compounds and/or additives.

15. An LC display comprising an LC medium as defined in any one of Claims 1 to 14.

16. The LC display of Claim 15, which is a PS-VA or polymer stabilised SA-VA display.

17. The LC display of any of Claims 15 to 16, **characterized in that** it comprises two substrates, at least one which is transparent to light, an electrode provided on each substrate or two electrodes provided on only one of the substrates, and located between the substrates a layer of an LC medium as defined in any one of Claims 1 to 15, wherein the polymerizable compounds are polymerised between the substrates of the display.

18. A process for the production of an LC display according to any of Claims 15 to 17, comprising the steps of providing an LC medium as defined in any one of Claims 1 to 14, between the substrates of the display, and polymerising the polymerizable compounds.

## Patentansprüche

1. Flüssigkristall(FK)-Medium enthaltend
- eine polymerisierbare Komponente A) enthaltend polymerisierbare Verbindungen,
von denen mindestens eine erste eine Verbindung der Formel I ist,
von denen mindestens eine zweite eine Verbindung der Formel II ist, und
mindestens eine dritte ein polymerisierbares Selbstorientierungsadditiv zur vertikalen Orientierung der Formel III ist,
und
- eine flüssigkristalline FK-Komponente B) enthaltend eine oder mehrere mesogene oder flüssigkristalline Verbindungen,
bei denen die Formeln definiert sind als: 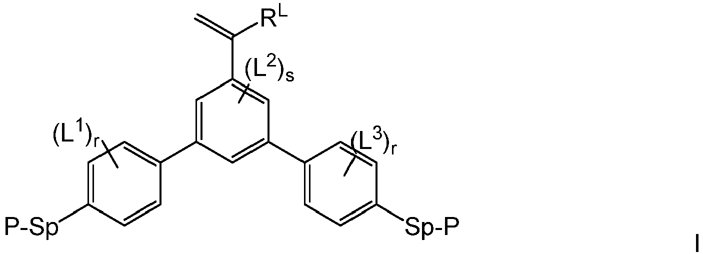 bei der die einzelnen Reste, unabhängig voneinander und bei jedem Auftreten gleich oder verschieden, die folgenden Bedeutungen besitzen
P eine polymerisierbare Gruppe,
Sp eine Spacergruppe oder eine Einfachbindung,
R^{L} -CH₃, -C₂H₅ oder -CH₂CH₂CH₃,
r ist unabhängig 0, 1 oder 2,
s ist 0 oder 1, und
L¹, L², L³ sind unabhängig F, Cl oder lineares, verzweigtes oder cyclisches Alkyl mit 1 bis 5 C-Atomen, bei dem eine oder mehrere nicht benachbarte CH₂-Gruppen gegebenenfalls so durch -O-, -S-, -CO-, -CO-O-, -O-CO- oder -O-CO-O- ersetzt sind, dass O- und/oder S-Atome nicht direkt miteinander verbunden sind, und bei dem gegebenenfalls ein oder mehrere H-Atome jeweils durch F oder Cl ersetzt sind, 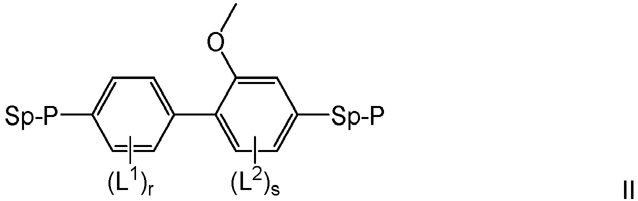
bei der die einzelnen Reste, unabhängig voneinander und bei jedem Auftreten gleich oder verschieden, die folgenden Bedeutungen besitzen
P eine polymerisierbare Gruppe,
Sp eine Spacergruppe oder eine Einfachbindung,
r ist unabhängig 0, 1 oder 2,
s ist 0 oder 1, und
L¹, L² sind unabhängig F, Cl oder lineares, verzweigtes oder cyclisches Alkyl mit 1 bis 5 C-Atomen, bei dem eine oder mehrere nicht benachbarte CH₂-Gruppen gegebenenfalls so durch -O-, -S-, -CO-, -CO-O-, -O-CO- oder -O-CO-O- ersetzt sind, dass O- und/oder S-Atome nicht direkt miteinander verbunden sind, und bei dem gegebenenfalls ein oder mehrere H-Atome jeweils durch F oder Cl ersetzt sind,
MES-R^{a} III
worin
MES eine kalamitische mesogene Gruppe ist, die zwei oder mehr Ringe enthält, die direkt oder indirekt miteinander verbunden sind oder die miteinander kondensiert sind, wobei die Ringe gegebenenfalls substituiert sind, und die gegebenenfalls zusätzlich durch eine oder mehrere polymerisierbare Gruppen substituiert ist, die mit MES direkt oder über einen Spacer verbunden sind, und
R^{a} eine polare Ankergruppe ist, die sich in einer endständigen Position der kalamitischen mesogenen Gruppe MES befindet, wobei die Gruppe R^{a} mindestens ein Kohlenstoffatom und mindestens eine aus -OH, -SH, -COOH, -CHO oder primärer oder sekundärer Aminfunktion ausgewählte Gruppe enthält, und die gegebenenfalls durch eine oder zwei polymerisierbare Gruppen substituiert ist, die mit R^{a} direkt oder über einen Spacer verbunden sind,
wobei mindestens einer von MES oder R^{a} durch mindestens eine polymerisierbare Gruppe direkt oder über einen Spacer substituiert ist.

2. FK-Medium nach Anspruch 1, bei dem die Verbindung der Formel I ausgewählt ist aus den folgenden Formeln 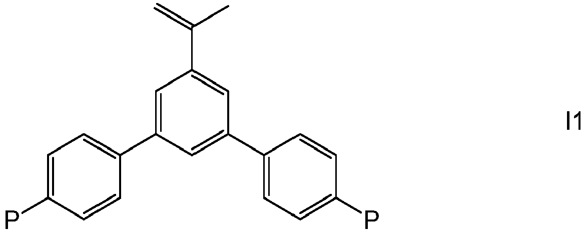 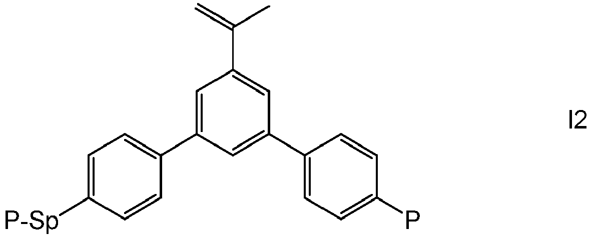 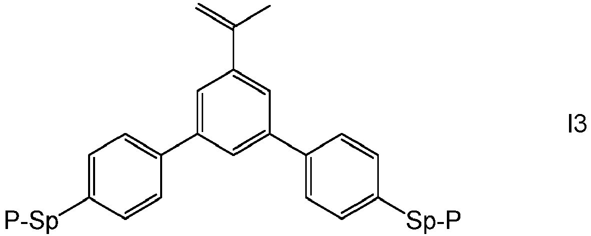 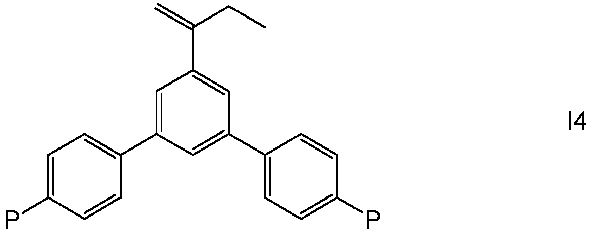 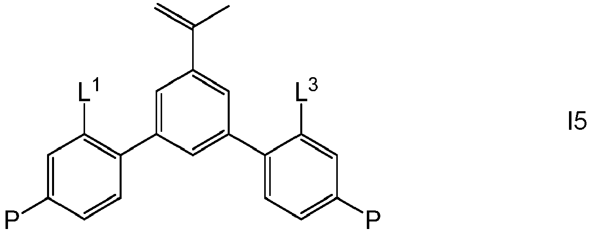 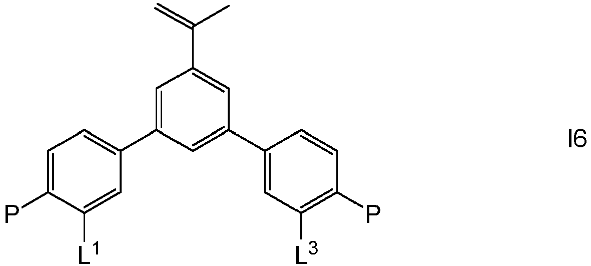 bei denen
P eine polymerisierbare Gruppe ist,
Sp eine Spacergruppe ist, und
L¹, L³ unabhängig wie für Formel I in Anspruch 1 definiert sind.

3. FK-Medium nach Anspruch 1 oder 2, **dadurch gekennzeichnet, dass** es zusätzlich zu den Verbindungen I, II und III eine oder mehrere weitere polymerisierbare Verbindungen enthält, die ausgewählt sind aus den folgenden Formeln 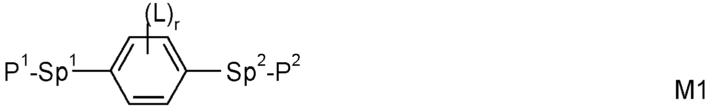 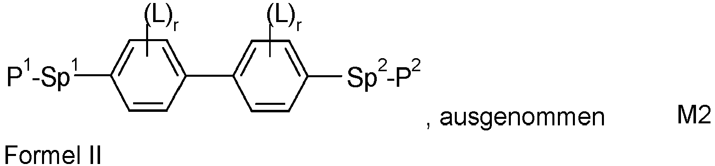 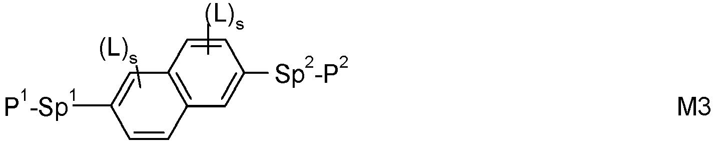 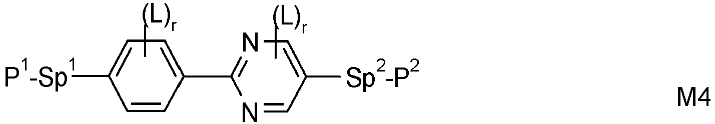 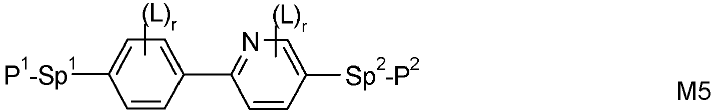 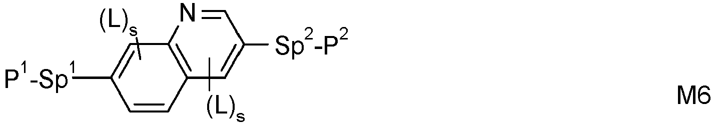 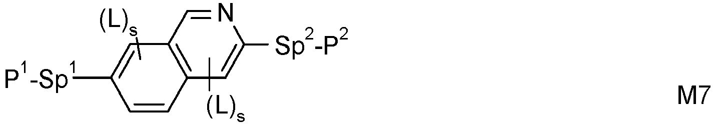 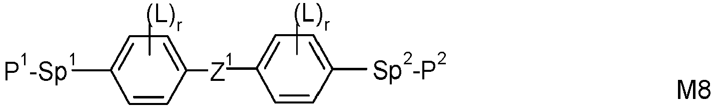 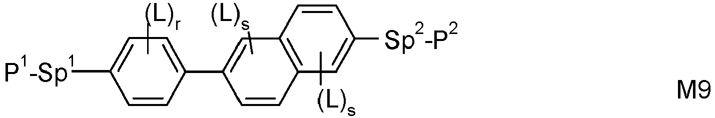 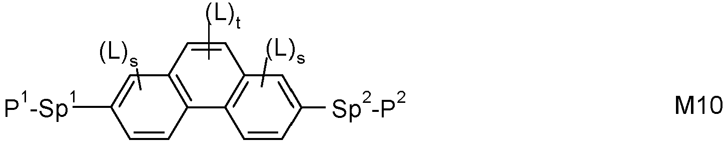 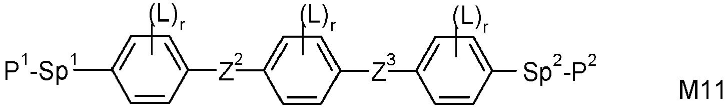 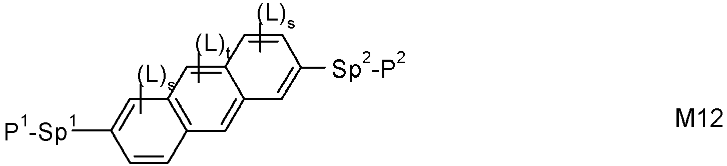 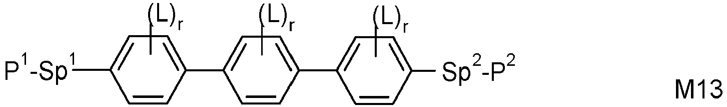 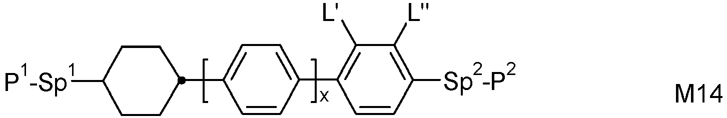 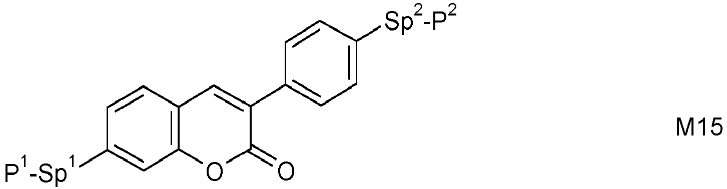 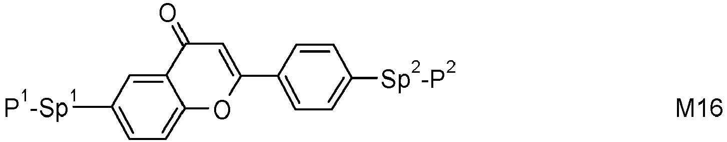 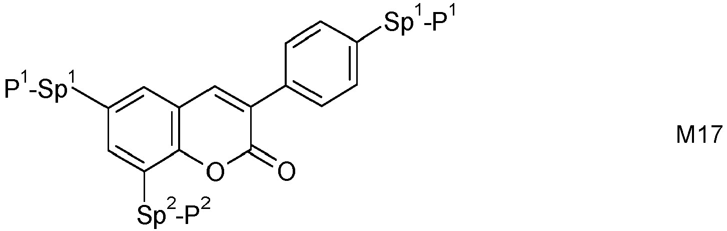 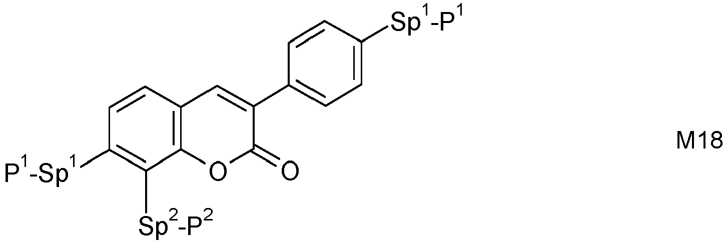 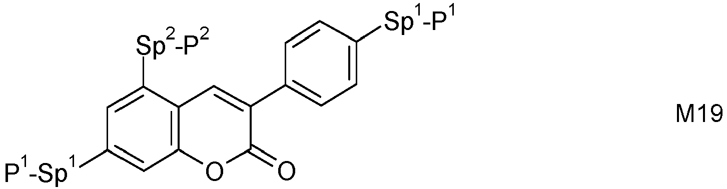 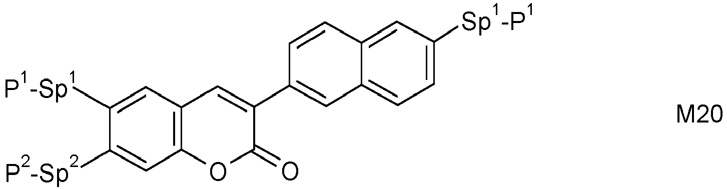 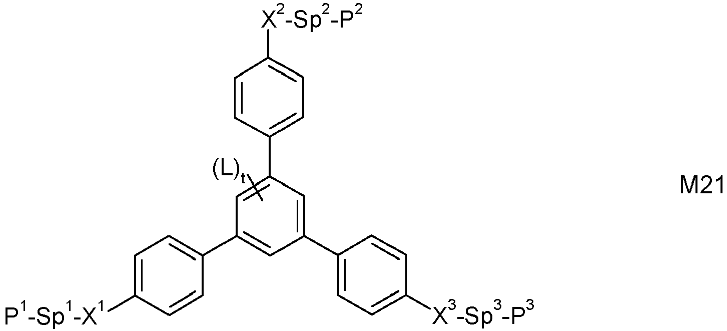 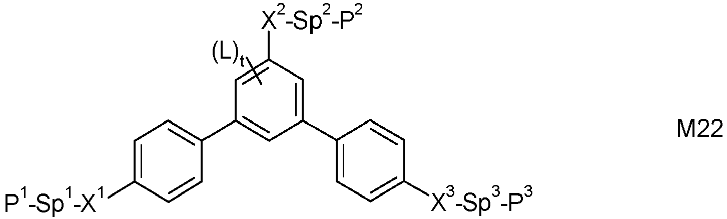 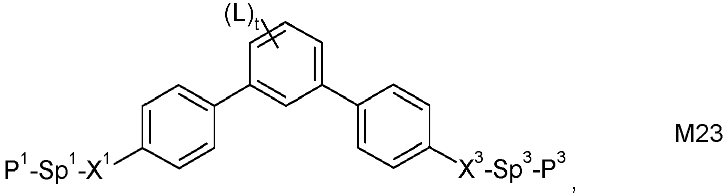 ausgenommen Formel I 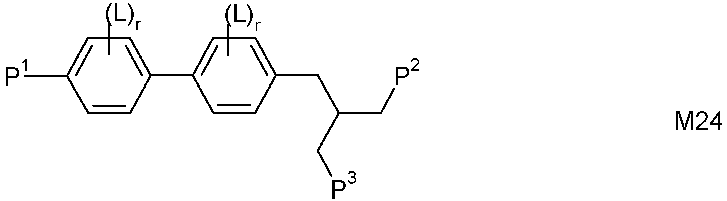 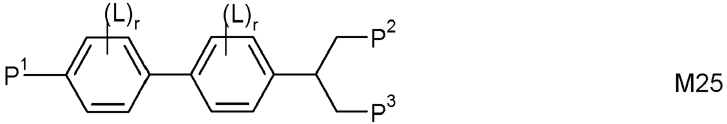 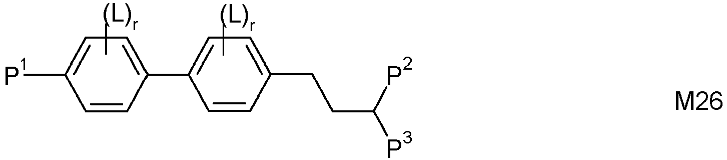 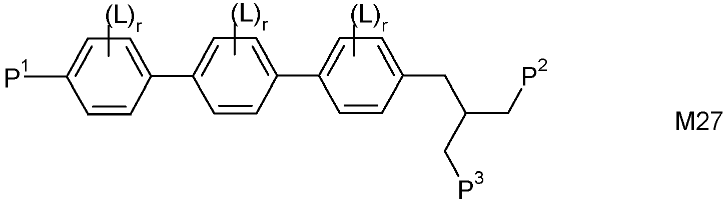 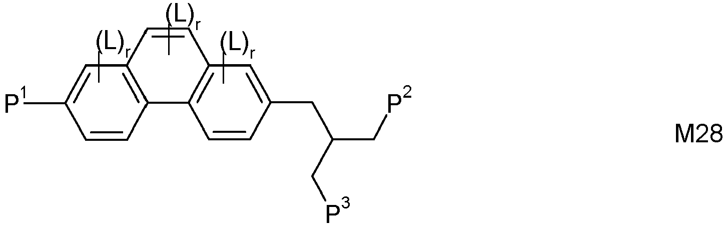 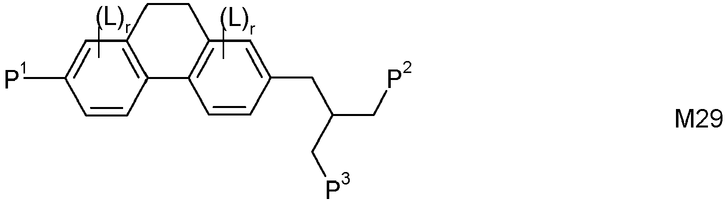 worin die einzelnen Reste die folgenden Bedeutungen besitzen:
P¹, P² und P³ bedeuten jeweils unabhängig voneinander eine Acrylat- oder Methacrylatgruppe,
Sp¹, Sp² und Sp³ bedeuten jeweils unabhängig voneinander eine Einfachbindung oder eine Spacergruppe mit einer der vor- und nachstehend für Sp angegebenen Bedeutungen und bedeuten besonders bevorzugt -(CH₂)ₚ₁-, -(CH₂)ₚ₁-O-, -(CH₂)ₚ₁-CO-O-, -(CH₂)ₚ₁-O-CO- oder -(CH₂)ₚ₁-O-CO-O-, worin p1 eine ganze Zahl von 1 bis 12 ist, wobei zusätzlich einer oder mehrere der Reste P¹-Sp¹-, P²-Sp²- und P³-Sp³- R^{aa} bedeuten können, mit der Maßgabe, dass mindestens einer der vorliegenden Reste P¹-Sp¹-, P²-Sp² und P³-Sp³- von R^{aa} verschieden ist,
R^{aa} bedeutet H, F, Cl, CN oder geradkettiges oder verzweigtes Alkyl mit 1 bis 25 C-Atomen, worin zusätzlich eine oder mehrere nicht benachbarte CH₂-Gruppen jeweils unabhängig voneinander so durch C(R⁰)=C(R⁰⁰)-, -C≡C-, -N(R⁰)-, -O-, -S-, -CO-, -CO-O-, -O-CO-, -O-CO-O- ersetzt sein können, dass O- und/oder S-Atome nicht direkt miteinander verknüpft sind, und worin zusätzlich ein oder mehrere H-Atome durch F, Cl, CN oder P¹-Sp¹- ersetzt sein können, besonders bevorzugt geradkettiges oder verzweigtes, gegebenenfalls ein- oder mehrfach fluoriertes Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen (wobei die Alkenyl- und Alkinylreste mindestens zwei C-Atome aufweisen und die verzweigten Reste mindestens drei C-Atome aufweisen),
R⁰, R⁰⁰ bedeuten jeweils unabhängig voneinander und gleich oder verschieden bei jedem Auftreten H oder Alkyl mit 1 bis 12 C-Atomen,
R^{y} und R^{z} bedeuten jeweils unabhängig voneinander H, F, CH₃ oder CF₃,
X¹, X² und X³ bedeuten jeweils unabhängig voneinander -CO-O-, -O-CO- oder eine Einfachbindung,
Z¹ bedeutet -O-, -CO-, -C(R^{y}R^{Z})- oder -CF₂CF₂-,
Z² und Z³ bedeuten jeweils unabhängig voneinander -CO-O-, -O-CO-, -CH₂O-, -OCH₂-, -CF₂O-, -OCF₂- oder -(CH₂)ₙ-, wobei n 2, 3 oder 4 ist,
L bedeutet bei jedem Auftreten gleich oder verschieden F, Cl, CN oder geradkettiges oder verzweigtes, gegebenenfalls ein- oder mehrfach fluoriertes Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen, vorzugsweise F,
L' und L" bedeuten jeweils unabhängig voneinander H, F oder Cl,
r bedeutet 0, 1, 2, 3 oder 4,
s bedeutet 0, 1, 2 oder 3,
t bedeutet 0, 1 oder 2,
x bedeutet 0 oder 1.

4. FK-Medium nach irgendeinem der Ansprüche 1 bis 3, bei dem P in Formel I, II und III eine Acrylat- oder Methacrylatgruppe bedeutet.

5. FK-Medium nach einem oder mehreren der Ansprüche 1 bis 4, bei dem das Selbstorientierungsadditiv zur vertikalen Orientierung die Formel IIIa
R¹-[A²-Z²]ₘ-A¹-R^{a} Illa
aufweist, worin
A¹, A² jeweils unabhängig voneinander eine aromatische, heteroaromatische, alicyclische oder heterocyclische Gruppe bedeuten, die auch anellierte Ringe enthalten kann und die auch ein- oder mehrfach durch eine Gruppe L oder -Sp-P substituiert sein kann,
L jeweils unabhängig voneinander H, F, Cl, Br, I, -CN, -NO₂, -NCS, -C(=O)N(R⁰)₂, -C(=O)R⁰, gegebenenfalls substituiertes Silyl, gegebenenfalls substituiertes Aryl oder Cycloalkyl mit 3 bis 20 C-Atomen oder geradkettiges oder verzweigtes Alkyl, Alkoxy, Alkylcarbonyl, Alkoxycarbonyl, Alkylcarbonyloxy oder Alkoxycarbonyloxy mit bis zu 25 C-Atomen bedeutet, worin zusätzlich ein oder mehrere H-Atome jeweils durch F oder Cl ersetzt sein können,
P eine polymerisierbare Gruppe bedeutet,
Sp eine Spacergruppe oder eine Einfachbindung bedeutet,
Z² jeweils unabhängig voneinander eine Einfachbindung, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-, -CH(-Sp-P)-, -CH₂CH-(-Sp-P)- oder -CH(-Sp-P)CH(-Sp-P)- bedeutet,
n1 1, 2, 3 oder 4 bedeutet,
m 1, 2, 3, 4 oder 5 bedeutet,
R⁰ jeweils unabhängig voneinander Alkyl mit 1 bis 12 C-Atomen bedeutet,
R⁰⁰ jeweils unabhängig voneinander H oder Alkyl mit 1 bis 12 C-Atomen bedeutet,
R¹ unabhängig voneinander H, Halogen, geradkettiges, verzweigtes oder cyclisches Alkyl mit 1 bis 25 C-Atomen, worin zusätzlich eine oder mehrere nicht benachbarte CH₂-Gruppen jeweils so durch 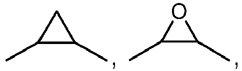 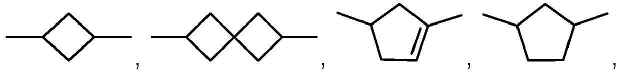 -C≡C-, CH=CH-, -O-, -S-, -CO-, -CO-O-, -O-CO- oder -O-CO-O- ersetzt sein können, dass O- und/oder S-Atome nicht direkt miteinander verknüpft sind, und worin zusätzlich ein oder mehrere H-Atome jeweils durch F oder Cl ersetzt sein können, oder eine Gruppe -Sp-P bedeutet,
und
R^{a} eine polare Ankergruppe wie in Anspruch 1 definiert bedeutet.

6. Flüssigkristallines Medium nach einem oder mehreren der Ansprüche 1 bis 5, bei dem das Selbstorientierungsadditiv eine Ankergruppe R^{a} aufweist, die ausgewählt ist aus den Formeln 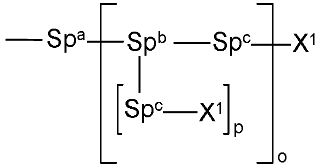 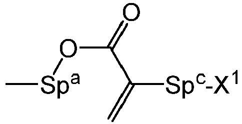 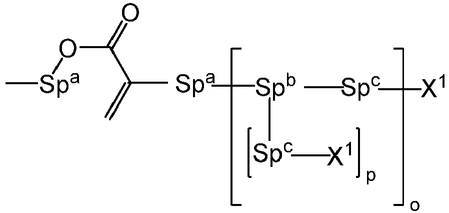 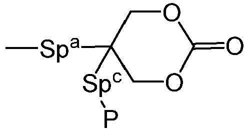 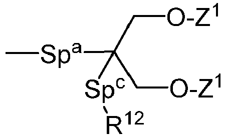 oder 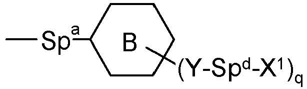 bei denen
p 1 oder 2 bedeutet,
q 2, 3 oder 4 bedeutet, wobei jede Gruppe die gleiche oder verschieden sein kann,
B ein substituiertes oder unsubstituiertes Ringsystem oder kondensiertes Ringsystem bedeutet,
Y unabhängig voneinander -O-, -S-, -C(O)-, -C(O)O-, -OC(O)-, -NR¹¹- oder eine Einfachbindung bedeutet,
∘ 0 oder 1 bedeutet,
X¹ unabhängig voneinander H, Alkyl, Fluoralkyl, OH, NH₂, NHR¹¹, NR¹¹₂, -PO(OR¹¹)₂, -SO₂R¹¹, -OR¹¹, C(O)OH, P oder -CHO bedeutet, wobei mindestens eine Gruppe X¹ einen aus -OH, -NH₂, NHR¹¹, -PO(OR¹¹)₂, -SO₂R¹¹, C(O)OH und -CHO ausgewählten Rest bedeutet,
Z¹ unabhängig voneinander -(CO)-CH₂(CO)OCH₃, -(CO)-CH₂(CO)-(C=CH₂)-OCH₃, -(CO)-CH₂(CO)-(CH=CH)-OCH₃, -(CO)-(CO)OCH₃, -CH₂-(CO)-(CO)OCH₃, -(CO)-CH₃, -(CO)-CH₂(CO)-(CH₂CH₂)-OCH₃ bedeutet,
P eine polymerisierbare Gruppe bedeutet,
R¹¹ Alkyl mit 1 bis 12 C-Atomen bedeutet,
R¹² H, Alkyl mit 1 bis 12 C-Atomen, P oder X¹ bedeutet,
Sp^{a}, Sp^{c}, Sp^{d} jeweils unabhängig voneinander eine Spacergruppe oder eine Einfachbindung bedeuten, und
Sp^{b} eine drei- oder vierwertige Gruppe bedeutet.

7. Flüssigkristallines Medium nach einem oder mehreren der Ansprüche 1 bis 6, bei dem das Selbstorientierungsadditiv zur vertikalen Orientierung ausgewählt ist aus den Verbindungen der Formeln III-A bis III-D, 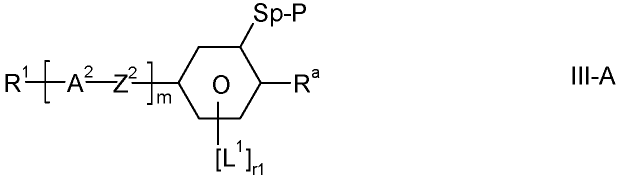 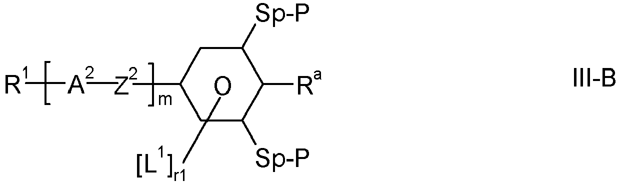 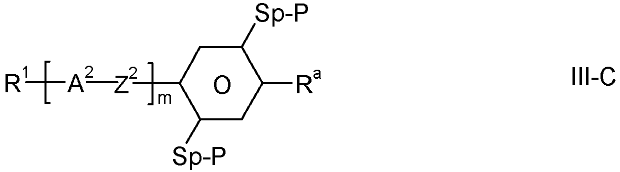 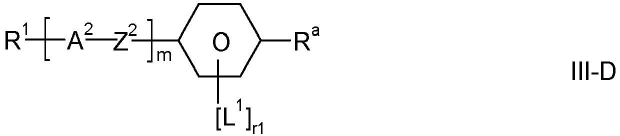 worin R¹, R^{a}, A², Z², Sp, P die wie für Formel IIIa in Anspruch 5 definierten Bedeutungen besitzen,
L¹ wie L in Anspruch 3 definiert ist,
m 1, 2, 3 oder 4 ist,
und r1 0, 1, 2, 3 oder 4 ist.

8. FK-Medium nach irgendeinem der Ansprüche 1 bis 7, **dadurch gekennzeichnet, dass** die eine oder mehreren Verbindungen der Formel II ausgewählt sind aus den Formeln 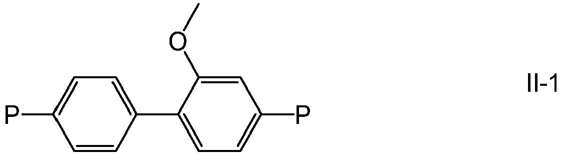 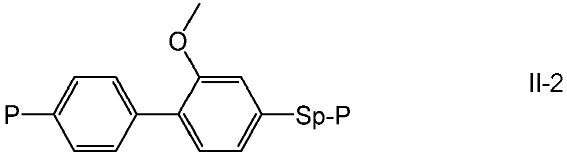 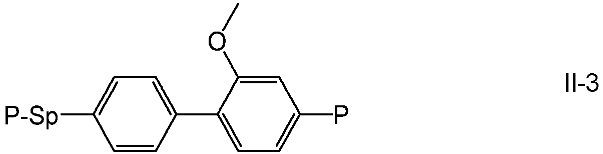 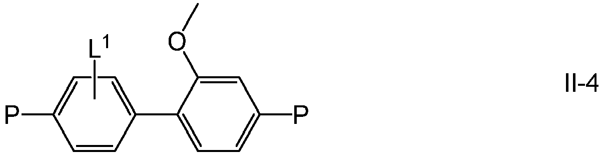 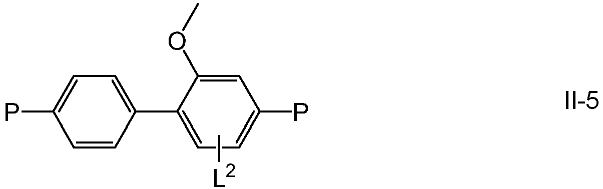
bei denen P und L¹ wie in Formel II des Anspruchs 1 definiert sind, und
Sp eine Spacergruppe ist.

9. FK-Medium nach irgendeinem der Ansprüche 1 bis 8, **dadurch gekennzeichnet, dass** es zusätzlich eine polymerisierbare Verbindung enthält, die ausgewählt ist aus den folgenden Strukturen

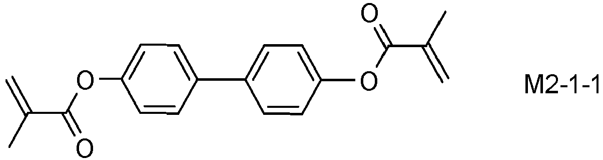

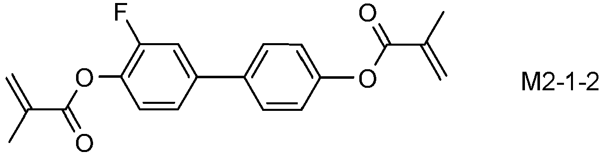

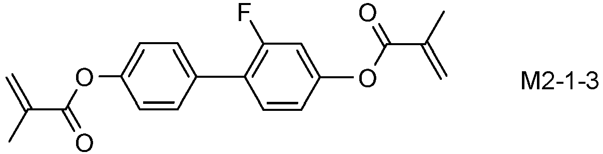

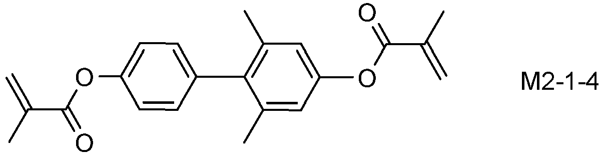

10. FK-Medium nach irgendeinem der Ansprüche 1 bis 9, **dadurch gekennzeichnet, dass** es eine oder mehrere Verbindungen der Formeln CY und/oder PY enthält: 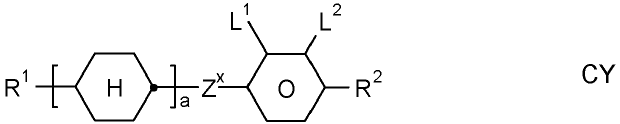 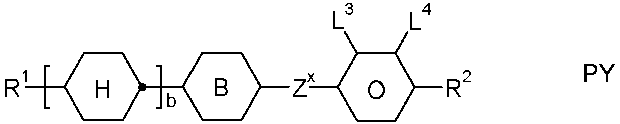 worin die einzelnen Reste die folgenden Bedeutungen besitzen:
a bedeutet 1 oder 2,
b bedeutet 0 oder 1, 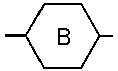 bedeutet 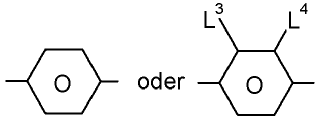
R¹ und R² bedeuten jeweils unabhängig voneinander Alkyl mit 1 bis 12 C-Atomen, wobei zusätzlich eine oder zwei nicht benachbarte CH₂-Gruppen so durch -O-, -CH=CH-, 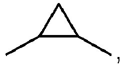 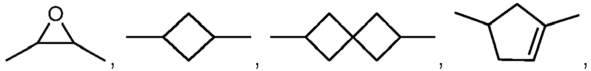 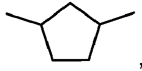 -C≡C-, -CO-, -O-CO- oder -CO-O- ersetzt sein können, dass O-Atome nicht direkt miteinander verknüpft sind,
Z^{x} bedeutet -CH=CH-, -CH₂O-, -OCH₂-, -CF₂O-, -OCF₂-, -O-, -CH₂-, -CH₂CH₂- oder eine Einfachbindung, vorzugsweise eine Einfachbindung,
L¹⁻⁴ bedeuten jeweils unabhängig voneinander F, Cl, OCF₃, CF₃, CH₃, CH₂F, CHF₂.

11. FK-Medium nach irgendeinem der Ansprüche 1 bis 10, **dadurch gekennzeichnet, dass** es eine oder mehrere Verbindungen enthält, die ausgewählt sind aus den Formeln CY9, CY10, PY9 und/oder PY10 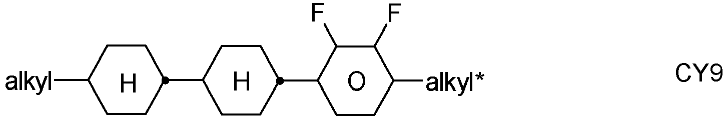 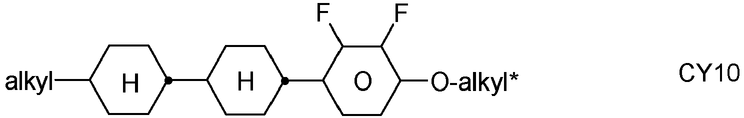 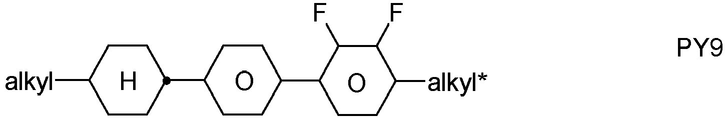 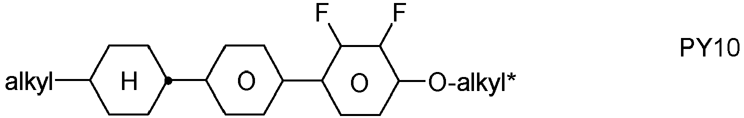 worin alkyl und alkyl* jeweils unabhängig voneinander einen geradkettigen Alkylrest mit 1-6 C-Atomen, Cyclopentyl oder Cyclopropylmethyl bedeuten.

12. FK-Medium nach irgendeinem der Ansprüche 1 bis 11, **dadurch gekennzeichnet, dass** es eine oder mehrere Verbindungen der folgenden Formel enthält: 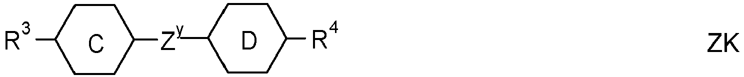 worin die einzelnen Reste die folgenden Bedeutungen besitzen: 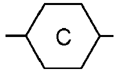 bedeutet 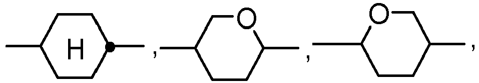 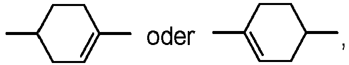 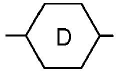 bedeutet 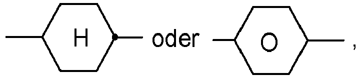
R³ und R⁴ bedeuten jeweils unabhängig voneinander Alkyl mit 1 bis 12 C-Atomen, worin zusätzlich eine oder zwei nicht benachbarte CH₂-Gruppen so durch -O-, -CH=CH-, -CO-, -O-CO- oder -CO-O- ersetzt sein können, dass O-Atome nicht direkt miteinander verknüpft sind,
Z^{y} bedeutet -CH₂CH₂-, -CH=CH-, -CF₂O-, -OCF₂-, -CH₂O-, -OCH₂-, -COO-, -OCO-, -C₂F₄-, -CF=CF- oder eine Einfachbindung.

13. FK-Medium nach irgendeinem der Ansprüche 1 bis 12, **dadurch gekennzeichnet, dass** die polymerisierbaren Verbindungen der Formel I, II und III polymerisiert werden.

14. Verfahren zur Herstellung eines FK-Mediums irgendeines der Ansprüche 1 bis 13, umfassend die Schritte Mischen einer flüssigkristallinen Komponente B) wie in Anspruch 1 definiert mit jeweils einer oder mehreren Verbindungen der Formel I, II und III wie in einem oder mehreren der Ansprüche 1 bis 6 definiert und gegebenenfalls mit weiteren flüssigkristallinen Verbindungen und/oder Zusatzstoffen.

15. FK-Anzeige enthaltend ein FK-Medium wie in irgendeinem der Ansprüche 1 bis 14 definiert.

16. FK-Anzeige des Anspruchs 15, bei der es sich um eine PS-VA- oder polymerstabilisierte SA-VA-Anzeige handelt.

17. FK-Anzeige beliebiger der Ansprüche 15 bis 16, **dadurch gekennzeichnet, dass** sie zwei Substrate, von denen mindestens eines lichtdurchlässig ist, eine auf jedem Substrat vorgesehene Elektrode oder zwei auf nur einem der Substrate vorgesehene Elektroden und zwischen den Substraten angeordnet eine Schicht eines FK-Mediums wie in irgendeinem der Ansprüche 1 bis 14 definiert enthält, bei der die polymerisierbaren Verbindungen zwischen den Substraten der Anzeige polymerisiert werden.

18. Verfahren zur Herstellung einer FK-Anzeige nach beliebigen der Ansprüche 15 bis 17, umfassend die Schritte des Bereitstellens eines FK-Mediums wie in irgendeinem der Ansprüche 1 bis 14 definiert zwischen den Substraten der Anzeige und Polymerisieren der polymerisierbaren Verbindungen.

## Revendications

1. Milieu cristallin liquide (LC), comprenant
- un composant polymérisable A) comprenant des composés polymérisables,
au moins un premier d'entre eux étant un composé de formule I,
au moins un deuxième d'entre eux étant un composé de formule II, et
au moins un troisième d'entre eux étant un additif d'auto-alignement polymérisable pour un alignement vertical de formule III
et
- un composant LC cristallin liquide B) comprenant un ou plusieurs composés mésogènes ou cristallins liquides,
dans lequel les formules sont définies comme : 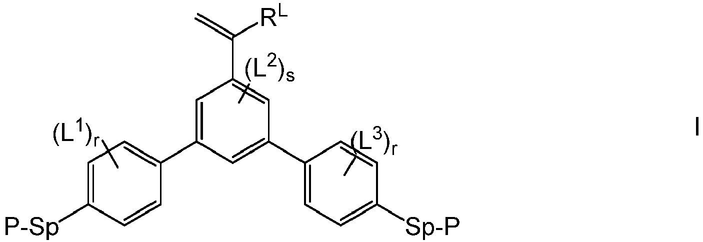 où les radicaux individuels, indépendamment les uns des autres et à chaque occurrence de manière identique ou différente, revêtent les significations suivantes
P un groupement polymérisable,
Sp un groupement espaceur ou une liaison simple,
R^{L} -CH₃, -C₂H₅ ou -CH₂CH₂CH₃,
r vaut indépendamment 0, 1 ou 2,
s vaut 0 ou 1, et
L¹, L², L³ sont indépendamment F, Cl ou alkyle linéaire, ramifié ou cyclique ayant de 1 à 5 atomes de C, où un ou plusieurs groupements CH₂ non adjacents sont éventuellement remplacés par -O-, -S-, -CO-, -CO-O-, -O-CO- ou -O-CO-O- de telle sorte que les atomes de O et/ou S ne soient pas liés directement les uns aux autres, et où un ou plusieurs atomes de H sont chacun éventuellement remplacés par F ou Cl, 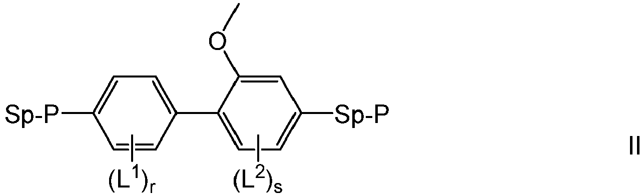
où les radicaux individuels, indépendamment les uns des autres et à chaque occurrence de manière identique ou différente, revêtent les significations suivantes
P un groupement polymérisable,
Sp un groupement espaceur ou une liaison simple,
r vaut indépendamment 0, 1 ou 2,
s vaut 0 ou 1, et
L¹, L² sont indépendamment F, Cl ou alkyle linéaire, ramifié ou cyclique ayant de 1 à 5 atomes de C, où un ou plusieurs groupements CH₂ non adjacents sont éventuellement remplacés par -O-, -S-, -CO-, -CO-O-, -O-CO- ou -O-CO-O- de telle sorte que les atomes de O et/ou S ne soient pas liés directement les uns aux autres, et où un ou plusieurs atomes de H sont chacun éventuellement remplacés par F ou Cl,
MES-R^{a} III
où
MES est un groupement mésogène calamitique comprenant deux, ou plus, cycles, qui sont reliés directement ou indirectement les uns aux autres ou qui sont condensés les uns sur les autres, lesquels cycles étant éventuellement substitués, et qui est éventuellement substitué en outre par un ou plusieurs groupements polymérisables, qui sont reliés au MES directement ou via un espaceur, et
R^{a} est un groupement d'ancrage polaire, se trouvant au niveau d'une position terminale du groupement mésogène calamitique MES, lequel groupement R^{a} comprend au moins un atome de carbone et au moins un groupement choisi parmi -OH, -SH, -COOH, -CHO ou une fonction amine primaire ou secondaire et qui est éventuellement substitué par un ou deux groupements polymérisables, qui sont reliés à R^{a} directement ou via un espaceur,
où au moins l'un parmi MES ou R^{a} est substitué par au moins un groupement polymérisable directement ou via un espaceur.

2. Milieu LC selon la revendication 1, dans lequel le composé de formule I est choisi parmi les formules suivantes 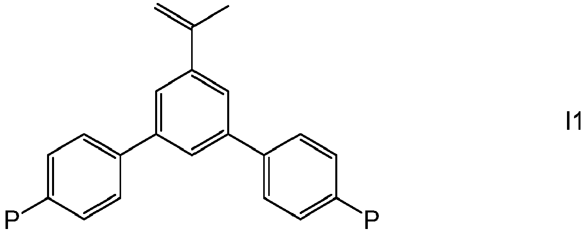 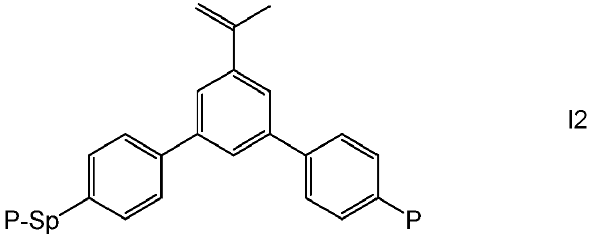 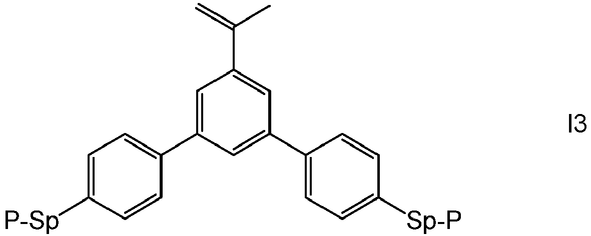 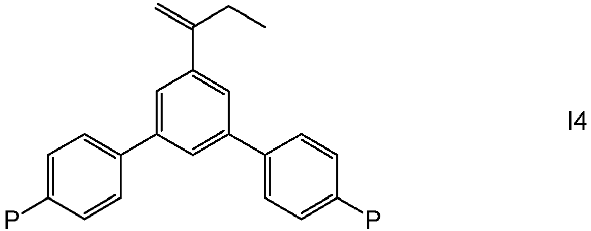 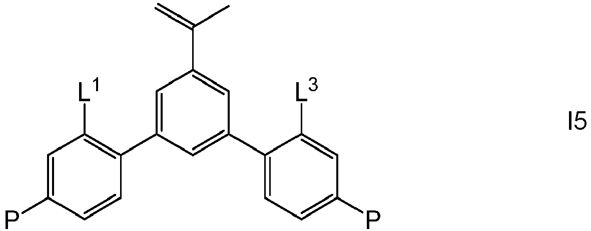 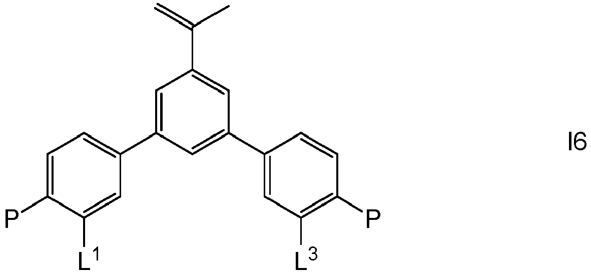 dans lesquelles
P est un groupement polymérisable,
Sp est un groupement espaceur, et
L¹, L³ sont indépendamment définis tel que pour la formule I selon la revendication 1.

3. Milieu LC selon la revendication 1 ou 2, **caractérisé en ce qu'**il comprend, outre les composés de formule I, II et IIII, un ou plusieurs autres composés polymérisables choisis parmi les formules suivantes 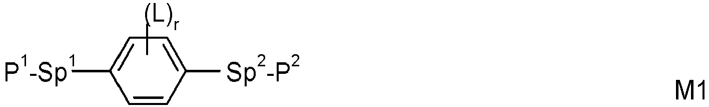 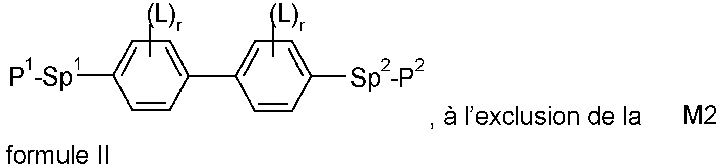 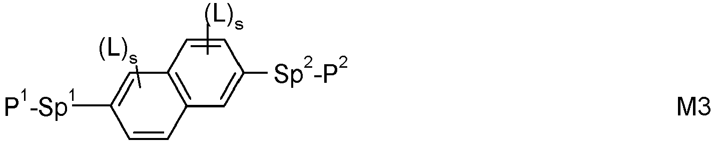 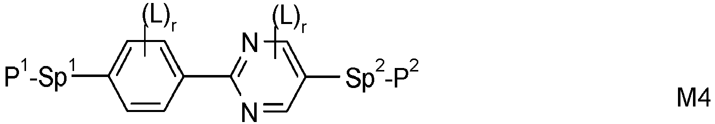 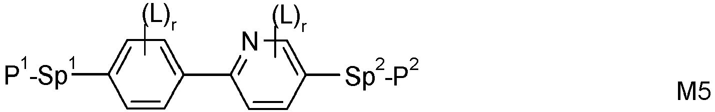 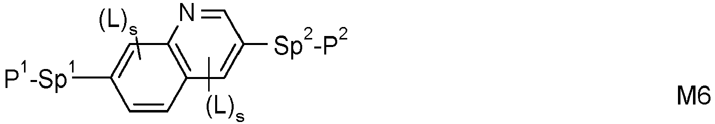 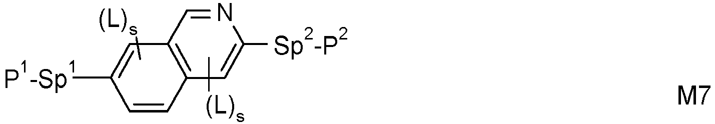 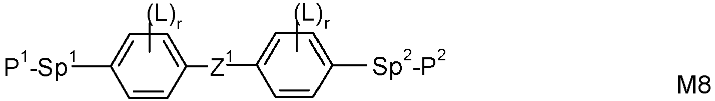 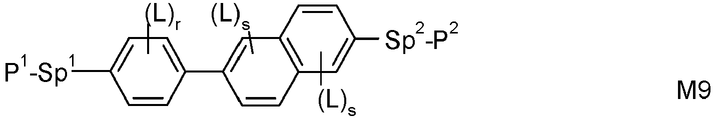 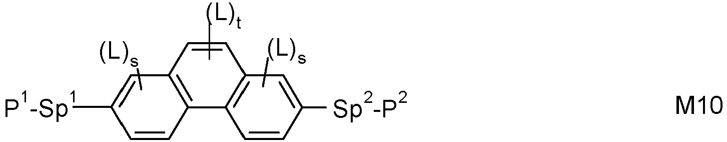 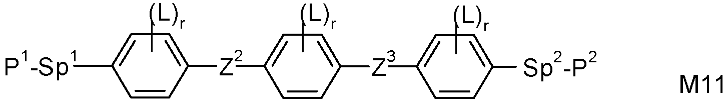 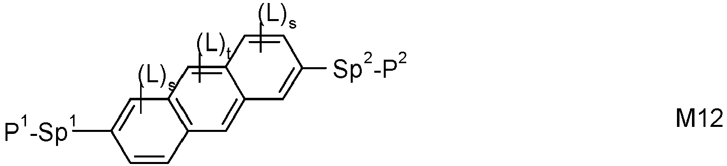 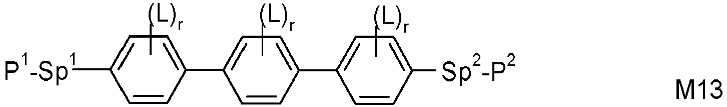 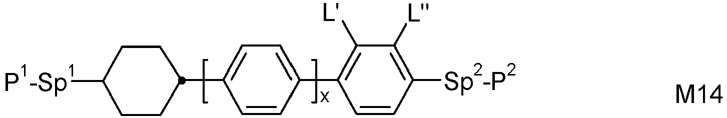 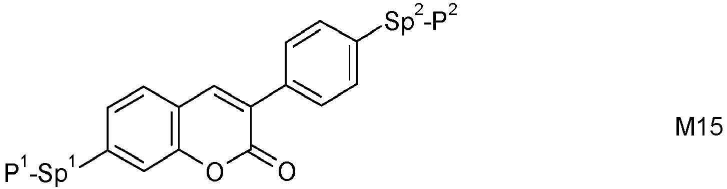 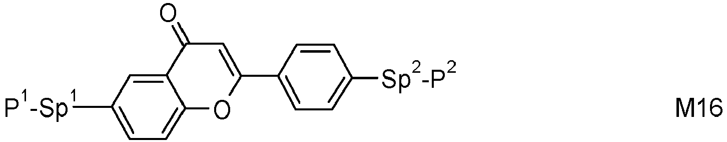 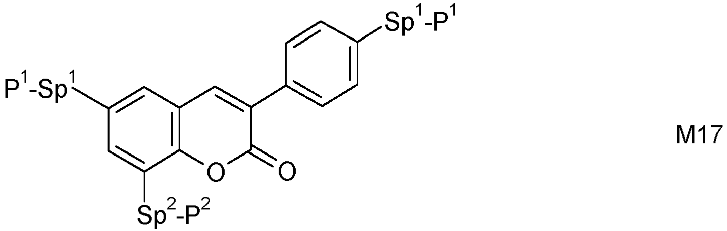 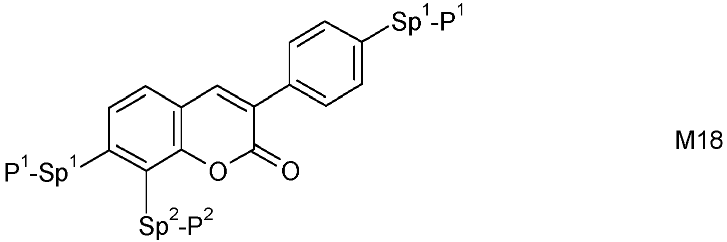 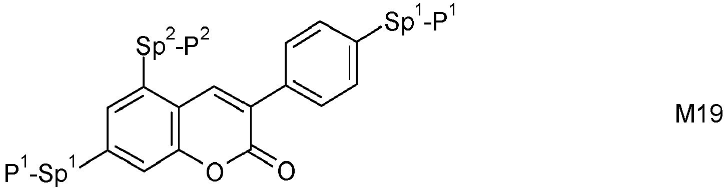 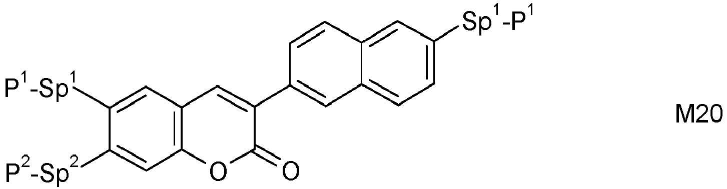 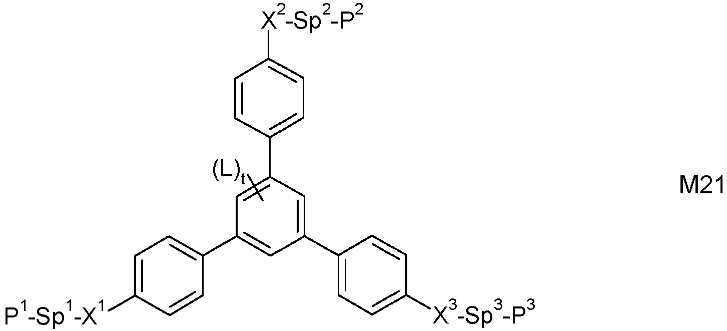 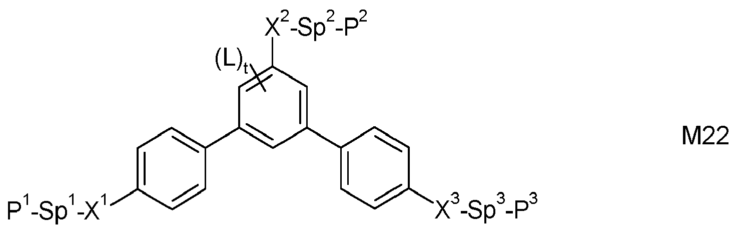 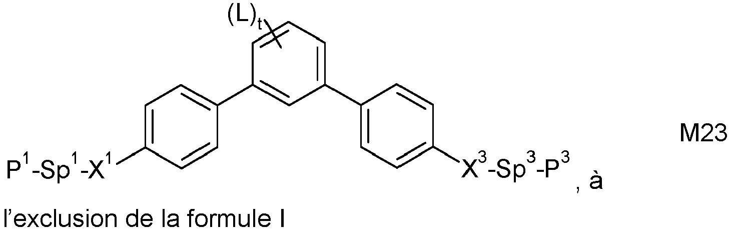 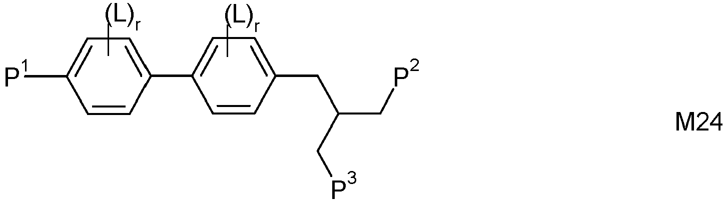 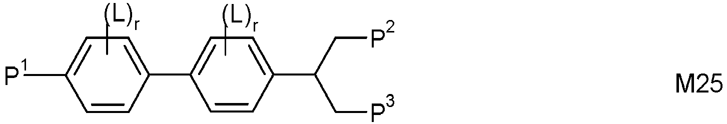 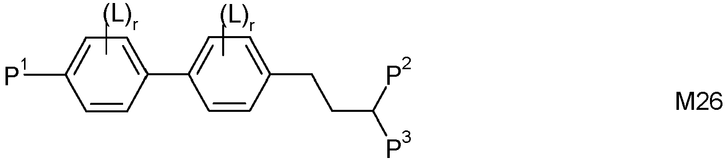 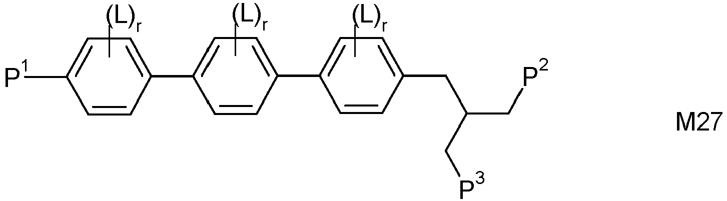 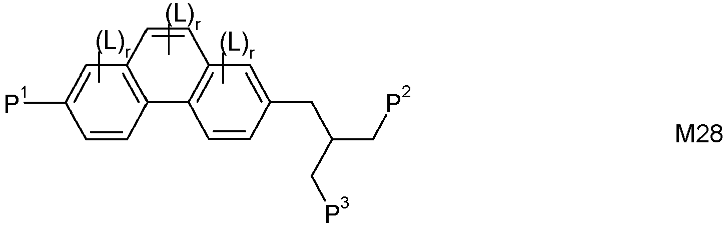 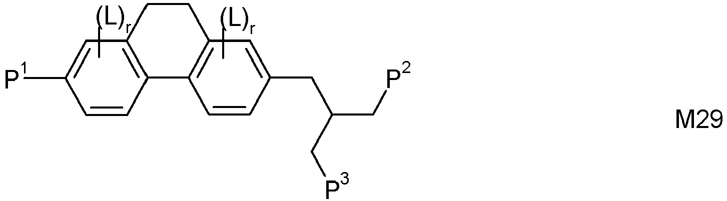 dans lesquelles les radicaux individuels revêtent les significations suivantes:
P¹, P² et P³ désignent chacun, indépendamment les uns des autres, un groupement acrylate ou méthacrylate,
Sp¹, Sp² et Sp³ désignent chacun, indépendamment les uns des autres, une liaison simple ou un groupement espaceur revêtant l'une des significations indiquées ci-dessus et ci-après pour Sp, et particulièrement préférablement désignent -(CH₂)ₚ₁-, -(CH₂)ₚ₁-O-, -(CH₂)ₚ₁-CO-O-, -(CH₂)ₚ₁-O-CO- ou -(CH₂)ₚ₁-O-CO-O-, où p1 est un nombre entier allant de 1 à 12, où, de plus, un ou plusieurs parmi les radicaux P¹-Sp¹-, P²-Sp²- et P³-Sp³- peuvent désigner R^{aa}, à condition qu'au moins l'un parmi les radicaux P¹-Sp¹-, P²-Sp² et P³-Sp³- présents soit différent de R^{aa},
R^{aa} désigne H, F, Cl, CN ou alkyle à chaîne linéaire ou ramifiée ayant de 1 à 25 atomes de C, où, de plus, un ou plusieurs groupements CH₂ non adjacents peuvent chacun être remplacés, indépendamment les uns des autres, par C(R⁰)=C(R⁰⁰)-, -C≡C-, -N(R⁰)-, -O-, -S-, -CO-, -CO-O-, -O-CO-, -O-CO-O- de telle sorte que les atomes de O et/ou S ne soient pas liés directement les uns aux autres, et où, de plus, un ou plusieurs atomes de H peuvent être remplacés par F, Cl, CN ou P¹-Sp¹-, particulièrement préférablement alkyle, alcoxy, alcényle, alcynyle, alkylcarbonyle, alcoxycarbonyle, alkylcarbonyloxy ou alcoxycarbonyloxy à chaîne linéaire ou ramifiée, éventuellement mono- ou polyfluoré ayant de 1 à 12 atomes de C (où les radicaux alcényle et alcynyle possèdent au moins deux atomes de C et les radicaux ramifiés possèdent au moins trois atomes de C),
R⁰, R⁰⁰ désignent chacun, indépendamment l'un de l'autre et de manière identique ou différente à chaque occurrence, H ou alkyle ayant de 1 à 12 atomes de C,
R^{y} et R^{z} désignent chacun, indépendamment l'un de l'autre, H, F, CH₃ ou CF₃,
X¹, X² et X³ désignent chacun, indépendamment les uns des autres, -CO-O-, -O-CO- ou une liaison simple,
Z¹ désigne -O-, -CO-, -C(R^{y}R^{z})- ou -CF₂CF₂-,
Z² et Z³ désignent chacun, indépendamment l'un de l'autre, -CO-O-, -O-CO-, -CH₂O-, -OCH₂-, -CF₂O-, -OCF₂- ou -(CH₂)ₙ-, où n vaut 2, 3 ou 4,
L désigne à chaque occurrence, de manière identique ou différente, F, Cl, CN ou alkyle, alcoxy, alcényle, alcynyle, alkylcarbonyle, alcoxycarbonyle, alkylcarbonyloxy ou alcoxycarbonyloxy à chaîne linéaire ou ramifiée, éventuellement mono- ou polyfluoré ayant de 1 à 12 atomes de C, préférablement F,
L' et L" désignent chacun, indépendamment l'un de l'autre, H, F ou Cl,
r désigne 0, 1, 2, 3 ou 4,
s désigne 0, 1, 2 ou 3,
t désigne 0, 1 ou 2,
x désigne 0 ou 1.

4. Milieu LC selon l'une quelconque des revendications 1 à 3, dans lequel, dans la formule I, II et III, P désigne un groupement acrylate ou méthacrylate.

5. Milieu LC selon l'une ou plusieurs parmi les revendications 1 à 4, dans lequel ledit additif d'auto-alignement pour un alignement vertical répond à la formule IIIa
R¹-[A²-Z²]ₘ-A¹-R^{a} IIIa
dans laquelle
A¹, A² désignent chacun, indépendamment l'un de l'autre, un groupement aromatique, hétéroaromatique, alicyclique ou hétérocyclique, qui peut également contenir des cycles condensés, et qui peut également être mono- ou poly-substitué par un groupement L ou -Sp-P,
L dans chaque cas, indépendamment les uns des autres, désigne H, F, Cl, Br, I, -CN, -NO₂, -NCS, -C(=O)N(R⁰)₂, -C(=O)R⁰, silyle éventuellement substitué, aryle ou cyclo-alkyle éventuellement substitué ayant de 3 à 20 atomes de C, ou alkyle, alcoxy, alkylcarbonyle, alcoxycarbonyle, alkylcarbonyloxy ou alcoxycarbonyloxy à chaîne linéaire ou ramifiée ayant jusqu'à 25 atomes de C, où, de plus, un ou plusieurs atomes de H peuvent chacun être remplacés par F ou Cl,
P désigne un groupement polymérisable,
Sp désigne un groupement espaceur ou une liaison simple,
Z² dans chaque cas, indépendamment les uns des autres, désigne une liaison simple, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁-, -CF₂CH₂-, -CH₂CF₂-, -(CF₂)ₙ₁-, -CH=CH-, -CF=CF-, -C≡C-, -CH=CH-COO-, -OCO-CH=CH-, -(CR⁰R⁰⁰)ₙ₁-, -CH(-Sp-P)-, -CH₂CH-(-Sp-P)-, ou -CH(-Sp-P)CH(-Sp-P)-,
n1 désigne 1, 2, 3 ou 4,
m désigne 1, 2, 3, 4 ou 5,
R⁰ dans chaque cas, indépendamment les uns des autres, désigne alkyle ayant de 1 à 12 atomes de C,
R⁰⁰ dans chaque cas, indépendamment les uns des autres, désigne H ou alkyle ayant de 1 à 12 atomes de C,
R¹ indépendamment les uns des autres, désigne H, halogène, alkyle à chaîne linéaire, ramifiée ou cyclique ayant de 1 à 25 atomes de C, où, de plus, un ou plusieurs groupements CH₂ non adjacents peuvent chacun être remplacés par 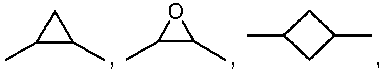 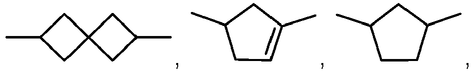 -C≡C-, CH=CH-, -O-, -S-, -CO-, -CO-O-, -O-CO-, ou -O-CO-O- de telle sorte que les atomes de O et/ou S ne soient pas liés directement les uns aux autres et où, de plus, un ou plusieurs atomes de H peuvent chacun être remplacés par F ou Cl, ou un groupement -Sp-P,
et R^{a} désigne un groupement d'ancrage polaire tel que défini selon la revendication 1.

6. Milieu cristallin liquide selon l'une ou plusieurs parmi les revendications 1 à 5, dans lequel ledit additif d'auto-alignement possède un groupement d'ancrage R^{a} qui est choisi parmi les formules 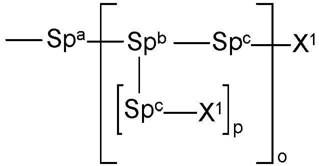 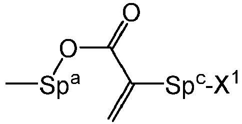 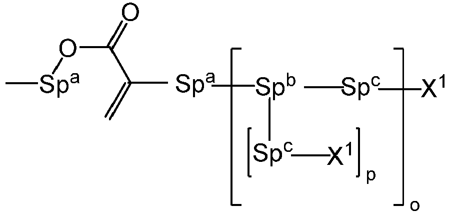 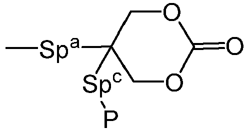 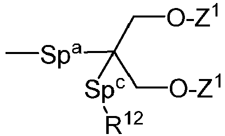 ou 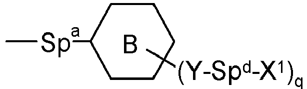 dans lesquelles
p désigne 1 ou 2,
q désigne 2, 3 ou 4, où chaque groupement peut être identique ou différent,
B désigne un noyau substitué ou non substitué ou un noyau condensé,
Y indépendamment les uns des autres, désigne -O-, -S-, -C(O)-, -C(O)O-, -OC(O)-, -NR¹¹- ou une liaison simple,
o désigne 0 ou 1,
X¹ indépendamment les uns des autres, désigne H, alkyle, fluoroalkyle, OH, NH₂, NHR¹¹, NR¹¹₂, -PO(OR¹¹)₂, -SO₂R¹¹, -OR¹¹, C(O)OH, P ou -CHO, où au moins un groupement X¹ désigne un radical choisi parmi -OH, -NH₂, NHR¹¹, -PO(OR¹¹)₂, -SO₂R¹¹, C(O)OH et -CHO,
Z¹ indépendamment les uns des autres, désigne -(CO)-CH₂(CO)OCH₃, -(CO)-CH₂(CO)-(C=CH₂)-OCH₃, -(CO)-CH₂(CO)-(CH=CH)-OCH₃, -(CO)-(CO)OCH₃, -CH₂-(CO)-(CO)OCH₃, -(CO)-CH₃, -(CO)-CH₂(CO)-(CH₂CH₂)-OCH₃,
P désigne un groupement polymérisable,
R¹¹ désigne alkyle ayant de 1 à 12 atomes de C,
R¹² désigne H, alkyle ayant de 1 à 12 atomes de C, P ou X¹,
Sp^{a}, Sp^{c}, Sp^{d} désignent chacun, indépendamment les uns des autres, un groupement espaceur ou une liaison simple, et
Sp^{b} désigne un groupement tri- ou tétravalent.

7. Milieu cristallin liquide selon l'une ou plusieurs parmi les revendications 1 à 6, dans lequel ledit additif d'auto-alignement pour un alignement vertical est choisi parmi les composés de formules III-A à III-D, 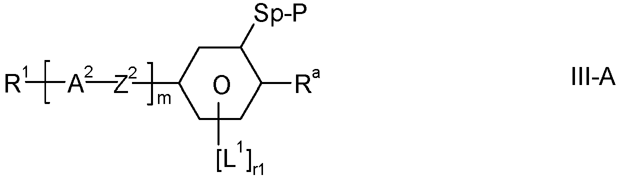 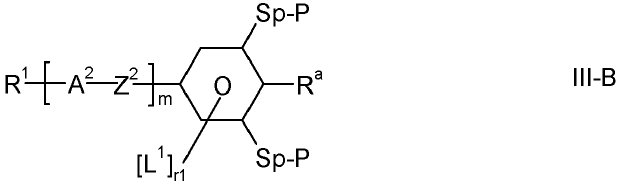 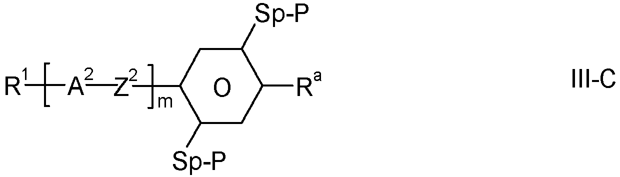 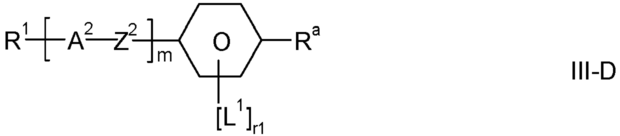 dans lesquelles R¹, R^{a}, A², Z², Sp, P revêtent les significations telles que définies pour la formule IIIa selon la revendication 5,
L' est défini tel que L selon la revendication 3,
m vaut 1, 2, 3 ou 4,
et r1 vaut 0, 1, 2, 3 ou 4.

8. Milieu LC selon l'une quelconque des revendications 1 à 7, **caractérisé en ce que** les un ou plusieurs composés de formule II sont choisis parmi les formules 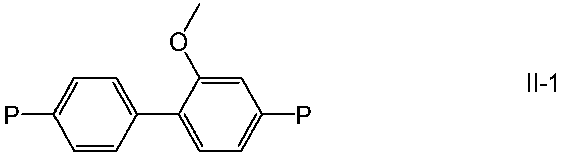 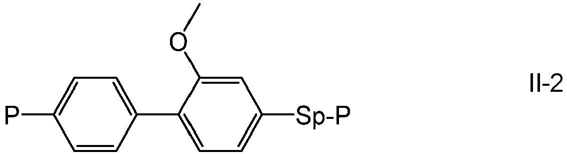 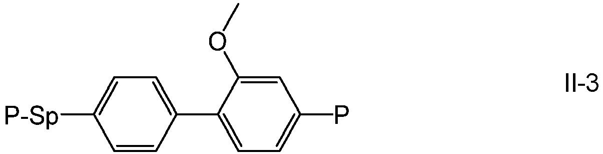 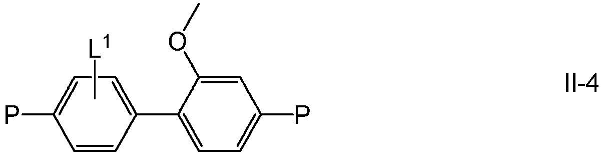 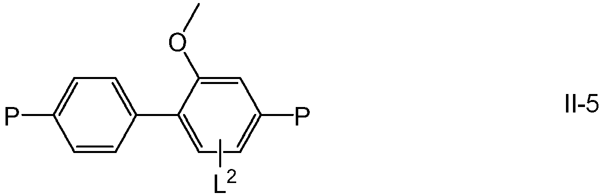
dans lesquelles P et L¹ sont tels que définis dans la formule II selon la revendication 1, et
Sp est un groupement espaceur.

9. Milieu LC selon l'une quelconque des revendications 1 à 8, **caractérisé en ce qu'**il comprend en outre un composé polymérisable choisi parmi les structures suivantes

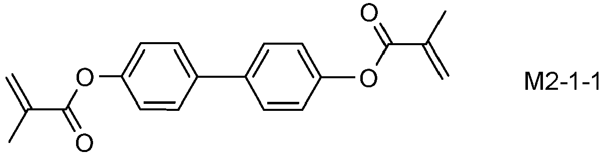

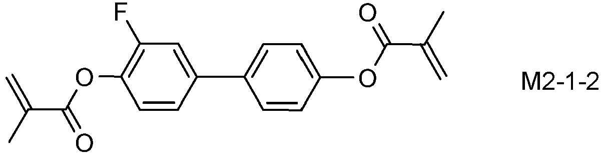

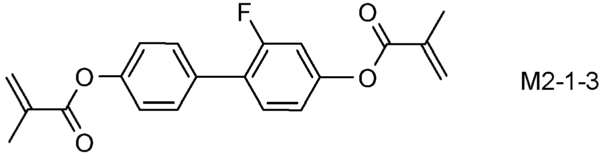

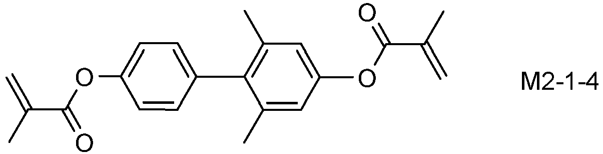

10. Milieu LC selon l'une quelconque des revendications 1 à 9, **caractérisé en ce qu'**il comprend un ou plusieurs composés de formules CY et/ou PY : 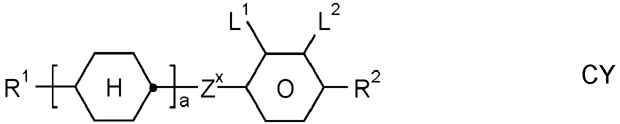 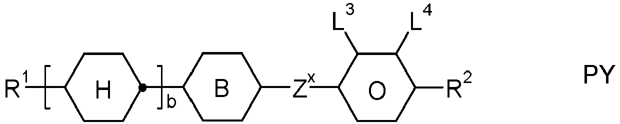 dans lesquelles les radicaux individuels revêtent les significations suivantes :
a désigne 1 ou 2,
b désigne 0 ou 1, 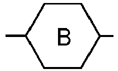 désigne 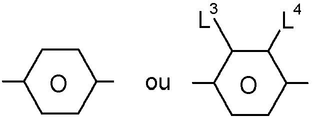
R¹ et R² désignent chacun, indépendamment l'un de l'autre, alkyle ayant de 1 à 12 atomes de C, où, de plus, un ou deux groupements CH₂ non adjacents peuvent être remplacés par -O-, -CH=CH-, 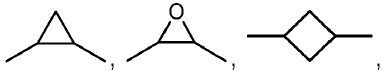 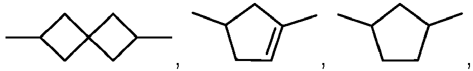 -C≡C-, -CO-, -O-CO- ou -CO-O- de telle sorte que les atomes de O ne soient pas liés directement les uns aux autres,
Z^{x} désigne -CH=CH-, -CH₂O-, -OCH₂-, -CF₂O-, -OCF₂-, -O-, -CH₂-, -CH₂CH₂- ou une liaison simple, préférablement une liaison simple,
L¹⁻⁴ désignent chacun, indépendamment les uns des autres, F, Cl, OCF₃, CF₃, CH₃, CH₂F, CHF₂.

11. Milieu LC selon l'une quelconque des revendications 1 à 10, **caractérisé en ce qu'**il comprend un ou plusieurs composés choisis parmi les formules CY9, CY10, PY9 et/ou PY10 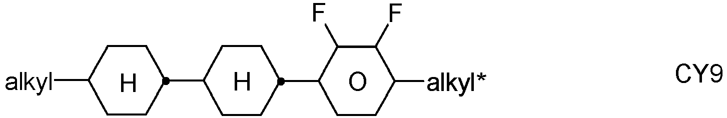 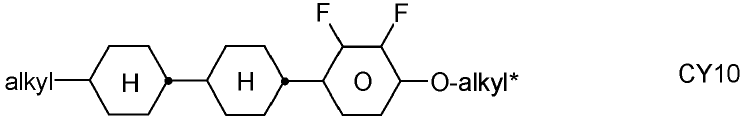 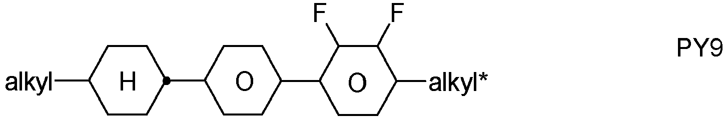 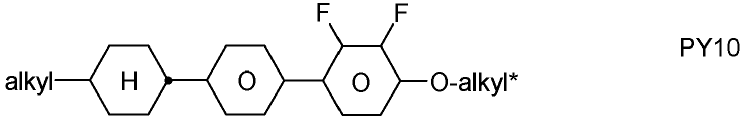 dans lesquelles alkyl et alkyl* désignent chacun, indépendamment l'un de l'autre, un radical alkyle à chaîne linéaire ayant 1-6 atomes de C, cyclopentyle ou cyclopropylméthyle.

12. Milieu LC selon l'une quelconque des revendications 1 à 11, **caractérisé en ce qu'**il comprend un ou plusieurs composés de formule suivante : 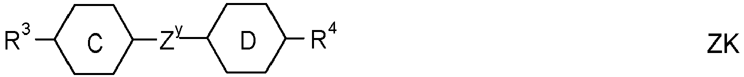 dans laquelle les radicaux individuels revêtent les significations suivantes : 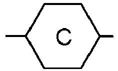 désigne 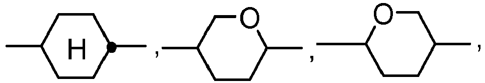 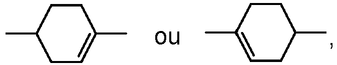 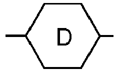 désigne 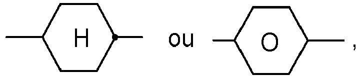
R³ et R⁴ désignent chacun, indépendamment l'un de l'autre, alkyle ayant de 1 à 12 atomes de C, où, de plus, un ou deux groupements CH₂ non adjacents peuvent être remplacés par -O-, -CH=CH-, -CO-, -O-CO- ou -CO-O- de telle sorte que les atomes de O ne soient pas liés directement les uns aux autres,
Z^{y} désigne -CH₂CH₂-, -CH=CH-, -CF₂O-, -OCF₂-, -CH₂O-, -OCH₂-, -COO-, -OCO-, -C₂F₄-, -CF=CF- ou une liaison simple.

13. Milieu LC selon l'une quelconque des revendications 1 à 12, **caractérisé en ce que** les composés polymérisables de formule I, II et III sont polymérisés.

14. Procédé de préparation d'un milieu LC selon l'une quelconque des revendications 1 à 13, comprenant les étapes de mélange d'un composant cristallin liquide B) tel que défini selon la revendication 1, avec un ou plusieurs composés chacun de formule I, II et III telle que définie selon l'une ou plusieurs parmi les revendications 1 à 6, et éventuellement avec d'autres composés cristallins liquides et/ou des additifs.

15. Affichage LC comprenant un milieu LC tel que défini selon l'une quelconque des revendications 1 à 14.

16. Affichage LC selon la revendication 15, qui est un affichage PS-VA ou un affichage SA-VA à stabilisation polymère.

17. Affichage LC selon l'une quelconque des revendications 15 à 16, **caractérisé en ce qu'**il comprend deux substrats, au moins l'un d'entre eux étant transparent à la lumière, une électrode fournie sur chaque substrat ou deux électrodes fournies sur seulement l'un des substrats, et, située entre les substrats, une couche d'un milieu LC tel que défini selon l'une quelconque des revendications 1 à 14, où les composés polymérisables sont polymérisés entre les substrats de l'affichage.

18. Procédé de production d'un affichage LC selon l'une quelconque des revendications 15 à 17, comprenant les étapes de mise à disposition d'un milieu LC tel que défini selon l'une quelconque des revendications 1 à 14, entre les substrats de l'affichage, et la polymérisation des composés polymérisables.
